(19) Europäisches Patentamt
European Patent Office
Office européen des brevets

(11) **EP 3 981 858 B1**

(12) **EUROPEAN PATENT SPECIFICATION**


(45) Date of publication and mention of the grant of the patent:
**17.04.2024 Bulletin 2024/16**

(21) Application number: **21200634.0**

(22) Date of filing: **04.10.2021**

(51) International Patent Classification (IPC):
***C09K 19/34*** (2006.01) ***C09K 19/04*** (2006.01)
***C09K 19/30*** (2006.01) ***C09K 19/12*** (2006.01)

(52) Cooperative Patent Classification (CPC):
**C09K 19/3491; C09K 19/04;** C09K 2019/0444; C09K 2019/0448; C09K 2019/122; C09K 2019/3004; C09K 2019/3009; C09K 2019/301; C09K 2019/3016; C09K 2019/3027


(54) **LIQUID CRYTAL MEDIUM**

FLÜSSIGKRISTALLMEDIUM

SUPPORT DE CRISTAUX LIQUIDES


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.10.2020 EP 20200433**

(43) Date of publication of application:
**13.04.2022 Bulletin 2022/15**



(73) Proprietor: **Merck Patent GmbH**
**64293 Darmstadt (DE)**

(72) Inventors:
- **Hirschmann, Harald**
  **64293 DARMSTADT (DE)**
- **Schoen, Sabine**
  **64293 DARMSTADT (DE)**

(74) Representative: **Merck Patent Association**
**Merck Patent GmbH**
**64271 Darmstadt (DE)**



(56) References cited:
**EP-A1- 2 837 964**
**CN-A- 110 922 986**
**US-A1- 2014 320 778**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 3 981 858 B1

## Description

The present invention relates to a liquid crystal (LC) medium as defined in claim 1 and to the use of the LC medium for optical, electro-optical and electronic purposes, in particular in LC displays, especially in IPS, FFS, VA or PS-VA displays.

One of the liquid-crystal display (LCD) modes used at present is the TN ("twisted nematic") mode. However, TN LCDs have the disadvantage of a strong viewing-angle dependence of the contrast.

In addition, so-called VA ("vertically aligned") displays are known which have a broader viewing angle. The LC cell of a VA display contains a layer of an LC medium between two transparent electrodes, where the LC medium usually has a negative dielectric anisotropy. In the switched-off state, the molecules of the LC layer are aligned perpendicular to the electrode surfaces (homeotropically) or have a tilted homeotropic alignment. On application of an electrical voltage to the two electrodes, a realignment of the LC molecules parallel to the electrode surfaces takes place.

Furthermore, OCB ("optically compensated bend") displays are known which are based on a birefringence effect and have an LC layer with a so-called "bend" alignment and usually positive dielectric anisotropy. On application of an electrical voltage, a realignment of the LC molecules perpendicular to the electrode surfaces takes place. In addition, OCB displays normally contain one or more birefringent optical retardation films in order to prevent undesired transparency to light of the bend cell in the dark state. OCB displays have a broader viewing angle and shorter response times compared with TN displays.

Also known are so-called IPS ("in-plane switching") displays, which contain an LC layer between two substrates, where the two electrodes are arranged on only one of the two substrates and preferably have intermeshed, comb-shaped structures. On application of a voltage to the electrodes, an electric field which has a significant component parallel to the LC layer is thereby generated between them. This causes realignment of the LC molecules in the layer plane.

Furthermore, so-called FFS ("fringe-field switching") displays have been reported (see, inter alia, S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called "fringe field" is thereby generated, i.e. a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

FFS displays can be operated as active-matrix or passive-matrix displays. In the case of active-matrix displays, individual pixels are usually addressed by integrated, non-linear active elements, such as, for example, transistors (for example thin-film transistors ("TFTs")), while in the case of passive-matrix displays, individual pixels are usually addressed by the multiplex method, as known from the prior art.

Furthermore, FFS displays have been disclosed (see S.H. Lee et al., Appl. Phys. Lett. 73(20), 1998, 2882-2883 and S.H. Lee et al., Liquid Crystals 39(9), 2012, 1141-1148), which have similar electrode design and layer thickness as FFS displays, but comprise a layer of an LC medium with negative dielectric anisotropy instead of an LC medium with positive dielectric anisotropy. The LC medium with negative dielectric anisotropy shows a more favourable director orientation that has less tilt and more twist orientation compared to the LC medium with positive dielectric anisotropy, as a result of which these displays have a higher transmission. The displays further comprise an alignment layer, preferably of polyimide provided on at least one of the substrates that is in contact with the LC medium and induces planar alignment of the LC molecules of the LC medium. These displays are also known as "Ultra Brightness FFS (UB-FFS)" mode displays. These displays require an LC medium with high reliability.

The term "reliability" as used hereinafter means the quality of the performance of the display during time and with different stress loads, such as light load, temperature, humidity, voltage, and comprises display effects such as image sticking (area and line image sticking), mura, yogore etc. which are known to the skilled person in the field of LC displays. As a standard parameter for categorising the reliability usually the voltage holding ration (VHR) value is used, which is a measure for maintaining a constant electrical voltage in a test display. Among other factors, a high VHR is a prerequisite for a high reliability of the LC medium.

In VA displays of the more recent type, uniform alignment of the LC molecules is restricted to a plurality of relatively small domains within the LC cell. Disclinations may exist between these domains, also known as tilt domains. VA displays having tilt domains have, compared with conventional VA displays, a greater viewing-angle independence of the contrast and the grey shades. In addition, displays of this type are simpler to produce since additional treatment of the electrode surface for uniform alignment of the molecules in the switched-on state, such as, for example, by rubbing, is no longer necessary. Instead, the preferential direction of the tilt or pretilt angle is controlled by a special design of the electrodes.

In so-called MVA ("multidomain vertical alignment") displays, this is usually achieved by the electrodes having protrusions which cause a local pretilt. As a consequence, the LC molecules are aligned parallel to the electrode surfaces in different directions in different, defined regions of the cell on application of a voltage. "Controlled" switching is thereby

achieved, and the formation of interfering disclination lines is prevented. Although this arrangement improves the viewing angle of the display, it results, however, in a reduction in its transparency to light. A further development of MVA uses protrusions on only one electrode side, while the opposite electrode has slits, which improves the transparency to light. The slit electrodes generate an inhomogeneous electric field in the LC cell on application of a voltage, meaning that controlled switching is still achieved. For further improvement of the transparency to light, the separations between the slits and protrusions can be increased, but this in turn results in a lengthening of the response times. In so-called PVA ("patterned VA") displays, protrusions are rendered completely superfluous in that both electrodes are structured by means of slits on the opposite sides, which results in increased contrast and improved transparency to light, but is technologically difficult and makes the display more sensitive to mechanical influences ("tapping", etc.). For many applications, such as, for example, monitors and especially TV screens, however, a shortening of the response times and an improvement in the contrast and luminance (transmission) of the display are demanded.

A further development are displays of the so-called PS ("polymer sustained") or PSA ("polymer sustained alignment") type, for which the term "polymer stabilised" is also occasionally used. In these, a small amount (for example 0.3% by weight, typically < 1% by weight) of one or more polymerisable, compound(s), preferably polymerisable monomeric compound(s), is added to the LC medium and, after filling the LC medium into the display, is polymerised or crosslinked in situ, usually by UV photopolymerisation, optionally while a voltage is applied to the electrodes of the display. The polymerisation is carried out at a temperature where the LC medium exhibits a liquid crystal phase, usually at room temperature. The addition of polymerisable mesogenic or liquid-crystalline compounds, also known as reactive mesogens or "RMs", to the LC mixture has proven particularly suitable.

Unless indicated otherwise, the term "PSA" is used hereinafter when referring to displays of the polymer sustained alignment type in general, and the term "PS" is used when referring to specific display modes, like PS-VA, PS-TN and the like.

Also, unless indicated otherwise, the term "RM" is used hereinafter when referring to a polymerisable mesogenic or liquid-crystalline compound.

In the meantime, the PS(A) principle is being used in various conventional LC display modes. Thus, for example, PS-VA, PS-OCB, PS-IPS, PS-FFS, PS-UB-FFS and PS-TN displays are known. The polymerisation of the RMs preferably takes place with an applied voltage in the case of PS-VA and PS-OCB displays, and with or without, preferably without, an applied voltage in the case of PS-IPS displays. As can be demonstrated in test cells, the PS(A) method results in a pretilt in the cell. In the case of PS-OCB displays, for example, it is possible for the bend structure to be stabilised so that an offset voltage is unnecessary or can be reduced. In the case of PS-VA displays, the pretilt has a positive effect on response times. For PS-VA displays, a standard MVA or PVA pixel and electrode layout can be used. In addition, however, it is also possible, for example, to manage with only one structured electrode side and no protrusions, which significantly simplifies production and at the same time results in very good contrast and in very good transparency to light.

PS-VA displays are described, for example, in EP 1 170 626 A2, US 6,861,107, US 7,169,449, US 2004/0191428 A1, US 2006/0066793 A1 and US 2006/0103804 A1. PS-OCB displays are described, for example, in T.-J- Chen et al., Jpn. J. Appl. Phys. 45, 2006, 2702-2704 and S. H. Kim, L.-C- Chien, Jpn. J. Appl. Phys. 43, 2004, 7643-7647. PS-IPS displays are described, for example, in US 6,177,972 and Appl. Phys. Lett. 1999, 75(21), 3264. PS-TN displays are described, for example, in Optics Express 2004, 12(7), 1221.

Below the layer formed by the phase-separated and polymerised RMs which induce the above mentioned pretilt angle, the PSA display typically contains an alignment layer, for example of polyimide, that provides the initial alignment of the LC molecules before the polymer stabilisation step.

Rubbed polyimide layers have been used for a long time as alignment layers. However, the rubbing process causes a number of problems, like mura, contamination, problems with static discharge, debris, etc. Therefore instead of rubbed polyimide layers it was proposed to use polyimide layers prepared by photoalignment, utilizing a light-induced orientational ordering of the alignment surface. This can be achieved through photodecomposition, photodimerization or photoisomerization by means of polarised light.

However, still a suitably derivatised polyimide layer is required that comprises the photoreactive group. Generally the effort and costs for production of such a polyimide layer, treatment of the polyimide and improvement with bumps or polymer layers are relatively great.

In addition, it was observed that unfavourable interaction of the polyimide alignment layer with certain compounds of the LC medium often leads to a reduction of the electrical resistance of the display. The number of suitable and available LC compounds is thus significantly reduced, at the expense of display parameters like viewing-angle dependence, contrast, and response times which are aimed to be improved by the use of such LC compounds. It was therefore desired to omit the polyimide alignment layers.

For some display modes this was achieved by adding a self alignment agent or additive to the LC medium that induces the desired alignment, for example homeotropic or planar alignment, in situ by a self assembling mechanism. Thereby the alignment layer can be omitted on one or both of the substrates. These display modes are also known as "self-aligned" or "self-aligning" (SA) modes.

In SA displays a small amount, typically 0.1 to 2.5 %, of a self-aligning additive is added to the LC medium. Suitable self-aligning additives are for example compounds having an organic core group and attached thereto one or more polar anchor groups, which are capable of interacting with the substrate surface, causing the additives on the substrate surface to align and induce the desired alignment also in the LC molecules. Preferred self-aligning additives comprise for example a mesogenic group and a straight-chain or branched alkyl side chain that is terminated with one or more polar anchor groups, for example selected from hydroxy, carboxy, amino or thiol groups. The self-aligning additives may also contain one or more polymerisable groups that can be polymerised under similar conditions as the RMs used in the PSA process.

Hitherto SA-VA displays and SA-FFS displays haven been disclosed. Suitable self-aligning additives to induce homeotropic alignment, especially for use in SA-VA mode displays, are disclosed for example in US 2013/0182202 A1, US 2014/0138581 A1, US 2015/0166890 A1 and US 2015/0252265 A1.

The SA mode can also be used in combination with the PSA mode. An LC medium for use in a display of such a combined mode thus contains both one or more RMs and one or more self-aligning additives.

Like the conventional LC displays described above, PSA displays can be operated as active-matrix or passive-matrix displays. In the case of active-matrix displays, individual pixels are usually addressed by integrated, non-linear active elements, such as, for example, transistors (for example thin-film transistors ("TFTs")), while in the case of passive-matrix displays, individual pixels are usually addressed by the multiplex method, as known from the prior art.

The PSA display may also comprise an alignment layer on one or both of the substrates forming the display cell. The alignment layer is usually applied on the electrodes (where such electrodes are present) such that it is in contact with the LC medium and induces initial alignment of the LC molecules. The alignment layer may comprise or consist of, for example, a polyimide, which may also be rubbed, or may be prepared by a photoalignment method.

In particular for monitor and especially TV applications, optimisation of the response times, but also of the contrast and luminance (thus also transmission) of the LC display continues to be demanded. The PSA method can provide significant advantages here. In particular in the case of PS-VA, PS-IPS and PS-FFS, a shortening of the response times, which correlate with a measurable pretilt in test cells, can be achieved without significant adverse effects on other parameters.

With increasing demand for LCD and with the development of the LCD technology, displays with advantageous characteristics of being lighter and thinner have been designed including the trend towards a slim design of LCD from an aesthetic point of view, such as LCD with a reduced bezel area. The demand for light-weight and slim displays with narrow bezel poses new challenges to product design and manufacturing.

An LCD device comprises two substrates with electrodes and a layer of the liquid crystal located in the space enclosed by the substrates. The display of an image is achieved by changing the alignment of the liquid crystals with the aid of an electric voltage applied to the electrodes.

An LCD display is typically produced by adhesively bonding a first substrate having a pixel electrode, a thin-film transistor (TFT) and other components to a second substrate which contains a common electrode, using a sealant. The space enclosed by the substrates is filled with the liquid crystal via a fill opening by means of capillary force or vacuum; the fill opening is subsequently sealed using a sealant.

With the increase in the size of liquid-crystal displays in recent years, the so-called "one drop filling" process (ODF process) has been proposed as a process for the mass production of liquid-crystal displays (see, for example, JPS63-179323 and JPH10-239694) in order to shorten the cycle times during production. This is a process for the production of a liquid-crystal display in which a drop of the liquid crystal is applied to the substrate, which is fitted with electrodes and is provided with a sealant round the edges. The second substrate fitted with electrodes is subsequently mounted in vacuo, the sealant is partially cured by UV irradiation and subsequently fully cured by heat treatment. The two-step process consisting of UV curing and thermal curing enables the duration of curing to be shortened.

However, this process has the disadvantage that the sealant in the uncured state comes into contact with the liquid crystal and the constituents of the sealant are able to diffuse into the liquid crystal.

In the case of the ODF process, a distinction is made between three processes: a heat-curing process, a photocuring process and a photocuring and heat-curing process for the curing of a sealant for liquid crystals after the two substrates have been joined together. The disadvantage of the heat-curing process is that the liquid crystal expands and as a consequence of the heating its viscosity drops, which favours mixing with the sealant.

In the photocuring process, a distinction is made between two types of sealant, those of the cation polymerisation type and those of the free-radical polymerisation type, in each case depending on the type of photopolymerisation initiator. In the case of sealants of the cationic polymerisation type, the problem exists that ions are generated during the photocuring which are able to diffuse into the liquid crystal, which results in a decrease in the specific resistance of the liquid crystal. In the case of sealants of the free-radical polymerisation type, the problem exists that the curing shrinkage is relatively large, which can result in low strength of the adhesion. Both types of sealant, i.e. both of the cationic polymerisation type and of the free-radical polymerisation type, have the joint problem that shaded parts which are not irradiated with light remain uncured or only incompletely cured, for example behind metal contacts of electronic

components of the TFT array substrate of the liquid-crystal display or behind the black matrix of the colour-filter substrate.

The photocuring and heat-curing process has therefore proven particularly suitable in practice. This is characterised in that the sealant for liquid crystals between the substrates is subjected to primary curing by irradiation with light, followed by a secondary curing step by heating. It is essential in the photocuring and heat-curing process that the liquid crystal is not contaminated either before or after the exposure to light or before or after the heating. What is needed, in particular, are measures for curing the shaded areas mentioned above and measures for preventing diffusion of constituents of the sealant during the heat curing.

Suitable starting points for a solution are rapid curing at low temperature before commencement of mixing of the sealant with the liquid crystal or the use of components in the sealant which dissolve less in the liquid crystal or not at all. Rapid curing at low temperature means that the life of the sealant is very short owing to the high reactivity, which represents a major problem in practice. Preference is therefore given to the use of sealants which have a long life and comprise components which have low solubility in the liquid crystal.

Sealants for liquid-crystal displays are disclosed, for example, in US2007/096056 A1, EP 1780587 A1, US 2003/0147034 A1 and EP 2381304 A1.

The problems described above of damage to the liquid crystal during curing of sealants for liquid-crystal displays are severe, in particular, if the liquid crystal itself comprises polymerisable components as it is the case in the above-mentioned PS ("polymer sustained") or PSA ("polymer sustained alignment") mode in which polymerisable compounds are polymerised and crosslinked in situ.

The photoinitiators employed in sealants for liquid crystals are particularly problematic since, after activation, they liberate the actual reactive free radicals which initiate or accelerate the polymerisation and which, as small molecules, have high mobility and are usually readily soluble in liquid crystals.

The problem has been addressed for example in US 2009/0147206 which proposes polymeric photoinitiators which, owing to their polymer structure based on a polyacrylate, are intended to remain in the sealant during curing. A disadvantage here is that large polymeric photoinitiators have low mobility, and, owing to the fact that they are prepared by polymerisation of a monomer precursor, particularly reactive types of initiator are only accessible with difficulty.

It becomes clear that the LC is exposed to various kinds of stress during production of a display. i.e. heat, UV light and reactive intermediates of a sealant. Ideally, the LC medium is inert towards sealant components in the first place, because in all types of LC panels, the LC will interact with the frame sealant during the production process which can cause edge-mura. This edge-mura becomes more visible the narrower the bezel. Thus for narrow bezel there is still a demand for LC mixtures that show little or no interaction with the frame sealant and thus very little or no edge mura.

The invention is based on the object of providing novel suitable materials, in LC media, optionally comprising reactive mesogens (RM), for use in displays, which do not have the disadvantages indicated above or do so to a reduced extent. In particular, there is still a need in the art for liquid crystal media with high reliability.

Further, it is an object of the present invention to provide alternative media in addition to existing media known to the skilled person from EP 2 837 964 A1 and CN 110 922 986 A, for instance, in order to broaden the range of available materials what allows for a more specific optimisation of a particular display.

These objects have been achieved in accordance with the present invention by materials and processes as described in the present application.

It has been found that surprisingly, the use of liquid crystalline hosts as described hereinafter allows to achieve the advantageous effects as mentioned above. In particular, it has been recognized that edge mura can be reduced to an acceptable level or can even be completely avoided by use of a liquid crystal medium as claimed and described herein.

The medium according to the invention is further distinguished by excellent compatibility with an ODF process so that also only negligibly small or no drop mura is observed. Likewise, image sticking in a display according to the invention is at an acceptable level or non-existing.

The present invention relates to a liquid crystal medium comprising one or more compounds of formula I

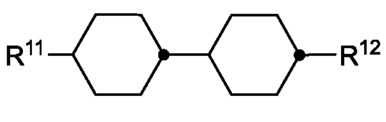

I

in which

$R^{11}$ denotes a straight chain or branched or cyclic alkyl radical having 1 to 12 C atoms, or a straight chain or branched or cyclic alkenyl radical having up to 12 C atoms, wherein one or more H atoms are optionally replaced by fluorine, preferably a straight chain or branched or cyclic alkyl radical having 1 to 12 C atoms,

$R^{12}$ denotes a straight chain or branched or cyclic alkyl radical having 1 to 12 C atoms or a straight

chain or branched or cyclic alkoxy radical having 1 to 11 C atoms, or a straight chain or branched or cyclic alkenyl radical having up to 12 C atoms, preferably a straight chain or branched or cyclic alkyl radical having 1 to 12 C atoms, and

one or more compounds selected from the group of compounds of the formulae IIA, IIB, IIC and IID,

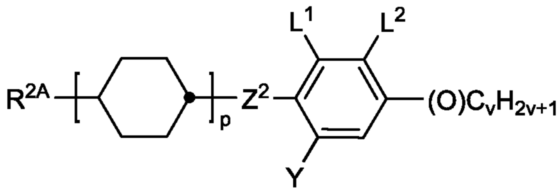

IIA

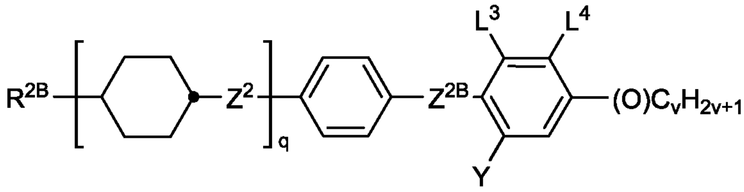

IIB

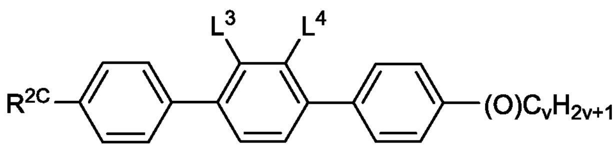

IIC

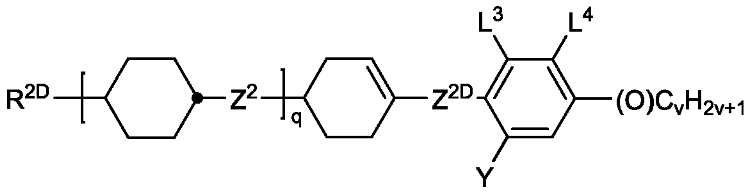

IID

in which

| | |
|---|---|
| $R^{2A}$, $R^{2B}$, $R^{2C}$ and $R^{2D}$ | each, independently of one another, denote H, an alkyl or alkenyl radical having up to 15 C atoms which is unsubstituted, monosubstituted by CN or $CF_3$ or at least monosubstituted by halogen, where, in addition, one or more $CH_2$ groups in these radicals may be replaced by -O-, -S-, |

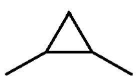,

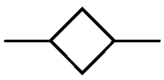, 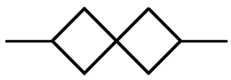, 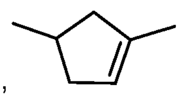, 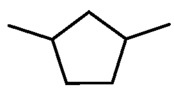,

-C≡C-, $-CF_2O-$, $-OCF_2-$, -OC-O- or -O-CO- in such a way that O atoms are not linked directly to one another,

| | |
|---|---|
| $L^1$ to $L^4$ | each, independently of one another, denote F, Cl, $CF_3$ or $CHF_2$, |
| Y | denotes H, F, Cl, $CF_3$, $CHF_2$ or $CH_3$, preferably H or $CH_3$, very preferably H, |

| | |
|---|---|
| $Z^2$, $Z^{2B}$ and $Z^{2D}$ | each, independently of one another, denote a single bond, $-CH_2CH_2-$, -CH=CH-, $-CF_2O-$, $-OCF_2-$, -CHzO-, $-OCH_2-$, -COO-, -OCO-, $-C_2F_4-$, -CF=CF- or $-CH=CHCH_2O-$, |
| p | denotes 0, 1 or 2, |
| q | denotes 0 or 1, and |
| v | denotes 1, 2, 3, 4, 5, or 6, and |

one or more compounds of the formula IVa, and
one or more compounds of formula IVb

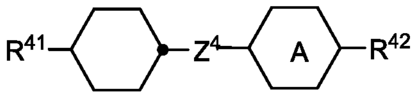
IVa

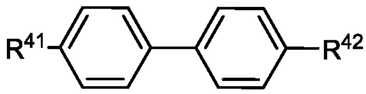
IVb

in which
$R^{41}$ and $R^{42}$ each, independently of one another, denote a straight-chain alkyl, alkoxy, alkenyl, alkoxyalkyl or alkoxy radical having up to 12 C atoms, and

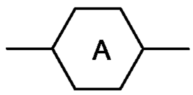

denotes

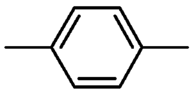, 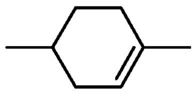, 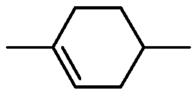,

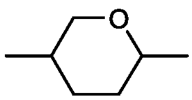 or 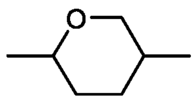,

$Z^4$ denotes a single bond, $-CH_2CH_2-$, -CH=CH-, $-CF_2O-$, $-OCF_2-$, $-CH_2O-$, $-OCH_2-$, -COO-, -OCO-, $-C_2F_4-$, $-C_4H_8-$, or -CF=CF-,
and
one or more compounds of formula V

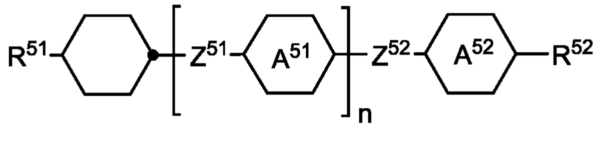
V

in which
$R^{51}$, $R^{52}$ denote alkyl having 1 to 7 C atoms, alkoxy having 1 to 7 C atoms, or alkoxyalkyl, alkenyl or alkenyloxy having 2 to 7 C atoms,

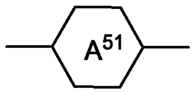 , 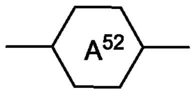 ,

identically or differently, denote

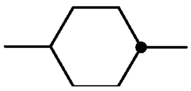 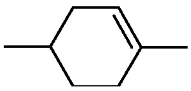 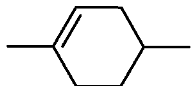

, 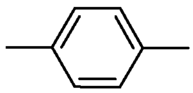 , 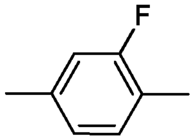 or 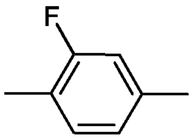

$Z^{51}$ , $Z^{52}$ each, independently of one another, denote $-CH_2-CH_2-$, -CHz-O-, -CH=CH-, -C=C-, -COO- or a single bond, and

n is 1 or 2,characterised in that the medium comprises compounds of the formulae I-1 -1, I-1-5, I-1-6, Iva-2-1, IVb-1-1, V-16-1, IIA-2-2, IIA-2-5, IIA-10-2, IIA-10-4, IIB-10-1 and IIB-10-4 in the concentrations given in claim 1.

The medium according to the invention is distinguished by favourable properties for applications in displays with narrow bezel, in particular in combination with reactive mesogens for the manufacture of polymer stabilised displays of the PS-VA mode. The medium according to the invention enables displays with narrow bezel that show reduced edge mura or no edge mura while showing overall advantageous properties especially for TV or monitor as for example low rotational viscosity, high clearing temperature, a broad nematic phase range and low threshold voltage Unless indicated otherwise, the following definitions apply.

As used herein, alkyl is straight-chain or branched or cyclic and has 1 to 15 C atoms, is preferably straight-chain and has, unless indicated otherwise, 1, 2, 3, 4, 5, 6 or 7 C atoms and is accordingly preferably methyl, ethyl, n-propyl, n-butyl, n-pentyl, n-hexyl or n-heptyl.

Herein, branched alkyl is preferably isopropyl, s-butyl, isobutyl, isopentyl, 2-methylhexyl or 2-ethylhexyl.

As used herein, cyclic alkyl is taken to mean straight-chain or branched alkyl or alkenyl having up to 12 C atoms, preferably alkyl having 1 to 7 C atoms, in which a group $CH_2$ is replaced with a carbocyclic ring having 3 to 5 C atoms, very preferably selected from the group consisting of cyclopropyl, cyclobutyl, cyclopentyl and cyclopentenyl, cyclopropylalkyl, cyclobutylalkyl, cyclopentylalkyl and cyclopentenylalkyl, methylcyclopropylalkyl, methylcyclobutylalkyl, methylcyclopentylalkyl and methylcyclopentenylalkyl, in particular cyclopropylmethyl, cyclobutylmethyl, cyclopentylmethyl and cyclopentenylmethyl.

Herein, an alkoxy radical is straight-chain or branched and contains 1 to 15 C atoms. It is preferably straight-chain and has, unless indicated otherwise, 1, 2, 3, 4, 5, 6 or 7 C atoms and is accordingly preferably methoxy, ethoxy, n-propoxy, n-butoxy, n-pentoxy, n-hexoxy or n-heptoxy.

Herein, an alkenyl radical is preferably an alkenyl radical having 2 to 15 C atoms, which is straight-chain or branched and contains at least one C-C double bond. It is preferably straight-chain and has 2 to 7 C atoms. Accordingly, it is preferably vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or -6-enyl. If the two C atoms of the C-C double bond are substituted, the alkenyl radical can be in the form of E and/or Z isomer (trans/cis). In general, the respective E isomers are preferred. Of the alkenyl radicals, prop-2-enyl, but-2- and -3-enyl, and pent-3- and -4-enyl are particularly preferred.

Herein, alkynyl is taken to mean an alkynyl radical having 2 to 15 C atoms, which is straight-chain or branched and contains at least one C-C triple bond. 1- and 2-propynyl and 1-, 2- and 3-butynyl are preferred.

The compounds of the formula I are preferably selected from the group of the compounds of the formulae I-1 to I-4,

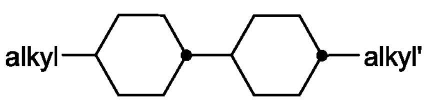 I-1

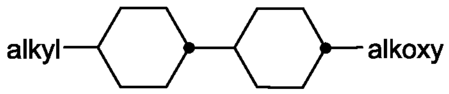

I-2

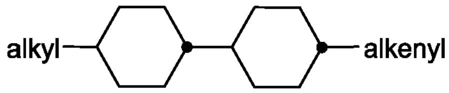

I-3

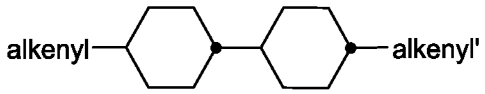

I-4

in which

| | |
|---|---|
| alkyl and alkyl', | independently of one another, denote alkyl having 1 to 7 C atoms, preferably having 2 to 5 C atoms, |
| alkoxy | denotes alkoxy having 1 to 5 C atoms, preferably having 2 to 4 C atoms, |
| alkenyl | denotes an alkenyl radical having 2 to 5 C atoms, preferably having 2 to 4 C atoms, particularly preferably 2 C atoms, and |
| alkenyl' | denotes an alkenyl radical having 2 to 5 C atoms, preferably having 2 to 4 C atoms, particularly preferably having 2 to 3 C atoms. |

In an embodiment, the medium according to the invention comprises one or more compounds of formula I selected from the compounds of the formulae I-1 to I-4 in combination with one or more compounds selected from the group of compounds of the formulae IA-1 to IA-18:

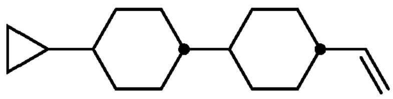

IA-1

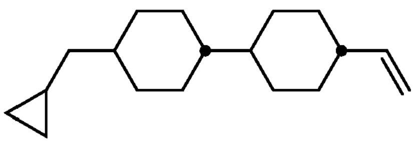

IA-2

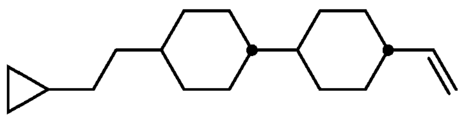

IA-3

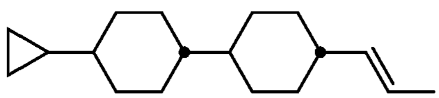

IA-4

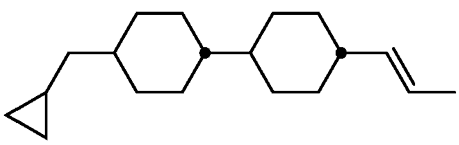

IA-5

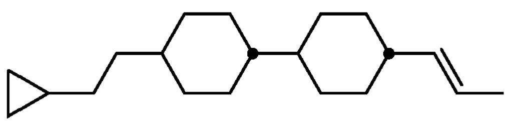

IA-6

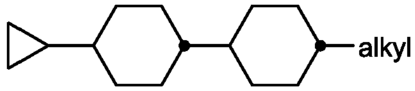

IA-7

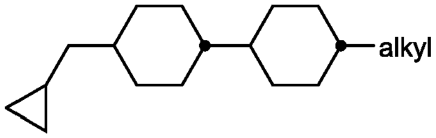

IA-8

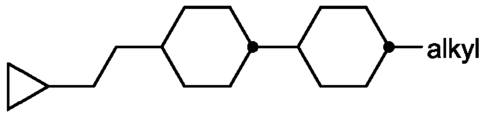

IA-9

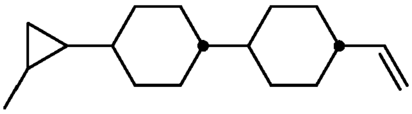

IA-10

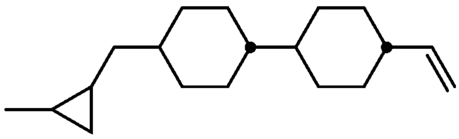

IA-11

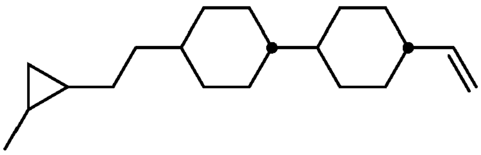

IA-12

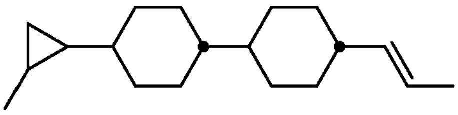

IA-13

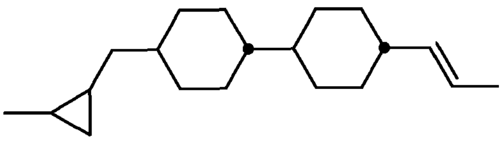

IA-14

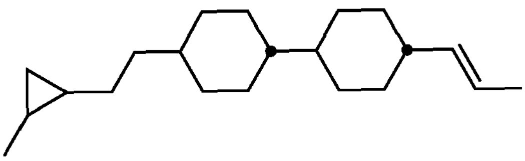

IA-15

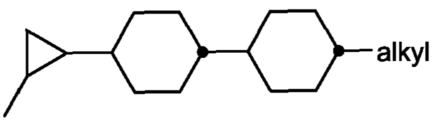

IA-16

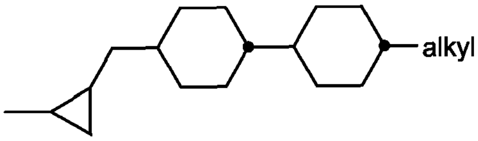

IA-17

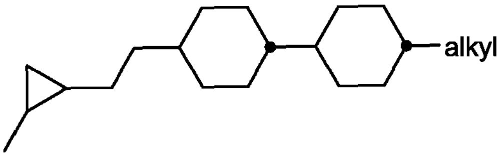

IA-18

in which alkyl denotes methyl, ethyl, n-propyl, isopropyl, n-butyl, isobutyl, or n-pentyl.

The medium according to the invention comprises compounds of formulae I-1-1, I-1-5 and I-1-6. preferably, the medium further comprises one or more compounds of formula I-1, preferably selected from the compounds of the formulae I-1-2 to I-1-4

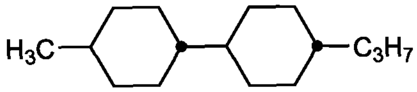

I-1-1

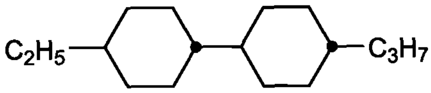

I-1-2

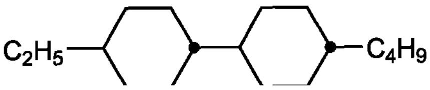

I-1-3

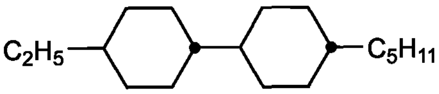

I-1-4

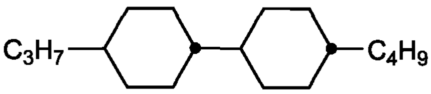

I-1-5

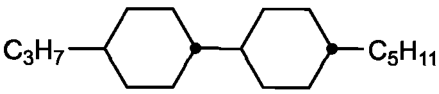

I-1-6

Preferably, the medium according to the invention comprises one or more compounds of the formulae I-2-1 and/or I-2-2

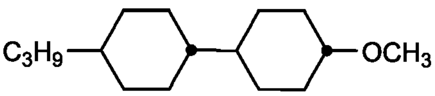

I-2-1

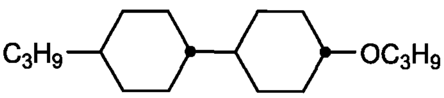

I-2-2

Preferably, the medium according to the invention comprises a compound of formula I-3, in particular selected from the compounds of the formulae I-3-1 to I-3-5

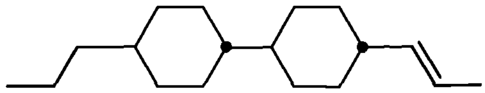

I-3-1

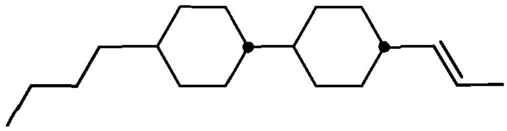

I-3-2

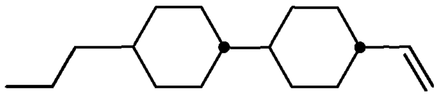

I-3-3

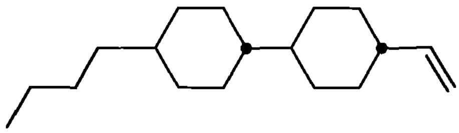

I-3-4

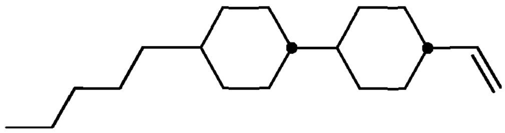

I-3-5

Preferably, the medium according to the invention comprises a compound of formula I-4, in particular selected from the compounds of the formulae I-4-1 and I-4-2

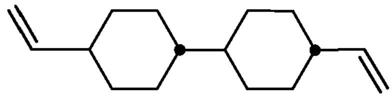

I-4-1

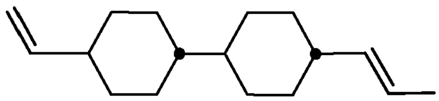

I-4-2

In the compounds of the formulae IIA, IIB and IID, $Z^2$ may have identical or different meanings. In the compounds of the formula IIB, $Z^2$ and $Z^{2B}$ may have identical or different meanings. In the compounds of the formula IID, $Z^2$ and $Z^{2D}$ may have identical or different meanings.

In the compounds of the formulae IIA, IIB, IIC and IID, $R^{2A}$, $R^{2B}$, $R^{2C}$ and $R^{2D}$ each preferably denote alkyl having 1 to 6 C atoms, in particular $CH_3$, $C_2H_5$, $n$-$C_3H_7$, $n$-$C_4H_9$, $n$-$C_5H_{11}$.

In the compounds of the formulae IIA, IIB and IID, $L^1$, $L^2$, $L^3$ and $L^4$ preferably denote $L^1 = L^2 = F$ and $L^3 = L^4 = F$, furthermore $L^1 = F$ and $L^2 = Cl$, $L^1 = Cl$ and $L^2 = F$, $L^3 = F$ and $L^4 = Cl$, $L^3 = Cl$ and $L^4 = F$ and Y = H. $Z^2$ and $Z^{2B}$ in the formulae IIA and IIB preferably each, independently of one another, denote a single bond, furthermore a $-C_2H_4-$ bridge.

If, in the formula IIB, $Z^2 = -C_2H_4-$ or $-CH_2O-$, $Z^{2B}$ is preferably a single bond or, if $Z^{2B} = -C_2H_4-$ or $-CH_2O-$, $Z^2$ is preferably a single bond.

In formula IID, $Z^{2D}$ is preferably a single bond or $-CH_2O-$.

In the compounds of the formulae IIA, IIB and IID, $(O)C_vH_{2v+1}$ preferably denotes $OC_vH_{2v+1}$. In the compounds of the formula IIC, $(O)C_vH_{2v+1}$ preferably denotes $C_vH_{2v+1}$.

In the compounds of the formula IIC, $L^3$ and $L^4$ preferably each denote F.

Preferred compounds of the formulae IIA, IIB, IIC and IID are indicated below:

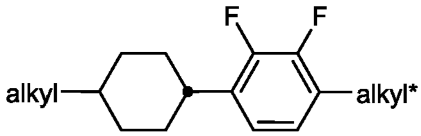

IIA-1

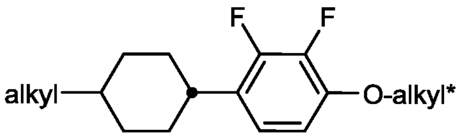

IIA-2

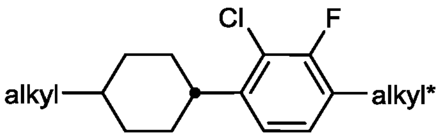

IIA-3

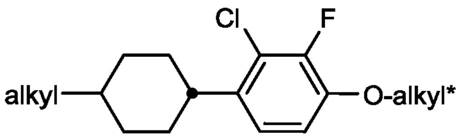

IIA-4

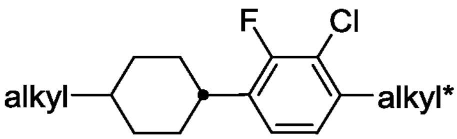

IIA-5

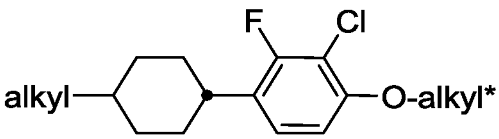

IIA-6

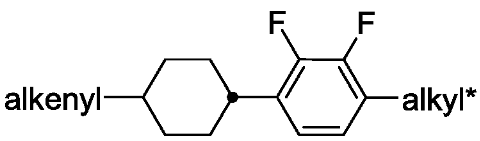

IIA-7

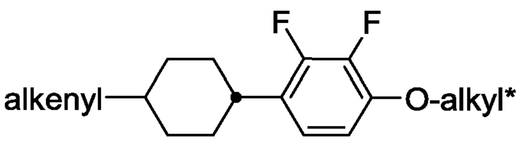

IIA-8

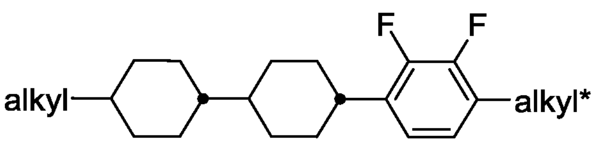

IIA-9

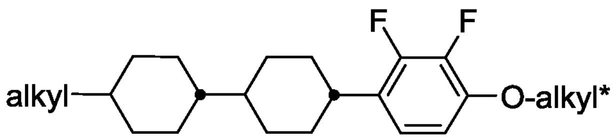

IIA-10

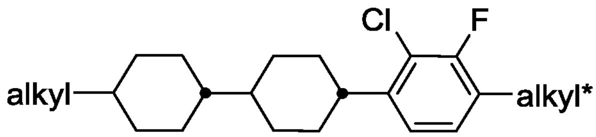

IIA-11

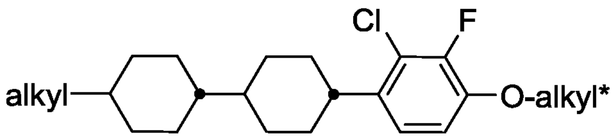

IIA-12

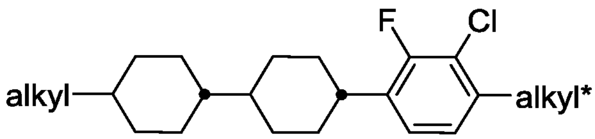

IIA-13

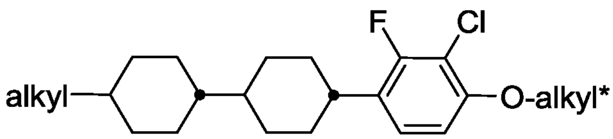

IIA-14

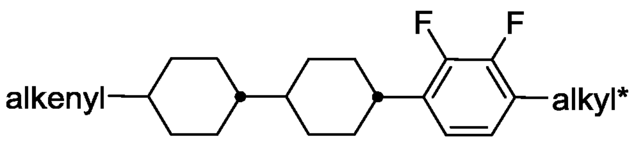

IIA-15

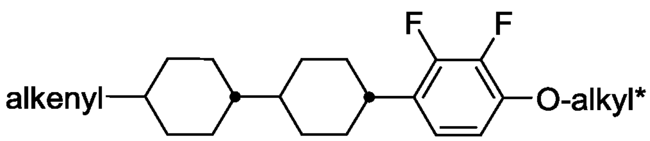

IIA-16

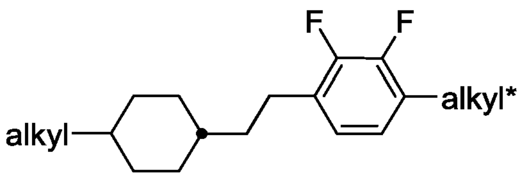

IIA-17

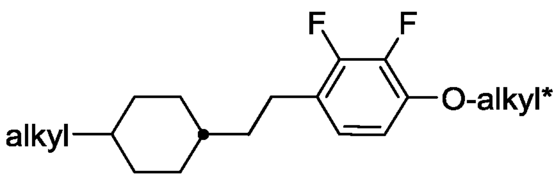

IIA-18

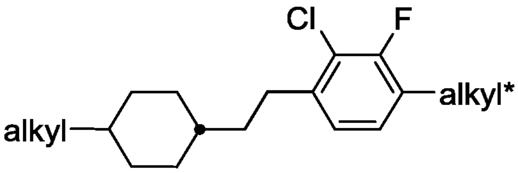
IIA-19

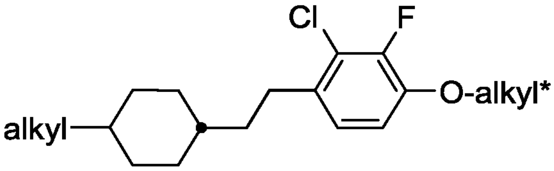
IIA-20

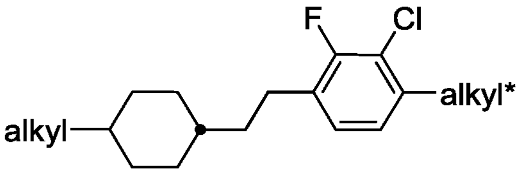
IIA-21

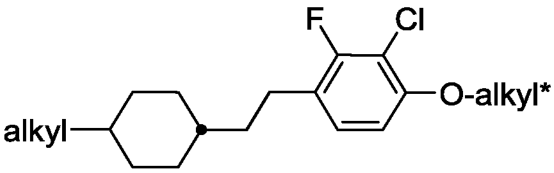
IIA-22

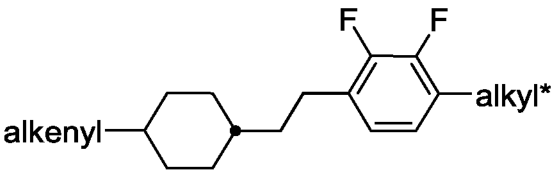
IIA-23

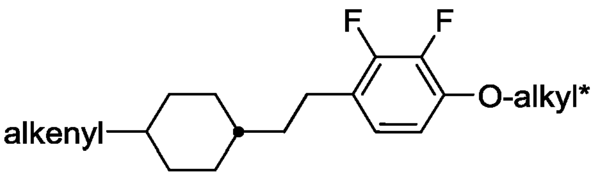
IIA-24

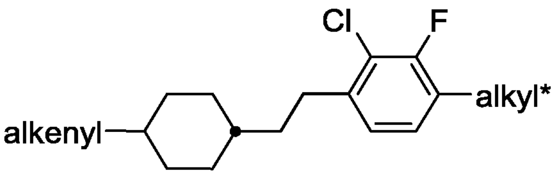
IIA-25

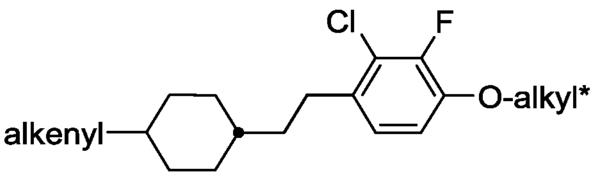
IIA-26

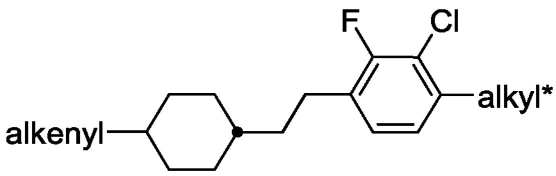

IIA-27

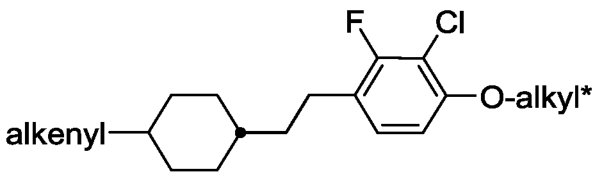

IIA-28

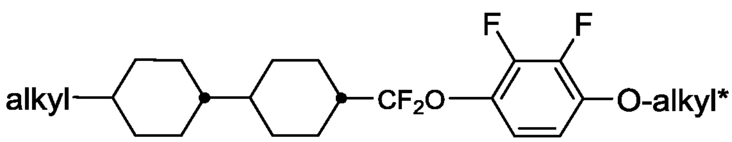

IIA-29

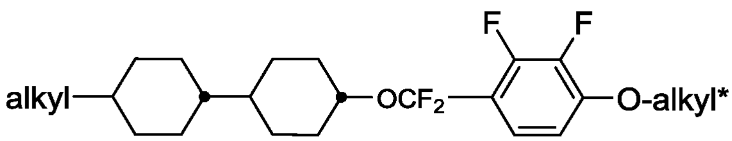

IIA-30

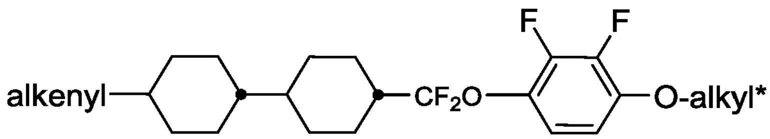

IIA-31

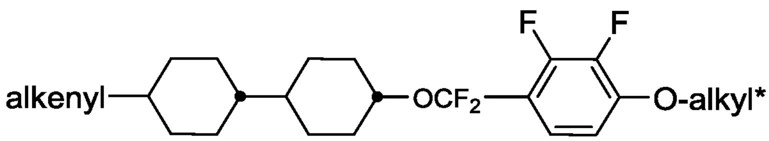

IIA-32

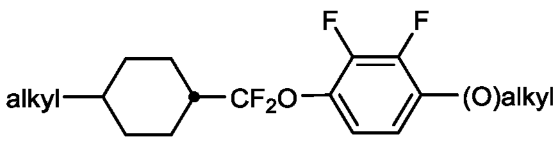

IIA-33

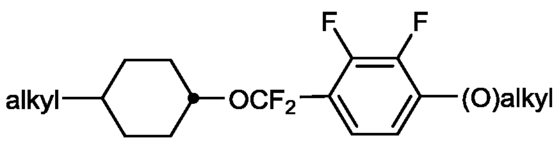

IIA-34

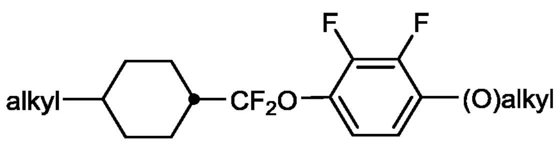

IIA-35

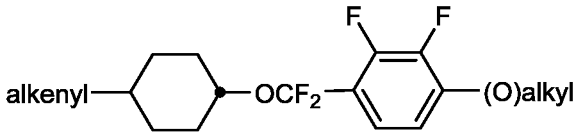

IIA-36

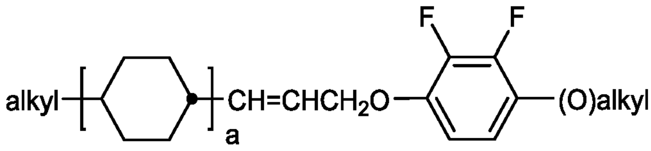

IIA-37

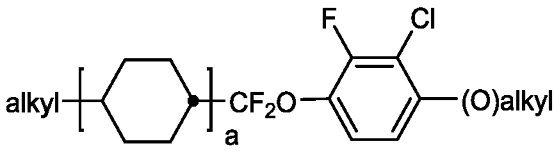

IIA-38

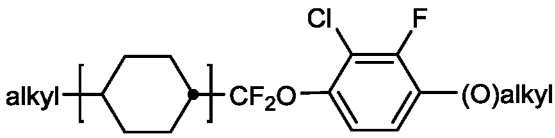

IIA-39

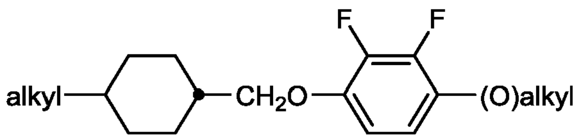

IIA-40

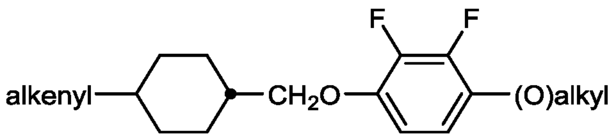

IIA-41

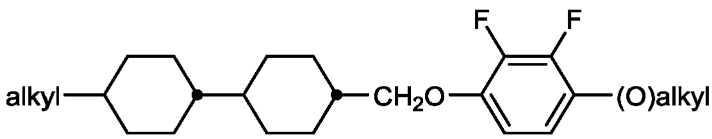

IIA-42

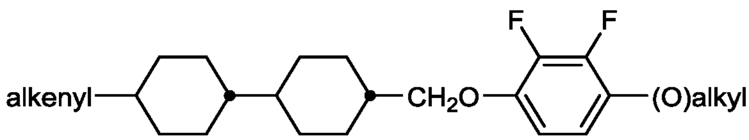

IIA-43

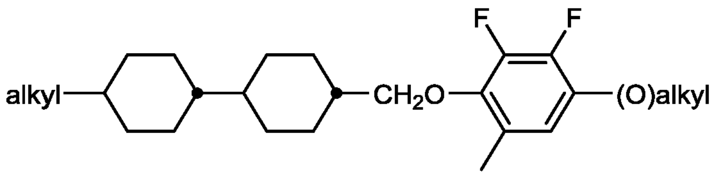

IIA-44

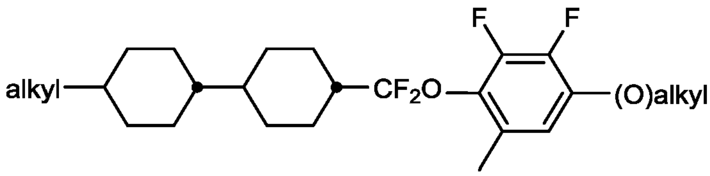

IIA-45

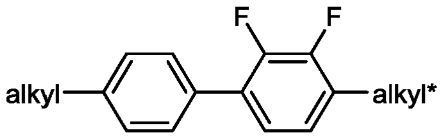

IIB-1

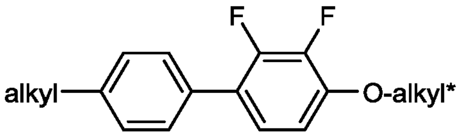

IIB-2

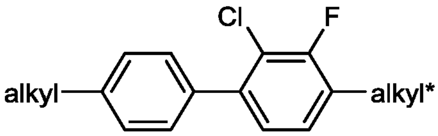

IIB-3

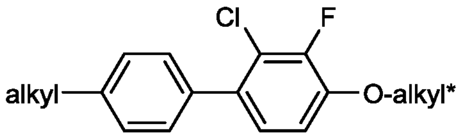

IIB-4

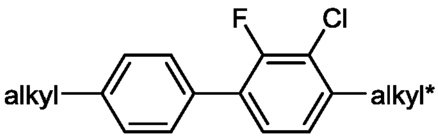

IIB-5

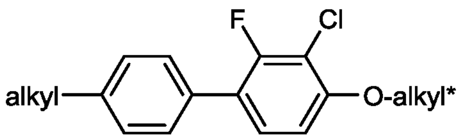

IIB-6

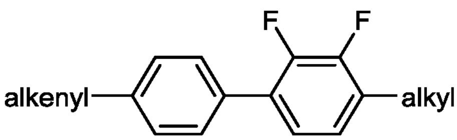

IIB-7

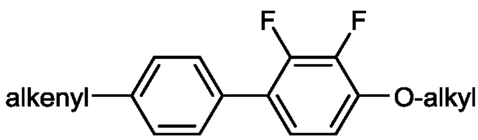

IIB-8

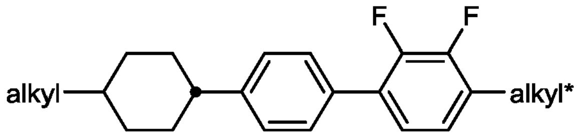

IIB-9

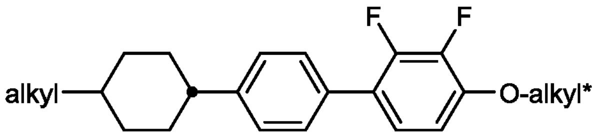

IIB-10

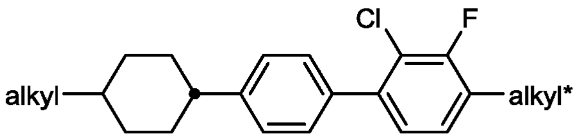

IIB-11

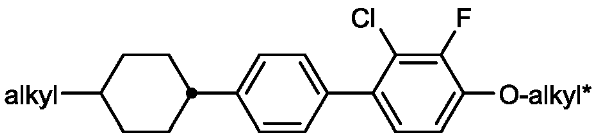

IIB-12

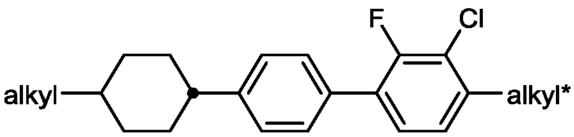

IIB-13

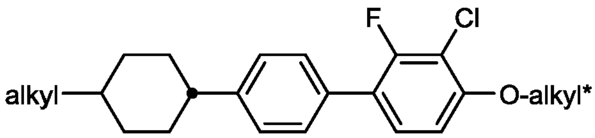

IIB-14

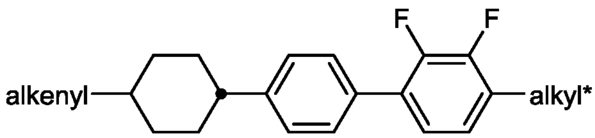

IIB-15

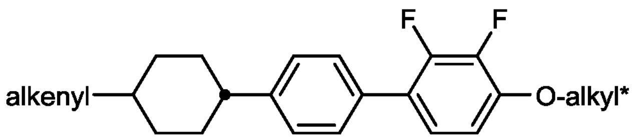

IIB-16

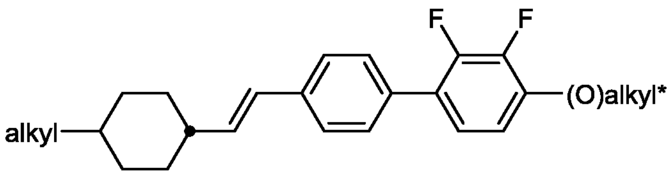

IIB-17

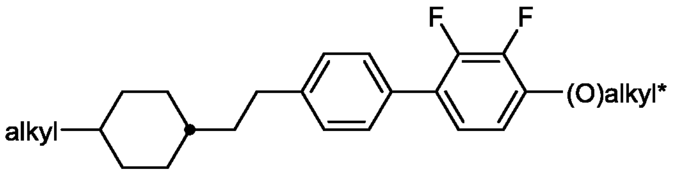

IIB-18

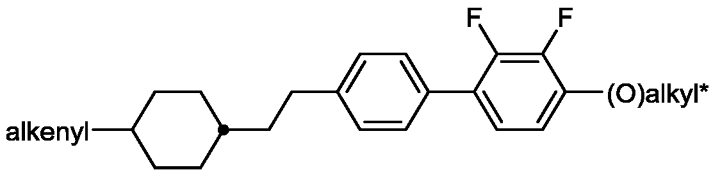

IIB-19

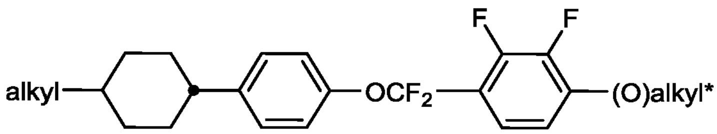

IIB-20

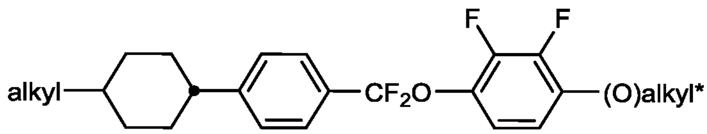

IIB-21

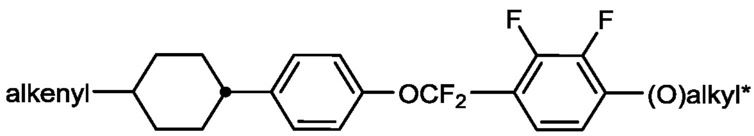

IIB-22

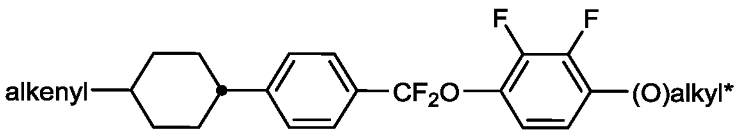

IIB-23

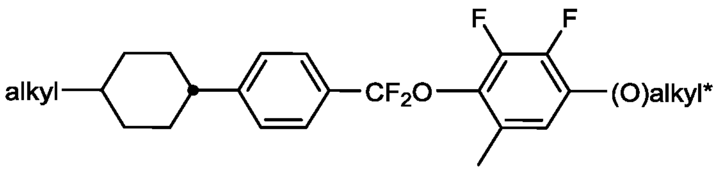

IIB-24

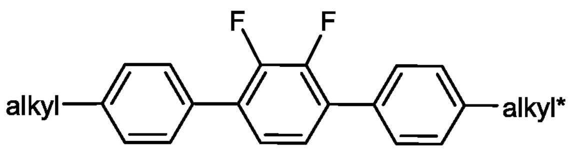

IIC-1,

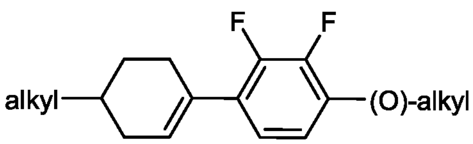

IID-1

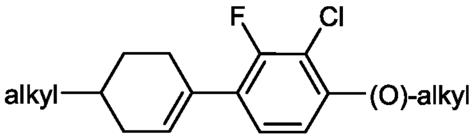

IID-2

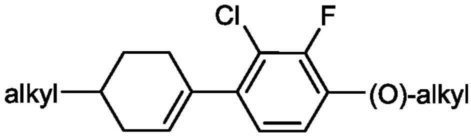

IID-3

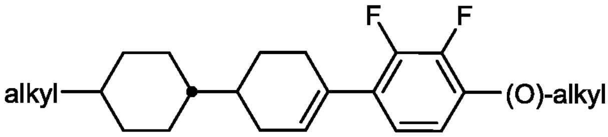

IID-4

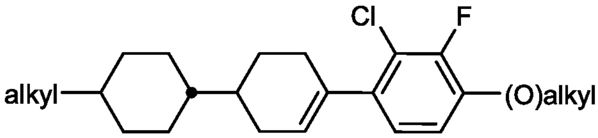

IID-5

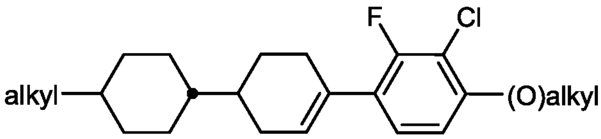

IID-6

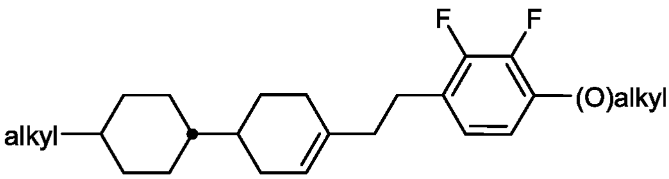

IID-7

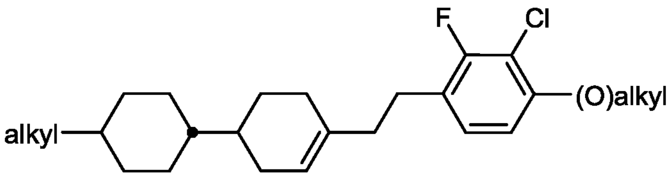

IID-8

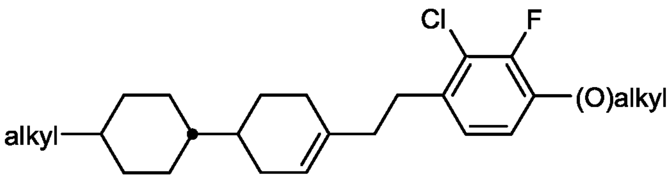

IID-9

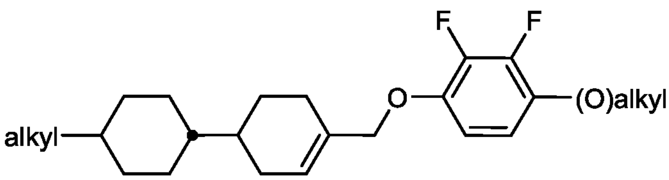

IID-10

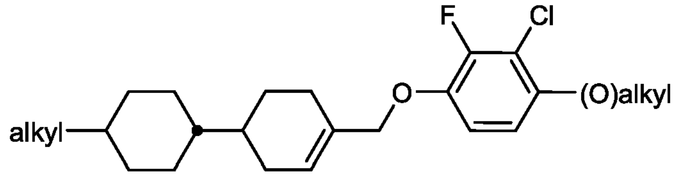

IID-11

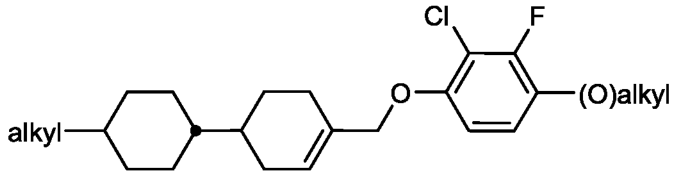

IID-12

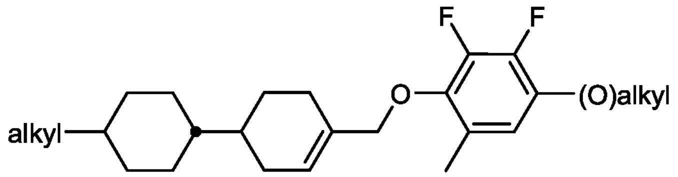

IID-13

in which the parameter a denotes 1 or 2, alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred mixtures according to the invention comprise one or more compounds of the formulae IIA-2, IIA-8, IIA-10, IIA-16, IIA-18, IIA-40, IIA-41, IIA-42, IIA-43, IIB-2, IIB-10, IIB-16, IIC-1, IID-4 and IID-10.

The proportion of compounds of the formulae IIA and/or IIB in the mixture as a whole is preferably at least 20 % by weight.

Preferred media according to the invention comprise at least one compound of the formula IIC-1,

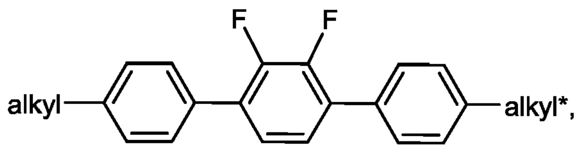

in which alkyl and alkyl* have the meanings indicated above, preferably in amounts of < 5 % by weight, in particular > 3 % by weight.

According to the invention the medium comprises compounds of formulae IIA-2-2 and IIA-2-5. Preferably, the medium further comprises one or more compounds of the formula IIA-2 selected from the following sub-formulae IIA-2-1, IIA-2-3, IIA-2-4:

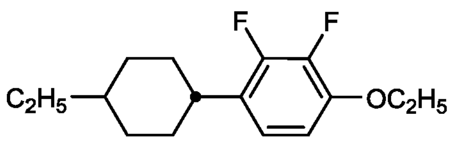

IIA-2-1

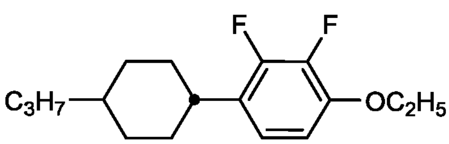

IIA-2-2

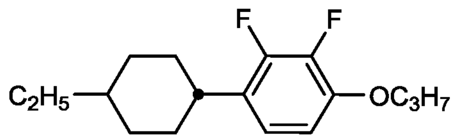

IIA-2-3

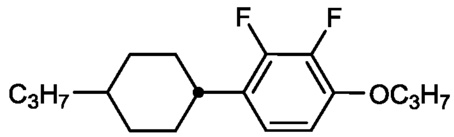

IIA-2-4

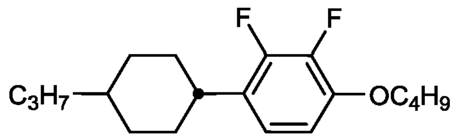

IIA-2-5

Alternatively, preferably in addition to the compounds of the formulae IIA-2-1 to IIA-2-5, the medium comprises one or more compoudns of the formulae IIA-2a-1 to IIA-2a-5:

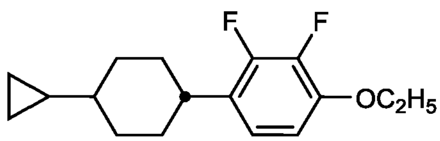

IIA-2a-1

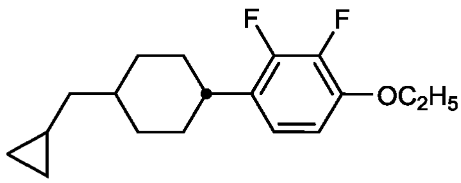

IIA-2a-2

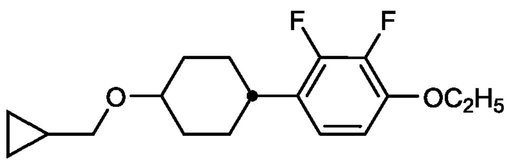

IIA-2a-3

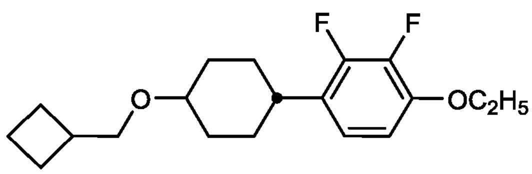

IIA-2a-4

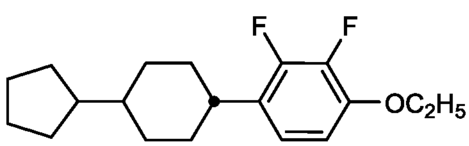

IIA-2a-5

According to the invention the medium comprises compounds of formulae IIA-10-2 and IIA-10-4. Preferably, the medium further comprises one or more compounds of the formula IIA-10 selected from the following sub-formulae IIA-10-1,IIA-10-3, IIA-10-5:

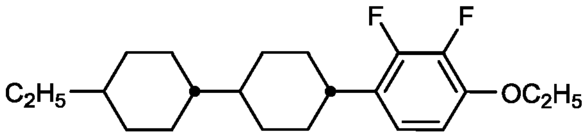

IIA-10-1

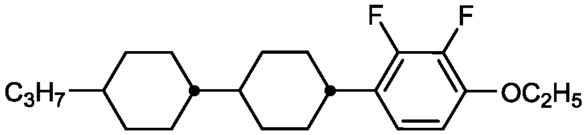

IIA-10-2

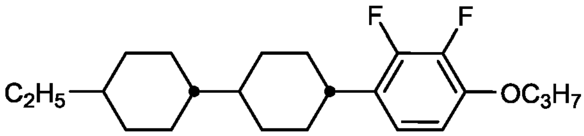

IIA-10-3

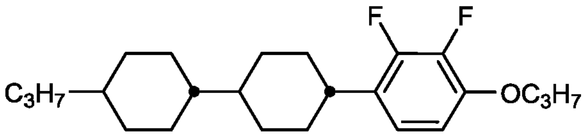

IIA-10-4

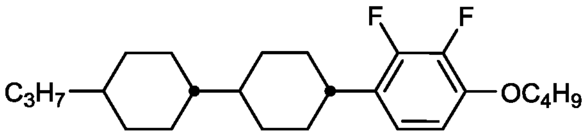

IIA-10-5

Alternatively, preferably in addition to the compounds of the formulae IIA-10-1 to IIA-10-5, the medium comprises one or more compoudns of the formulae IIA-10a-1 to IIA-10a-5:

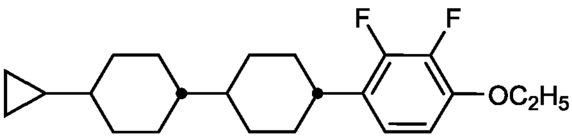

IIA-10a-1

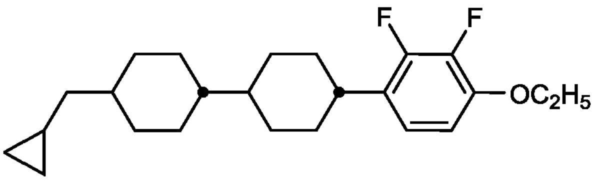

IIA-10a-2

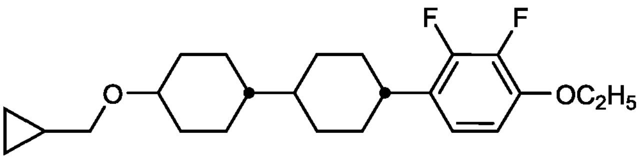

IIA-10a-3

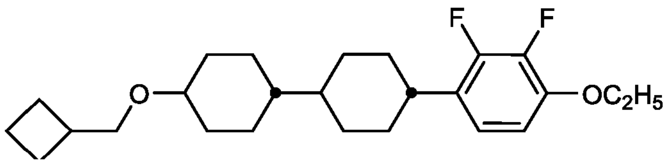

IIA-10a-4

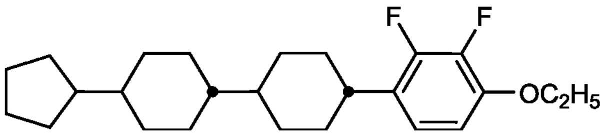

IIA-10a-5

According to the invention the medium comprises compounds of formulae IIB-10-1 and IIB-10-4. Preferably, the medium further comprises one or more compounds of the formula IIB-10 selected from the following sub-formulae IIB-10-2, IIB-10-3, IIB-10-5:

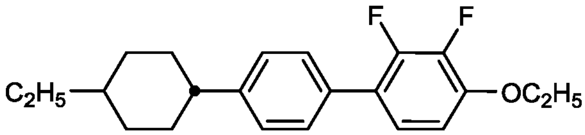

IIB-10-1

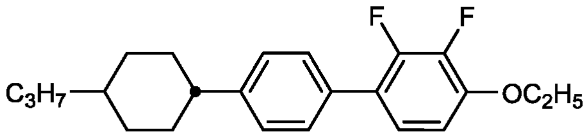

IIB-10-2

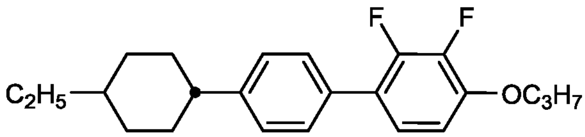

IIB-10-3

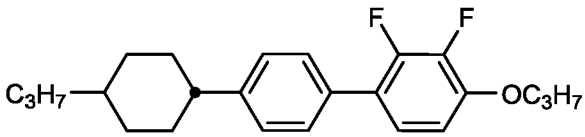

IIB-10-4

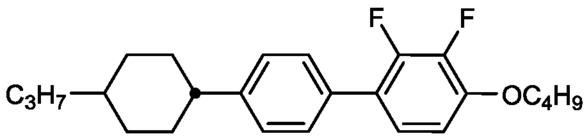

IIB-10-5

Alternatively, preferably in addition to the compounds of the formulae IIB-10-1 to IIB-10-5, the medium comprises one or more compoudns of the formulae IIB-10a-1 to IIB-10a-5:

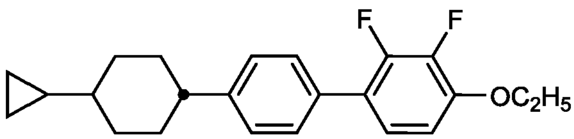

IIB-10a-1

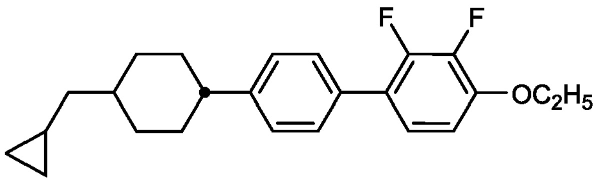

IIB-10a-2

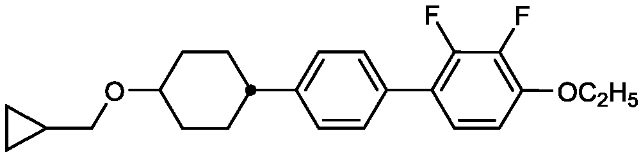

IIB-10a-3

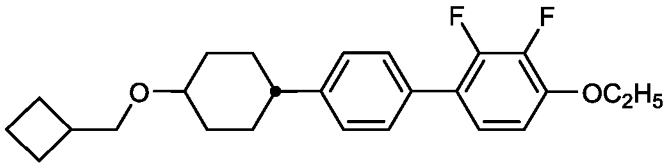

IIB-10a-4

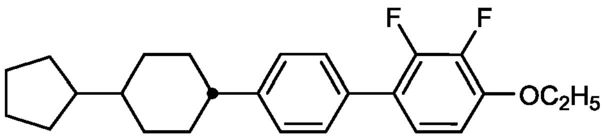

IIB-10a-5

The medium according to the invention optionally comprises one or more compounds of formula III

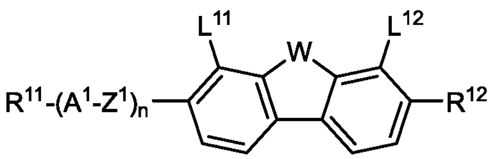

III

in which

$R^{11}$ and $R^{12}$ each, independently of one another, denote H, an alkyl or alkoxy radical having 1 to 15 C atoms, where one or more $CH_2$ groups in these radicals may each be replaced, independently of one another, by

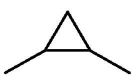, 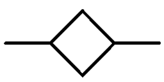, 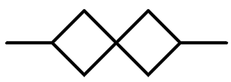, 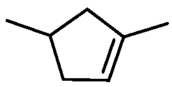, 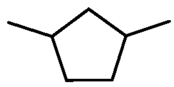,

-C≡C-, $-CF_2O-$, $-OCF_2-$, -CH=CH-, by -O-, -CO-O- or -O-CO- in such a way that O atoms are not linked directly to one another, and in which one or more H atoms may be replaced by halogen,

$A^1$ on each occurrence, independently of one another, denotes

a) 1,4-cyclohexenylene or 1,4-cyclohexylene radical, in which one or two non-adjacent $CH_2$ groups may be replaced by -O- or -S-,

b) a 1,4-phenylene radical, in which one or two CH groups may be replaced by N, or

c) a radical from the group spiro[3.3]heptane-2,6-diyl, 1,4-bicyclo-[2.2.2]octylene, naphthalene-2,6-diyl, decahydronaphthalene-2,6-diyl, 1,2,3,4-tetrahydronaphthalene-2,6-diyl, phenanthrene-2,7-diyl and fluorene-2,7-diyl,

where the radicals a), b) and c) may be mono- or polysubstituted by halogen atoms,

n denotes 0, 1 or 2, preferably 0 or 1,

$Z^1$ on each occurrence independently of one another denotes -CO-O-, -O-CO-, $-CF_2O-$ , $-OCF_2-$, $-CH_2O-$, $-OCH_2-$, $-CH_2-$, $-CH_2CH_2-$, $-(CH_2)_4-$, $-CH=CH-CH_2O-$, $-C_2F_4-$, $-CH_2CF_2-$, $-CF_2CH_2-$, -CF=CF-, -CH=CF-, -CF=CH-, -CH=CH-, -C≡C- or a single bond, and

$L^{11}$ and $L^{12}$ each, independently of one another, denote F, Cl, $CF_3$ or $CHF_2$, preferably H or F, most preferably F, and

W denotes O or S.

The compounds of formula III are preferably selected from the compounds of the formula III-1 and/or III-2

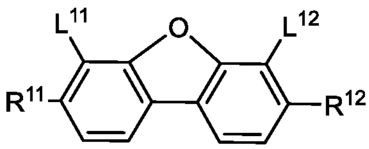

III-1

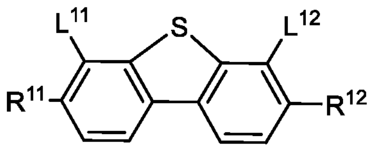

III-2

in which the occurring groups have the same meanings as given under formula III above and preferably

$R^{11}$ and $R^{12}$ each, independently of one another, an alkyl, alkenyl or alkoxy radical having up to 15 C atoms, more preferably one or both of them denote an alkoxy radical and

$L^{11}$ and $L^{12}$ each preferably denote F.

Preferably, the compounds of the formula III-1 selected from the group of compounds of formulae III-1-1 to III-1-11, preferably of formula III-1-6,

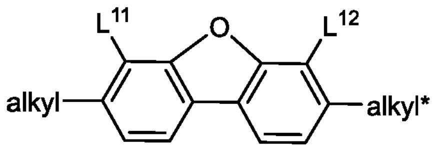

III-1-1

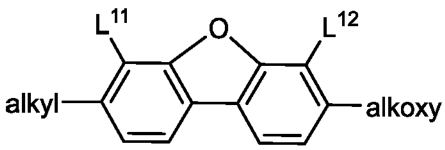

III-1-2

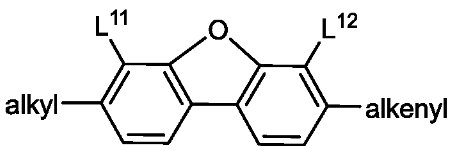

III-1-3

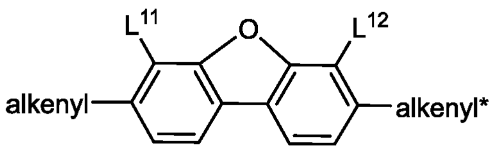

III-1-4

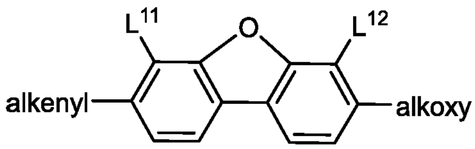

III-1-5

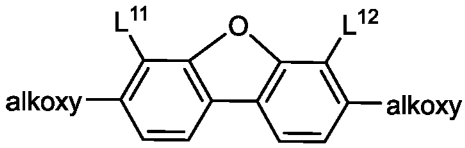

III-1-6

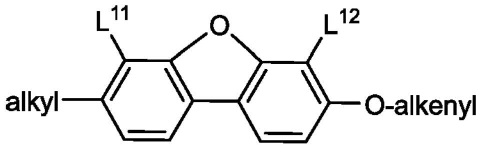

III-1-7

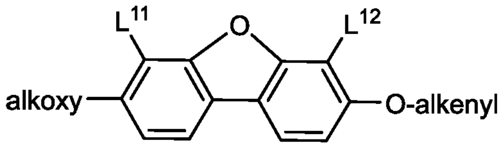

III-1-8

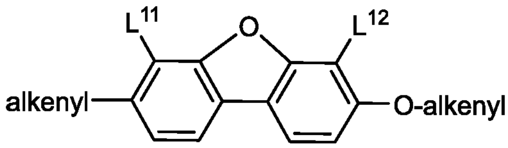

III-1-9

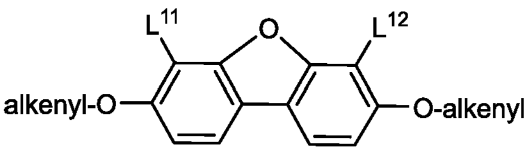

III-1-10,

in which

alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and $L^{11}$ and $L^{12}$ each, independently of one another, denote F or Cl, preferably both F.

Preferably, the compounds of the formula III-2 are selected from the group of compounds of formulae III-2-1 to III-2-10, preferably of formula III-2-6,

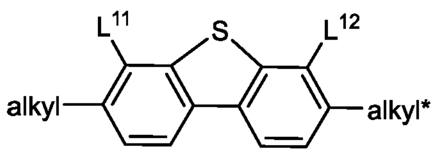

III-2-1

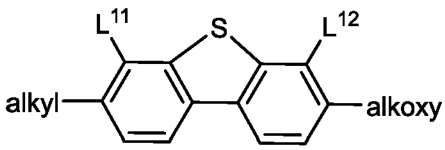

III-2-2

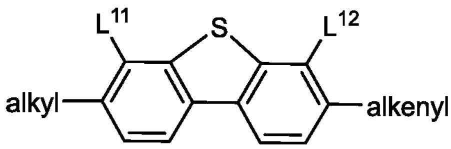

III-2-3

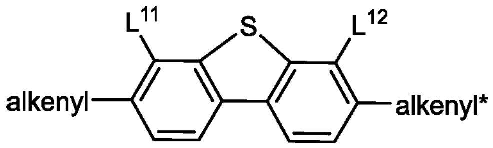

III-2-4

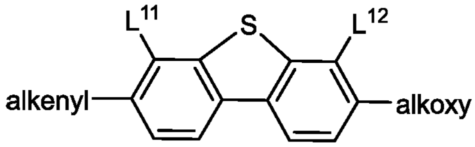

III-2-5

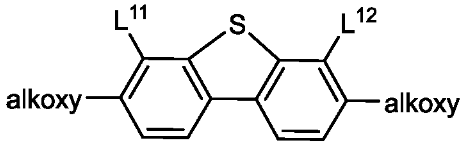

III-2-6

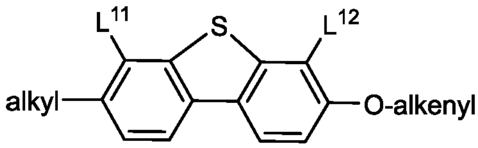

III-2-7

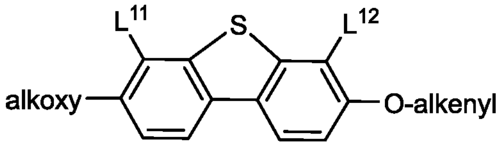

III-2-8

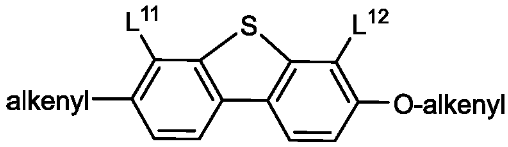

III-2-9

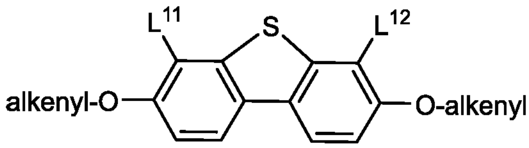

III-2-10,

in which

alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and $L^1$ and

$L^2$ each, independently of one another, denote F or Cl, preferably both F.

Optionally the medium comprises one or more compounds of the formula IIIA-1 and/or IIIA-2

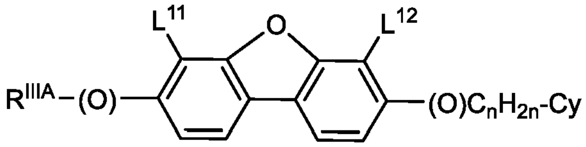

IIIA-1

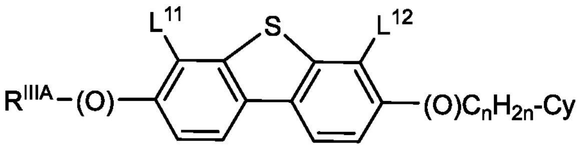

IIIA-2

in which $L^{11}$ and $L^{12}$ have the same meanings as given under formula III, (O) denotes O or a single bond,

| | |
|---|---|
| $R^{IIIA}$ | denotes alkyl or alkenyl having up to 7 C atoms or a group Cy-$C_mH_{2m+1}$-, |
| m and n | are, identically or differently, 0, 1, 2, 3, 4, 5 or 6, preferably 1, 2 or 3, very preferably 1, |
| Cy | denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl or cyclopentyl. |

The compounds of formula IIIA-1 and/or IIIA-2 are contained in the medium either alternatively or in addition to the compounds of formula III, preferably additionally.

Very preferred compounds of the formulae IIIA-1 and IIIA-2 are the following:

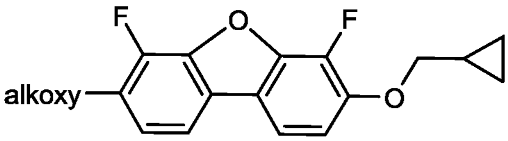

IIIA-1-1

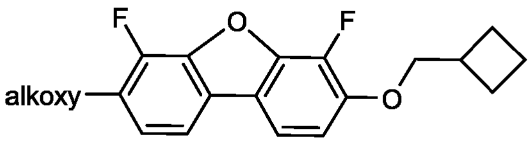

IIIA-1-2

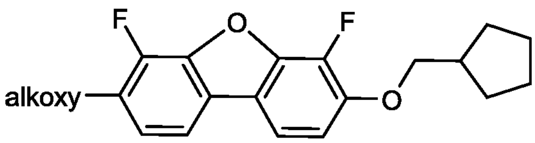

IIIA-1-3

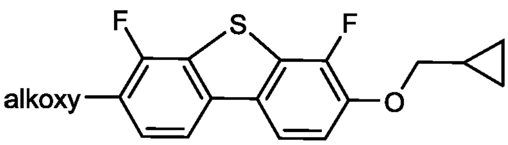

IIIA-1-1

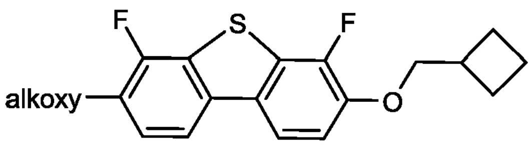

IIIA-1-2

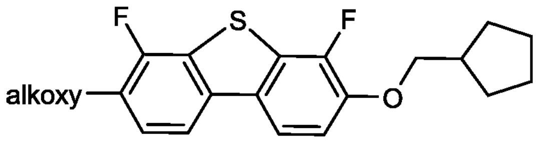

IIIA-1-3

in which alkoxy denotes a straight-chain alkoxy radical having 1-6 C atoms or alternatively $-(CH_2)_nF$ in which n is 2,3,4, or 5, preferably $C_2H_4F$.

In a preferred embodiment of the present invention, the medium comprises one or more compounds of formula III-3

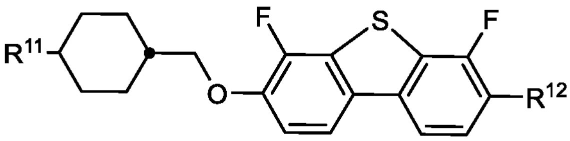

III-3

in which

$R^{11}$, $R^{12}$ identically or differently, denote H, an alkyl or alkoxy radical having 1 to 15 C atoms, in which one or more $CH_2$ groups in these radicals are optionally replaced, independently of one another, by -C≡C-, $-CF_2O-$, $-OCF_2-$, -CH=CH-,

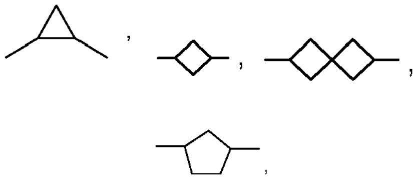

-O-, -CO-O- or -O-CO- in such a way that O atoms are not linked directly to one another, and in which, in addition, one or more H atoms may be replaced by halogen.

The compounds of formula III-3 are preferably selected from the group of compounds of the formulae III-3-1 to III-3-10:

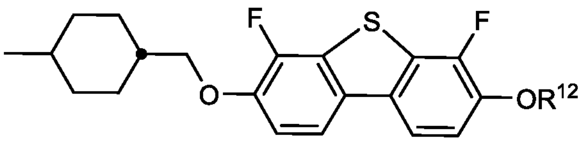

III-3-1

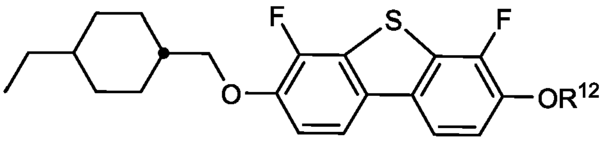

III-3-2

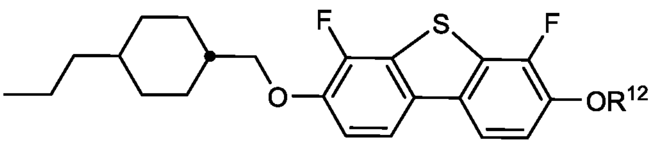

III-3-3

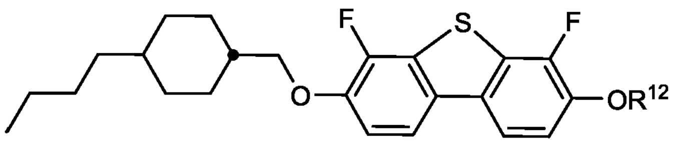
III-3-4

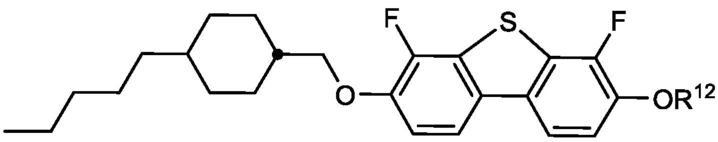
III-3-5

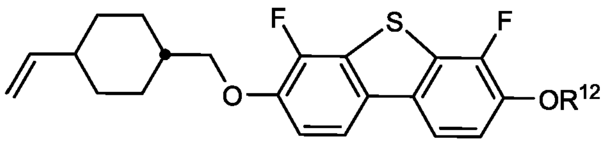
III-3-6

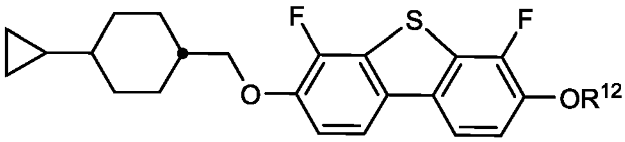
III-3-7

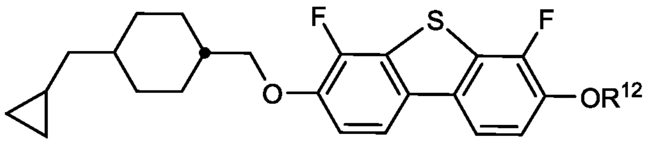
III-3-8

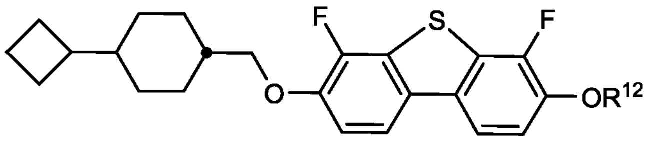
III-3-9

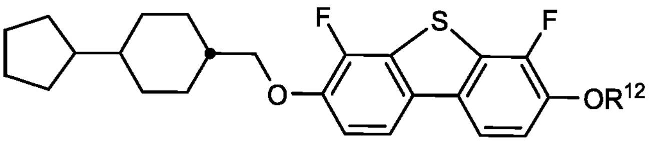
III-3-10

in which $R^{12}$ denotes alkyl having 1 to 7 C-atoms, preferably ethyl, n-propyl or n-butyl, or alternatively cyclopropylmethyl, cyclobutylmethyl or cyclopentylmethyl or alternatively $-(CH_2)_nF$ in which n is 2,3,4, or 5, preferably $C_2H_4F$.

In a preferred embodiment of the present invention, the medium comprises one or more compounds of the formulae III-4 to III-6, preferably of formula III-5,

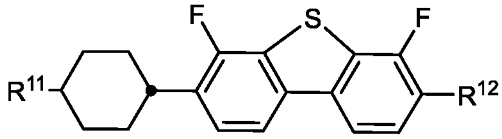
III-4

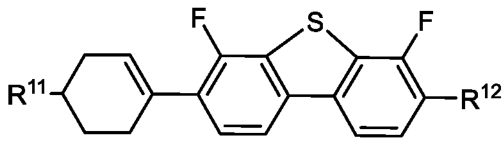
III-5

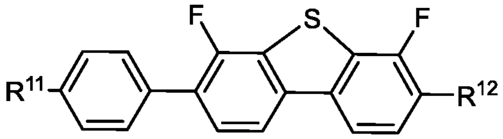

III-6

in which the parameters have the meanings given above, $R^{11}$ preferably denotes straight-chain alkyl and $R^{12}$ preferably denotes alkoxy, each having 1 to 7 C atoms.

In a preferred embodiment the media comprise one or more compounds of the formula I selected from the group of compounds of formulae III-7 to III-9, preferably of formula III-8,

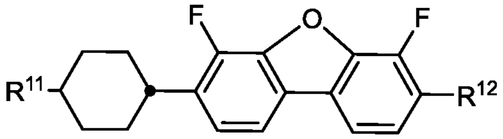

III-7

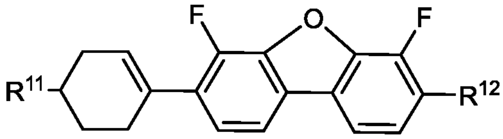

III-8

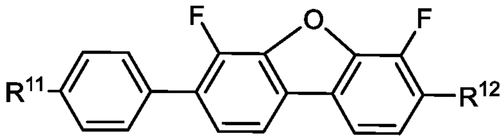

III-9

in which the parameters have the meanings given above, $R^{11}$ preferably denotes straight-chain alkyl and $R^{12}$ preferably denotes alkoxy each having 1 to 7 C atoms.

Preferred compounds of the formula IVa are selected from the compounds of the formulae IVa-1 to IVa-4:

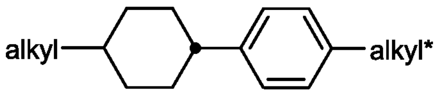

IVa-1

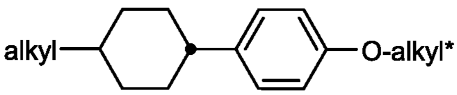

IVa-2

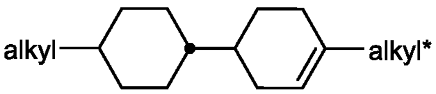

IVa-3

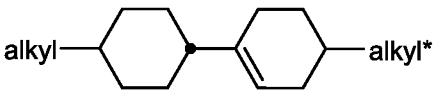

IVa-4

in which

alkyl and alkyl* each, independently of one another, denote a straight-chain alkyl radical having 1 to 6 C atoms.

The medium according to the invention preferably comprises at least one compound of the formula IVa-2.

Preferred compounds of the formula IVb are selected from the compounds of the formulae IVb-1 to IVb-3:

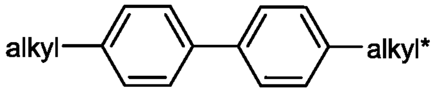

IVb-1

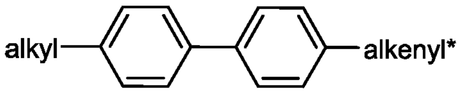

IVb-2

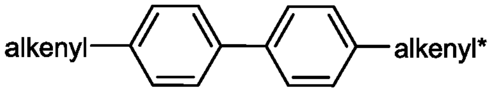

IVb-3

in which

| | |
|---|---|
| alkyl and alkyl* | each, independently of one another, denote a straight-chain alkyl radical having 1 to 6 C atoms, and |
| alkenyl and alkenyl* | each, independently of one another, denote a straight-chain alkenyl radical having 2 to 6 C atoms. |

Of the compounds of the formulae IVb-1 to IVb-3, the compounds of the formula IVb-1 are particularly preferred.

Particularly preferred compounds of the formulae IVb are selected from the following compounds:

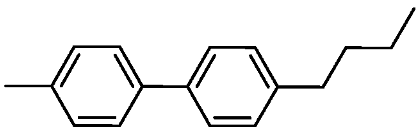

IVb-1-1

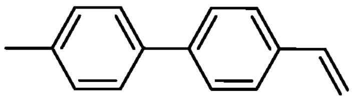

IVb-2-1

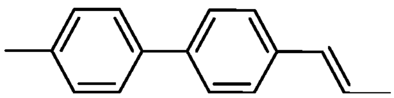

IVb-2-2

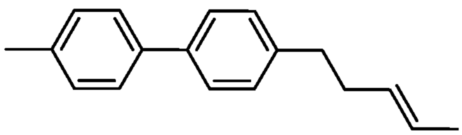

IVb-2-3

The medium according to the invention comprises the compound IVb-1-1. compound IVb-1-1.

The compounds of formula V are preferably selected from the compounds of the formulae V-1 to V-16:

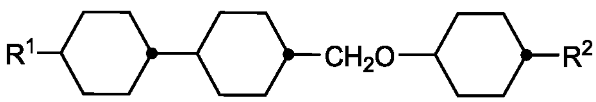

V-1

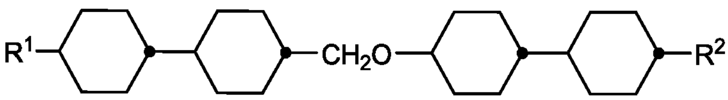

V-2

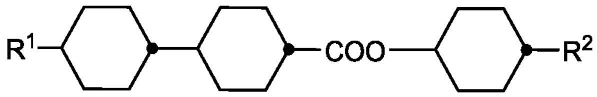

V-3

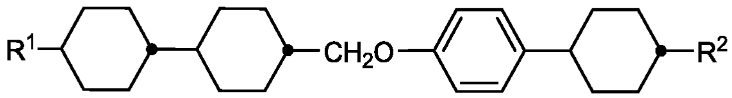

V-4

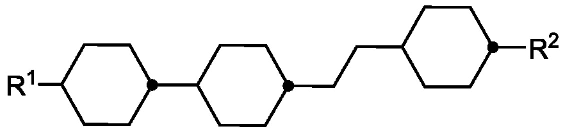

V-5

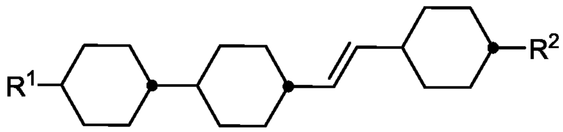

V-6

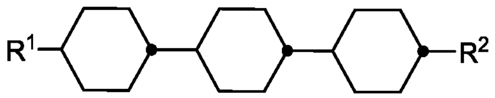

V-7

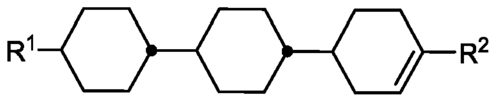

V-8

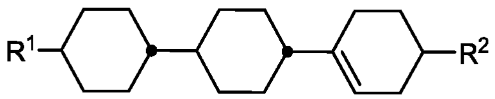

V-9

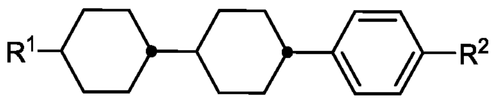

V-10

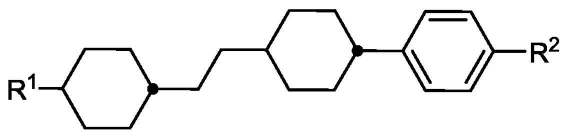

V-11

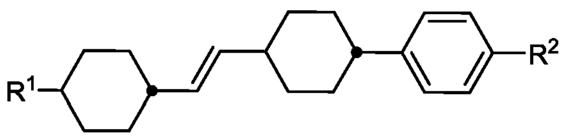

V-12

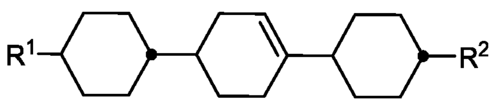

V-13

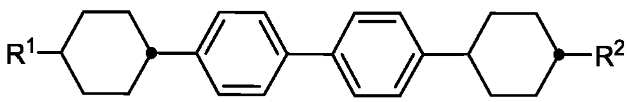

V-14

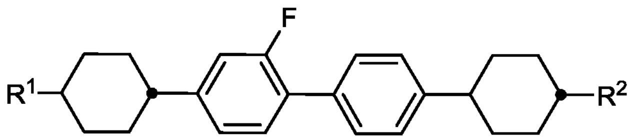

V-15

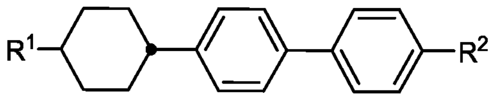

V-16

in which $R^1$ and $R^2$ have the meanings indicated for $R^{2A}$ above.

$R^1$ and $R^2$ preferably each, independently of one another, denote straight-chain alkyl having 1 to 7 C atoms or alkenyl having 2 to 7 C atoms.

Preferred media comprise one or more compounds of the formulae V-1, V-3, V-4, V-6, V-7, V-10, V-11, V-12, V-14, V-15, and/or V-16. Very preferably, the medium comprises one or more compounds of formula V-16.

In a preferred embodiment of the present invention the medium additionally comprises one or more compounds of the formulae VI-1 to VI-9

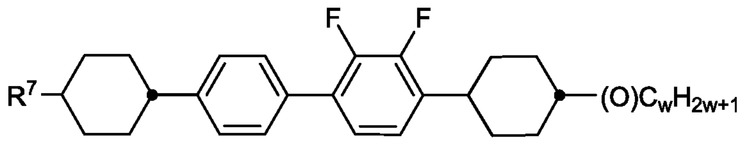

VI-1

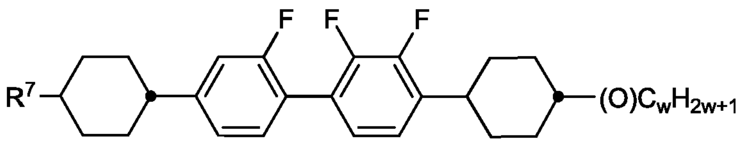

VI-2

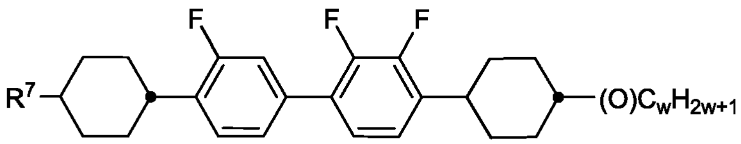

VI-3

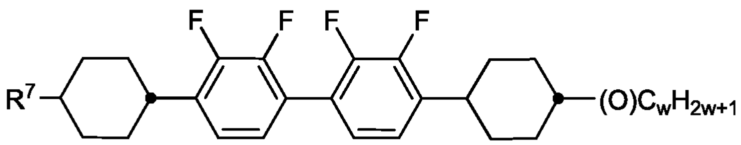

VI-4

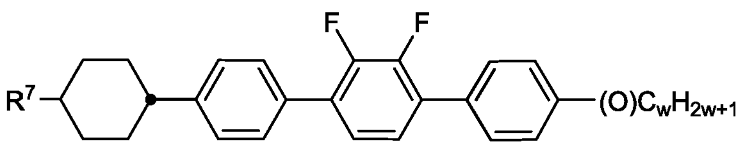

VI-5

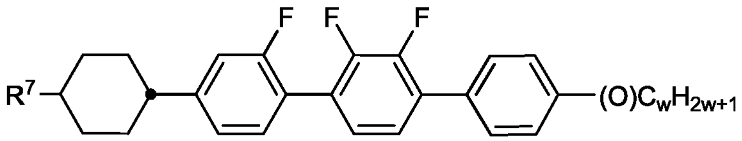

VI-6

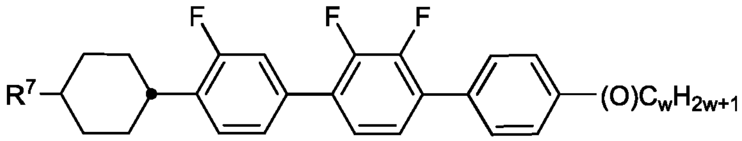

VI-7

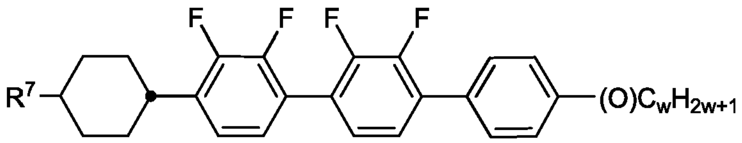

VI-8

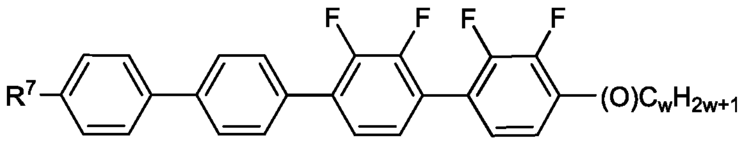

VI-9

in which

R7 each, independently of one another, have one of the meanings indicated for $R^{2A}$ in Claim 5, and

w and x each, independently of one another, denote 1 to 6.

Particular preference is given to mixtures comprising at least one compound of the formula V-9.

In a preferred embodiment of the present invention the medium additionally comprises one or more compounds of the formulae VII-1 to VII-21,

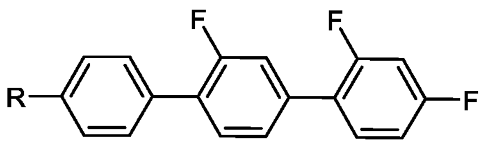

VII-1

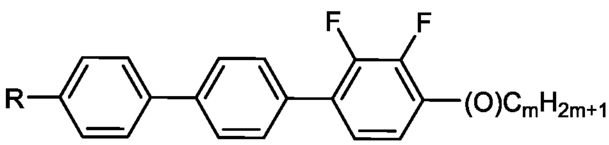

VII-2

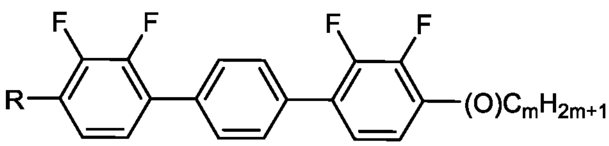

VII-3

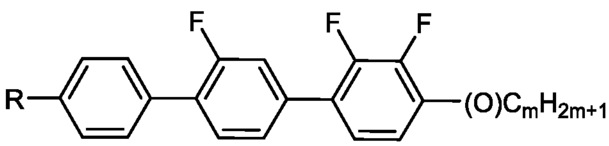

VII-4

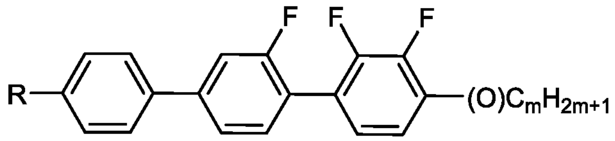

VII-5

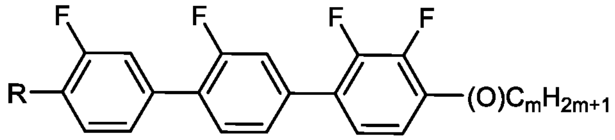

VII-6

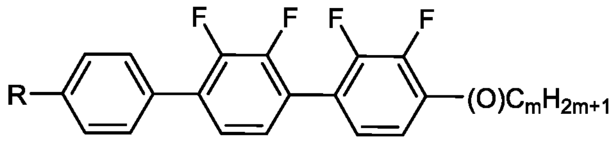

VII-7

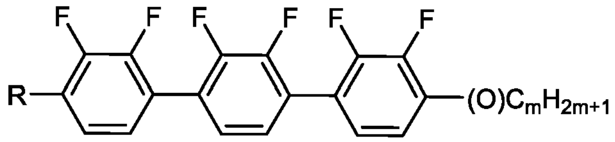

VII-8

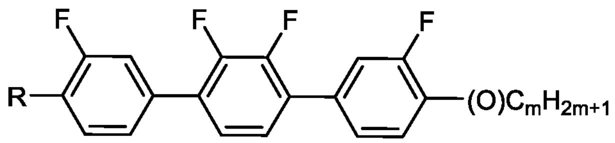

VII-9

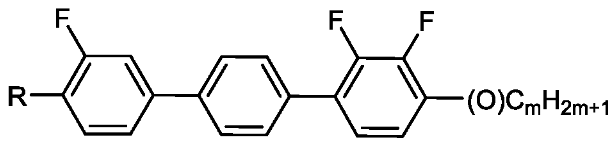

VII-10

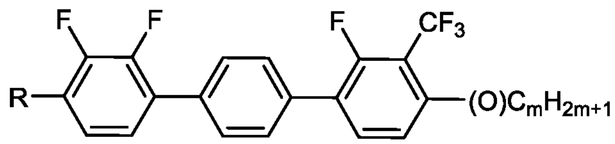

VII-11

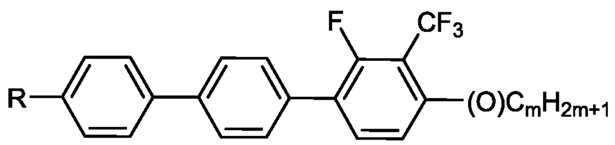

VII-12

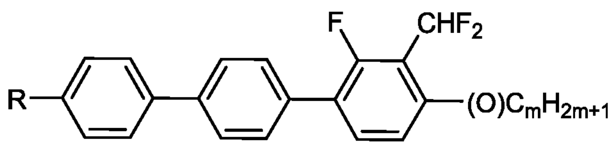

VII-13

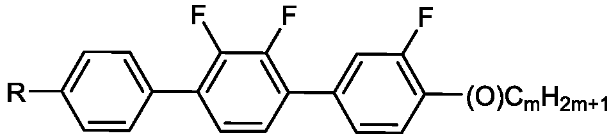

VII-14

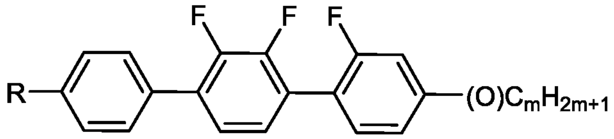

VII-15

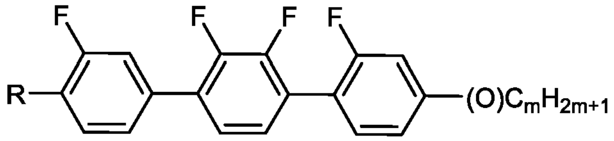

VII-16

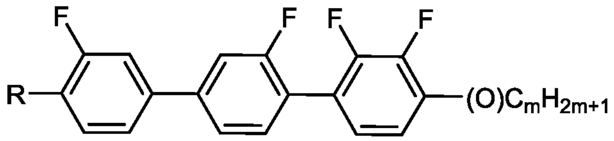

VII-17

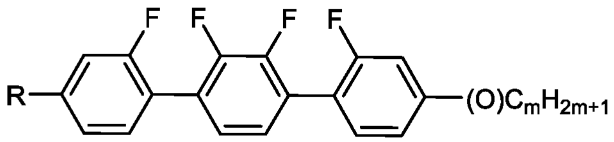

VII-18

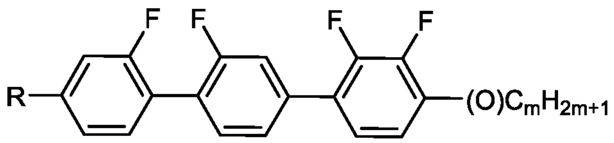

VII-19

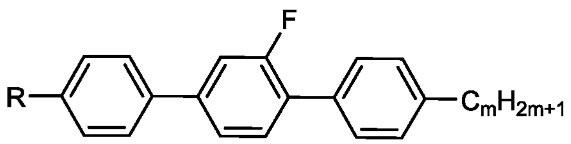

VII-20

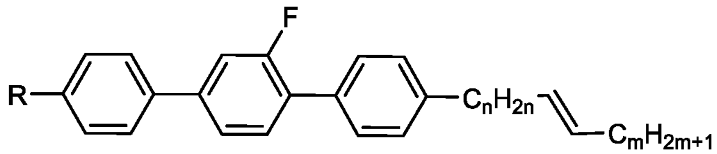

VII-21

in which

R denotes a straight-chain alkyl or alkoxy radical having 1 to 6 C atoms, (O) denotes -O- or a single bond, and m is 0, 1, 2, 3, 4, 5 or 6 and n is 0, 1, 2, 3 or 4.

R preferably denotes methyl, ethyl, propyl, butyl, pentyl, hexyl, methoxy, ethoxy, propoxy, butoxy, pentoxy.

Particular preference is given to compounds of the formulae VII-1, VII-2, VII-4, VII-20 and VII-21. In these compounds, R preferably denotes alkyl, furthermore alkoxy, each having 1 to 5 C atoms. In the compounds of the formula VII-20, R preferably denotes alkyl or alkenyl, in particular alkyl. In the compound of the formula VII-21, R preferably

denotes alkyl.

The total concentration of the compounds of the formula I in the medium is preferably in the range of from 10% to 40%, preferably from 12% to 35%, very preferably from 15% to 30%.

The total concentration of the compounds of the formula IVa in the medium is preferably in the range of from 4% to 20%, preferably from 6% to 18%, very preferably from 8% to 15%.

The total concentration of the compounds of the formula IVb in the medium is preferably in the range of from 2% to 15%, preferably from 3% to 12%, very preferably from 4% to 10%.

The total concentration of the compounds of the formula V in the medium is preferably in the range of from 2% to 15%, preferably from 3% to 12%, very preferably from 4% to 10%.

The total concentration of the compounds of the formula IIA in the medium is preferably in the range of from 15% to 50%, preferably from 20% to 45%, very preferably from 25% to 40%.

The total concentration of the compounds of the formula IIB in the medium is preferably in the range of from 5% to 30%, preferably from 8% to 25%, very preferably from 10% to 20%.

According to the present invention, the medium comprises the compound of the formula I-1-1

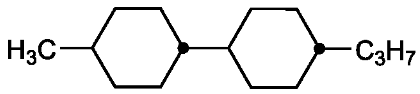

I-1-1

in a concentration in the range of from 6 % to 9 %, and
the compound of the formula I-1-5

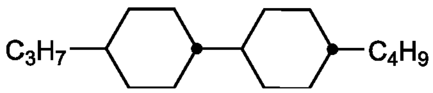

I-1-5

in a concentration in the range of from 6 % to 9 %, and
the compound of the formula I-1-6

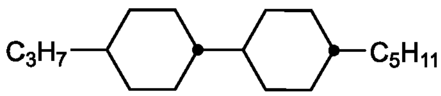

I-1-6

in a concentration in the range of from 5 % to 8 %, and
the compound of the formula IVa-2-1

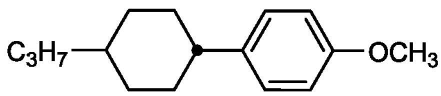

IVa-2-1

in a concentration in the range of from 10 % to 13 %, and
the compound of the formula IVb-1-1

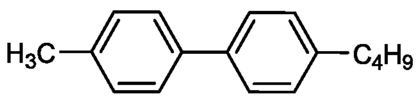

IVb-1-1

in a concentration in the range of from 5 % to 8 %, and
the compound of the formula V-16-1

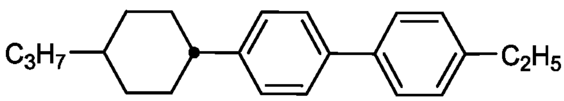

V-16-1

in a concentration in the range of from 5 % to 8 %, and
the compound of the formula IIA-2-2

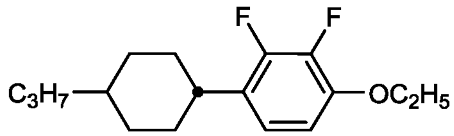

IIA-2-2

in a concentration in the range of from 8 to 11 %, and the compound of the formula IIA-2-5

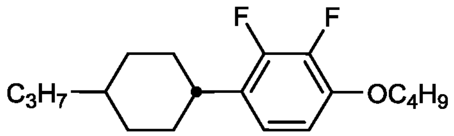

IIA-2-5

in a concentration in the range of from 6 to 9 %,and the compound of the formula IIA-10-2

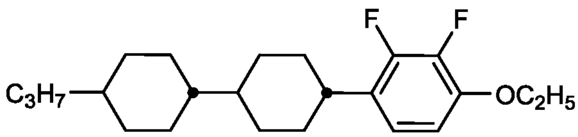

IIA-10-2

in a concentration in the range of from 6 % to 9 %, and the compound of the formula IIA-10-4

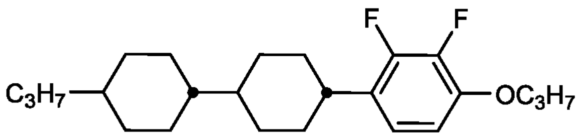

IIA-10-4

in a concentration in the range of from 6 to 9 %, and the compound of the formula IIB-10-1

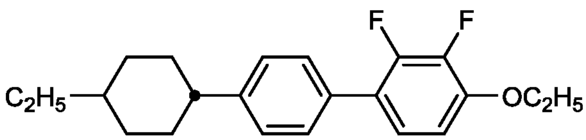

IIB-10-1

in a concentration in the range of from 7 to 10 %, and the compound of the formula IIB-10-4

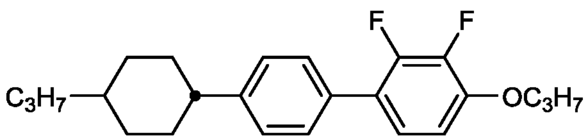

IIB-10-4

in a concentration in the range of from 7 to 10 %.

Above and below, it goes without saying that the percentages of the individual mixture components do not exceed 100 % in total.

The medium according to the invention preferably comprises the compounds of the formulae I-1-1, I-1-5, I-1-6, V-16-1, IVa-2-1, IVb-1-1, IIA-2-2, IIA-2-5, IIA-10-2, IIA-10-4, IIB-10-1, IIB-10-4 in a total concentration in the range of from 80 % to 100 %, more preferably from 90% to 99 %, very preferably from 95% to 98%.

The medium according to the invention preferably consists of 100% of compounds of the formulae I-1-1, I-1-5, I-1-6, V-16-1, IVa-2-1, IVb-1-1, IIA-2-2, IIA-2-5, IIA-10-2, IIA-10-4, IIB-10-1, IIB-10-4.

The invention further relates to a medium consisting of the medium described above, herein also referred to as host medium, and, in addition, a chiral dopant.

The invention further relates to a medium consisting of the medium described above, herein also referred to as host medium, and, in addition, a polymerisable compound.

The invention further relates to a medium consisting of the medium described above, herein also referred to as host medium, and, in addition, a chiral dopant and a polymerisable compound.

Further preferred embodiments are listed below:

a) Liquid-crystalline medium comprising at least one compound of the formulae Z-1 to Z-7,

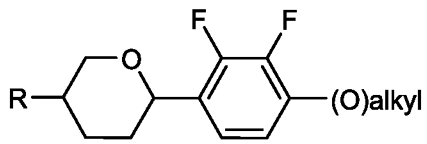

Z-1

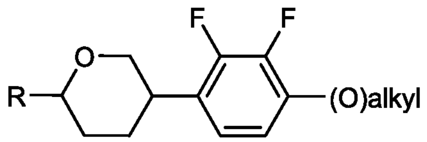

Z-2

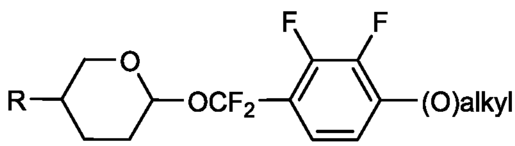

Z-3

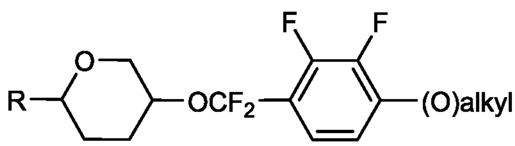

Z-4

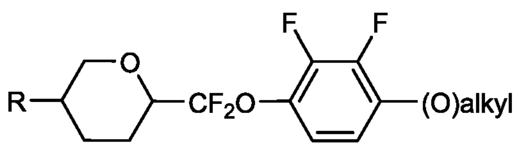

Z-5

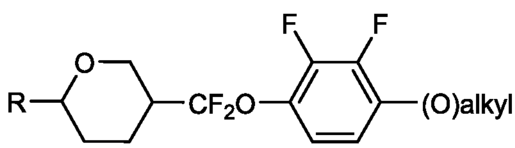

Z-6

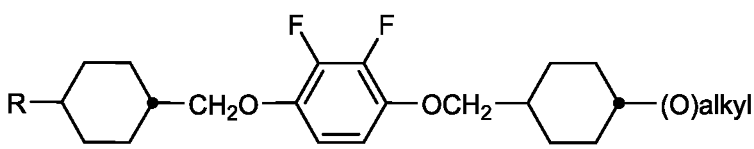

Z-7

in which R and alkyl have the meanings indicated above for formula III.

b) Preferred liquid-crystalline media according to the invention comprise one or more substances which contain a tetrahydronaphthyl or naphthyl unit, such as, for example, the compounds of the formulae N-1 to N-5,

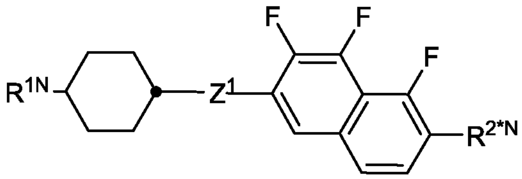

N-1

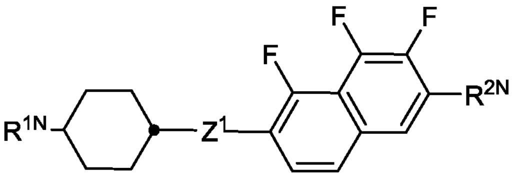

N-2

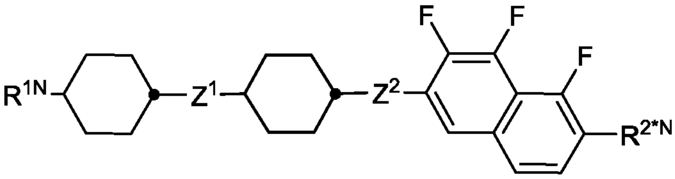

N-3

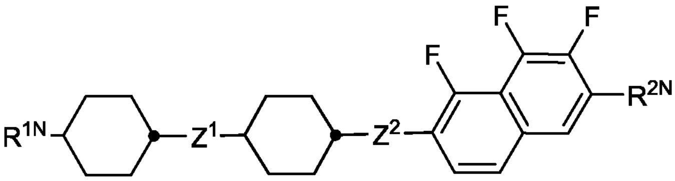

N-4

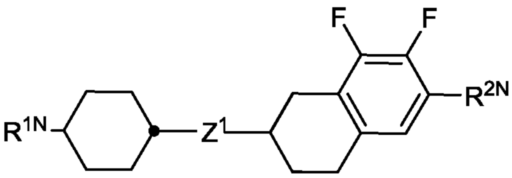

N-5

in which $R^{1N}$ and $R^{2N}$ each, independently of one another, have the meanings indicated for $R^{2A}$, preferably denote straight-chain alkyl, straight-chain alkoxy or straight-chain alkenyl, and

$Z^1$ and $Z^2$ each, independently of one another, denote $-C_2H_4-$, -CH=CH-, $-(CH_2)_4-$, $-(CH_2)_3O-$, $-O(CH_2)_3-$, $-CH=CHCH_2CH_2-$, $-CH_2CH_2CH=CH-$, $-CH_2O-$, $-OCH_2-$, -COO-, -OCO-, $-C_2F_4-$, -C F=CF-, -CF=CH-, -CH=CF-, $-CF_2O-$, $-OCF_2-$, $-CH_2-$ or a single bond.

c) Preferred mixtures comprise one or more compounds selected from the group of the difluorodibenzochroman compounds of the formula BC, chromans of the formula CR, and fluorinated phenanthrenes of the formulae PH-1 and PH-2,

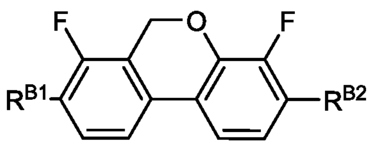

BC

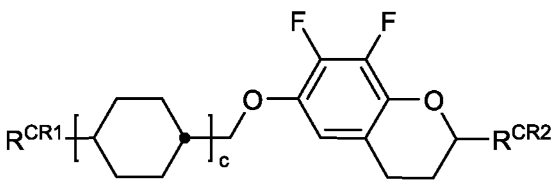

CR

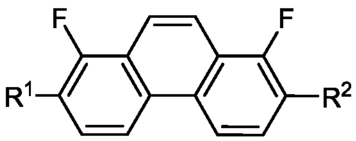

PH-1

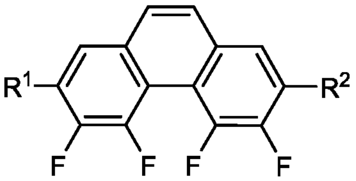

PH-2

in which

$R^{B1}$, $R^{B2}$, $R^{CR1}$, $R^{CR2}$, $R^1$, $R^2$ each, independently of one another, have the meaning of $R^{2A}$. c is 0, 1 or 2. $R^1$ and $R^2$ preferably, independently of one another, denote alkyl or alkoxy having 1 to 6 C atoms.

Particularly preferred compounds of the formulae BC and CR are the compounds BC-1 to BC-7 and CR-1 to CR-5,

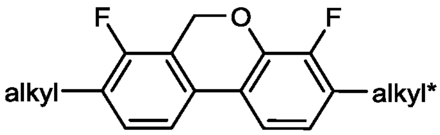

BC-1

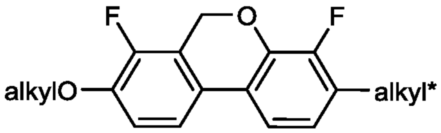

BC-2

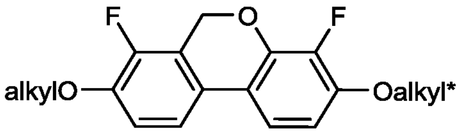

BC-3

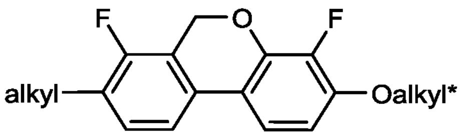

BC-4

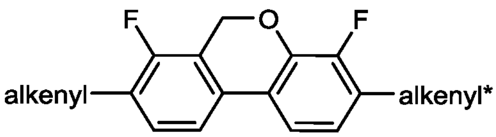

BC-5

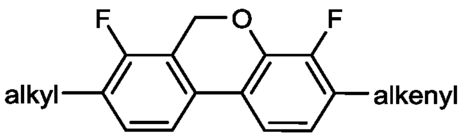

BC-6

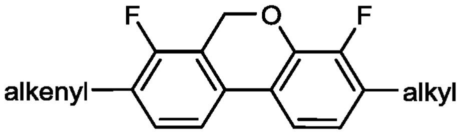

BC-7

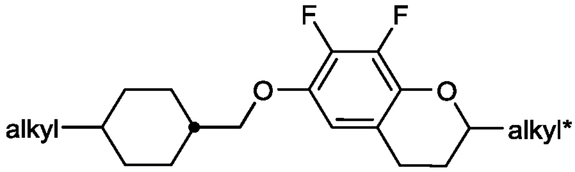

CR-1

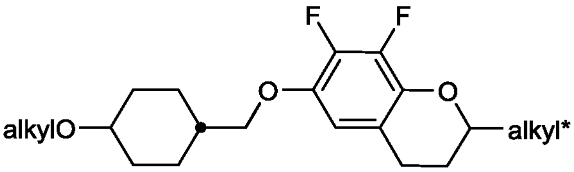

CR-2

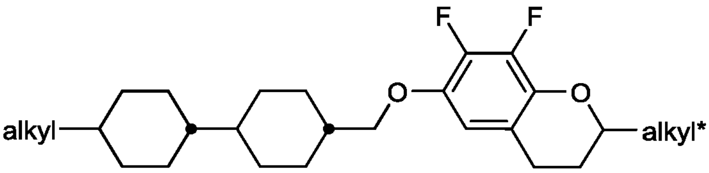

CR-3

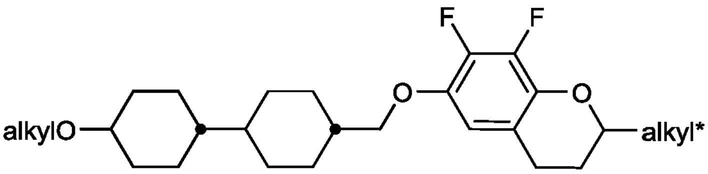

CR-4

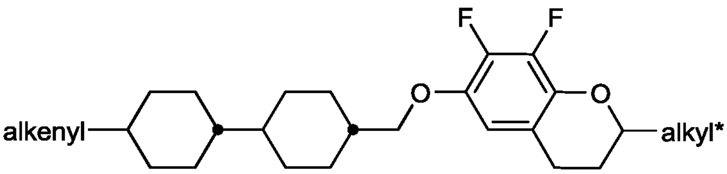

CR-5

in which

alkyl and alkyl* each, independently of one another, denote a straight-chain alkyl radical having 1 to 6 C atoms, and

alkenyl and alkenyl* each, independently of one another, denote a straight-chain alkenyl radical having 2 to 6 C atoms.

Very particular preference is given to mixtures comprising one, two or three compounds of the formula BC-2, BF-1 and/or BF-2.

d) Preferred mixtures comprise one or more indane compounds of the formula In,

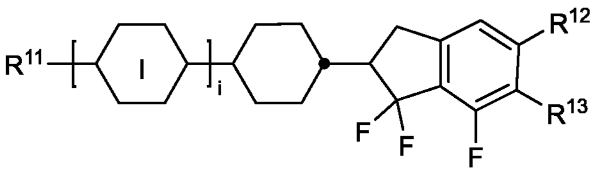

In

in which

| | |
|---|---|
| $R^{11}$, $R^{12}$, $R^{13}$ | each, independently of one another, denote a straight-chain alkyl, alkoxy, alkoxyalkyl or alkenyl radical having 1 to 6 C atoms, |
| $R^{12}$ and $R^{13}$ | additionally denote halogen, preferably F, |

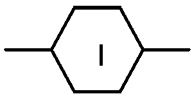

denotes

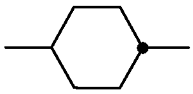 , 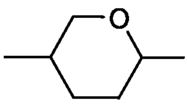 , 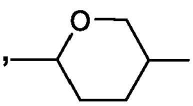 , 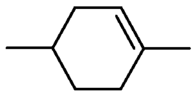 ,

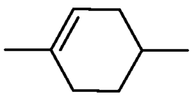 , 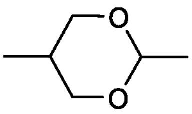 , 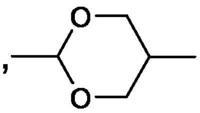 , 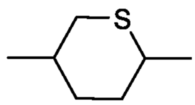 ,

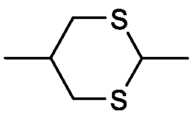 , 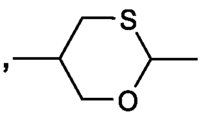 ,

| | |
|---|---|
| i | denotes 0, 1 or 2. |

Preferred compounds of the formula In are the compounds of the formulae In-1 to In-16 indicated below:

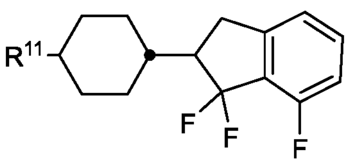

In-1

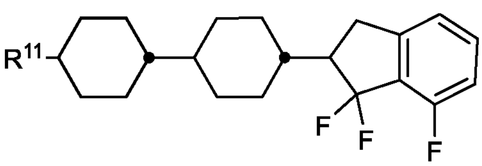

In-2

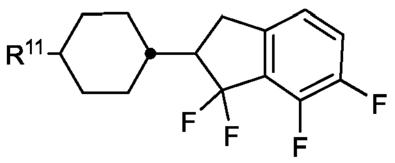

In-3

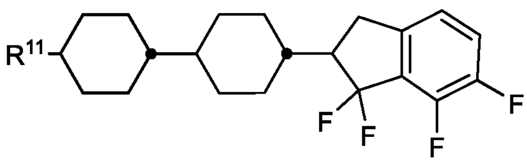

In-4

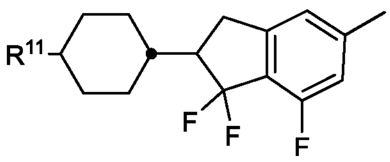

In-5

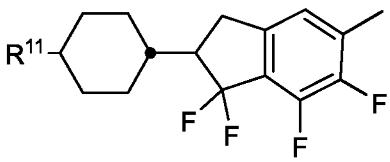

In-6

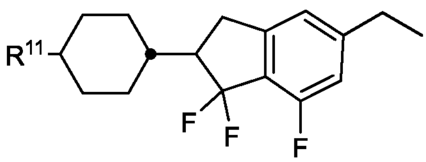

In-7

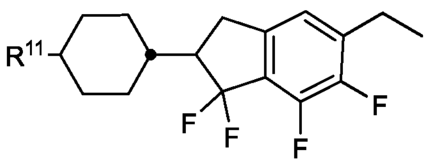

In-8

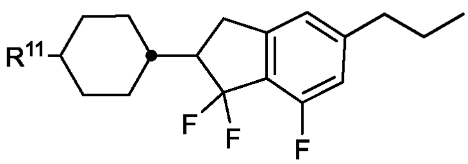

In-9

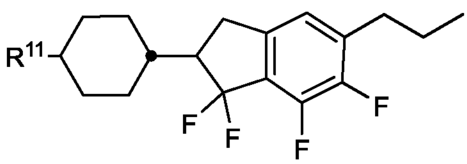

In-10

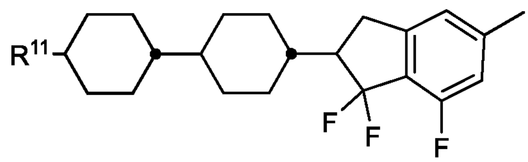

In-11

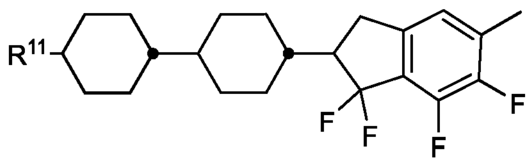

In-12

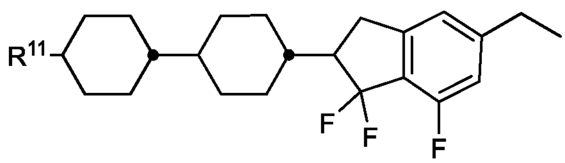

In-13

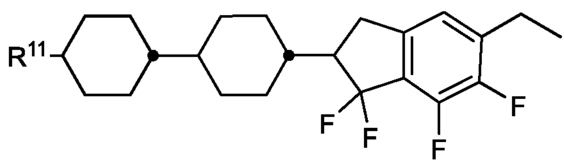

In-14

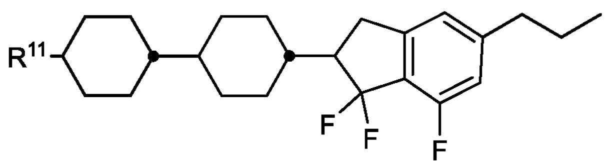

In-15

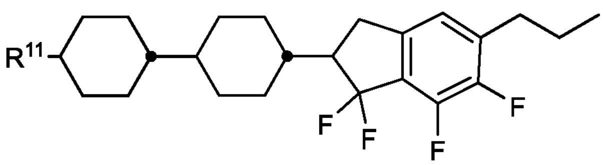

In-16.

Particular preference is given to the compounds of the formulae In-1, In-2, In-3 and In-4.

e) Preferred mixtures additionally comprise one or more compounds of the formulae L-1 to L-5,

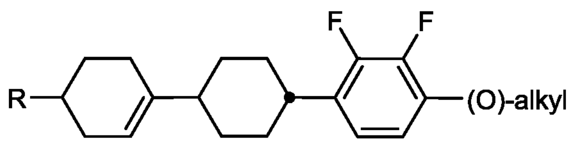

L-1

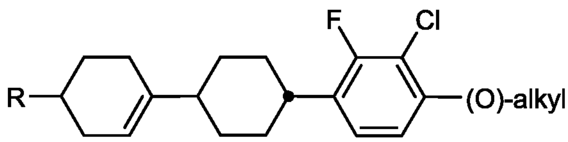

L-2

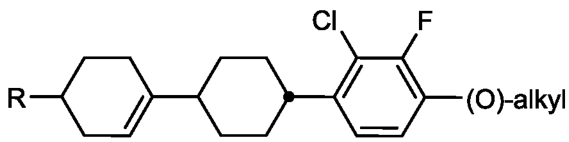

L-3

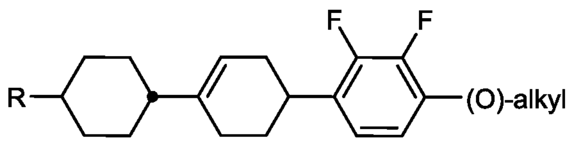

L-4

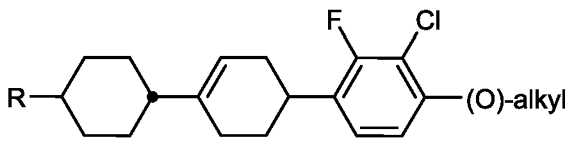

L-5

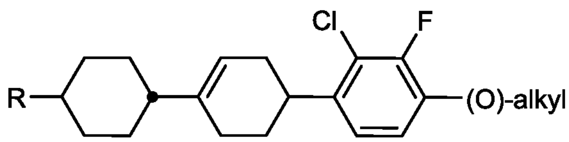

L-6

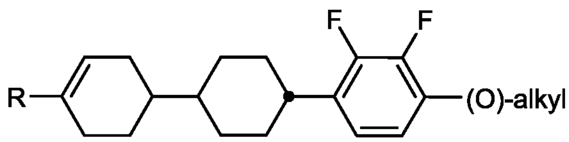

L-7

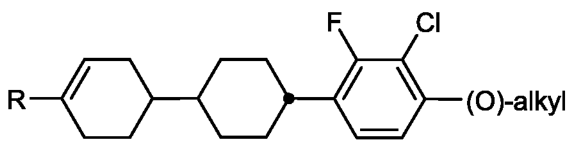

L-8

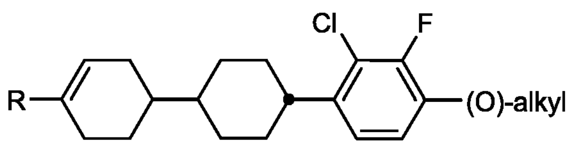

L-9

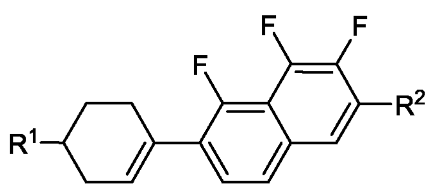

L-10

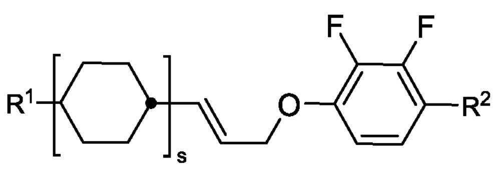

L-11,

in which

R, $R^1$ and $R^2$ each, independently of one another, have the meanings indicated for $R^{2A}$ in formula IIA above, and alkyl denotes an alkyl radical having 1 to 6 C atoms. The parameter s denotes 1 or 2.
The compounds of the formulae L-1 to L-9 are preferably employed in concentrations of 5 to 15 % by weight, in particular 5 to 12 % by weight and very particularly preferably 8 to 10 % by weight.

f) Preferred mixtures additionally comprise one or more compounds of formula IIA-Y

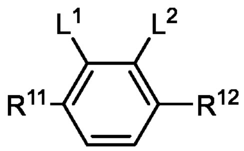

IIA-Y

in which $R^{11}$ and $R^{12}$ have one of the meanings given for $R^{2A}$ in formula IIA above, and $L^1$ and $L^2$, identically or differently, denote F or Cl.

Preferred compounds of the formula IIA-Y are selected from the group consisting of the following sub-formulae

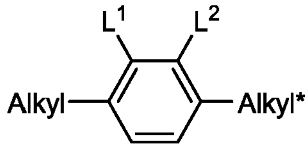

IIA-Y1

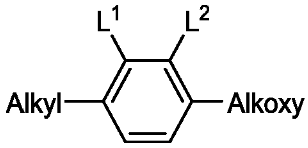

IIA-Y2

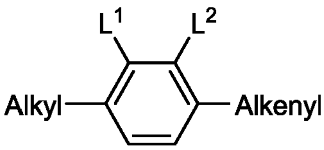

IIA-Y3

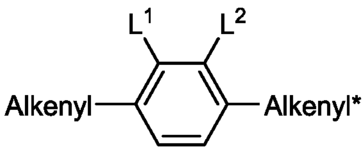

IIA-Y4

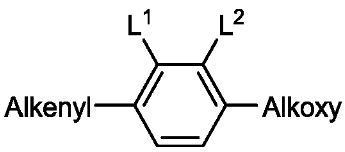

IIA-Y5

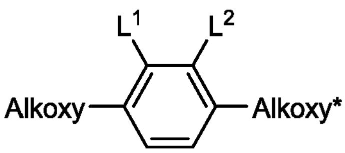

IIA-Y6

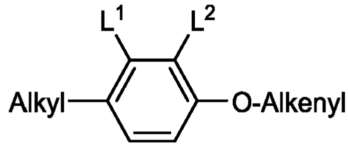

IIA-Y7

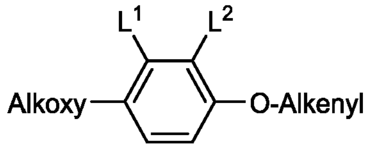

IIA-Y8

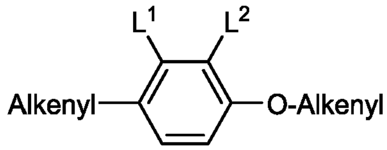

IIA-Y9

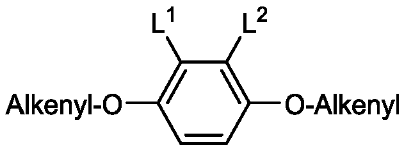

IIA-Y10

in which, Alkyl and Alkyl* each, independently of one another, denote a straight-chain alkyl radical having 1-6 C atoms, Alkoxy denotes a straight-chain alkoxy radical having 1-6 C atoms, Alkenyl and Alkenyl* each, independently of one another, denote a straight-chain alkenyl radical having 2-6 C atoms, and O denotes an oxygen atom or a single bond. Alkenyl and Alkenyl* preferably denote $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred compounds of the formula IIA-Y are selected from the group consisting of following sub-formulae:

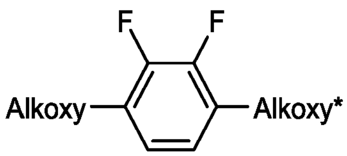

IIA-Y6a

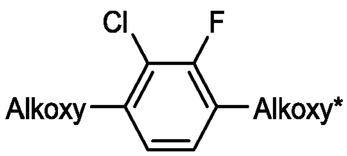

IIA-Y6b

in which Alkoxy and Alkoxy* have the meanings defined above and preferably denote methoxy, ethoxy, n- propyloxy, n-butyloxy or n-pentyloxy.

The liquid crystal medium according to the invention, herein also referred to as liquid crystal host mixture, is suitable for the use in polymer stabilised displays. To this end, the medium according to the invention optionally comprises one or more polymerisable compounds of formula P

$$P\text{-}Sp\text{-}A^1\text{-}(Z^1\text{-}A^2)_z\text{-}R \qquad P$$

in which the individual radicals, independently of each other and on each occurrence identically or differently, have the following meanings:

P a polymerisable group,

Sp a spacer group or a single bond,

$A^1$, $A^2$ an aromatic, heteroaromatic, alicyclic or heterocyclic group, preferably having 4 to 25 ring atoms, which may

also contain fused rings, and which is unsubstituted, or mono- or polysubstituted by L,
$Z^1$ -O-, -S-, -CO-, -CO-O-, -O-CO-, -O-CO-O-, $-OCH_2-$, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -CH=CF-, -CF=CH-, -C≡C-, -CH=CH-CO-O-, -O-CO-CH=CH-, $-CH_2-CH_2-CO-O-$, -O-CO-CHz-CHz-, $-CR^0R^{00}-$, or a single bond,
$R^0$, $R^{00}$ H or alkyl having 1 to 12 C atoms,
R H, L, or P-Sp-,
L F, Cl, -CN, P-Sp- or straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by P-Sp-, F or Cl,
z 0, 1, 2 or 3,
n1 1,2, 3 or 4.

As used herein, the terms "active layer" and "switchable layer" mean a layer in an electrooptical display, for example an LC display, that comprises one or more molecules having structural and optical anisotropy, like for example LC molecules, which change their orientation upon an external stimulus like an electric or magnetic field, resulting in a change of the transmission of the layer for polarized or unpolarized light.

As used herein, the terms "tilt" and "tilt angle" will be understood to mean a tilted alignment of the LC molecules of an LC medium relative to the surfaces of the cell in an LC display (here preferably a PSA display). The tilt angle here denotes the average angle (< 90°) between the longitudinal molecular axes of the LC molecules (LC director) and the surface of the plane-parallel outer plates which form the LC cell. A low value for the tilt angle (i.e. a large deviation from the 90° angle) corresponds to a large tilt here. A suitable method for measurement of the tilt angle is given in the examples. Unless indicated otherwise, tilt angle values disclosed above and below relate to this measurement method.

As used herein, the terms "reactive mesogen" and "RM" will be understood to mean a compound containing a mesogenic or liquid crystalline skeleton, and one or more functional groups attached thereto which are suitable for polymerisation and are also referred to as "polymerisable group" or "P".

Unless stated otherwise, the term "polymerisable compound" as used herein will be understood to mean a polymerisable monomeric compound.

As used herein, the term "low-molecular-weight compound" will be understood to mean to a compound that is monomeric and/or is not prepared by a polymerisation reaction, as opposed to a "polymeric compound" or a "polymer".

As used herein, the term "unpolymerisable compound" will be understood to mean a compound that does not contain a functional group that is suitable for polymerisation under the conditions usually applied for the polymerisation of the RMs.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerisation. Typical mesogenic groups are, for example, rigid rod- or disc-shaped units. An overview of the terms and definitions used in connection with mesogenic or LC compounds is given in Pure Appl. Chem. 2001, 73(5), 888 and C. Tschierske, G. Pelzl, S. Diele, Angew. Chem. 2004, 116, 6340-6368.

As used herein, the terms "optically active" and "chiral" are synonyms for materials that are able to induce a helical pitch in a nematic host material, also referred to as "chiral dopants".

The term "spacer group", hereinafter also referred to as "Sp", as used herein is known to the person skilled in the art and is described in the literature, see, for example, Pure Appl. Chem. 2001, 73(5), 888 and C. Tschierske, G. Pelzl, S. Diele, Angew. Chem. 2004, 116, 6340-6368. As used herein, the terms "spacer group" or "spacer" mean a flexible group, for example an alkylene group, which connects the mesogenic group and the polymerisable group(s) in a polymerisable mesogenic compound.

Above and below,

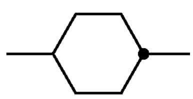

denotes a trans-1,4-cyclohexylene ring.

In a group

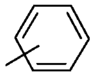

the single bond shown between the two ring atoms can be attached to any free position of the benzene ring.

Above and below "organic group" denotes a carbon or hydrocarbon group.

"Carbon group" denotes a mono- or polyvalent organic group containing at least one carbon atom, where this either contains no further atoms (such as, for example, -C≡C-) or optionally contains one or more further atoms, such as, for example, N, O, S, B, P, Si, Se, As, Te or Ge (for example carbonyl, etc.). The term "hydrocarbon group" denotes a carbon group which additionally contains one or more H atoms and optionally one or more heteroatoms, such as, for example, N, O, S, B, P, Si, Se, As, Te or Ge.

"Halogen" denotes F, Cl, Br or I, preferably F or Cl.

-CO-, -C(=O)- and -C(O)- denote a carbonyl group, i.e.

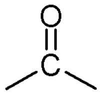

.

A carbon or hydrocarbon group can be a saturated or unsaturated group. Unsaturated groups are, for example, aryl, alkenyl or alkynyl groups. A carbon or hydrocarbon radical having more than 3 C atoms can be straight-chain, branched and/or cyclic and may also contain spiro links or condensed rings.

The terms "alkyl", "aryl", "heteroaryl", etc., also encompass polyvalent groups, for example alkylene, arylene, heteroarylene, etc.

The term "aryl" denotes an aromatic carbon group or a group derived therefrom. The term "heteroaryl" denotes "aryl" as defined above, containing one or more heteroatoms, preferably selected from N, O, S, Se, Te, Si and Ge.

Preferred carbon and hydrocarbon groups are optionally substituted, straight-chain, branched or cyclic, alkyl, alkenyl, alkynyl, alkoxy, alkylcarbonyl, alkoxycarbonyl, alkylcarbonyloxy and alkoxycarbonyloxy having 1 to 40, preferably 1 to 20, very preferably 1 to 12, C atoms, optionally substituted aryl or aryloxy having 5 to 30, preferably 6 to 25, C atoms, or optionally substituted alkylaryl, arylalkyl, alkylaryloxy, arylalkyloxy, arylcarbonyl, aryloxycarbonyl, arylcarbonyloxy and aryloxycarbonyloxy having 5 to 30, preferably 6 to 25, C atoms, wherein one or more C atoms may also be replaced by hetero atoms, preferably selected from N, O, S, Se, Te, Si and Ge.

Further preferred carbon and hydrocarbon groups are $C_1$-$C_{20}$ alkyl, $C_2$-$C_{20}$ alkenyl, $C_2$-$C_{20}$ alkynyl, $C_3$-$C_{20}$ allyl, $C_4$-$C_{20}$ alkyldienyl, $C_4$-$C_{20}$ polyenyl, $C_6$-$C_{20}$ cycloalkyl, $C_4$-$C_{15}$ cycloalkenyl, $C_6$-$C_{30}$ aryl, $C_6$-$C_{30}$ alkylaryl, $C_6$-$C_{30}$ arylalkyl, $C_6$-$C_{30}$ alkylaryloxy, $C_6$-$C_{30}$ arylalkyloxy, $C_2$-$C_{30}$ heteroaryl, $C_2$-$C_{30}$ heteroaryloxy.

Particular preference is given to $C_1$-$C_{12}$ alkyl, $C_2$-$C_{12}$ alkenyl, $C_2$-$C_{12}$ alkynyl, $C_6$-$C_{25}$ aryl and $C_2$-$C_{25}$ heteroaryl.

Further preferred carbon and hydrocarbon groups are straight-chain, branched or cyclic alkyl having 1 to 20, preferably 1 to 12, C atoms, which are unsubstituted or mono- or polysubstituted by F, C!, Br, I or CN and in which one or more non-adjacent $CH_2$ groups may each be replaced, independently of one another, by -C($R^x$)=C($R^x$)-, - C≡-, -N($R^x$)-, -O-, -S-,

-CO-, -CO-O-, -O-CO-, -O-CO-O- in such a way that O and/or S atoms are not linked directly to one another.

$R^x$ preferably denotes H, F, Cl, CN, a straight-chain, branched or cyclic alkyl chain having 1 to 25 C atoms, in which, in addition, one or more non-adjacent C atoms may be replaced by -O-, -S-, -CO-, -CO-O-, -O-CO-, -O-CO-O- and in which one or more H atoms may be replaced by F or Cl, or denotes an optionally substituted aryl or aryloxy group with 6 to 30 C atoms, or an optionally substituted heteroaryl or heteroaryloxy group with 2 to 30 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl, etc.

Preferred alkynyl groups are, for example, ethynyl, propynyl, butynyl, pentynyl, hexynyl, octynyl, etc.

Preferred alkoxy groups are, for example, methoxy, ethoxy, 2-methoxyethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy, etc.

Preferred amino groups are, for example, dimethylamino, methylamino, methylphenylamino, phenylamino, etc.

Aryl and heteroaryl groups can be monocyclic or polycyclic, i.e. they can contain one ring (such as, for example, phenyl) or two or more rings, which may also be fused (such as, for example, naphthyl) or covalently bonded (such as,

for example, biphenyl), or contain a combination of fused and linked rings. Heteroaryl groups contain one or more heteroatoms, preferably selected from O, N, S and Se.

Particular preference is given to mono-, bi- or tricyclic aryl groups having 6 to 25 C atoms and mono-, bi- or tricyclic heteroaryl groups having 5 to 25 ring atoms, which optionally contain fused rings and are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another.

Preferred aryl groups are, for example, phenyl, biphenyl, terphenyl, [1,1':3',1"]terphenyl-2'-yl, naphthyl, anthracene, binaphthyl, phenanthrene, 9,10-dihydro-phenanthrene, pyrene, dihydropyrene, chrysene, perylene, tetracene, pentacene, benzopyrene, fluorene, indene, indenofluorene, spirobifluorene, etc.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, isobenzothiophene, dibenzothiophene, benzothiophene, benzothiadiazothiophene, or combinations of these groups.

The aryl and heteroaryl groups mentioned above and below may also be substituted by alkyl, alkoxy, thioalkyl, fluorine, fluoroalkyl or further aryl or heteroaryl groups.

The (non-aromatic) alicyclic and heterocyclic groups encompass both saturated rings, i.e. those containing exclusively single bonds, and also partially unsaturated rings, i.e. those which may also contain multiple bonds. Heterocyclic rings contain one or more heteroatoms, preferably selected from Si, O, N, S and Se.

The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi- or tricyclic groups having 5 to 25 ring atoms, which optionally contain fused rings and are optionally substituted. Preference is furthermore given to 5-, 6-, 7- or 8-membered carbocyclic groups, in which, in addition, one or more C atoms may be replaced by Si and/or one or more CH groups may be replaced by N and/or one or more non-adjacent $CH_2$ groups may be replaced by -O- and/or -S-.

Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]pentane-1 ,3-diyl, bicyclo[2.2.2]octane-1,4-diyl, spiro[3.3]heptane-2,6-diyl, octahydro-4,7-methanoindane-2,5-diyl.

Preferred substituents are, for example, solubility-promoting groups, such as alkyl or alkoxy, electron-withdrawing groups, such as fluorine, nitro or nitrile, or substituents for increasing the glass transition temperature (Tg) in the polymer, in particular bulky groups, such as, for example, t-butyl or optionally substituted aryl groups.

Preferred substituents, hereinafter also referred to as "$L^S$", are, for example, F, Cl, Br, I, -CN, $-NO_2$, -NCO, -NCS, -OCN, -SCN, $-C(=O)N(R^x)_2$, $-C(=O)Y^1$,

$-C(=O)R^x$, $-N(R^x)_2$, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or C!, optionally substituted silyl having 1 to 20 Si atoms, or optionally substituted aryl having 6 to 25, preferably 6 to 15, C atoms,

wherein $R^x$ denotes H, F, Cl, CN, or straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, CI, P- or P-Sp-, and

$Y^1$ denotes halogen.

"Substituted silyl or aryl" preferably means substituted by halogen, -CN,
$R^0$, $-OR^0$, $-CO-R^0$, $-CO-O-R^0$, $-O-CO-R^0$ or $-O-CO-O-R^0$, wherein R° denotes H or alkyl with 1 to 20 C atoms.

Particularly preferred substituents L are, for example, F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, furthermore phenyl.

$A^1$ and $A^2$ very preferably denote

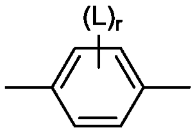

in which L has one of the meanings indicated above and r denotes 0, 1, 2, 3 or 4, in particular

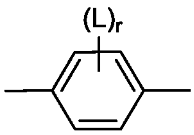

denotes

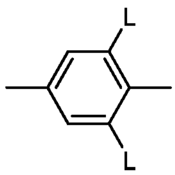 , 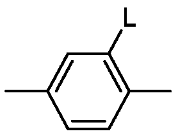 , 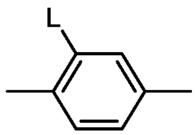 ,

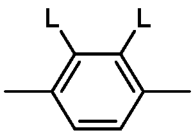 , 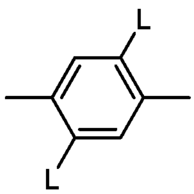 or 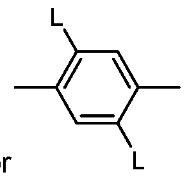 ,

The polymerisable group P is a group which is suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C- triple bond, and groups which are suitable for polymerisation with ring opening, such as, for example, oxetane or epoxide groups.

Preferred groups P are selected from the group consisting of

$CH_2=CW^1-CO-O-$, $CH_2=CW^1-CO-$,

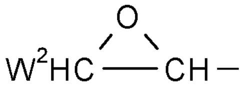 , 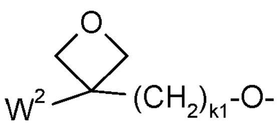 ,

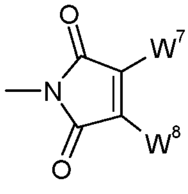 , 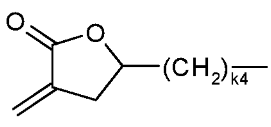 ,

$CH_2=CW^2-(O)_{k3}-$, $CW^1=CH-CO-(O)_{k3}-$, $CW^1=CH-CO-NH-$, $CH_2=CW^1-CO-NH-$, $CH_3-CH=CH-O-$, $(CH_2=CH)_2CH-OCO-$, $(CH_2=CH-CH_2)_2CH-OCO-$, $(CH_2=CH)_2CH-O-$, $(CH_2=CH-CH_2)_2N-$, $(CH_2=CH-CH_2)_2N-CO-$, $HO-CW^2W^3-$, $HS-CW^2W^3-$, $HW^2N-$, $HO-CW^2W^3-NH-$, $CH_2=CW^1CO-NH-$, $CH_2=CH-(COO)_{k1}-Phe-(O)_{k2}-$, $CH_2=CH-(CO)_{k1}-Phe-(O)_{k2}-$, Phe-CH=CH-, HOOC-, OCN- and $W^4W^5W^6Si-$, in which $W^1$ denotes H, F, Cl, CN, $CF_3$, phenyl or alkyl having 1 to 5 C atoms, in particular H, F, Cl or $CH_3$, $W^2$ and $W^3$ each, independently of one another, denote H or alkyl having 1 to 5 C atoms, in particular H, methyl, ethyl or n-propyl, $W^4$, $W^5$ and $W^6$ each, independently of one another, denote Cl, oxaalkyl or oxacarbonylalkyl having 1 to 5 C atoms, $W^7$ and $W^8$ each, independently of one another, denote H, Cl or alkyl having 1 to 5 C atoms, Phe denotes 1 ,4-phenylene, which is optionally substituted by one or more radicals L as defined above which are other than P-Sp-, $k_1$, $k_2$ and $k_3$ each, independently of one another, denote 0 or 1, $k_3$ preferably denotes 1, and $k_4$ denotes an integer from 1 to 10.

Very preferred groups P are selected from the group consisting of

$CH_2=CW^1-CO-O-$, $CH_2=CW^1-CO-$,

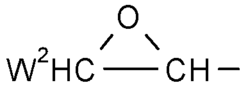, 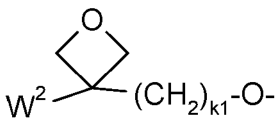,

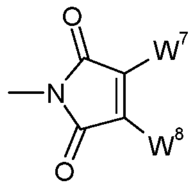, 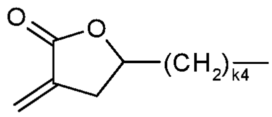,

$CH_2=CW^2-O-$, $CH_2=CW^2-$, $CW^1=CH-CO-(O)_{k3}-$, $CW^1=CH-CO-NH-$, $CH_2=CW^1-CO-NH-$, $(CH_2=CH)_2CH-OCO-$, $(CH_2=CH-CH_2)_2CH-OCO-$, $(CH_2=CH)_2CH-O-$, $(CH_2=CH-CH_2)_2N-$, $(CH_2=CH-CH_2)_2N-CO-$, $CH_2=CW^1-CO-NH-$, $CH_2=CH-(COO)_{k1}-Phe-(O)_{k2}-$, $CH_2=CH-(CO)_{k1}-Phe-(O)_{k2}-$, Phe-CH=CH- and $W^4W^5W^6Si-$, in which $W^1$ denotes H, F, Cl, CN, $CF_3$, phenyl or alkyl having 1 to 5 C atoms, in particular H, F, Cl or $CH_3$, $W^2$ and $W^3$ each, independently of one another, denote H or alkyl having 1 to 5 C atoms, in particular H, methyl, ethyl or n-propyl, $W^4$, $W^5$ and $W^6$ each, independently of one another, denote Cl, oxaalkyl or oxacarbonylalkyl having 1 to 5 C atoms, $W^7$ and $W^8$ each, independently of one another, denote H, Cl or alkyl having 1 to 5 C atoms, Phe denotes 1,4-phenylene, $k_1$, $k_2$ and $k_3$ each, independently of one another, denote 0 or 1, $k_3$ preferably denotes 1, and $k_4$ denotes an integer from 1 to 10.

Very particularly preferred groups P are selected from the group consisting of $CH_2=CW^1-CO-O-$, in particular $CH_2=CH-CO-O-$, $CH_2=C(CH_3)-CO-O-$ and $CH_2=CF-COO-$, furthermore $CH_2=CH-O-$, $(CH_2=CH)_2CH-O-CO-$, $(CH_2=CH)_2CH-O-$,

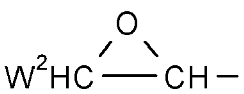 and 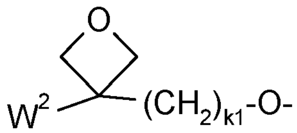.

Further preferred polymerisable groups P are selected from the group consisting of vinyloxy, acrylate, methacrylate, fluoroacrylate, chloroacrylate, oxetane and epoxide, most preferably from acrylate and methacrylate.

If the spacer group Sp is different from a single bond, it is preferably of the formula Sp"-X", so that the respective radical P-Sp- conforms to the formula R-Sp"-X"-, wherein

Sp" denotes linear or branched alkylene having 1 to 20, preferably 1 to 12, C atoms, which is optionally mono- or polysubstituted by F, Cl, Br, I or CN and in which, in addition, one or more non-adjacent $CH_2$ groups may each be replaced, independently of one another, by -O-, -S-,

-NH-, -N(R°)-, -Si($R^0R^{00}$)-, -CO-, -CO-O-, -O-CO-, -O-CO-O-, -S-CO-, -CO-S-, -N(R°°)-CO-O-, -O-CO-N($R^0$)-, -N($R^0$)-CO-N($R^{00}$)-, -CH=CH- or -C≡C- in such a way that O and/or S atoms are not linked directly to one another,

X" denotes -O-, -S-, -CO-, -CO-O-, -O-CO-, -O-CO-O-, -CO-N($R^0$)-, -N(R°)-CO-, -N($R^0$)-CO-N($R^{00}$)-, $-OCH_2-$, $-CH_2O-$, $-SCH_2-$, $-CH_2S-$, $-CF_2O-$, $-OCF_2-$, $-CF_2S-$, $-SCF_2-$, $-CF_2CH_2-$, $-CH_2CF_2-$, $-CF_2CF_2-$, -CH=N-, -N=CH-, -N=N-, $-CH=CR^0-$, $-CY^2=CY^3-$, -C≡C-, -CH=CH-CO-O-, -O-CO-CH=CH- or a single bond,

R° and R°° each, independently of one another, denote H or alkyl having 1 to 20 C atoms, and

$Y^2$ and $Y^3$ each, independently of one another, denote H, F, Cl or CN.

X" is preferably -O-, -S-, -CO-, -COO-, -OCO-, -O-COO-, $-CO-NR^0-$, $-NR^0-CO-$, $-NR^0-CO-NR^{00}-$ or a single bond.

Typical spacer groups Sp and -Sp"-X"- are, for example, $-(CH_2)_{p1}-$, $-(CH_2)_{p1}-O-$, $-(CH_2)_{p1}-O-CO-$, $-(CH_2)_{p1}-CO-O-$, $-(CH_2)_{p1}-O-CO-O-$, $-(CH_2CH_2O)_{q1}-CH_2CH_2-$, $-CH_2CH_2-S-CH_2CH_2-$, $-CH_2CH_2-NH-CH_2CH_2-$ or $-(SiR^0R^{00}-O)_{p1}-$, in which p1 is an integer from 1 to 12, q1 is an integer from 1 to 3, and R° and R°° have the meanings indicated above.

Particularly preferred groups Sp and -Sp"-X"- are $-(CH_2)_{p1}-$, $-(CH_2)_{p1}-O-$, $-(CH_2)_{p1}-O-CO-$, $-(CH_2)_{p1}-CO-O-$, $-(CH_2)_{p1}-O-CO-O-$, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

In a preferred embodiment of the invention the compounds of formula P and its subformulae contain a spacer group Sp that is substituted by one or more polymerisable groups P, so that the group Sp-P corresponds to $Sp(P)_s$, with s being ≥2 (branched polymerisable groups).

Preferred compounds of formula P according to this preferred embodiment are those wherein s is 2, i.e. compounds which contain a group $Sp(P)_2$. Very preferred compounds of formula P according to this preferred embodiment contain a group selected from the following formulae:

-X-alkyl-CHPP S1

$-X-alkyl-CH((CH_2)_{aa}P)((CH_2)_{bb}P)$ S2

$-X-N((CH_2)_{aa}P)((CH_2)_{bb}P)$ S3

$-X-alkyl-CHP-CH_2-CH_2P$ S4

$-X-alkyl-C(CH_2P)(CH_2P)-C_{aa}H_{2aa+1}$ S5

$-X-alkyl-CHP-CH_2P$ S6

$-X-alkyl-CPP-C_{aa}H_{2aa+1}$ S7

$-X-alkyl-CHPCHP-C_{aa}H_{2aa+1}$ S8

in which P is as defined in formula P,

alkyl denotes a single bond or straight-chain or branched alkylene having 1 to 12 C atoms which is unsubstituted or mono- or polysubstituted by F, Cl or CN and in which one or more non-adjacent $CH_2$ groups may each, independently of one another, be replaced by $-C(R^0)=C(R^0)-$, -C≡C-, $-N(R^0)-$, -O-, -S-, -CO-, -CO-O-, -O-CO-, -O-CO-O-in such a way that O and/or S atoms are not linked directly to one another, where R° has the meaning indicated above,

aa and bb each, independently of one another, denote 0, 1, 2, 3, 4, 5 or 6,

X has one of the meanings indicated for X", and is preferably O, CO, $SO_2$, O-CO-, CO-O or a single bond.

Preferred spacer groups $Sp(P)_2$ are selected from formulae S1, S2 and S3.

Very preferred spacer groups $Sp(P)_2$ are selected from the following subformulae:

-CHPP S1a

-O-CHPP S1b

$-CH_2-CHPP$ S1c

$-OCH_2-CHPP$ S1d

$-CH(CH_2-P)(CH_2-P)$ S2a

$-OCH(CH_2-P)(CH_2-P)$ S2b

$-CH_2-CH(CH_2-P)(CH_2-P)$ S2c

$-OCH_2-CH(CH_2-P)(CH_2-P)$ S2d

$-CO-NH((CH_2)_2P)((CH_2)_2P)$ S3a

In the compounds of formula P and its subformulae as described above and below, P is preferably selected from the group consisting of vinyloxy, acrylate, methacrylate, fluoroacrylate, chloroacrylate, oxetane and epoxide, most preferably from acrylate and methacrylate.

Further preferred are compounds of formula P and its subformulae as described above and below, wherein all polymerisable groups P that are present in the compound have the same meaning, and very preferably denote acrylate or methacrylate, most preferably methacrylate.

In the compounds of formula P and its subformulae as described above and below, R preferably denotes P-Sp-.

Further preferred are compounds of formula P and its subformulae as described above and below, wherein Sp denotes a single bond or$-(CH_2)_{p1}-$, $-O-(CH_2)_{p1}-$, $-O-CO-(CH_2)_{p1}$, or $-CO-O-(CH_2)_{p1}$, wherein p1 is 2, 3, 4, 5 or 6, and, if Sp is $-O-(CH_2)_{p1}-$, $-O-CO-(CH_2)_{p1}$ or $-CO-O-(CH_2)_{p1}$ the O-atom or CO-group, respectively, is linked to the benzene ring.

Further preferred are compounds of formula P and its subformulae as described above and below, wherein at least one group Sp is a single bond.

Further preferred are compounds of formula P and its subformulae as described above and below, wherein at least one group Sp is different from a single bond, and is preferably selected from $-(CH_2)_{p1}-$, $-O-(CH_2)_{p1}-$, $-O-CO-(CH_2)_{p1}$, or$-CO-O-(CH_2)_{p1}$, wherein p1 is 2, 3, 4, 5 or 6, and, if Sp is $-O-(CH_2)_{p1}-$, $-O-CO-(CH_2)_{p1}$ or $-CO-O-(CH_2)_{p1}$ the O-atom or CO-group, respectively, is linked to the benzene ring.

Very preferred groups $-A^1-(Z-A^2)_z-$ in formula P are selected from the following formulae

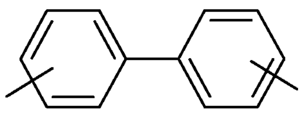

A1

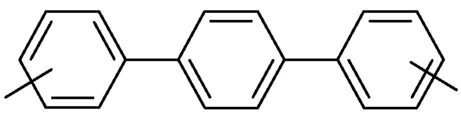

A2

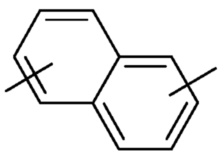

A3

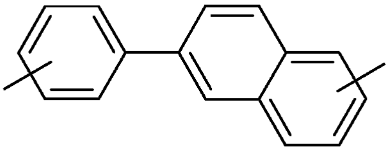

A4

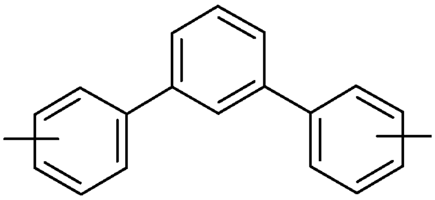

A5

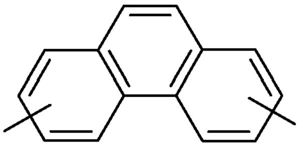

A6

wherein at least one benzene ring is substituted by at last one group L and the benzene rings are optionally further substituted by one or more groups L or P-Sp-.

Preferred compounds of formula P and their subformulae are selected from the following preferred embodiments, including any combination thereof:

- All groups P in the compound have the same meaning,
- $-A^1-(Z-A^2)_z-$ is selected from formulae A1, A2 and A5,
- the compounds contain exactly two polymerizable groups (represented by the groups P),
- the compounds contain exactly three polymerizable groups (represented by the groups P),
- P is selected from the group consisting of acrylate, methacrylate and oxetane, very preferably acrylate or methacrylate,
- P is methacrylate,
- all groups Sp are a single bond,
- at least one of the groups Sp is a single bond and at least one of the groups Sp is different from a single bond,
- Sp, when being different from a single bond, is $-(CH_2)_{p2}-$, $-(CH_2)_{p2}-O-$, $-(CH_2)_{p2}-CO-O-$, $-(CH_2)_{p2}-O-CO-$, wherein p2 is 2, 3, 4, 5 or 6, and the O-atom or the CO-group, respectively, is connected to the benzene ring,
- Sp is a single bond or denotes $-(CH_2)_{p2}-$, $-(CH_2)_{p2}-O-$, $-(CH_2)_{p2}-CO-O-$, $-(CH_2)_{p2}-O-CO-$, wherein p2 is 2, 3, 4, 5 or 6, and the O-atom or the CO-group, respectively, is connected to the benzene ring,
- R denotes P-Sp-,
- R does not denote or contain a polymerizable group,
- R does not denote or contain a polymerizable group and denotes straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, Cl or $L^a$,
- L or L' denote F, Cl or CN,
- L is F.

Suitable and preferred compounds of formula P are selected from the following formulae:

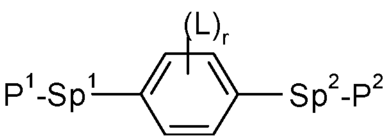

P-1

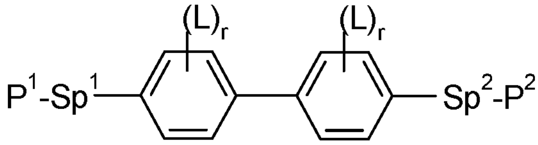

P-2

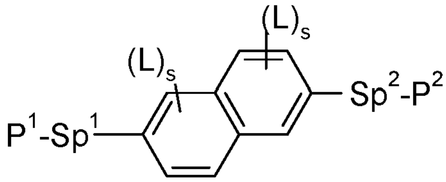

P-3

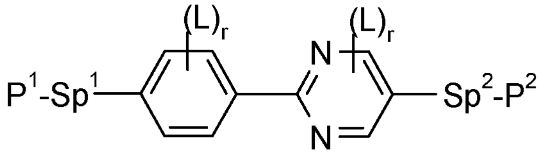

P-4

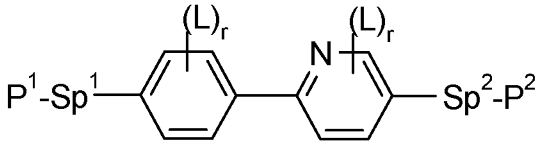

P-5

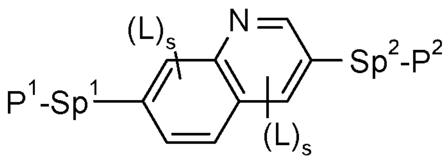

P-6

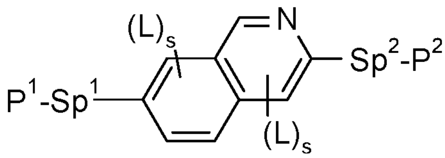

P-7

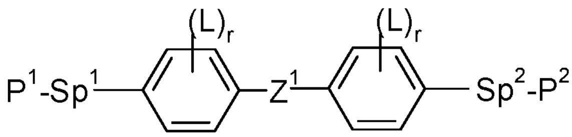

P-8

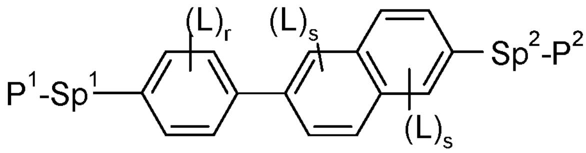

P-9

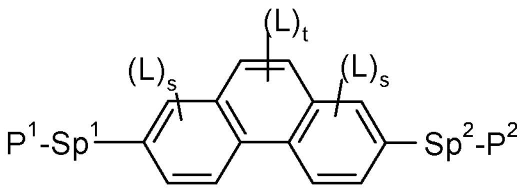

P-10

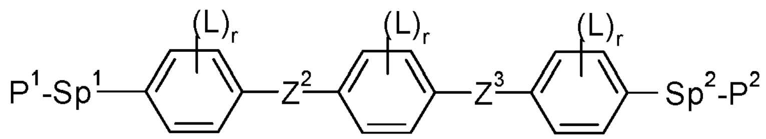

P-11

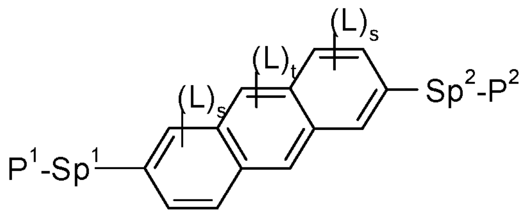

P-12

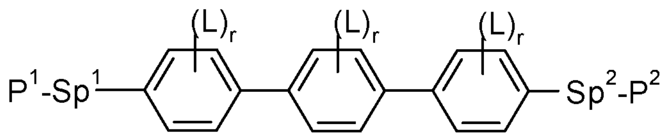

P-13

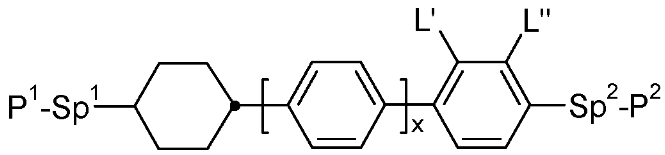

P-14

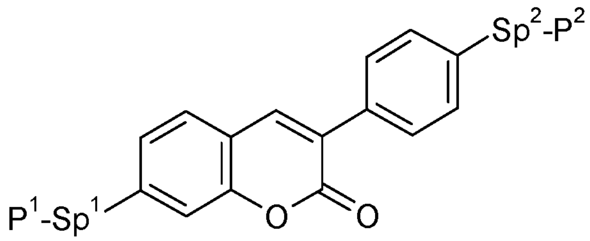

P-15

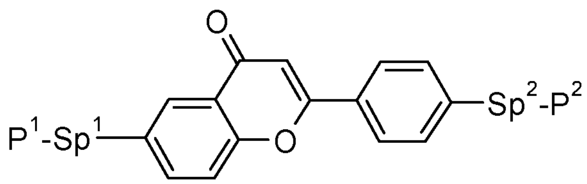

P-16

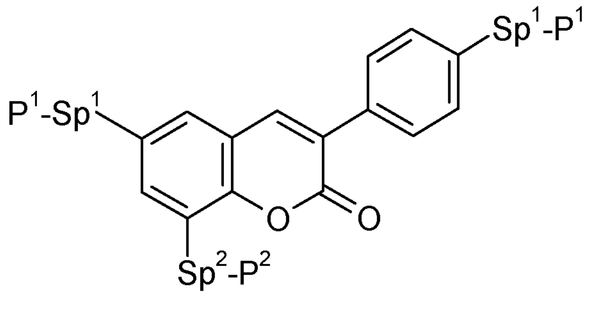

P-17

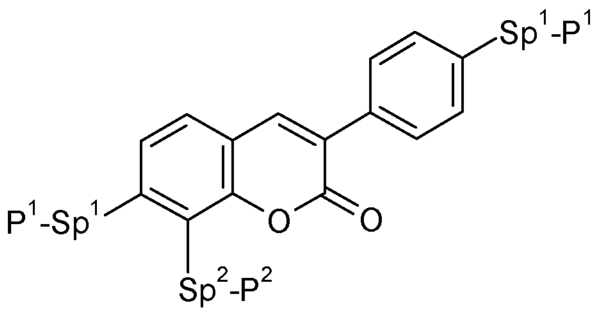

P-18

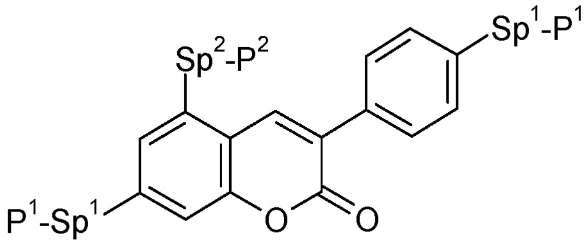

P-19

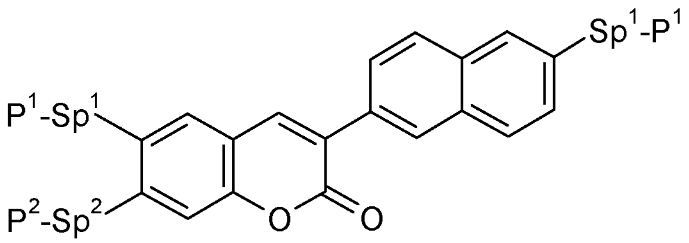

P-20

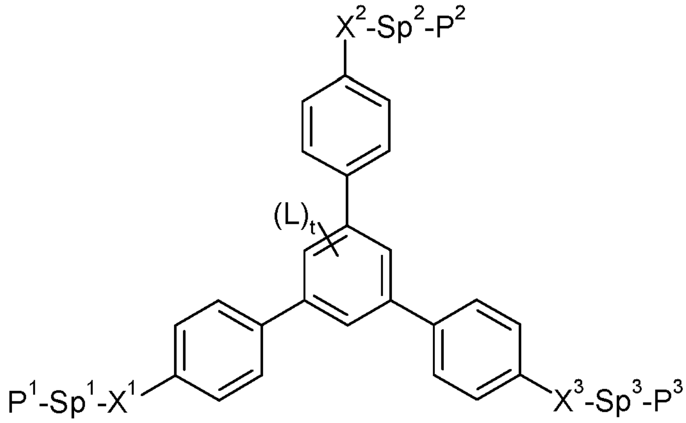

P-21

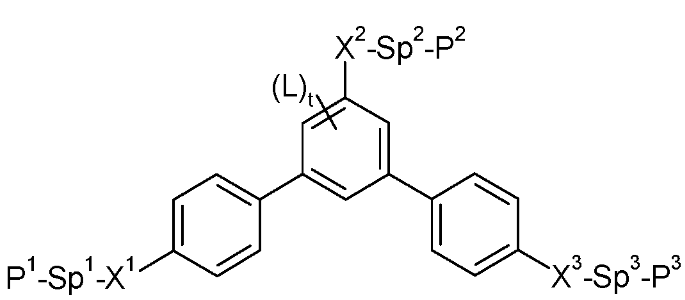

P-22

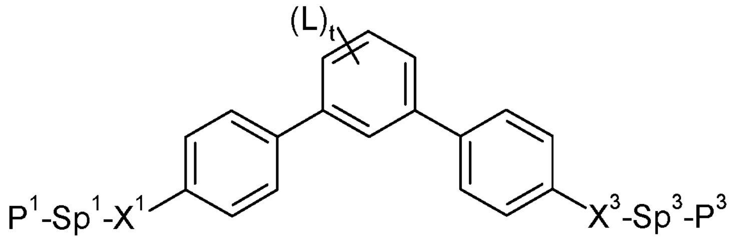

P-23

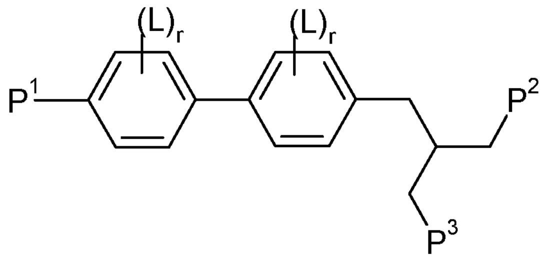

P-24

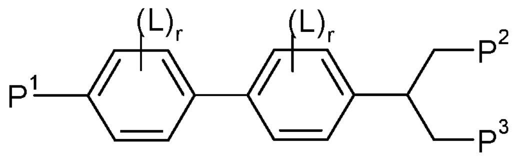

P-25

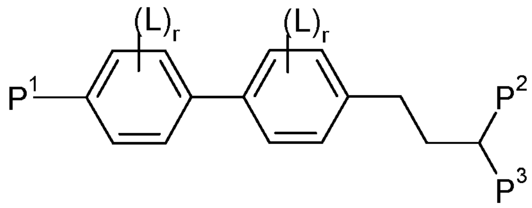

P-26

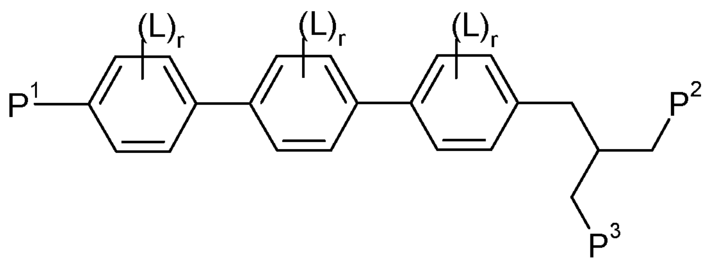

P-27

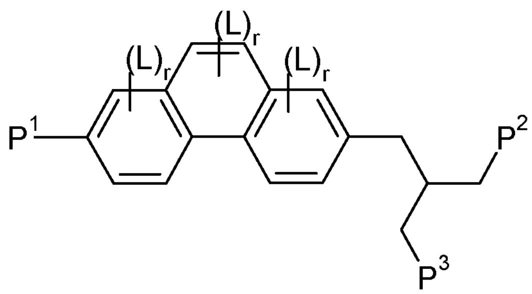

P-28

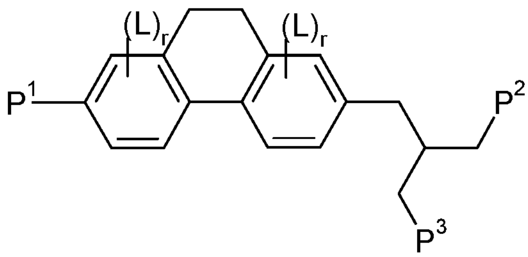

P-29

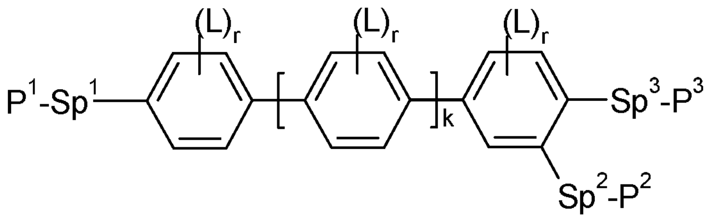

P-30

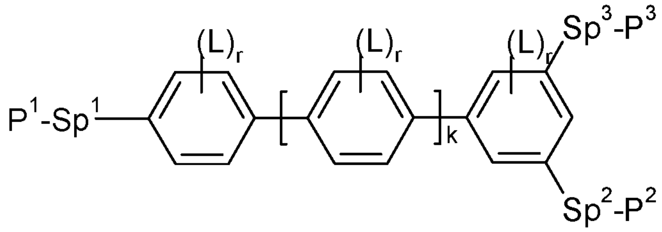

P-31

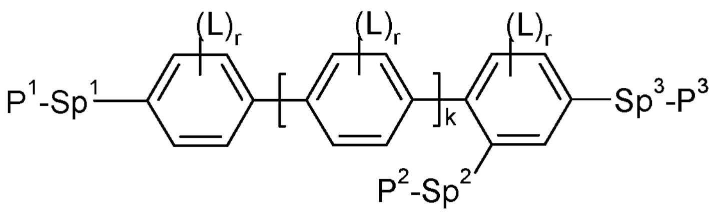

P-32

in which the individual radicals have the following meanings:

$P^1$, $P^2$ and $P^3$ each, independently of one another, denote an acrylate or methacrylate group,

$Sp^1$, $Sp^2$ and $Sp^3$ each, independently of one another, denote a single bond or a spacer group having one of the meanings indicated above and below for Sp, and particularly preferably denote $-(CH_2)_{p1}-$, $-(CH_2)_{p1}-O-$, $-(CH_2)_{p1}-CO-O-$, $-(CH_2)_{p1}-O-CO-$ or $-(CH_2)_{p1}-O-CO-O-$, in which p1 is an integer from 1 to 12, where, in addition, one or more of the radicals $P^1$-$Sp^1$-, $P^2$-$Sp^2$- and $P^3$-$Sp^3$- may denote $R^{aa}$, with the proviso that at least one of the radicals $P^1$-$Sp^1$-, $P^2$-$Sp^2$- and $P^3$-$Sp^3$- present is different from $R^{aa}$,

$R^{aa}$ denotes H, F, Cl, CN or straight-chain or branched alkyl having 1 to 25 C atoms, in which, in addition, one or more non-adjacent $CH_2$ groups may each be replaced, independently of one another, by $C(R^0)=C(R^{00})-$, -C≡C-, $-N(R^0)-$, -O-, -S-, -CO-, -CO-O-, -O-CO-, -O-CO-O- in such a way that O and/or S atoms are not linked directly to one another, and in which, in addition, one or more H atoms may be replaced by F, Cl, CN or $P^1$-$Sp^1$-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),

$R^0$, $R^{00}$ each, independently of one another and identically or differently on each occurrence, denote H or alkyl having 1 to 12 C atoms,

$R^y$ and $R^z$ each, independently of one another, denote H, F, $CH_3$ or $CF_3$,

$X^1$, $X^2$ and $X^3$ each, independently of one another, denote -CO-O-, -O-CO- or a single bond,

$Z^1$ denotes -O-, -CO-, $-C(R^yR^z)-$ or $-CF_2CF_2-$,

$Z^2$ and $Z^3$ each, independently of one another, denote -CO-O-, -O-CO-, $-CH_2O-$, $-OCH_2-$, $-CF_2O-$, $-OCF_2-$ or

$-(CH_2)_n-$, where n is 2, 3 or 4,

L on each occurrence, identically or differently, denotes F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms, preferably F,

L' and L" each, independently of one another, denote H, F or Cl,

k denotes 0 or 1,

r denotes 0, 1, 2, 3 or 4,

s denotes 0, 1, 2 or 3,

t denotes 0, 1 or 2,

x denotes 0 or 1.

Especially preferred are compounds of formulae P2, P13, P17, P22, P23, P24, P30, P31 and P32.

Further preferred are trireactive compounds P15 to P30, in particular P17, P18, P19, P22, P23, P24, P25, P26, P30, P31 and P32.

In the compounds of formulae P1 to P32 the group

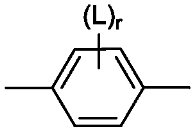

is preferably

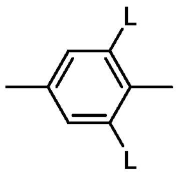
,
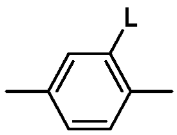
,
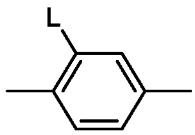
,

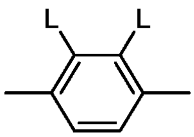
,
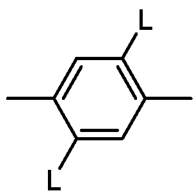
or
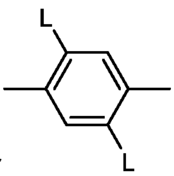
,

wherein L on each occurrence, identically or differently, has one of the meanings given above or below, and is preferably F, Cl, CN, $NO_2$, $CH_3$, $C_2H_5$, $C(CH_3)_3$, $CH(CH_3)_2$, $CH_2CH(CH_3)C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$ or P-Sp-, very preferably F, Cl, CN, $CH_3$, $C_2H_5$, $OCH_3$, $COCH_3$, $OCF_3$ or P-Sp-, more preferably F, Cl, $CH_3$, $OCH_3$, $COCH_3$ oder $OCF_3$, especially F or $CH_3$.

The media according to the present invention comprise one or more chiral dopants. Preferably these chiral dopants have an absolute value of the helical twisting power (HTP) in the range of from 1 $\mu m^{-1}$ to 150 $\mu m^{-1}$, preferably in the range of from 10 $\mu m^{-1}$ to 100 $\mu m^{-1}$. In case the media comprise two or more chiral dopants, these may have opposite signs of their HTP-values. This condition is preferred for some specific embodiments, as it allows to compensate the chirality of the respective compounds to some degree and, thus, may be used to compensate various temperature dependent properties of the resulting media in the devices. Generally, however, it is preferred that most, preferably all of the chiral compounds present in the media according to the present invention have the same sign of their HTP-values.

Preferably the chiral dopants present in the media according to the instant application are mesogenic compounds and most preferably they exhibit a mesophase on their own.

In a preferred embodiment of the present invention, the medium comprises two or more chiral compounds which all have the same algebraic sign of the HTP.

The temperature dependence of the HTP of the individual compounds may be high or low. The temperature dependence of the pitch of the medium can be compensated by mixing compounds having different temperature dependencies of the HTP in corresponding ratios.

For the optically active component, a multitude of chiral dopants, some of which are commercially available, is

available to the person skilled in the art, such as, for example, cholesteryl nonanoate, R- and S-811, R- and S-1011, R- and S-2011, R- and S-3011, R- and S-4011, or CB15 (all Merck KGaA, Darmstadt).

Particularly suitable dopants are compounds which contain one or more chiral groups and one or more mesogenic groups, or one or more aromatic or alicyclic groups which form a mesogenic group with the chiral group.

Suitable chiral groups are, for example, chiral branched hydrocarbon radicals, chiral ethane diols, binaphthols or dioxolanes, furthermore mono- or polyvalent chiral groups selected from the group consisting of sugar derivatives, sugar alcohols, sugar acids, lactic acids, chiral substituted glycols, steroid derivatives, terpene derivatives, amino acids or sequences of a few, preferably 1-5, amino acids.

Preferred chiral groups are sugar derivatives, such as glucose, mannose, galactose, fructose, arabinose and dextrose; sugar alcohols, such as, for example, sorbitol, mannitol, iditol, galactitol or anhydro derivatives thereof, in particular dianhydrohexitols, such as dianhydrosorbide (1,4:3,6-dianhydro-D-sorbide, isosorbide), dianhydromannitol (isosorbitol) or dianhydroiditol (isoiditol); sugar acids, such as, for example, gluconic acid, gulonic acid and ketogulonic acid; chiral substituted glycol radicals, such as, for example, mono- or oligoethylene or propylene glycols, in which one or more $CH_2$ groups are substituted by alkyl or alkoxy; amino acids, such as, for example, alanine, valine, phenylglycine or phenylalanine, or sequences of from 1 to 5 of these amino acids; steroid derivatives, such as, for example, cholesteryl or cholic acid radicals; terpene derivatives, such as, for example, menthyl, neomenthyl, campheyl, pineyl, terpineyl, isolongifolyl, fenchyl, carreyl, myrthenyl, nopyl, geraniyl, linaloyl, neryl, citronellyl or dihydrocitronellyl.

The media according to the present invention preferably comprise chiral dopants which are selected from the group of known chiral dopants. Suitable chiral groups and mesogenic chiral compounds are described, for example, in DE 34 25 503, DE 35 34 777, DE 35 34 778, DE 35 34 779 and DE 35 34 780, DE 43 42 280, EP 01 038 941 and DE 195 41 820. Examples are also compounds listed in Table F below.

Chiral compounds preferably used according to the present invention are selected from the group consisting of the formulae shown below.

Particular preference is given to chiral dopants selected from the group consisting of compounds of the following formulae A-I to A-III and A-Ch:

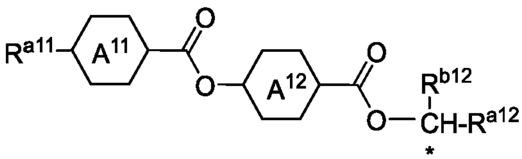

A-I

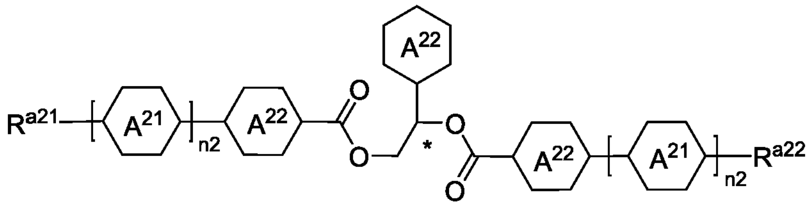

A-II

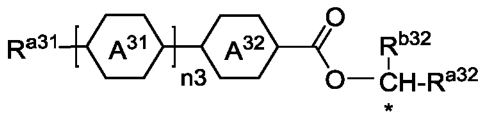

A-III

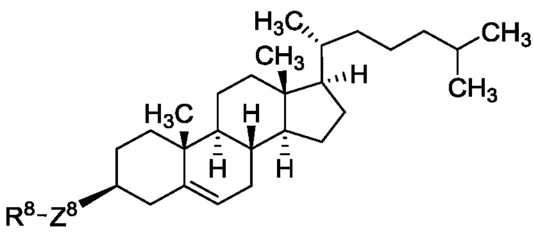

A-Ch

in which

$R^{a11}$, $R^{a12}$ and $R^{b12}$ , independently of one another, denote alkyl having 1 to 15 C atoms, in which, in addition, one or more non-adjacent $CH_2$ groups may each be replaced, independently of one another, by

-C($R^z$)=C($R^z$)-, -C≡C-, -O-, -S-, -CO-, -CO-O-, -O-CO- or -O-CO-O- in such a way that O and/or S atoms are not linked directly to one another, and in which, in addition, one or more H atoms may each be replaced by F, Cl, Br, I or CN, preferably alkyl, more preferably n-alkyl, with the proviso that $R^{a12}$ is different from $R^{b12}$

$R^{a21}$ and $R^{a22}$, independently of one another, denote alkyl having 1 to 15 C atoms, in which, in addition, one or more non-adjacent $CH_2$ groups may each be replaced, independently of one another, by -C($R^z$)=C($R^z$)-, -C≡C-, -O-,-S-, -CO-, -CO-O-, -O-CO- or -O-CO-O- in such a way that O and/or S atoms are not linked directly to one another, and in which, in addition, one or more H atoms may be replaced by F, Cl, Br, I or CN, preferably both are alkyl, more preferably n-alkyl,

$R^{a31}$, $R^{a32}$and $R^{b32}$, independently of one another, denote straight-chain or branched alkyl having 1 to 15 C atoms, in which, in addition, one or more non-adjacent $CH_2$ groups may each be replaced, independently of one another, by -C($R^z$)=C($R^z$)-, -C≡C-, -O-, -S-, -CO-, -CO-O-, -O-CO- or -O-CO-O- in such a way that O and/or S atoms are not linked directly to one another, and in which, in addition, one or more H atoms may be replaced by F, Cl, Br, I or CN, preferably alkyl, more preferably n-alkyl, with the proviso that $R^{a32}$ is different from $R^{b32}$.

$R^z$ denotes H, $CH_3$, F, Cl, or CN, preferably H or F,

$R^8$ has one of the meanings of $R^{a11}$ given above, preferably alkyl, more preferably n-alkyl having 1 to 15 C atoms,

$Z^8$ denotes- C(O)O-, $CH_2O$, $CF_2O$ or a single bond, preferably -C(O)O-,

$A^{11}$ is defined as $A^{12}$ below, or alternatively denotes

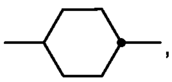, 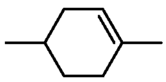, 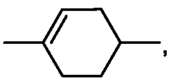,

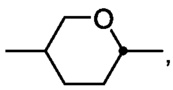, 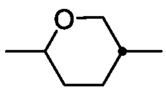,

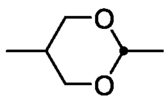 or 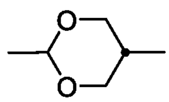

$A^{12}$ denotes

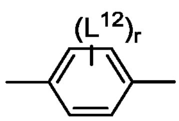,

preferably

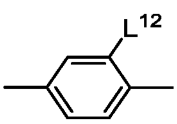, 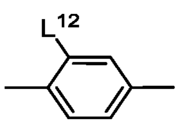, 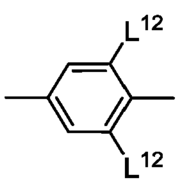, 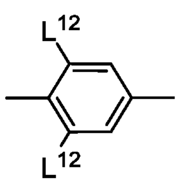

or

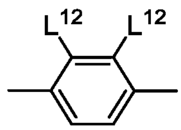,

in which
$L^{12}$ on each occurrence, independently of one another, denotes halogen, CN, or alkyl, alkenyl, alkoxy or alkenyloxy having up to 12 C atoms and in which one or more H atoms are optionally replaced with halogen, preferably methyl, ethyl, Cl or F, particularly preferably F,

$A^{21}$ denotes

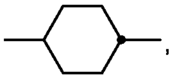, 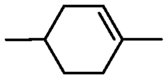, 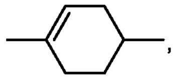,

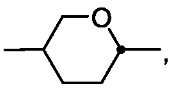, 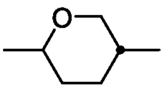,

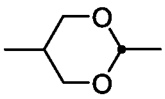 or 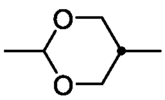

$A^{22}$ has the meanings given for $A^{12}$

$A^{31}$ has the meanings given for $A^{11}$,
or alternatively denotes

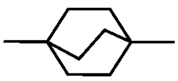

$A^{32}$ has the meanings given for $A^{12}$.

n2 on each occurrence, identically or differently, is 0, 1 or 2, and

n3 is 1, 2 or 3, and

r is 0, 1, 2, 3 or 4.

Particular preference is given to dopants selected from the group consisting of the compounds of the following formulae:

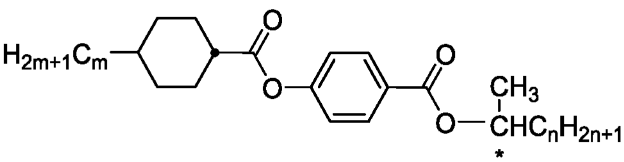

A-I-1

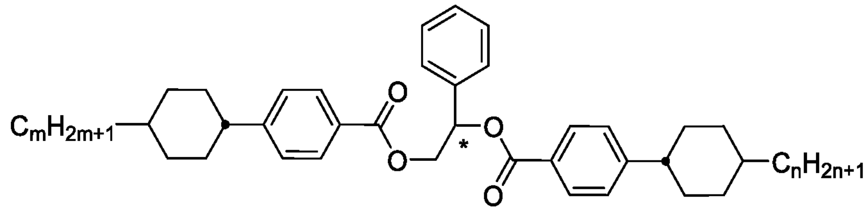

A-II-1

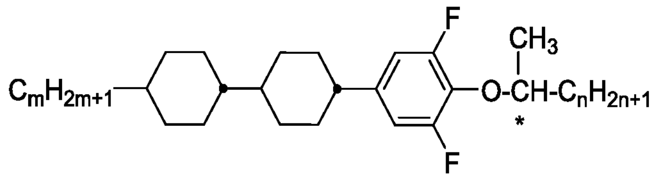

A-III-1

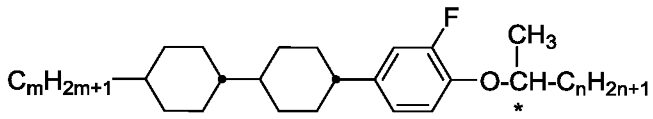

A-III-2

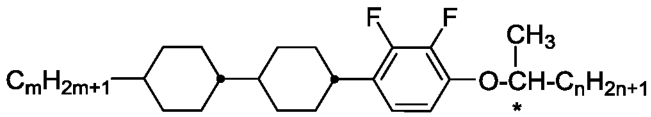

A-III-3

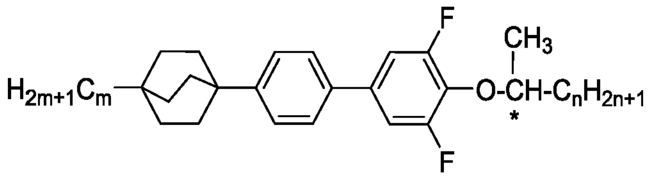

A-III-4

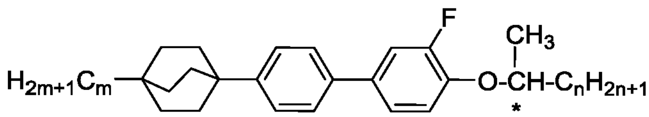

A-III-5

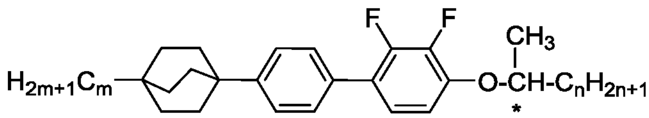

A-III-6

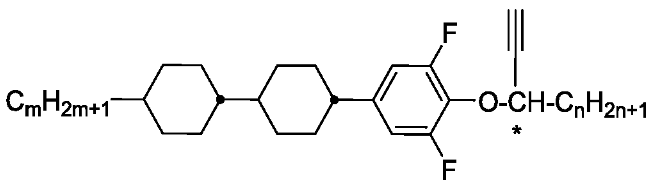

A-III-7

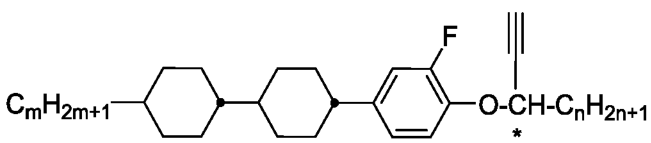

A-III-8

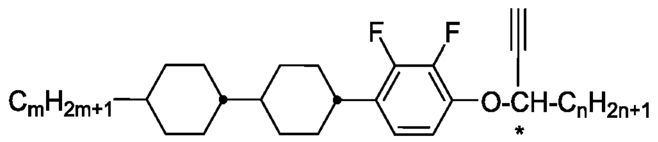

A-III-9

in which

m is, on each occurrence, identically or differently, an integer from 1 to 9 and
n is, on each occurrence, identically or differently, an integer from 2 to 9.

Particularly preferred compounds of formula A are compounds of formula A-III.

Further preferred dopants are derivatives of the isosorbide, isomannitol or isoiditol of the following frmula A-IV:

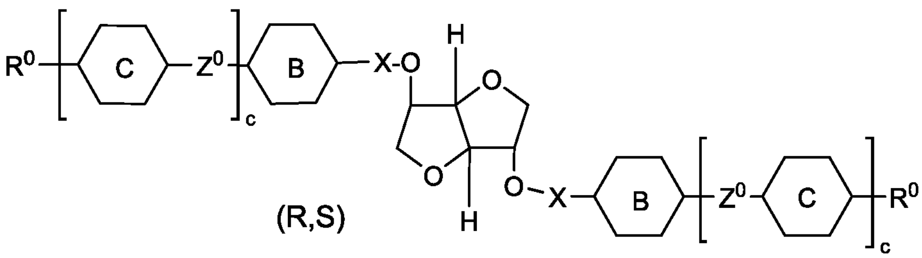

A-IV

in which the group

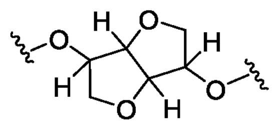

is

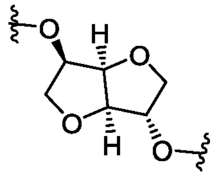

(dianhydrosorbitol),

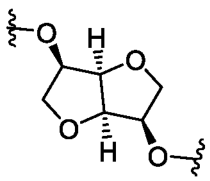

(dianhydromannitol),

or

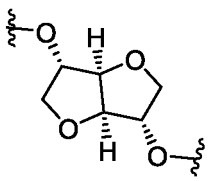

(dianhydroiditol),

preferably dianhydrosorbitol,
and chiral ethane diols, such as, for example, diphenylethanediol (hydrobenzoin), in particular mesogenic hydrobenzoin

derivatives of the following formula A-V:

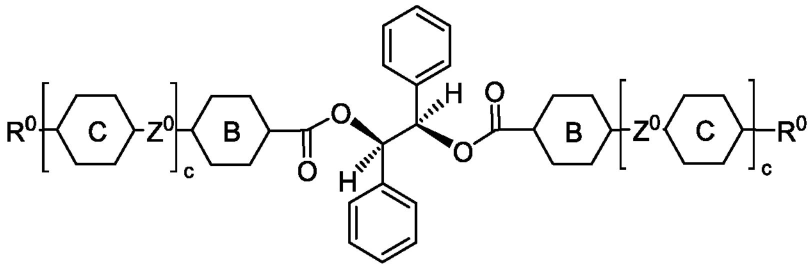

A-V

including the (S,S) enantiomers, which are not shown,
in which

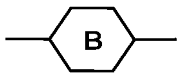

and

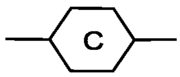

are each, independently of one another, 1,4-phenylene, which may also be mono-, di- or trisubstituted by L, or 1,4-cyclohexylene,

L is H, F, Cl, CN or optionally halogenated alkyl, alkoxy, alkylcarbonyl, alkoxycarbonyl or alkoxycarbonyloxy having 1-7 carbon atoms,
c is 0 or 1,
X is $CH_2$ or -C(O)-,
$Z^0$ is -COO-, -OCO-, $-CH_2CH_2-$ or a single bond, and
R° is alkyl, alkoxy, alkylcarbonyl, alkoxycarbonyl or alkylcarbonyloxy having 1-12 carbon atoms.

Examples of compounds of formula IV are:

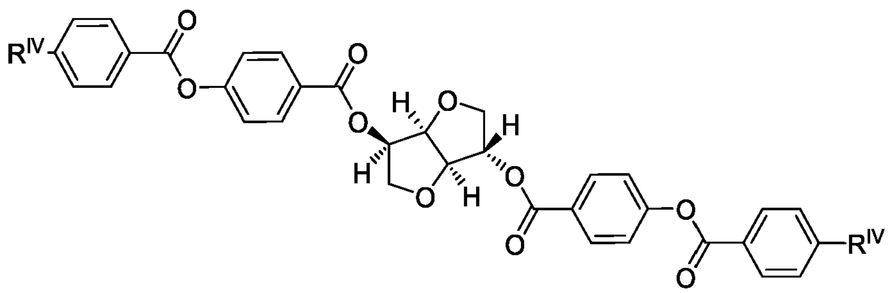

A-IV-1

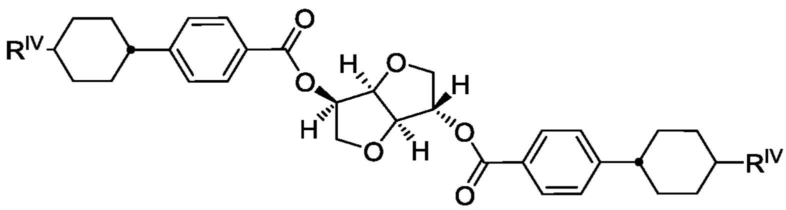

A-IV-2

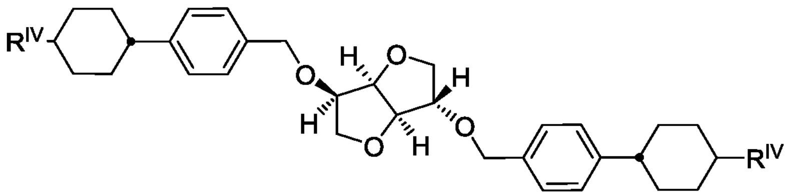

A-IV-3

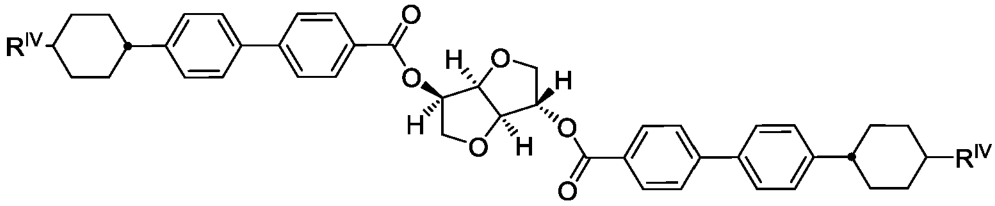

A-IV-4

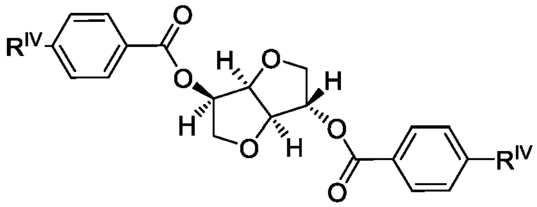

A-IV-5

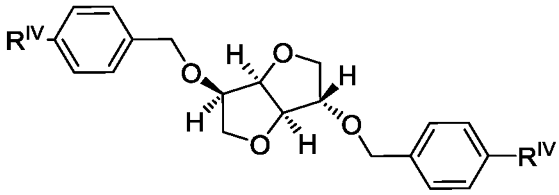

A-IV-6

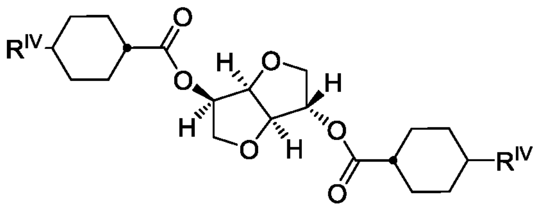

A-IV-7

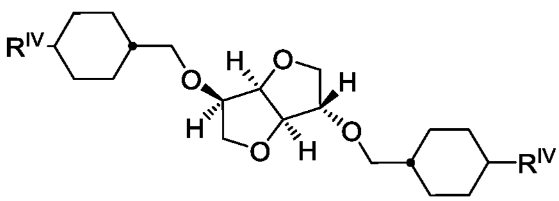

A-IV-8

The compounds of the formula A-IV are described in WO 98/00428. The compounds of the formula A-V are described in GB-A-2,328,207.

Very particularly preferred dopants are chiral binaphthyl derivatives, as described in WO 02/94805, chiral binaphthol acetal derivatives, as described in WO 02/34739, chiral TADDOL derivatives, as described in WO 02/06265, and chiral dopants having at least one fluorinated bridging group and a terminal or central chiral group, as described in WO 02/06196 and WO 02/06195.

Particular preference is given to chiral compounds of the formula A-VI

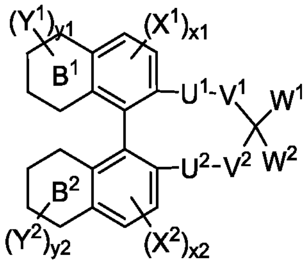

A-VI

in which

$X^1$, $X^2$, $Y^1$ and $Y^2$ are each, independently of one another, F, Cl, Br, I, CN, SCN, $SF_5$, straight-chain or branched alkyl having from 1 to 25 carbon atoms, which is unsubstituted or monosubstituted or polysubstituted by F, Cl, Br, I or CN and in which, in addition, one or more non-adjacent $CH_2$ groups may each, independently of one another, be replaced by -O-, -S-, -NH-, $NR^x$-, -CO-, -COO-, -OCO-, -OCOO-, -S-CO-, -CO-S-, -CH=CH- or -C≡C- in such a way that O and/or S atoms are not bonded directly to one another, a polymerisable group or cycloalkyl or aryl having up to 20 carbon atoms, which may optionally be monosubstituted or polysubstituted by halogen, preferably F, or by a polymerisable group,

$x^1$ and $x^2$ are each, independently of one another, 0, 1 or 2,

$y^1$ and $y^2$ are each, independently of one another, 0, 1, 2, 3 or 4,

$B^1$ and $B^2$ are each, independently of one another, an aromatic or partially or fully saturated aliphatic six-membered ring in which one or more CH groups may each be replaced by N and one or more non-adjacent $CH_2$ groups may each be replaced by O or S,

$W^1$ and $W^2$ are each, independently of one another, $-Z^1-A^1-(Z^2-A^2)_m-R$, and one of the two is alternatively $R^1$ or $A^3$, but both are not simultaneously H, or

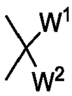

is

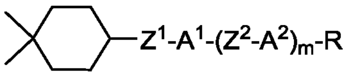

or

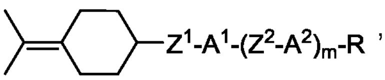

$U^1$ and $U^2$ are each, independently of one another, $CH_2$, O, S, CO or CS,

$V^1$ and $V^2$ are each, independently of one another, $(CH_2)_n$, in which from one to four non-adjacent $CH_2$ groups may each be replaced by O or S, and one of $V^1$ and $V^2$ and, in the case where

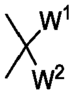

is

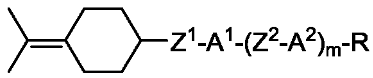

both are a single bond,

n is 1,2 or 3

$Z^1$ and $Z^2$ are each, independently of one another, -O-, -S-, -CO-, -COO-, -OCO-, -O-COO-, -CO-$NR^x$-, -$NR^x$-CO-, -O-$CH_2$-, -$CH_2$-O-, -S-$CH_2$-, -$CH_2$-S-, -$CF_2$-O-, -O-$CF_2$-, -$CF_2$-S-, -S-$CF_2$-, -$CH_2$-$CH_2$-, -$CF_2$-$CH_2$-, -$CH_2$-$CF_2$-, -$CF_2$-$CF_2$-, -CH=N-, -N=CH-, -N=N-, -CH=CH-, -CF=CH-, -CH=CF-, -CF=CF-, -C≡C-, a combination of two of these groups, where no two O and/or S and/or N atoms are bonded directly to one another, preferably -CH=CH-COO-, or -COO-CH=CH-, or a single bond,

$R^x$ denotes alkyl having 1 to 6 C atoms,

$A^1$, $A^2$ and $A^3$ are each, independently of one another, 1,4-phenylene, in which one or two non-adjacent CH groups may each be replaced by N, 1,4-cyclohexylene, in which one or two non-adjacent $CH_2$ groups may each be replaced by O or S, 1,3-dioxolane-4,5-diyl, 1,4-cyclohexenylene, 1,4-bicyclo[2.2.2]octylene, piperidine-1,4-diyl, naphthalene-2,6-diyl, decahydronaphthalene-2,6-diyl or 1,2,3,4-tetrahydronaphthalene-2,6-diyl, where each of these groups may be monosubstituted or polysubstituted by L, and in addition A' can be a single bond,

L is a halogen atom, preferably F, CN, $NO_2$, alkyl, alkoxy, alkylcarbonyl, alkoxycarbonyl or alkoxycarbonyloxy having 1-7 carbon atoms, in which one or more H atoms may each be replaced by F or Cl,

m is in each case, independently, 0, 1, 2 or 3, and

R and $R^1$ are each, independently of one another, H, F, Cl, Br, I, CN, SCN, $SF_5$, straight-chain or branched alkyl having from 1 or 3 to 25 carbon atoms respectively, which may optionally be monosubstituted or polysubstituted by F, Cl, Br, I or CN, and in which one or more non-adjacent $CH_2$ groups may each be replaced by -O-, -S-, -NH-, -$NR^0$-, -CO-, -COO-, -OCO-, -O-COO-, -S-CO-, -CO-S-, -CH=CH- or -C≡C-, where no two O and/or S atoms are bonded directly to one another, or a polymerisable group.

Particular preference is given to chiral binaphthyl derivatives of the formula A-VI-1

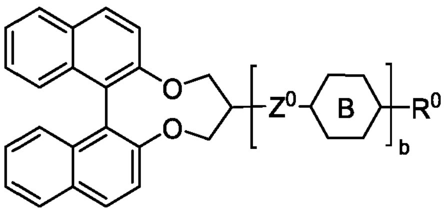

A-VI-1

in which ring B, R° and Z° are as defined for the formulae A-IV and A-V, and b is 0, 1, or 2, in particular those selected from the following formulae A-VI-1a to A-VI-1c:

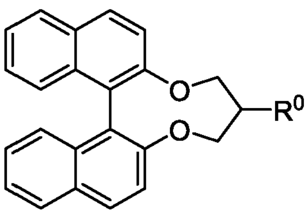

A-VI-1a

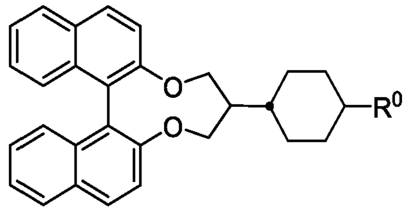

A-VI-1b

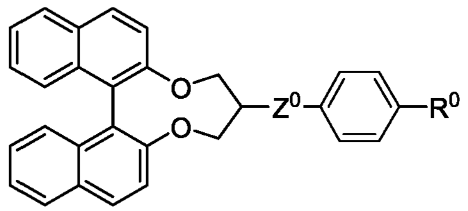

A-VI-1c

in which ring B, $R^{0,}$ and $Z^0$ are as defined for the formula A-VI-1, and

$R^0$ as defined for formula A-IV or H or alkyl having from 1 to 4 carbon atoms, and

b is 0, 1 or 2,

and Z° is, in particular, -OC(O)- or a single bond.

The concentration of the one or more chiral dopant(s), in the LC medium is preferably in the range from 0.001 % to 20 %, preferably from 0.05 % to 5 %, more preferably from 0.1 % to 2 %, and, most preferably from 0.5 % to 1.5 %. These preferred concentration ranges apply in particular to the chiral dopant S-4011 or R-4011 (both from Merck KGaA) and for chiral dopants having the same or a similar HTP. For Chiral dopants having either a higher or a lower absolute value of the HTP compared to S-4011 these preferred concentrations have to be decreased, respectively increased proportionally according to the ratio of their HTP values relatively to that of S-4011.

The pitch p of the LC media or host mixtures according to the invention is preferably in the range of from 5 to 50 μm, more preferably from 8 to 30 μm and particularly preferably from 10 to 20 μm.

Preferably, the media according to the invention, comprise a stabilizer selected from the group of compounds of the formulae ST-1 to ST-19.

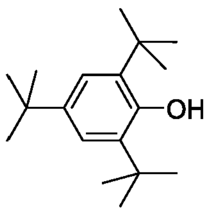

ST-1

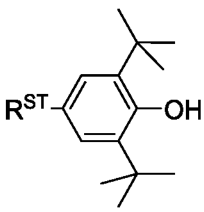

ST-2

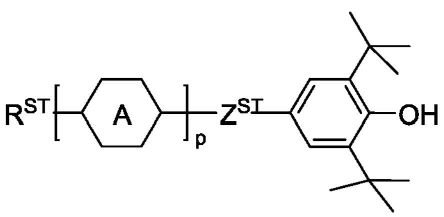

ST-3

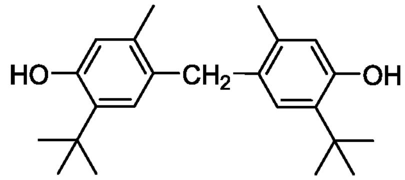

ST-4

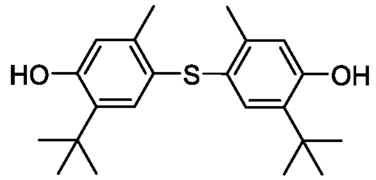

ST-5

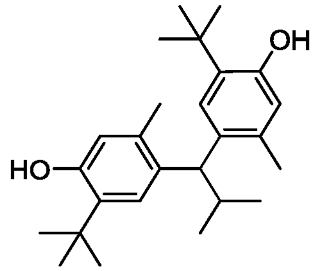

ST-6

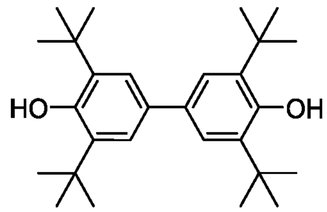

ST-7

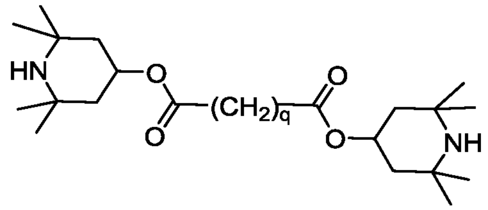

ST-8

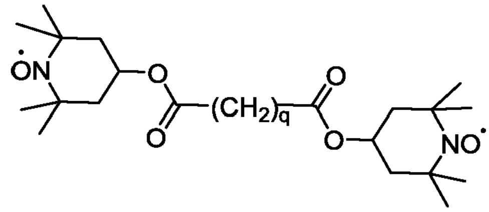

ST-9

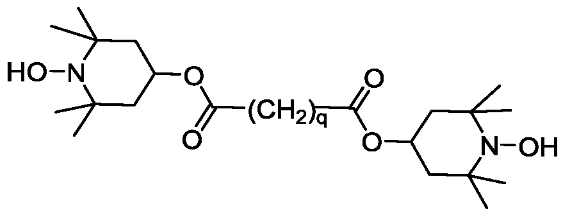

ST-10

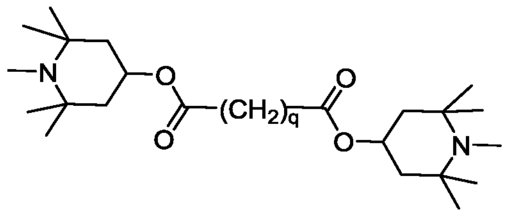

ST-11

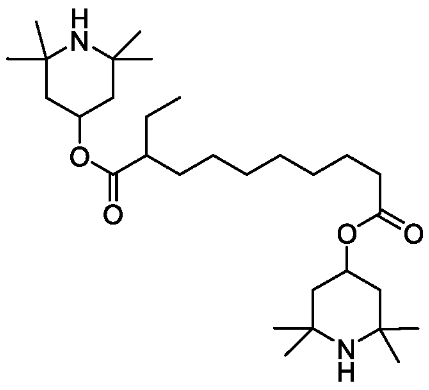

ST-12

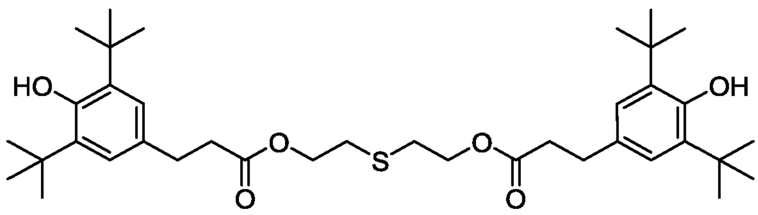

ST-13

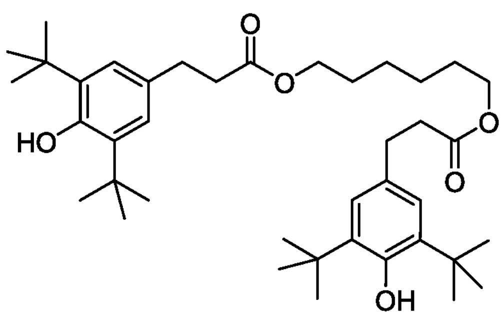

ST-14

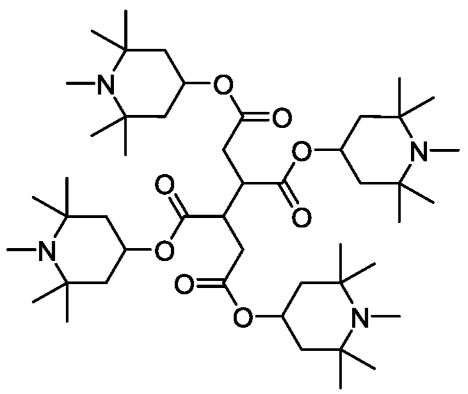

ST-15

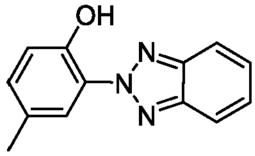

ST-16

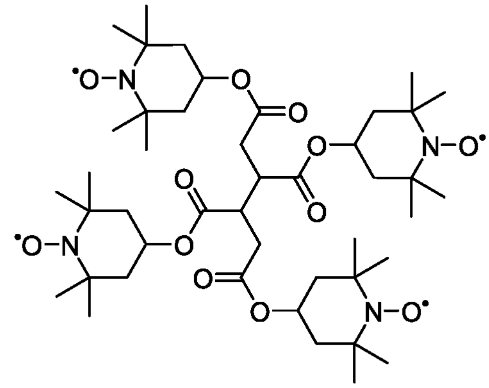

ST-17

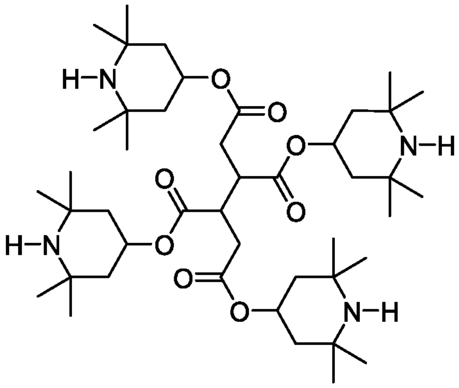

ST-18

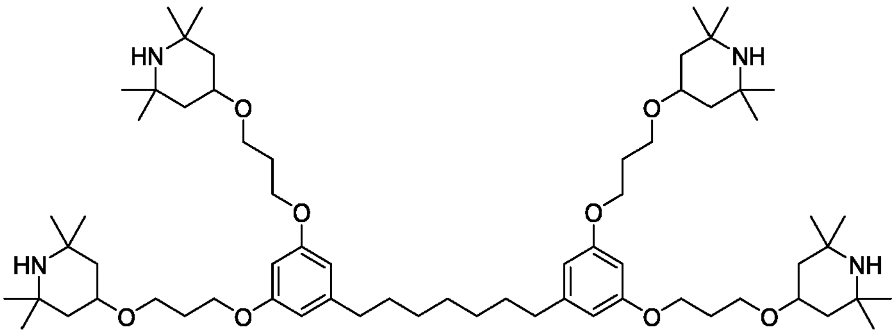

ST-19

in which

$R^{ST}$ denotes H, an alkyl or alkoxy radical having 1 to 15 C atoms, where, in addition, one or more $CH_2$ groups in these radicals may each be replaced, independently of one another, by -C≡C-, -CFzO-, $-OCF_2-$, -CH=CH-,

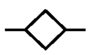 , 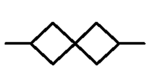 ,

-O-, -CO-O-, -O-CO- in such a way that O atoms are not linked directly to one another, and in which, in addition, one or more H atoms may be replaced by halogen,

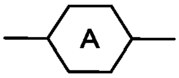

denotes

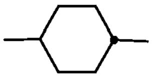, 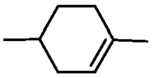, 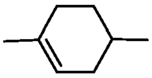, 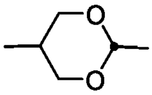,

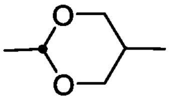, 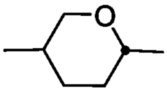, 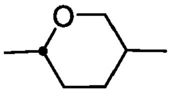, 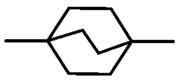,

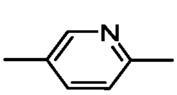, 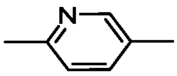, 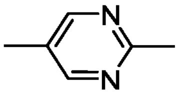, 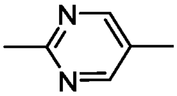,

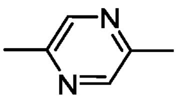, 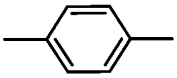, 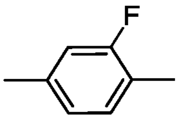, 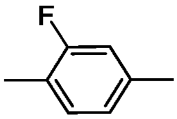,

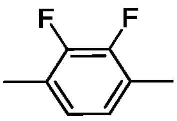, 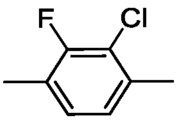, 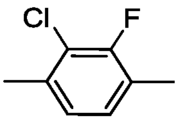, 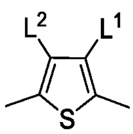,

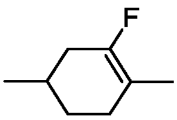, 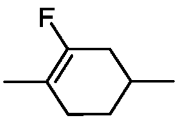, 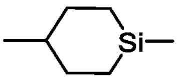, 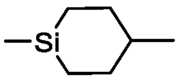,

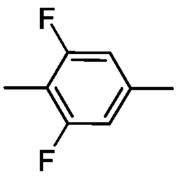, 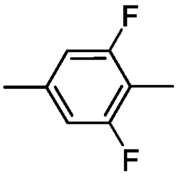, 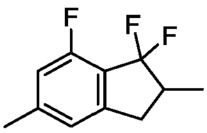, 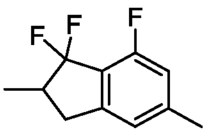,

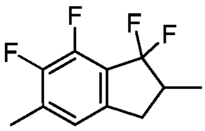, 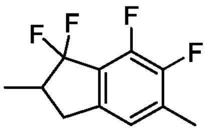, 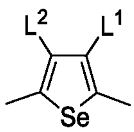, 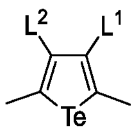,

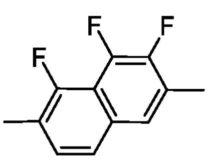, 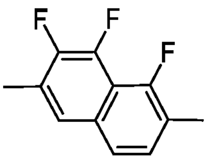,

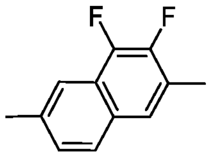, 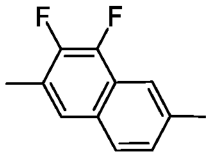, 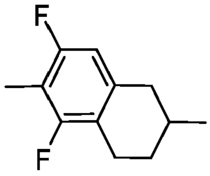

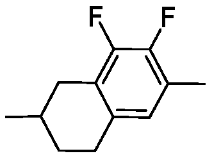, 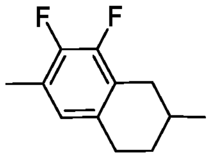, 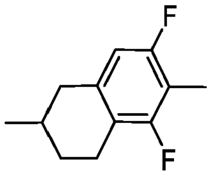

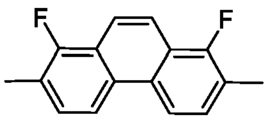, 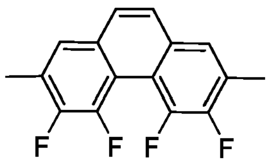, 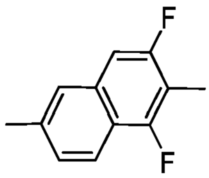

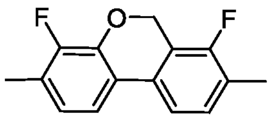, 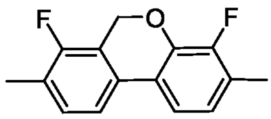,

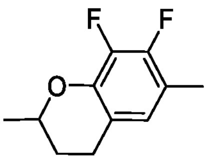, 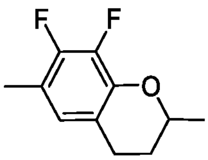, 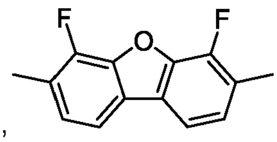

$Z^{ST}$ each, independently of one another, denote -CO-O-, -O-CO-, $-CF_2O-$, $-OCF_2-$, $-CH_2O-$, $-OCH_2-$, $-CH_2-$, $-CH_2CH_2-$, $-(CH_2)_4-$, -CH=CH-, $-CH_2O-$, $-C_2F_4-$, $-CH_2CF_2-$, $-CF_2CH_2-$, -CF=CF-, -CH=CF-, -CF=CH-, -CH=CH-, -C≡C- or a single bond,

$L^1$ and $L^2$ each, independently of one another, denote F, Cl, $CF_3$ or $CHF_2$,

p denotes 1 or 2,

q denotes 1, 2, 3, 4, 5, 6, 7, 8, 9 or 10.

Of the compounds of the formula ST, special preference is given to the compounds of the formulae

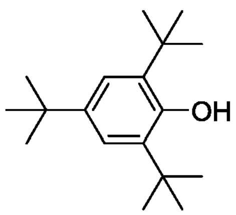

ST-1

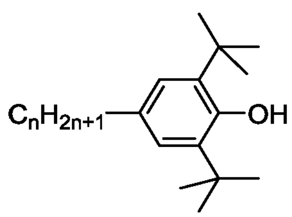

ST-2a

in which n = 1, 2, 3, 4, 5, 6 or 7, preferably n = 1 or 7

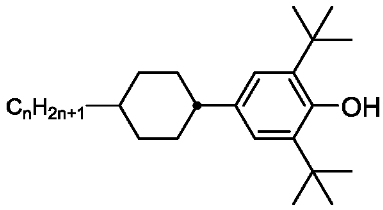

ST-3a

in which n = 1, 2, 3, 4, 5, 6 or 7, preferably n = 3

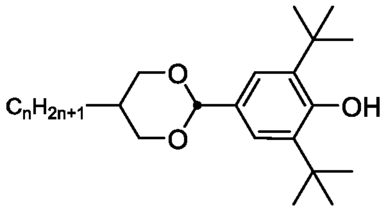

ST-3b

in which n = 1, 2, 3, 4, 5, 6 or 7, preferably n = 3

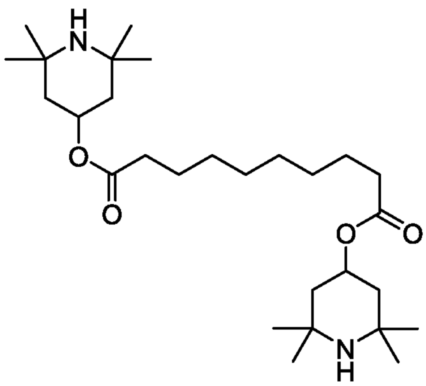

ST-8-1

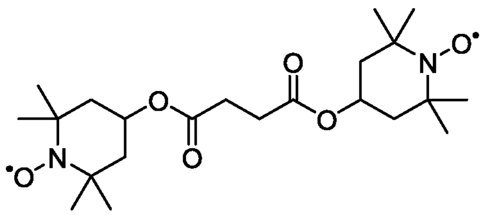

ST-9-1

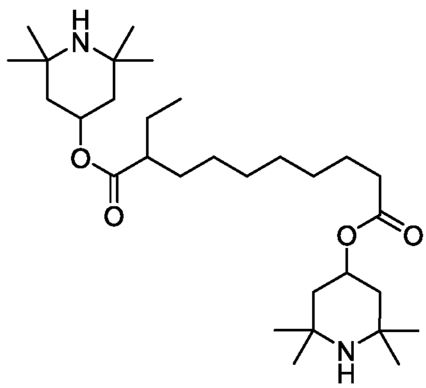

ST-12

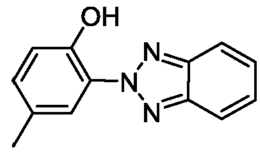

ST-16

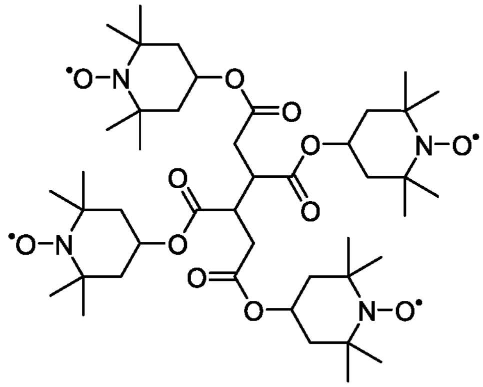

ST-17

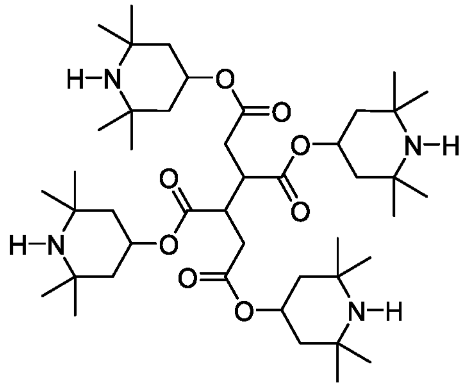

ST-18

In the compounds of the formulae ST-3a and ST-3b, n preferably denotes 3. In the compounds of the formula ST-2a, n preferably denotes 7.

Very particularly preferred mixtures according to the invention comprise one or more stabilizers from the group of the compounds of the formulae ST-2a-1, ST-3a-1, ST-3b-1, ST-8-1, ST-9-1 and ST-12:

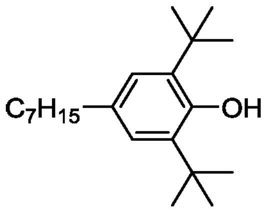

ST-2a-1

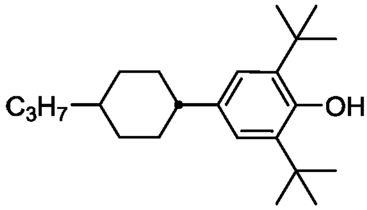

ST-3a-1

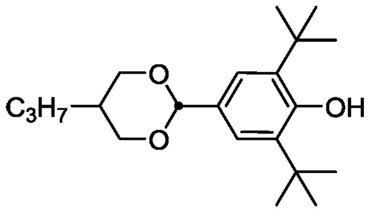

ST-3b-1

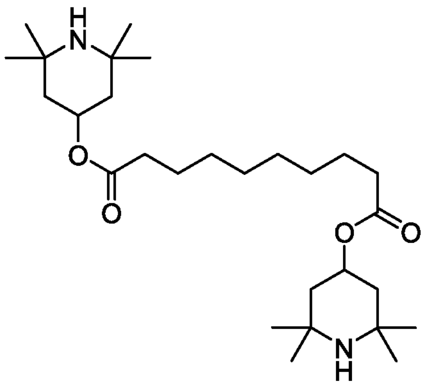

ST-8-1

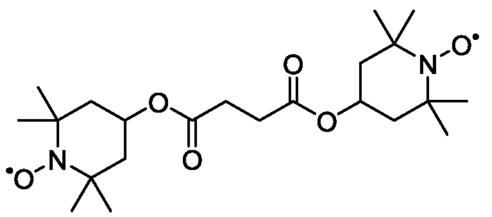

ST-9-1

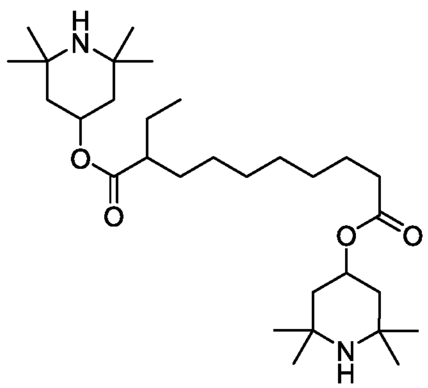

ST-12

The compounds of the formulae ST-1 to ST-19 are preferably each present in the liquid-crystal mixtures according to the invention in amounts of 0.005 - 0.5%, based on the mixture.

If the mixtures according to the invention comprise two or more compounds from the group of the compounds of the formulae ST-1 to ST-18, the concentration correspondingly increases to 0.01 - 1% in the case of two compounds, based on the mixtures.

However, the total proportion of the compounds of the formulae ST-1 to ST-18, based on the mixture according to the invention, should not exceed 2%.

The invention furthermore relates to an electro-optical display having active-matrix addressing, characterised in that it contains, as dielectric, a liquid-crystalline medium according to claim 1 and wherein the display is a VA, SA-VA, IPS, U-IPS, FFS, UB-FFS, SA-FFS, PS-VA, PS-OCB, PS-IPS, PS-FFS, PS-UB-FFS, polymer stabilised SA-VA or polymer stabilised SA-FFS display.

The display according to the invention preferably has a bezel with a thickness of 10 mm or less, more preferably 5 mm or less and very preferably 3 mm or less.

The present invention further relates to a method for manufacturing a display, constituted by a first and a second

substrate, comprising at least the steps of:

i) dropping the liquid crystal according to one or more of claims 1 to 7 inside a bank of a sealing material for liquid crystals, which is formed on the first substrate;
ii) bonding the second substrate to the first substrate; and
iii) curing the sealing material.

Sealants for liquid-crystal displays are disclosed, for example, in US2007/096056 A1, EP 1780587 A1, US 2003/0147034 A1 and EP 2381304 A1. EP 1 559 735 A1, and EP 2 586 827 A1. The sealants used in the method according to the invention are preferably photochemically curable and particularly preferably both photochemically curable and thermally curable.
The sealants used in the method according to the invention preferably comprise a) one or more curable resins which comprise compounds which are each substituted by one or more epoxide groups (called "epoxides" below), and/or b) one or more compounds which are each substituted by one or more acrylate or methacrylate groups (called "(meth)acrylates" below), and/or c) one or more compounds which are substituted both by epoxide groups and by (meth)acrylate groups (called "epoxide acrylates" below).
The individual components a), b) and c) here can be in the form of both monomers and oligomers. The choice of the components is in principle not restricted to certain compounds. The polymerisable compounds are preferably di-, tri- or polyreactive, i.e. they contain two, three or more reactive epoxide and/or (meth)acrylate groups. With a view to the lowest possible contamination of the liquid crystal with the components of the sealant, preference is given to resins which contain hydroxyl groups, sulfonyl groups or ether groups.
Besides one or more compounds of the formula I, the sealants used in the method according to the invention preferably comprise

i) a free-radical-curable resin,
ii) an epoxy resin,
iii) an epoxy curing agent.

Examples of free-radical-curable resins are (meth)acrylates and unsaturated polyester resins, which can each be used alone or in a mixture of one or more such substances. The monomeric (meth)acrylates preferably contain two or more (meth)acrylate groups per molecule.
Examples of (meth)acrylates are urethane (meth)acrylates containing a urethane bridge and epoxy (meth)acrylates which carry one or more glycidyl groups besides one or more (meth)acrylate groups.
Examples of urethane (meth)acrylates are compounds which are obtained by reaction between diisocyanates (for example isophorone diisocyanate) and compounds which are able to add onto isocyanates, such as, for example, acrylic acid or hydroxyethyl acrylate.
These derivatives may contain chain extensions by caprolactone or polyols and are commercially available, for example, under the trade names U 122P, U 3, 40P, U 4HA and U 1084A (Shin-Nakamura Chemical), and KRM 7595, KRM 7610 and KRM 7619 (Daicel Cytec Co.).
Examples of epoxy (meth)acrylates are derivatives of epoxy resins (for example bisphenol A epoxy resins or propylene glycol diglycidyl ether) and (meth)acrylic acid and are commercially available, for example, under the trade names EA-1020, EA-6320 and EA-5520 (Shin-Nakamura Chemical), and EPOXY ESTER 70PA and EPOXY ESTER 3002A (Kyoiesha Chemi-cal). Further examples of suitable (meth)acrylates are methyl methacrylate, tetrahydrofurfuryl methacrylate, benzyl methacrylate, isobornyl meth-acrylate, 2 hydroxyethyl methacrylate, glycidyl methacrylate, (poly)ethylene glycol dimethacrylate, 1,4-butanediol dimethacrylate, 1,6-hexanediol dimethacrylate, trimethylolpropane triacrylate, pentaerythritol triacrylate and glycerol dimethacrylate.
The group of free-radical-curable resins likewise includes epoxide acrylates which contain one or more (meth)acrylate groups and one or more epoxide groups per molecule and which are prepared by partially reacting the epoxy resins described above with (meth)acrylic acid in the presence of a base; they furthermore include compounds which are prepared by reacting bi- or polyfunctional isocyanates with half an equivalent of a hydroxyl-containing (meth)acrylate and subsequently with half an equivalent of glycidol; they furthermore include compounds which are prepared by reacting a methacrylate which is substituted by an isocyanate group with glycidol.
Such materials are available, for example, under the trade names UVAC1561 (Daicel Cytec) and 4HBAGE (Nippon Kasei).
Examples of latent epoxide curing agents in accordance with the present invention are dicyandiamides, modified polyamines, hydrazides, 4,4'-diaminodiphenyl sulfone, boron trifluoride/amine complexes, as well as imidazole, guanidine, urea, melamine and derivatives thereof.
Examples of modified polyamines are epoxy adducts of polyamines, amides of polyamines and Mannich-modified polyamines.

Examples of polyamines are aliphatic polyamines, such as, for example, ethylenediamine, diethylenetriamine, triethylenetetramine, tetraethylene-pentamine, 1,2-diaminopropane, polyoxypropylenediamine and polyoxy-propylenetriamine; alicyclic polyamines, such as, for example, isophorone-diamine, menthenediamine, bis(4-amino-3-methyldicyclohexyl)methane, diaminodicyclohexylmethane, bis(aminomethyl)cyclohexane, N amino-ethylpiperazine and 3,9-bis(3-aminopropyl)-2,4,8,10-tetraoxaspiro[5.5]undecane; aromatic polyamines, such as, for example, m phenylenediamine, p-phenylenediamine, tolylene-2,4-diamine, tolylene-2,6-diamine, mesitylene-2,4-diamine, mesitylene-2,6-diamine, 3,5-diethyltolylene-2,4-diamine and 3,5-diethyltolylene-2,6-diamine, biphenylenediamine, 4,4-diaminodiphenylmethane, 2,5-naphthylenediamine and 2,6-naphthylenediamine; and imidazoles, such as, for example, 2 methylimidazole, 2 ethyl-4-methylimidazole, 2 isopropylimidazole, 2 undecylimidazole, 2 heptadecylimidazole, 2 phenylimidazole, 2 phenyl-4-methylimidazole and 2 amino-propylimidazole.

The epoxy adducts are prepared by the addition, which is familiar to the person skilled in the art, of epoxides onto polyamines. The epoxides are preferably aliphatic compounds, aromatic compounds, etc. These com-pounds can each be employed alone or in a mixture with other epoxides.

Examples of alicyclic epoxides are polyglycidyl ethers of polyols containing at least one alicycle, cyclohexene oxide or cyclopentene oxide and derivatives thereof, in particular saturated derivatives of bisphenol A diglycidyl ether, 3,4-epoxycyclohexylmethyl 3,4-epoxycyclohexanecarboxylate, 3,4-epoxy-1-methylcyclohexyl 3,4-epoxy-1-methylcyclohexanecarboxylate, 6 methyl-3,4-epoxycyclohexylmethyl 6-methyl-3,4-epoxycyclohexanecarboxylate, 3,4-epoxy-3-methylcyclohexylmethyl 3,4-epoxy-3-methylcyclohexanecarboxylate, 3,4-epoxy-5-methylcylcohexylmethyl 3,4-epoxy-5-methylcyclohexanecarboxylate, 2 (3,4-epoxycyclohexyl-5,5-spiro-3,4-epoxy)cyclohexanemetadioxane, bis(3,4-epoxycyclohexylmethyl) adipate, 3,4-epoxy-6-methylcyclohexyl carboxylate, methylenebis(3,4-epoxycyclo-hexane), dicyclopentadiene diepoxide, ethylene bis(3,4-epoxycyclohexanecarboxylate), dioctyl epoxyhexahydrophthalate and di-2-ethylhexyl epoxyhexahydrophthalate.

Commercially available products which contain such compounds are, for example, UVR-6100, UVR-6105, UVR-6110, UVR-6128 and UVR-6200 (Union Carbide); Celloxide 2021, Celloxide 2021P, Celloxide 2081, Celloxide 2083, Celloxide 2085, Celloxide 2000, Celloxide 3000, Cyclomer A200, Cyclomer M100, Cyclomer M101, Epolead GT-301, Epolead GT-302, Epolead 401, Epolead 403, ETHB and Epolead HD300 (Daicel Chemical Industries, Ltd.) and KRM-2110 and KRM-2199 (ADEKA Corp.).

Examples of aromatic epoxides are polyglycidyl ethers of polyhydric phenols or alkylene oxide adducts thereof which contain at least one aromatic ring, such as, for example, glycidyl ethers of bisphenol A, bisphenol F, or alkylene oxides thereof, as well as epoxy-novolak resins.

Examples of aliphatic epoxides are polyglycidyl ethers of aliphatic polyols or alkylene oxide adducts thereof, polyglycidyl esters of aliphatic long-chain polycarboxylic acids, glycidyl poly(meth) acrylates, in particular 1,4-butanediol diglycidyl ether, 1,6-hexanediol diglycidyl ether, glycerol triglycidyl ether, trimethylolpropane triglycidyl ether, sorbitol tetraglycidyl ether, dipentaerythritol hexaglycidyl ether, polyethylene glycol diglycidyl ether and polypropylene glycol diglycidyl ether; polyglycidyl ethers of polyether-polyols, prepared by addition of one or more alkylene oxides onto aliphatic polyols, such as, for example, propylene glycol, trimethylolpropane and glycerol; and diglycidyl esters of long-chain aliphatic dicarboxylic acids. Preference is furthermore given to monoglycidyl ethers of higher aliphatic alcohols, monoglycidyl ethers of phenol, cresol, butylphenol or polyether alcohols prepared by addition of alkylene oxides onto these phenols, glycidyl esters of higher fatty acids, epoxidised soyabean oil, octyl epoxystearate, butyl epoxystearate and epoxidised polybutadiene.

Examples of commercially available aromatic or aliphatic epoxides are Epikote 801 and Epikote 828 (Yuka Shell Epoxy Co., Ltd.); PY-306, 0163 and DY-022 (Ciba Specialty Chemicals); KRM-2720, EP-3300, EP-4000, EP-4901, EP-4010, EP-4080, EP-4900, ED-505 and ED-506 (ADEKA); Epolite M 1230, Epolite EHDG-L, Epolite 40E, Epolite 100E, Epolite 200E, Epolite 400E, Epolite 70P, Epolite 200P, Epolite 400P, Epolite 1500NP, Epolite 1600, Epolite 80MF, Epolite 100MF, Epolite 4000, Epolite 3002 and Epolite FR-1500 (Kyoeisha Chemical); Santoto ST0000, YD-716, YH-300, PG-202, PG-207, YD-172 and YDPN638 (Tohto Kasei Co., Ltd.); TEPIC-S (Nissan Chemical Industries, Ltd.); and Epichlon N 665, Epichlon N 740, Epichlon HP-7200 and Epichlon HP-4032 (DIC Corp.).

Polyamides are obtained in a manner known to the person skilled in the art by reaction of polyamines with carboxylic acids, such as, for example, adipic acid, sebacic acid, phthalic acid or isophthalic acid.

Mannich-modified polyamines are prepared by reacting a polyamine with aldehydes, for example formaldehyde, and phenols, such as, for example, phenol, cresol, xylenol, t butylphenol or resorcinol.

Examples of hydrazides are oxalic dihydrazide, malonic dihydrazide, suc-cinic dihydrazide, glutaric dihydrazide, adipic dihydrazide, suberic dihydra-zide, azelaic dihydrazide, sebacic dihydrazide and phthalic dihydrazide.

Examples of urea derivatives are 3 (3,4-dichlorophenyl)-1,1-dimethylurea, isophorone diisocyanate dimethylurea and tolylene diisocyanate dimethyl-urea.

Examples of epoxy resins (iii) are polyglycidyl ethers of polyhydric phenols, such as, for example, hydroquinone, resorcinol, pyrocatechol and phloroglucinol; polyglycidyl ethers of condensed aromatic hydroxyl compounds, such as

naphthol, biphenylol, methylenebisphenol (bisphenol F), methylenebis(orthocresol), ethylidenebisphenol, isopropylidenebisphenol (bisphenol A), 4,4'-dihydroxybenzophenone, isopropylidenebis(orthocresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolak, orthocresol novolak, ethylphenol novolak, butylphenol novolak, octylphenol novolak, resorcinoil novolak and terpenediphenol; furthermore polyglycidyl ethers of polyhydric alcohols, such as ethylene glycol, propylene glycol, butylene glycol, hexanediol, polyglycol, thiodiglycol, glycerol, trimethylolpropane, pentaerythritol, sorbitol and bisphenol A/ethylene oxide adducts; homo- or copolymers of glycidyl esters of aliphatic, aromatic or alicyclic polybasic carboxylic acids, such as, for example, maleic acid, fumaric acid, itaconic acid, succinic acid, glutaric acid, suberic acid, adipic acid, azelaic acid, sebacic acid, phthalic acid, isophthalic acid, terephthalic acid, trimellitic acid, pyromellitic acid, tetrahydrophthalic acid, hexahydrophthalic acid and endomethylenetetrahydrophthalic acid, or glycidyl methacrylate; furthermore epoxides containing a glycidylamino group, such as, for exam-ple, N,N-glycidylaniline, bis(4-(N-methyl-N-glycidylamino)phenyl)methane and diglycidyl-o-toluidine; epoxidised cycloalkenes, such as, for example, vinylcyclohexene diepoxide, dicyclopentadiene diepoxide, 3,4-epoxycyclohexylmethyl 3,4-epoxycyclohexanecarboxylate, 3,4-epoxy-6-methylcyclohexylmethyl 6-methylcyclohexanecarboxylae and bis(3,4-epoxy-6-methylcyclohexylmethyl) adipate; epoxidised conjugated polyenes, such as, for example, epoxidised polybutadiene, epoxidised acrylonitrile-butadiene copolymer and an epoxidised styrene-butadiene copolymer; furthermore heterocyclic compounds, such as triglycidyl isocyanurate.

In a preferred embodiment, the sealants used in the process according to the invention com-prise further components, such as, for example, inorganic fillers, or silanes for improving the adhesive strength and the water-repellent properties, organic solvents, pigments, antifoams, conductive additives, levelling agents, etc.

The sealants used in the method according to the invention are prepared, for example, by mixing and dissolving predetermined amounts of the components employed for photocuring, the components employed for thermal curing, and, if necessary, various additives and subsequently homogenising the mixture using a known mixing device, for example a triple-roll mill, a sand mill or a ball mill.

The sealant used in the method according to the invention is particularly suitable for sealing liquid-crystal displays produced by the ODF process. The liquids or liquid crystals are not restricted in any way.

The method is particularly suitable for sealing liquid-crystal displays which contain liquid crystals having polymerisable components (reactive meso-gens) and/or individual liquid-crystal substances containing unsaturated groups, such as, for example, alkenyl radicals or cyclohexene-1,4-diyl units. The reactive mesogens preferably contain one or more (meth)-acrylate groups.

For the production of the liquid-crystal display, spacers are added to the sealant and the liquid crystal medium in order to produce a precisely defined separation of the substrates and thus a precisely defined cell gap of the display, typically 2 8 μm, depending on the application. Firstly, the sealant is applied to one of the two glass substrates, followed by the amount of liquid crystal corresponding precisely to the internal volume of the finished liquid-crystal display. After the two substrates have been combined, the display is irradiated with a dose of 1000 mJ to 18,000 mJ of UV light, during which the two substrates are pressed together. The sealant is then thermally cured at 110°C to 140°C for 1 to 3 h.

During the manufacturing of the display according to the invention the liquid crystal medium after having been dispensed onto the substrate comes into contact with the sealant before the curing of the sealant. Surprisingly, the reactivity of the liquid crystal medium according to the invention is favourably low so that no detectable degradation of the LC takes place before, during or after curing of the sealant so that no visible edge mura is observed in the final display.

It is advantageous for the liquid-crystalline medium according to the invention to preferably have a nematic phase from ≤ -20°C to ≥ 70°C, particularly preferably from ≤ -30°C to ≥ 80°C, very particularly preferably from ≤ -40°C to ≥ 90°C.

The medium according to the invention has a clearing temperature of 65°C or more, preferably of 67°C or more, in particular 70°C or more.

The expression "have a nematic phase" here means on the one hand that no smectic phase and no crystallisation are observed at low temperatures at the corresponding temperature and on the other hand that clearing still does not occur on heating from the nematic phase. The investigation at low temperatures is carried out in a flow viscometer at the corresponding temperature and checked by storage in test cells having a layer thickness corresponding to the electro-optical use for at least 100 hours. If the storage stability at a temperature of -20°C in a corresponding test cell is 1000 h or more, the medium is referred to as stable at this temperature. At temperatures of -30°C and -40°C, the corresponding times are 500 h and 250 h respectively. At high temperatures, the clearing point is measured by conventional methods in capillaries.

The liquid-crystal mixture preferably has a nematic phase range of at least 60 K and a flow viscosity $v_{20}$ of at most 30 $mm^2 \cdot s^{-1}$ at 20°C.

The mixture is nematic at a temperature of -20°C or less, preferably at -30°C or less, very preferably at -40°C or less.

The values of the birefringence Δn in the liquid-crystal mixture are generally between 0.07 and 0.16, preferably

between 0.08 and 0.15, very preferably between 0.09 and 0.14.

In a preferred embodiment of the present invention, the medium has a birefringence in the range of from 0.090 to 0.110, preferably from 0.095 to 0.109, in particular from 0.098 to 0.108.

The liquid-crystal mixture according to the invention has a dielectric anisotropy $\Delta\varepsilon$ of -1.5 to -8.0, preferably of -2.0 to - 4.0, in particular -2.5 to -3.5,

The rotational viscosity $\gamma_1$ at 20°C is preferably ≤ 150 mPa·s, in particular ≤ 130 mPa·s.

The liquid-crystal media according to the invention have relatively low values for the threshold voltage ($V_0$). They are preferably in the range from 1.7 V to 3.0 V, particularly preferably ≤ 2.7 V and very particularly preferably ≤ 2.5 V.

For the present invention, the term "threshold voltage" relates to the capacitive threshold ($V_0$), also called the Freedericks threshold, unless explicitly indicated otherwise.

In addition, the liquid-crystal media according to the invention have high values for the voltage holding ratio in liquid-crystal cells.

In general, liquid-crystal media having a low addressing voltage or threshold voltage exhibit a lower voltage holding ratio than those having a higher addressing voltage or threshold voltage and vice versa.

For the present invention, the term "dielectrically positive compounds" denotes compounds having a $\Delta\varepsilon$ > 1.5, the term "dielectrically neutral compounds" denotes those having -1.5 ≤ $\Delta\varepsilon$ ≤ 1.5 and the term "dielectrically negative compounds" denotes those having $\Delta\varepsilon$ < -1.5. The dielectric anisotropy of the compounds is determined here by dissolving 10 % of the compounds in a liquid-crystalline host and determining the capacitance of the resultant mixture in at least one test cell in each case having a layer thickness of 20 μm with homeotropic and with homogeneous surface alignment at 1 kHz. The measurement voltage is typically 0.5 V to 1.0 V, but is always lower than the capacitive threshold of the respective liquid-crystal mixture investigated.

All temperature values indicated for the present invention are in °C.

The mixtures according to the invention are suitable for all VA-TFT applications, such as, for example, VAN, MVA, (S)-PVA, ASV, PSA (polymer sustained VA) and PS-VA (polymer stabilized VA). They are furthermore suitable for IPS (in-plane switching) and FFS (fringe field switching) applications having negative $\Delta\varepsilon$.

It goes without saying for the person skilled in the art that the VA, IPS or FFS mixture according to the invention may also comprise compounds in which, for example, H, N, O, Cl and F have been replaced by the corresponding isotopes.

The compounds of formula P are optionally added to the mixtures according to the invention in concentrations of preferably 0.01 to 5 % by weight, particularly preferably 0.2 to 2 % by weight, based on the mixture. These mixtures may optionally also comprise an initiator, as described, for example, in U.S. 6,781,665. The initiator, for example Irganox-1076 from BASF, is preferably added to the mixture comprising polymerisable compounds in amounts of 0 to 1 %. Mixtures of this type can be used for so-called polymer-stabilised VA modes (PS-VA) or PSA (polymer sustained VA), in which polymerisation of the reactive mesogens is intended to take place in the liquid-crystalline mixture after filling of a display panel. The prerequisite for this is that the liquid-crystalline compounds of the LC host do not react under the polymerisation conditions of the reactive mesogens, i.e. generally on exposure to UV in the wavelength range from 320 to 360 nm. Liquid-crystalline compounds containing an alkenyl side chain, such as, for example, CC-3-V, exhibit no reaction under the polymerisation conditions (UV polymerisation) for the RMs, hence, herein, such compounds are not to be considered as RMs.

The compounds according to the present invention can be synthesized by or in analogy to known methods described in the literature (for example in the standard works such as Houben-Weyl, Methoden der Organischen Chemie [Methods of Organic Chemistry], Georg-Thieme-Verlag, Stuttgart), under reaction conditions which are known and suitable for said reactions. Use may also be made here of variants which are known per se, but are not mentioned here. In particular, they can be prepared as described in or in analogy to the following reaction schemes. Further methods for preparing the inventive compounds can be taken from the examples.

Other mesogenic compounds which are not explicitly mentioned above can optionally and advantageously also be used in the media in accordance with the present invention. Such compounds are known to the person skilled in the art.

The following examples explain the present invention without limiting it. However, they show the person skilled in the art preferred mixture concepts with compounds preferably to be employed and the respective concentrations thereof and combinations thereof with one another. In addition, the examples illustrate the properties and property combinations that are accessible.

For the present invention and in the following examples, the structures of the liquid-crystal compounds are indicated by means of acronyms, with the transformation into chemical formulae taking place in accordance with Tables A to C below. All radicals $C_mH_{2m+1}$, $C_nH_{2n+1}$, and $C_lH_{2l+1}$ or $C_mH_{2m-1}$, $C_nH_{2n-1}$ and $C_lH_{2l-1}$ are straight-chain alkyl radicals or alkylene radicals, in each case having n, m and l C atoms respectively. Preferably n, m and l are independently of each other 1, 2, 3, 4, 5, 6, or 7. Table A shows the codes for the ring elements of the nuclei of the compound, Table B lists the bridging units, and Table C lists the meanings of the symbols for the left- and right-hand end groups of the molecules. The acronyms are composed of the codes for the ring elements with optional linking groups, followed by a first hyphen and the codes for the left-hand end group, and a second hyphen and the codes for the right-hand end group.

Table D shows illustrative structures of compounds together with their respective abbreviations.

**Table A: Ring elements**

| | | | |
|---|---|---|---|
| C | 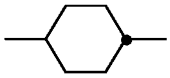 | | |
| D | 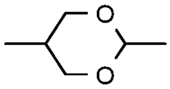 | **DI** | 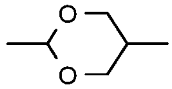 |
| A | 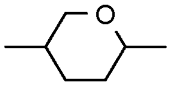 | **AI** | 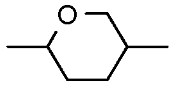 |
| P | 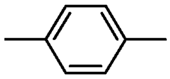 | | |
| G | 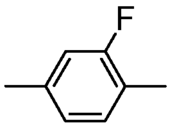 | **GI** | 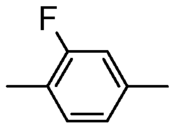 |
| U | 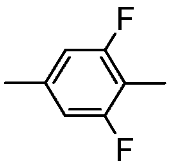 | **UI** | 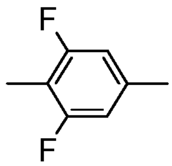 |
| Y | 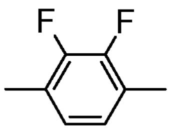 | | |
| P(F, Cl)Y | 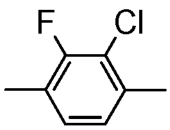 | **P(Cl,F)Y** | 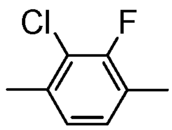 |
| np | 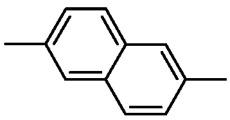 | | |
| n3f | 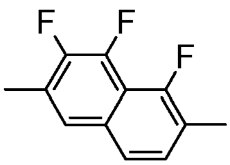 | **nN3fl** | 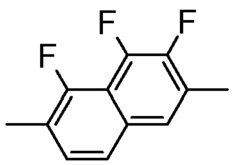 |
| th | 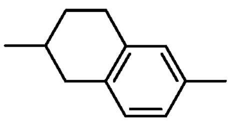 | **thI** | 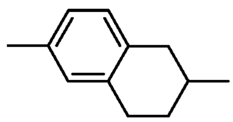 |
| tH2f | 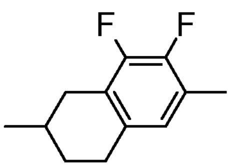 | **tH2fI** | 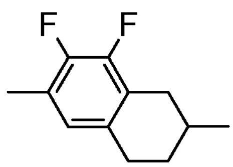 |

(continued)

| | | | |
|---|---|---|---|
| o2f | 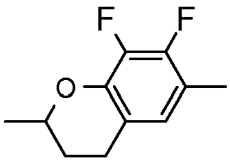 | **o2fl** | 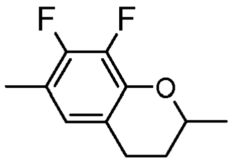 |
| dh | 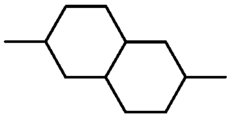 | | |
| B | 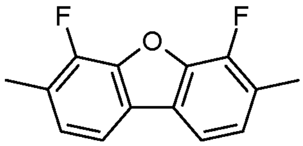 | | |
| **O** | 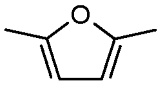 | **S** | 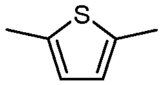 |
| **K** | 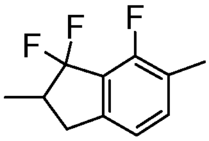 | **Kl** | 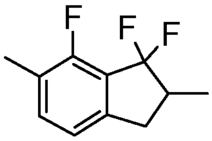 |
| L | 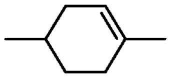 | **Ll** | 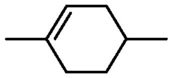 |
| F | 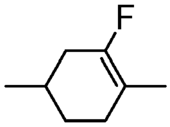 | **Fl** | 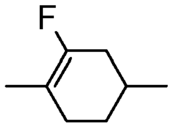 |
| Bh | 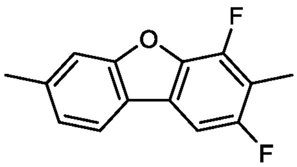 | **Bh(S)** | 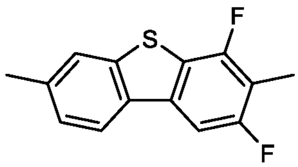 |
| Bf | 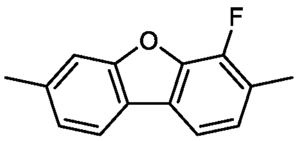 | **Bf(S)** | 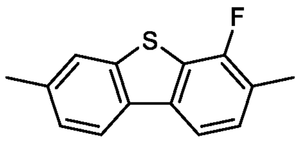 |
| Bfi | 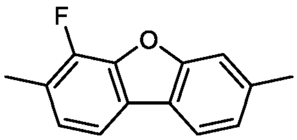 | **Bfi(S)** | 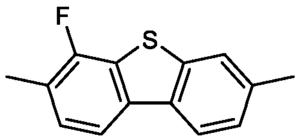 |

**Table B: Bridging units**

| | | | |
|---|---|---|---|
| **E** | $-CH_2-CH_2-$ | | |
| **V** | -CH=CH- | | |
| **T** | -C≡C- | | |
| **W** | $-CF_2-CF_2-$ | | |
| **B** | -CF=CF- | | |
| **Z** | -CO-O- | **Zl** | -O-CO- |

(continued)

| | | | |
|---|---|---|---|
| **X** | -CF=CH- | **XI** | -CH=CF- |
| **O** | $-CH_2-O-$ | **OI** | $-O-CH_2-$ |
| **Q** | $-CF_2-O-$ | **QI** | $-O-CF_2-$ |

**Table C: End groups**

| **On the left individually or in combination** | | **On the right individually or in combination** | |
|---|---|---|---|
| **-n-** | $CnH_{2n+1}-$ | **-n** | $-C_nH_{2n+1}$ |
| **-nO-** | $CnH_{2n+1}-O-$ | **-On** | $-O- C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH-C_nH_{2n}-$ | **-Vn** | $-CH=CH-C_nH_{2n+1}$ |
| **-nVm-** | $C_nH_{2n+1}-CH=CH-C_mH_{2m}-$ | **-nVm** | $- C_nH_{2n}-CH=CH-C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O$ - | **-OM** | $-OCFH_2$ |
| **-DO-** | $CF_2HO$ - | **-OD** | $-OCF_2H$ |
| **-TO-** | $CF_3O$ - | **-OT** | $-OCF_3$ |
| **-A-** | H-C≡C- | **-A** | -C≡C-H |
| **-nA-** | $C_nH_{2n+1}$-C≡C- | **-An** | $-CEC-C_nH_{2n+1}$ |
| **-NA-** | N≡C-C≡C- | **-AN** | -C≡C-C≡N |
| **-(cn)-** | 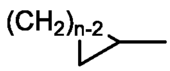 | **-(cn)** | 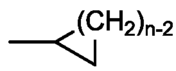 |
| **-(cn)m-** | 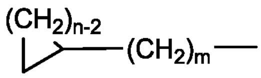 | **-m(cn)** | 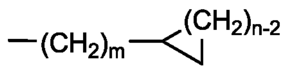 |
| **On the left only in combination** | | **On the right only in combination** | |
| **-...n...-** | $-C_nH_{2n}-$ | **-...n...** | $-C_nH_{2n}-$ |
| **-...M...-** | -CFH- | **-...M...** | -CFH- |
| **-...D...-** | $-CF_2-$ | **-...D...** | $-CF_2-$ |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...-** | -O-CO- |
| **-...K...-** | -CO- | **-...K...** | -CO- |
| **-...W...-** | -CF=CF- | **-...W...** | -CF=CF- |

in which n and m are each integers, and the three dots "... " are placeholders for other abbreviations from this table.

Apart from the compounds of formula I, IIA, IIB, IIC and/or IID, IVa, IVb and V, the mixtures according to the invention optionally comprise one or more compounds of the compounds mentioned below.

The following abbreviations are used:

(n, m, k and l are, independently of one another, each an integer, preferably 1 to 9 preferably 1 to 7, k and l possibly may be also 0 and preferably are 0 to 4, more preferably 0 or 2 and most preferably 2, n preferably is 1, 2, 3, 4 or 5, in the combination "-nO-" it preferably is 1, 2, 3 or 4, preferably 2 or 4, m preferably is 1, 2, 3, 4 or 5, in the combination "-Om" it preferably is 1, 2, 3 or 4, more preferably 2 or 4. The combination "-IVm" preferably is "2V1".)

## Table D

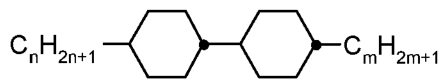

**CC-n-m**

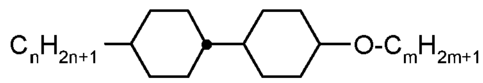

**CC-n-Om**

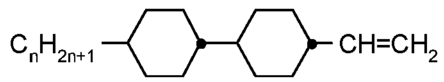

**CC-n-V**

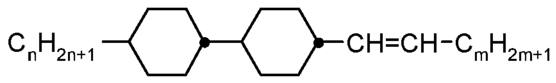

CC-n-Vm

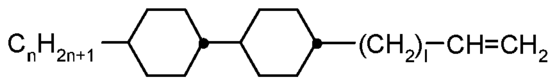

CC-n-IV

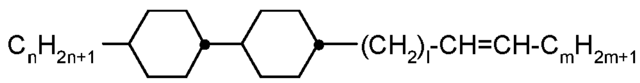

CC-n-IVm

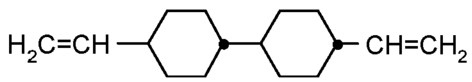

CC-V-V

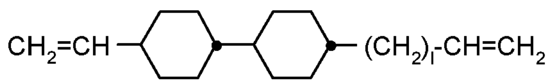

CC-V-IV

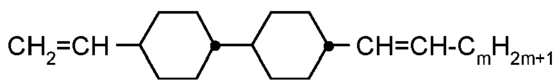

CC-V-Vm

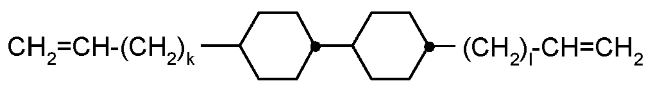

CC-Vk-IV

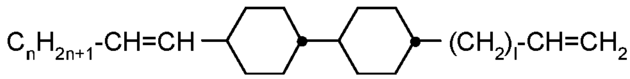

CC-nV-lV

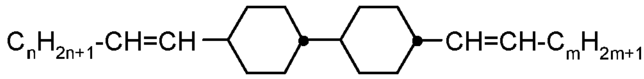

CC-nV-Vm

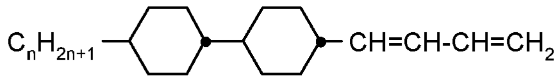

CC-n-VV

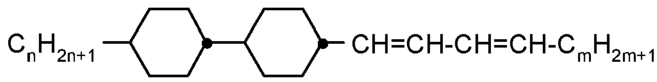

CC-n-VVm

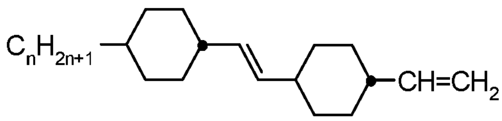

CVC-n-V

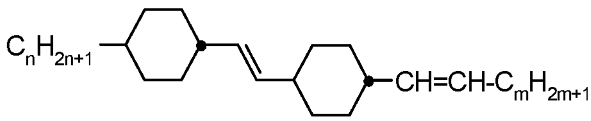

CVC-n-Vm

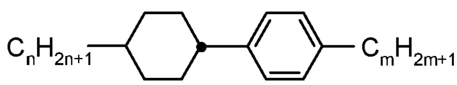

CP-n-m

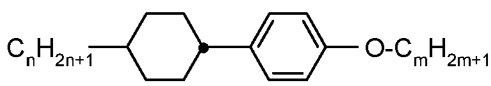

CP-n-Om

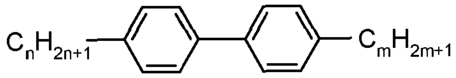

PP-n-m

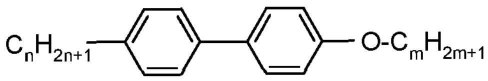

PP-n-Om

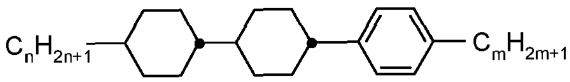

CCP-n-m

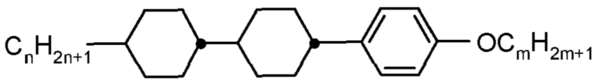

CCP-n-Om

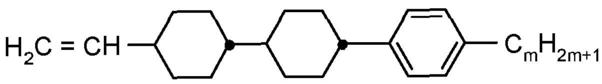

CCP-V-m

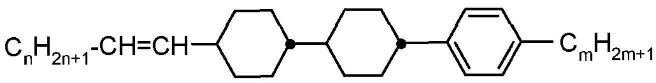

CCP-nV-m

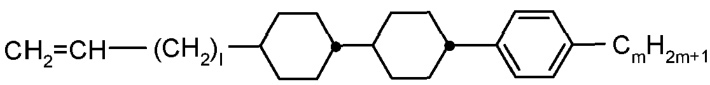

CCP-Vl-m

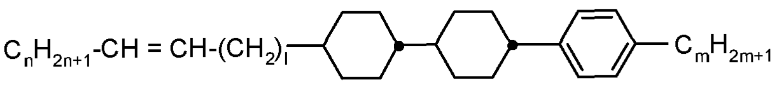

CCP-nVl-m

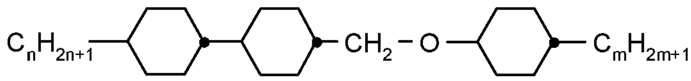

**CCOC-n-m**

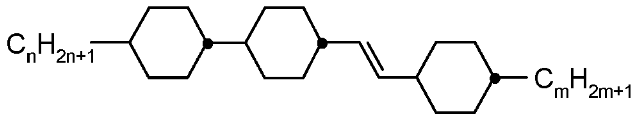

**CCVC-n-m**

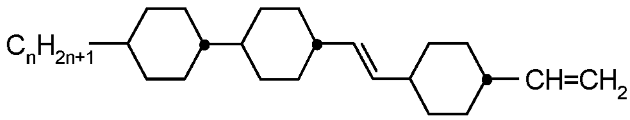

**CCVC-n-V**

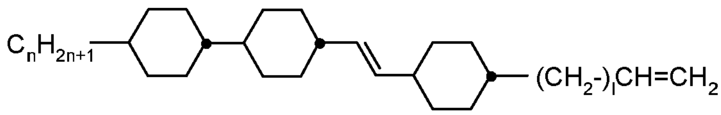

**CCVC-n-lV**

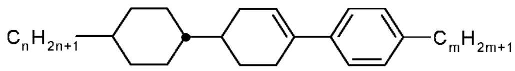

**CLP-n-m**

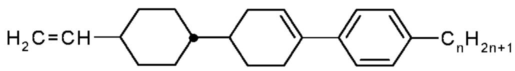

**CLP-V-n**

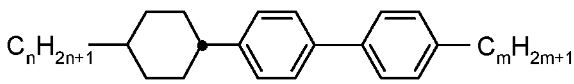

**CPP-n-m**

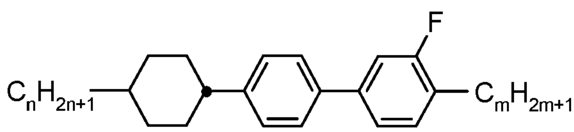

**CPG-n-m**

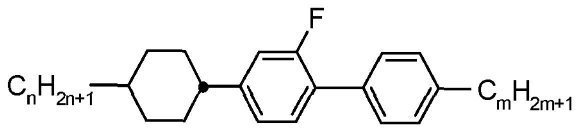

**CGP-n-m**

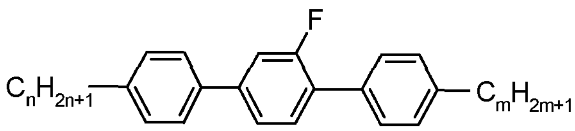

**PGP-n-m**

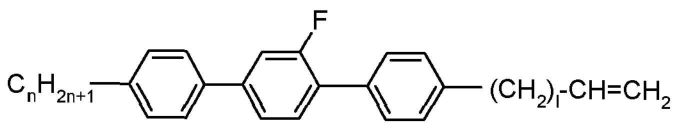

**PGP-n-IV**

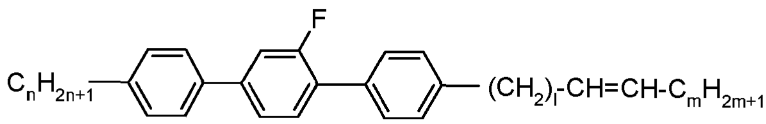

**PGP-n-IVm**

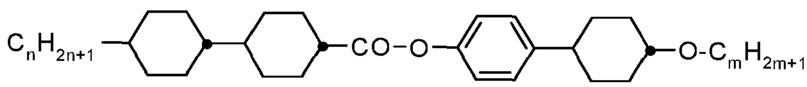

**CCZPC-n-m**

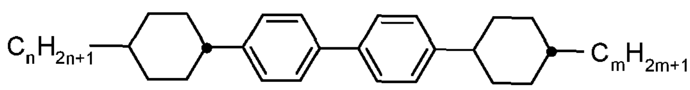

**CPPC-n-m**

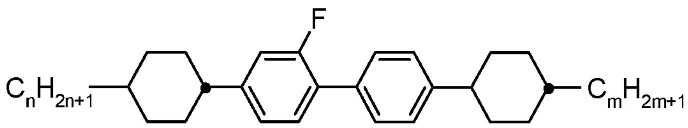

**CGPC-n-m**

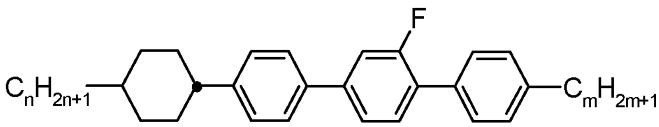

**CPGP-n-m**

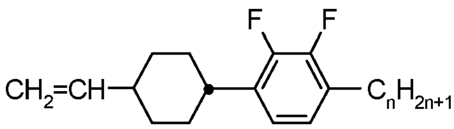

**CY-V-n**

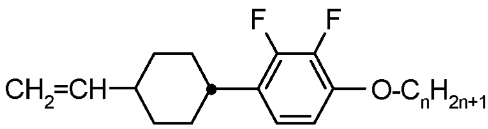

**CY-V-On**

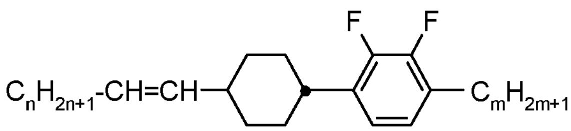

**CY-nV-m**

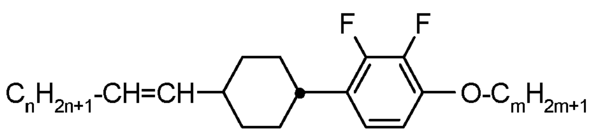

**CY-nV-Om**

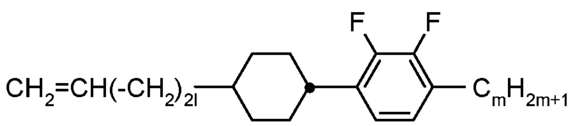

**CY-VI-m**

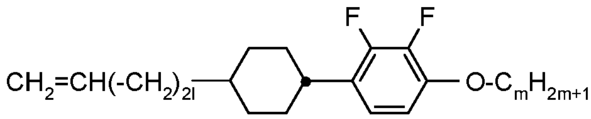

**CY-VI-Om**

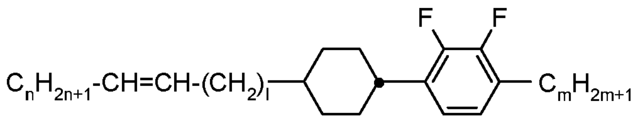

**CY-nVI-m**

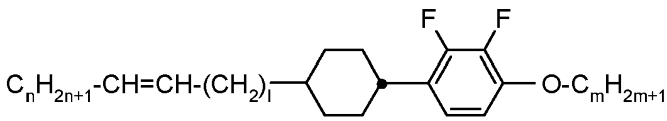

**CY-nVI-Om**

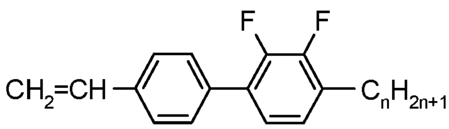

**PY-V-n**

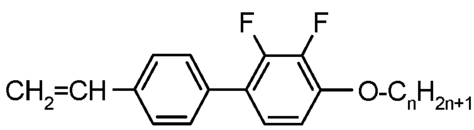

**PY-V-On**

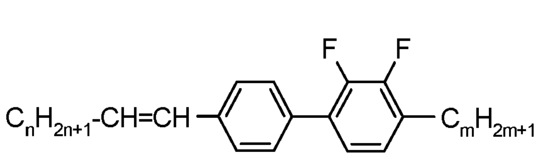

**PY-nV-m**

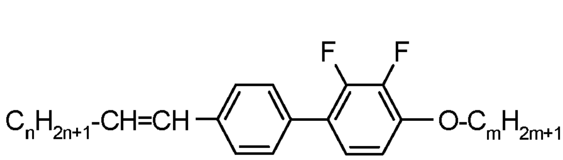

**PY-nV-Om**

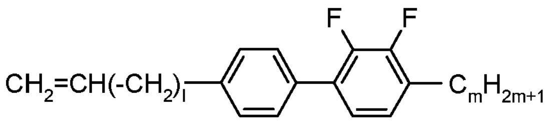

**PY-Vl-m**

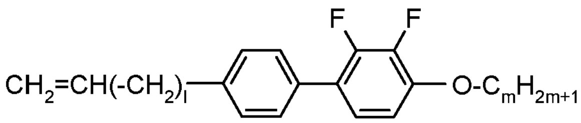

**PY-Vl-Om**

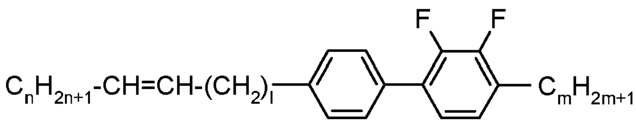

**PY-nVl-m**

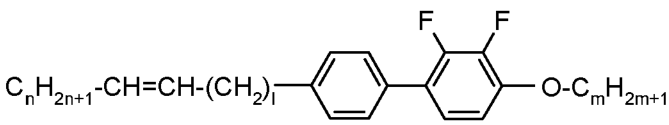

**PY-nVl-Om**

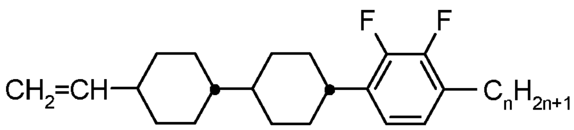

**CCY-V-n**

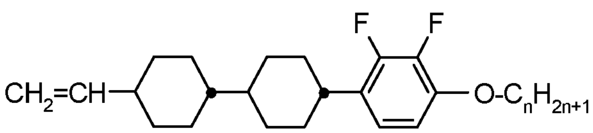

**CCY-V-On**

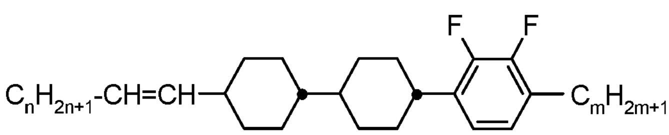

**CCY-nV-m**

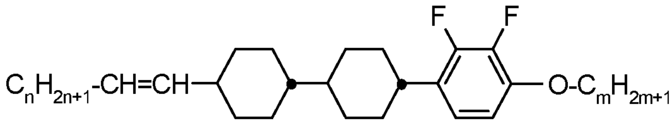

**CCY-nV-Om**

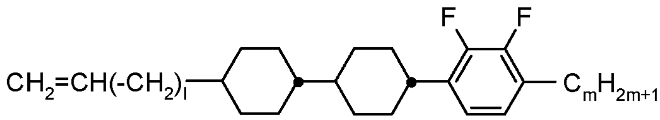

**CCY-Vl-m**

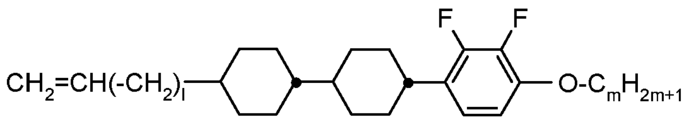

**CCY-Vl-Om**

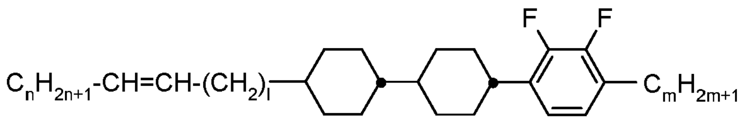

**CCY-nVl-m**

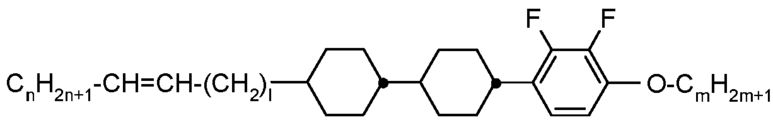

**CCY-nVl-Om**

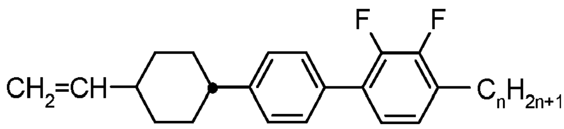

**CPY-V-n**

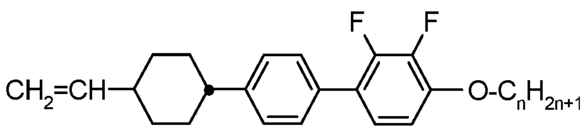

**CPY-V-On**

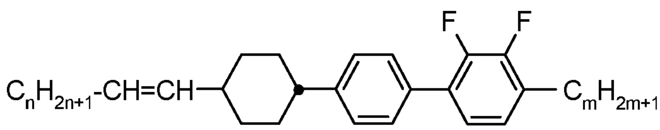

**CPY-nV-m**

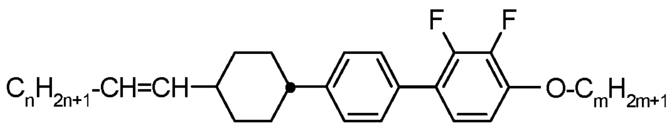

**CPY-nV-Om**

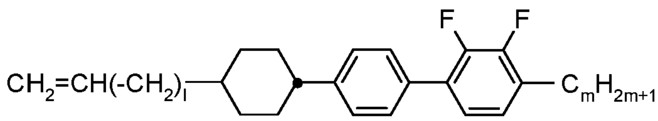

**CPY-Vl-m**

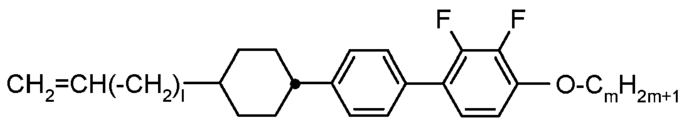

**CPY-Vl-Om**

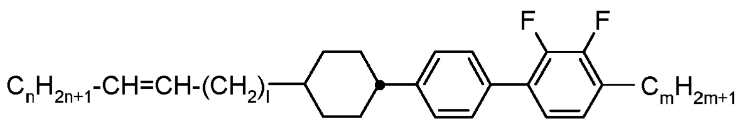

**CPY-nVl-k**

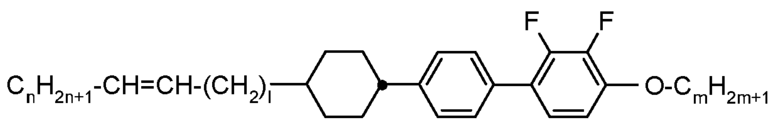

**CPY-nVl-Om**

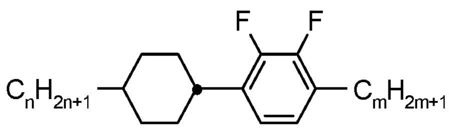

**CY-n-m**

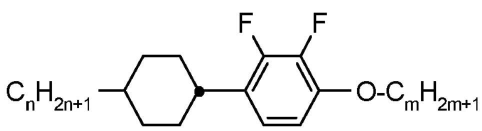

**CY-n-Om**

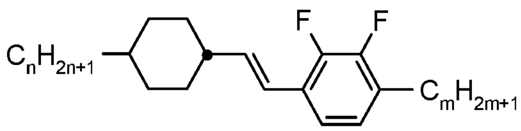

**CVY-n-m**

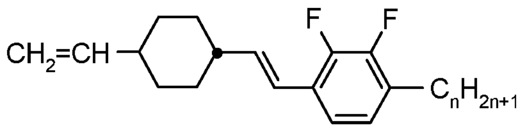

**CVY-V-n**

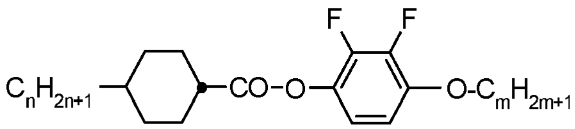

**CZY-n-Om**

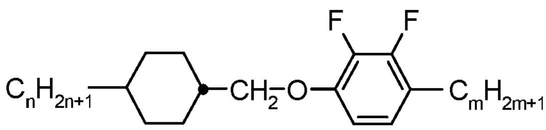

**COY-n-m**

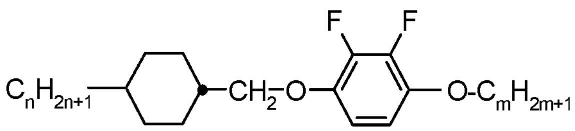

**COY-n-Om**

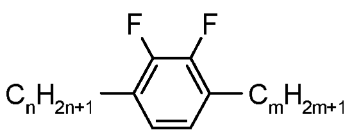

**Y-n-m**

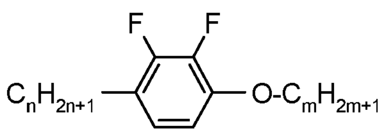

**Y-n-Om**

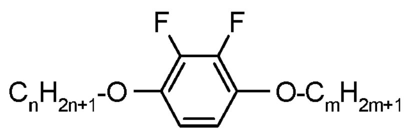

**Y-nO-Om**

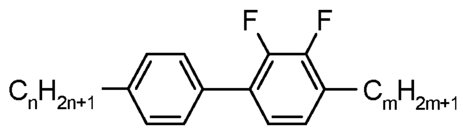

**PY-n-m**

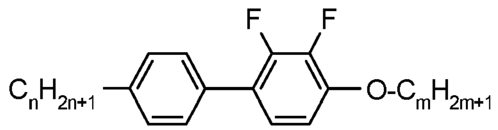

**PY-n-Om**

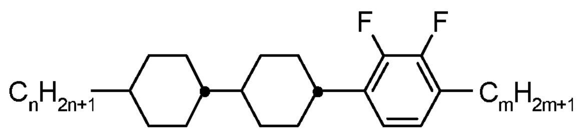

**CCY-n-m**

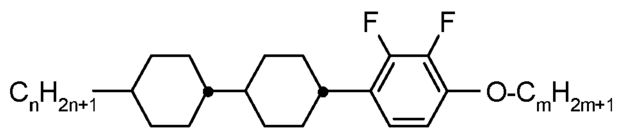

**CCY-n-Om**

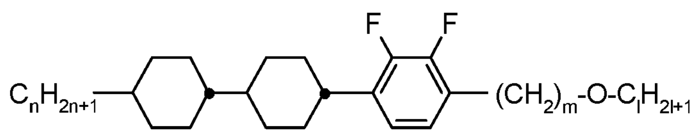

**CCY-n-mOI**

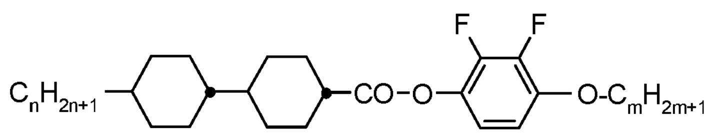

**CCZY-n-Om**

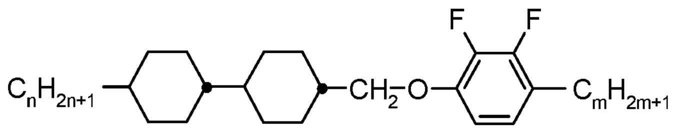

**CCOY-n-m**

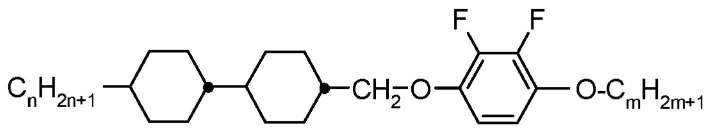

**CCOY-n-Om**

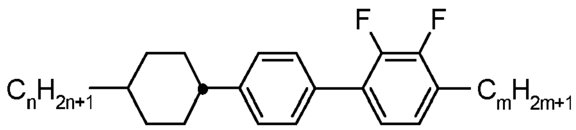

**CPY-n-m**

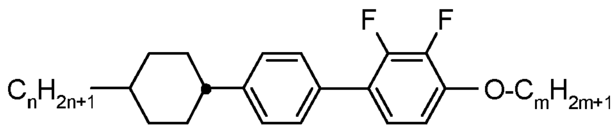

**CPY-n-Om**

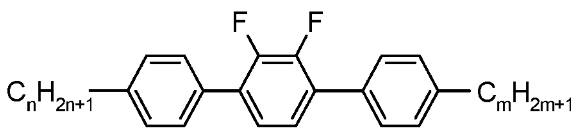

**PYP-n-m**

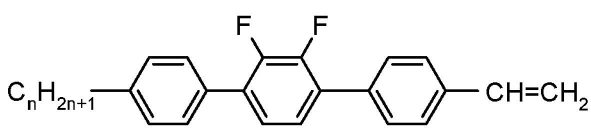

**PYP-n-V**

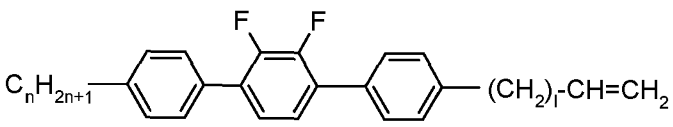

PYP-n-IV

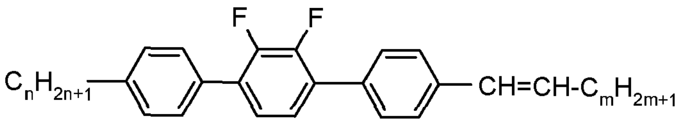

PYP-n-Vm

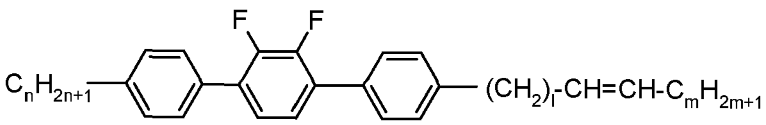

PYP-n-IVm

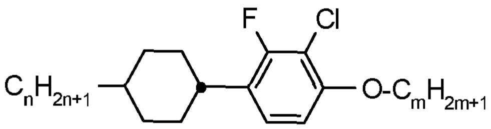

CP(F,Cl)-n-Om

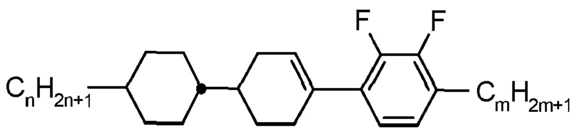

CLY-n-m

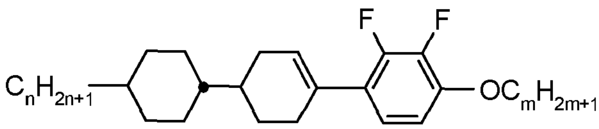

CLY-n-Om

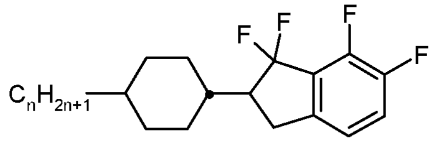

**CK-n-F**

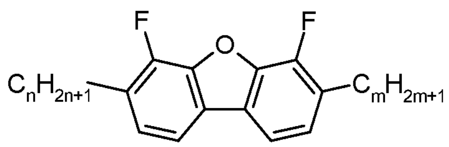

**B-n-m**

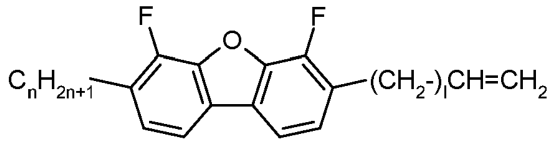

**B-n-IV**

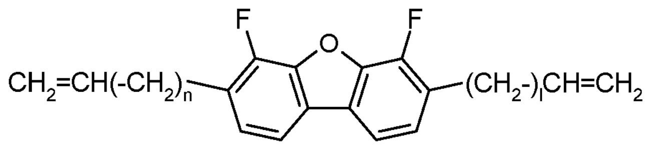

**B-Vn-IV**

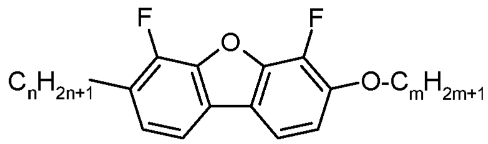

**B-n-Om**

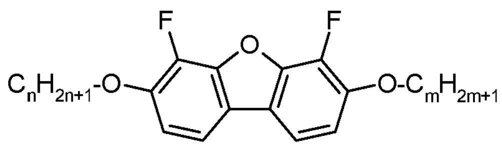

**B-nO-Om**

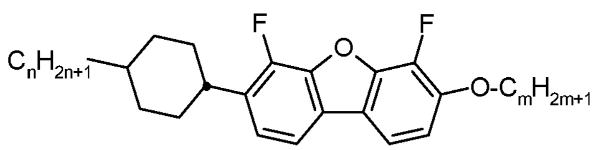

**CB-n-Om**

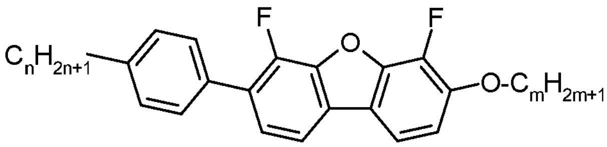

PB-n-Om

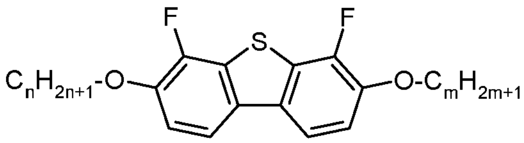

B(S)-nO-Om

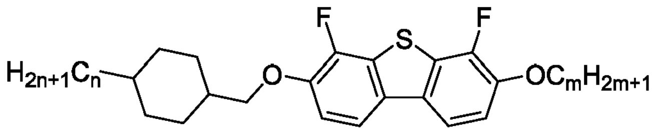

COB(S)-n-Om

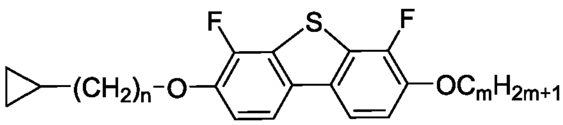

B(S)-(c3)nO-Om

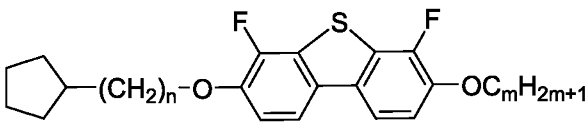

B(S)-(c5)nO-Om

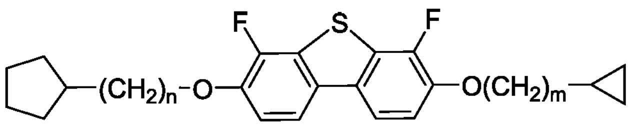

B(S)-(c5)nO-Om(c3)

**Table E**

Table E shows chiral dopants which can be added to the LC media according to the invention.

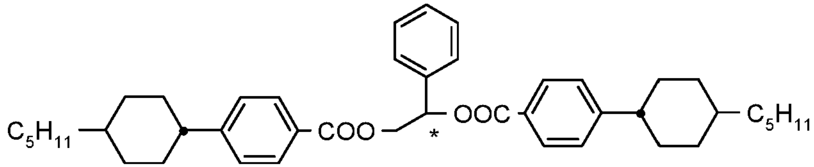

**R/S-1011**

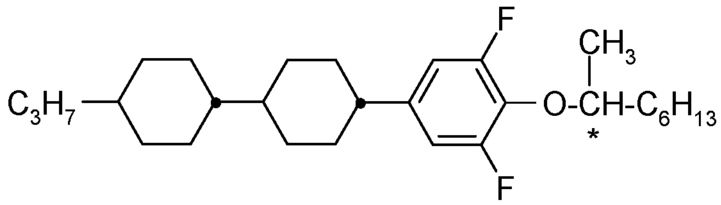

**R/S-2011**

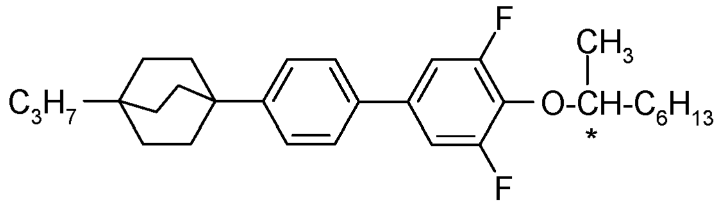

**R/S-4011**

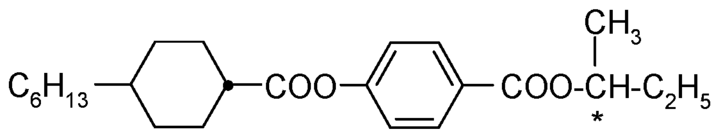

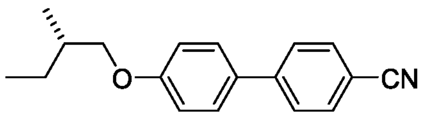

**C 15**

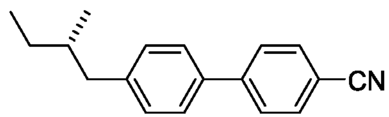

**CB 15**

(continued)

Table E shows chiral dopants which can be added to the LC media according to the invention.

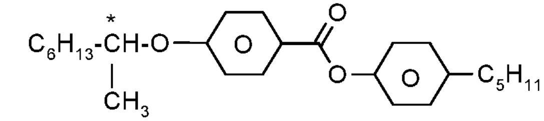

CM 21

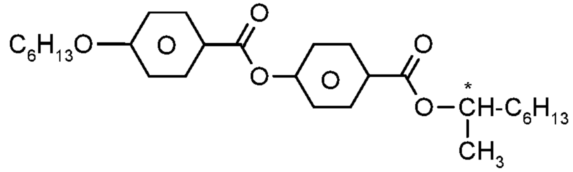

R/S-811

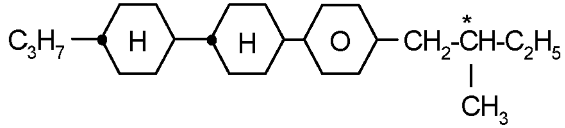

CM 44

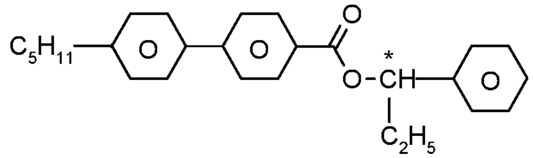

CM 45

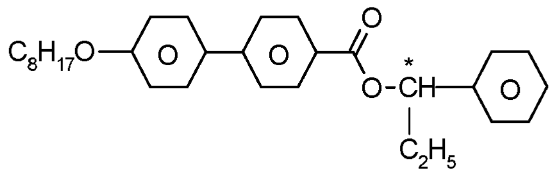

CN

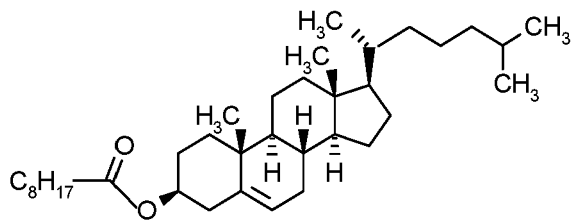

CM 47

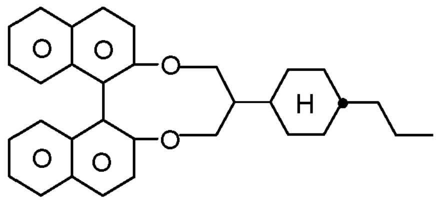

R/S-5011

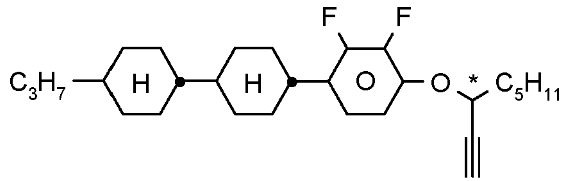

R/S-3011

(continued)

Table E shows chiral dopants which can be added to the LC media according to the invention.

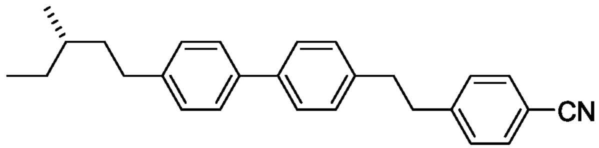

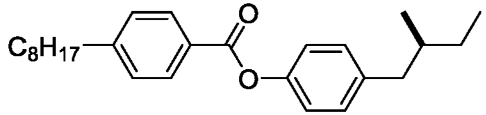

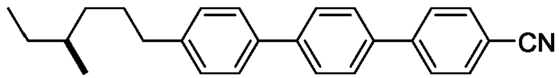

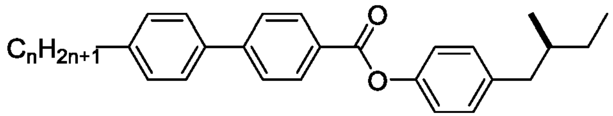

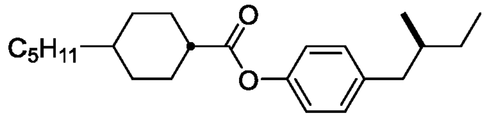

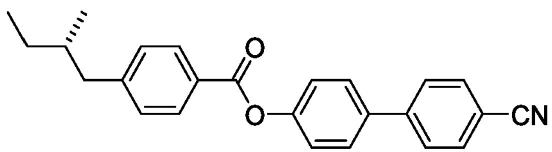

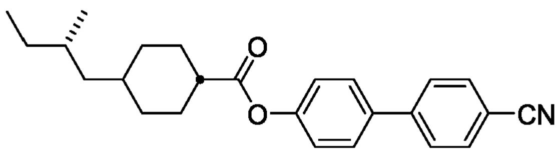

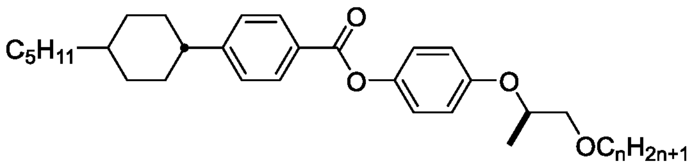

(continued)

Table E shows chiral dopants which can be added to the LC media according to the invention.

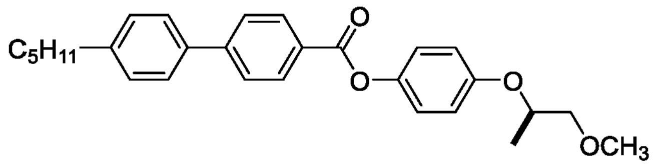

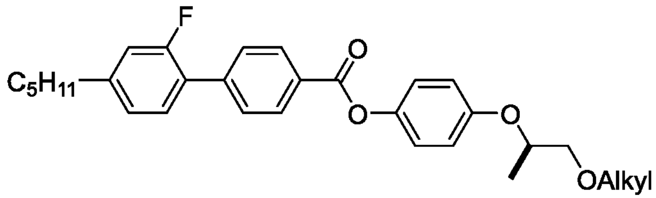

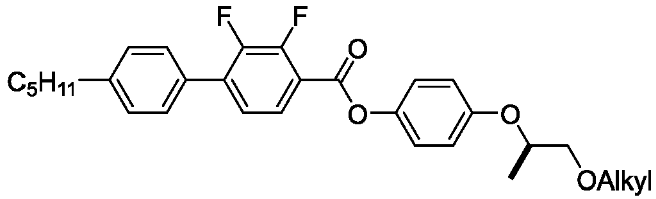

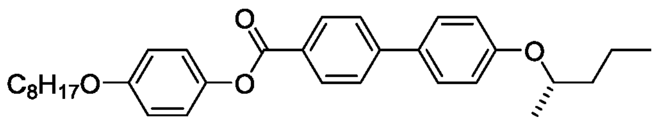

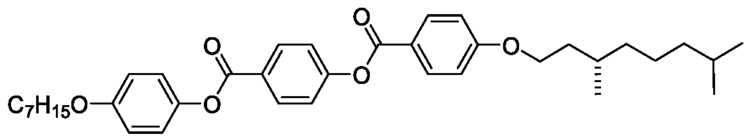

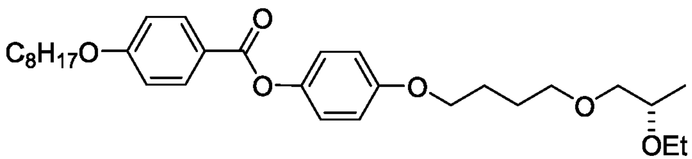

(continued)

Table E shows chiral dopants which can be added to the LC media according to the invention.

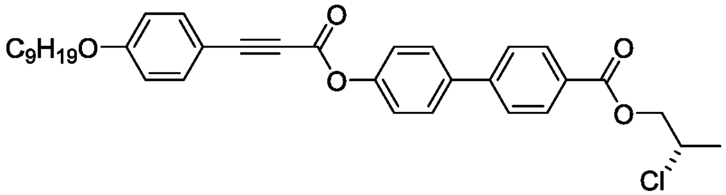

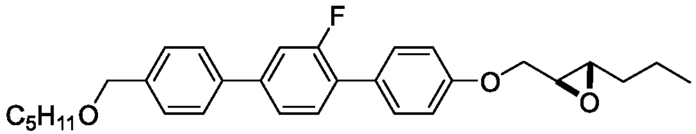

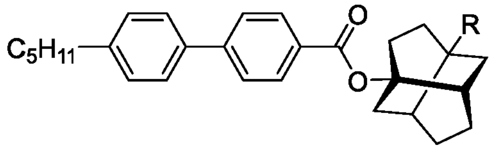

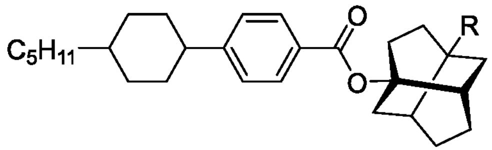

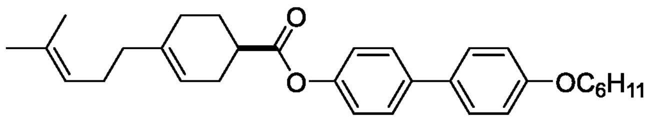

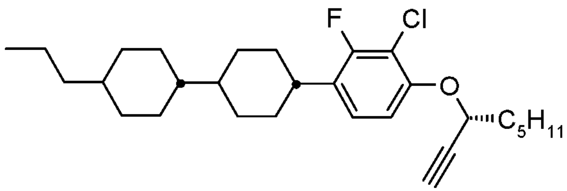

<u>**Table F**</u>

Table F shows illustrative reactive mesogenic compounds (RM) which can be used in the LC media in accordance with the present invention.

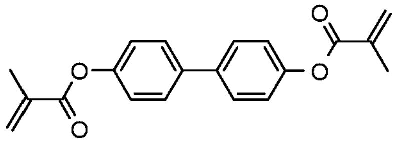

RM-1

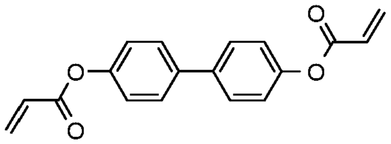

RM-2

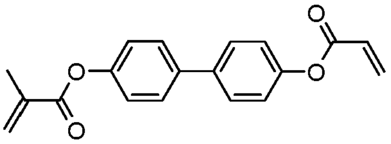

RM-3

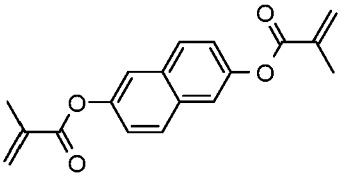

RM-4

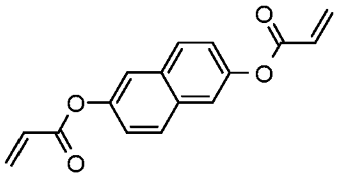

RM-5

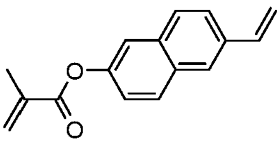

RM-6

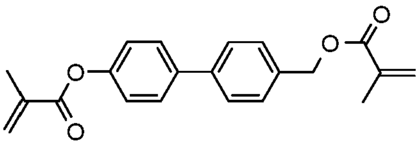

RM-7

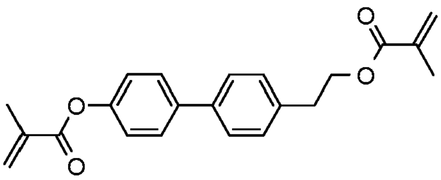

RM-8

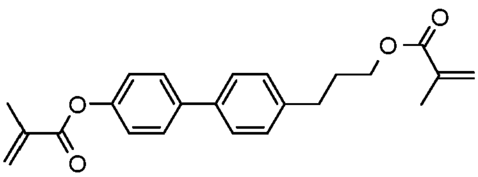

RM-9

(continued)

Table F shows illustrative reactive mesogenic compounds (RM) which can be used in the LC media in accordance with the present invention.

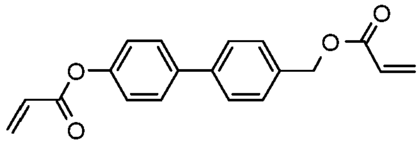

RM-10

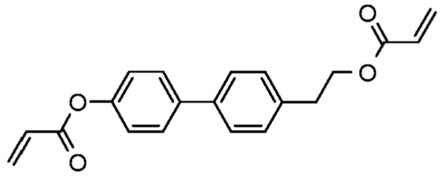

RM-11

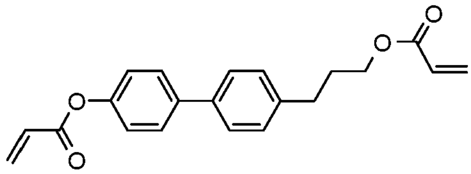

RM-12

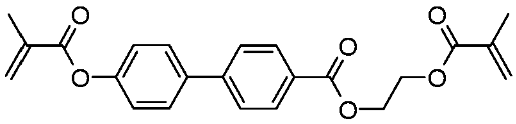

RM-13

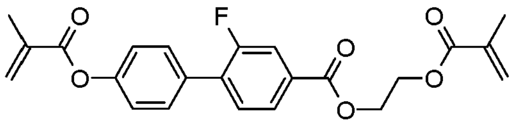

RM-14

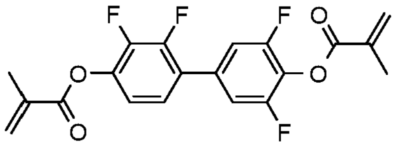

RM-15

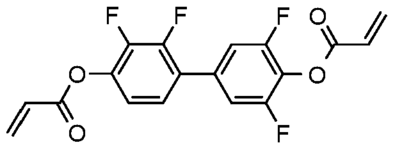

RM-16

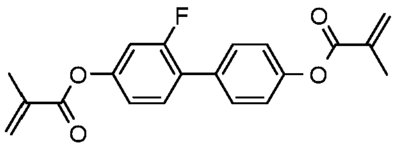

RM-17

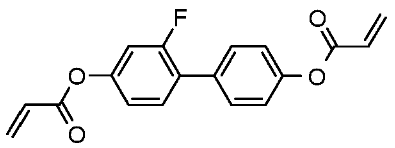

RM-18

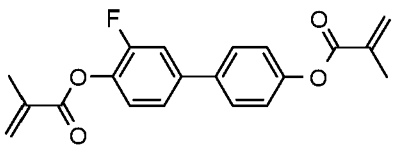

RM-19

(continued)

Table F shows illustrative reactive mesogenic compounds (RM) which can be used in the LC media in accordance with the present invention.

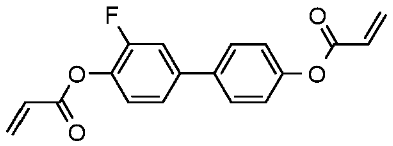

RM-20

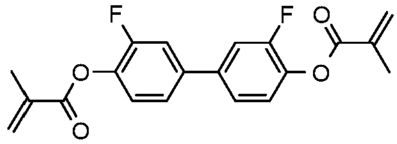

RM-21

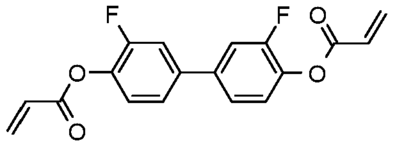

RM-22

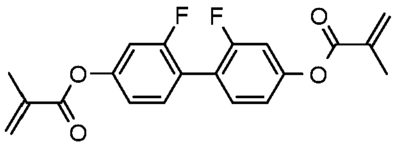

RM-23

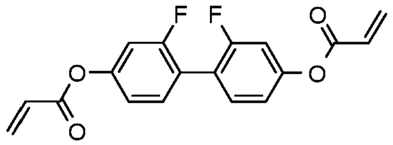

RM-24

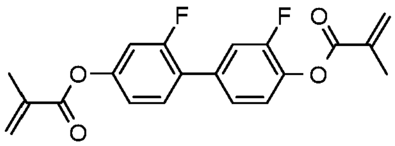

RM-25

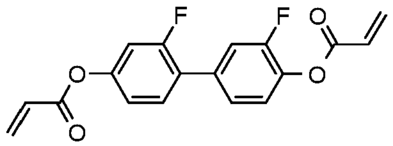

RM-26

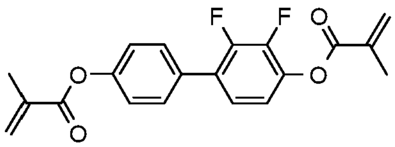

RM-27

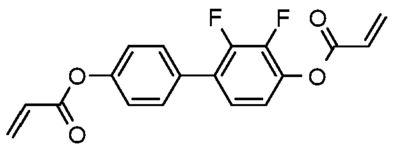

RM-28

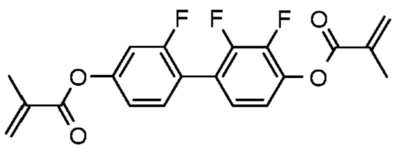

RM-29

(continued)

Table F shows illustrative reactive mesogenic compounds (RM) which can be used in the LC media in accordance with the present invention.

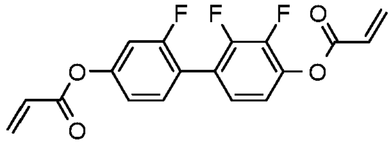

RM-30

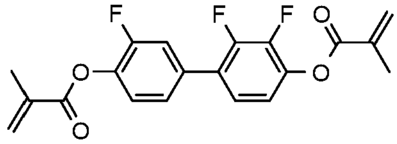

RM-31

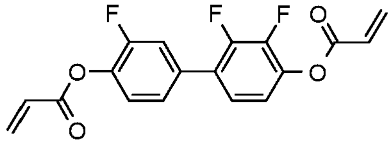

RM-32

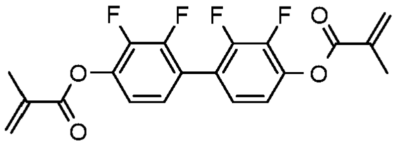

RM-33

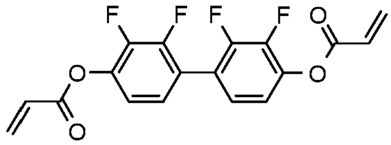

RM-34

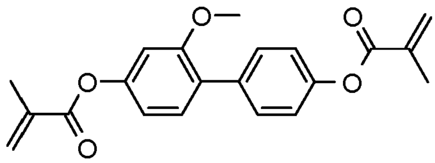

RM-35

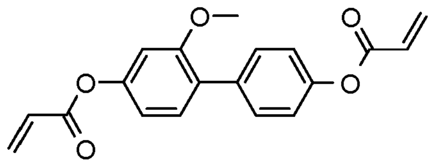

RM-36

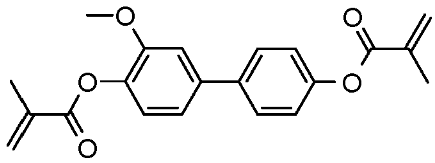

RM-37

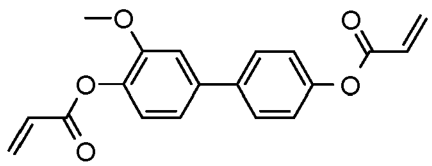

RM-38

(continued)

Table F shows illustrative reactive mesogenic compounds (RM) which can be used in the LC media in accordance with the present invention.

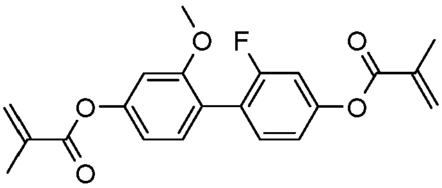

RM-39

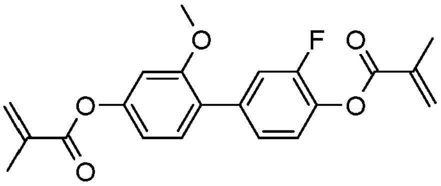

RM-40

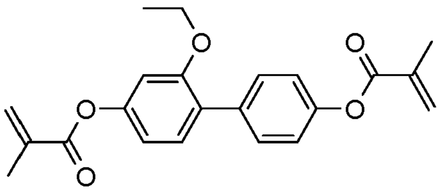

RM-41

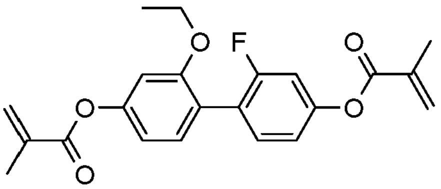

RM-42

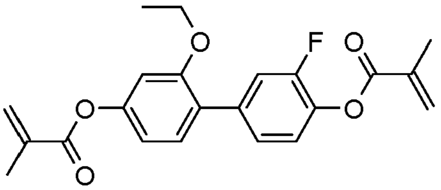

RM-43

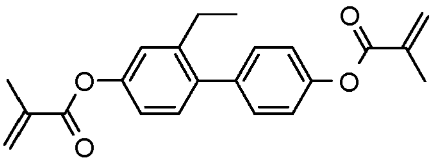

RM-44

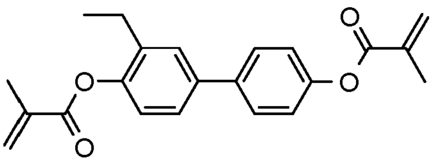

RM-45

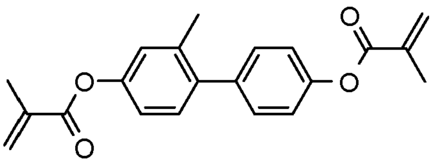

RM-46

(continued)

Table F shows illustrative reactive mesogenic compounds (RM) which can be used in the LC media in accordance with the present invention.

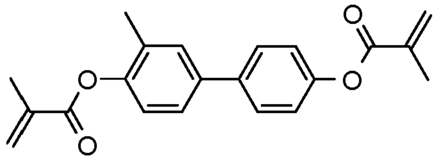

RM-47

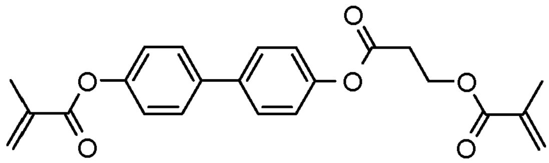

RM-48

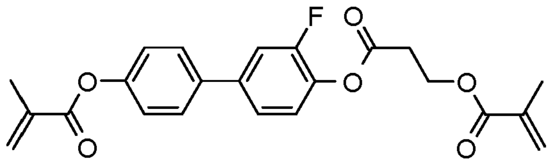

RM-49

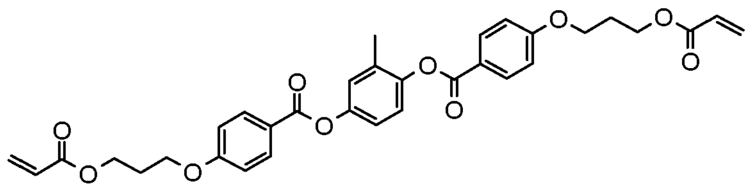

RM-50

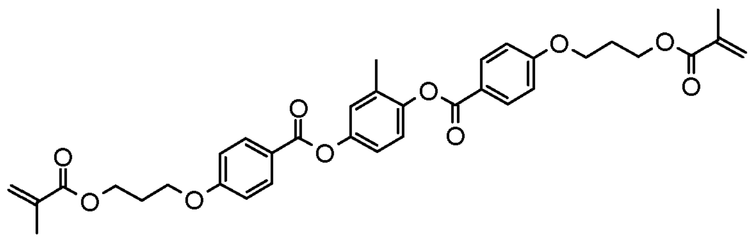

RM-51

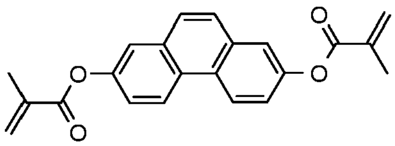

RM-52

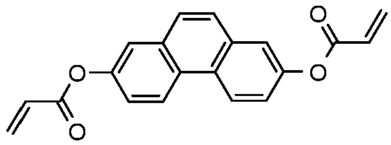

RM-53

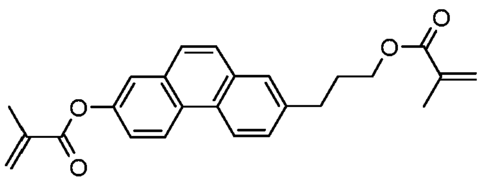

RM-54

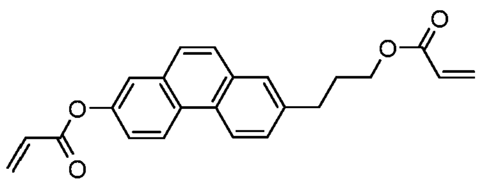

RM-55

(continued)

Table F shows illustrative reactive mesogenic compounds (RM) which can be used in the LC media in accordance with the present invention.

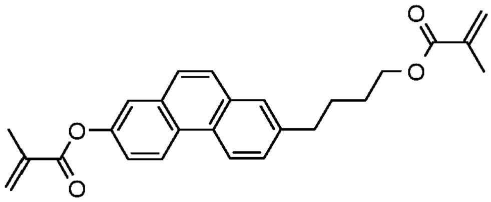

RM-56

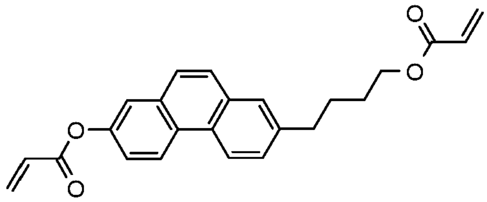

RM-57

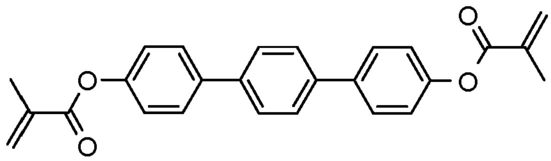

RM-58

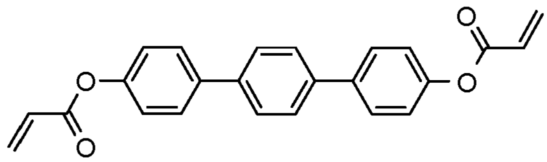

RM-59

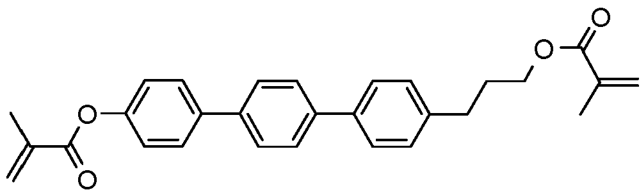

RM-60

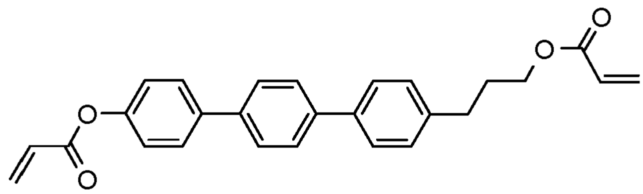

RM-61

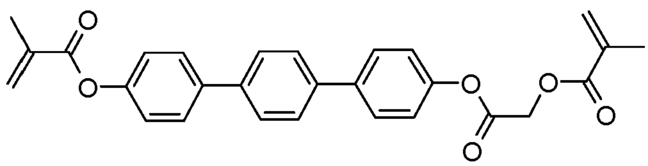

RM-62

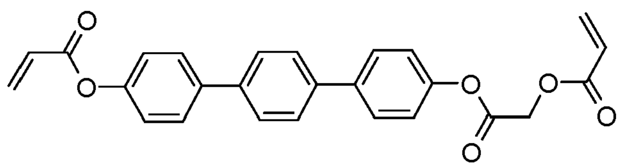

RM-63

(continued)

Table F shows illustrative reactive mesogenic compounds (RM) which can be used in the LC media in accordance with the present invention.

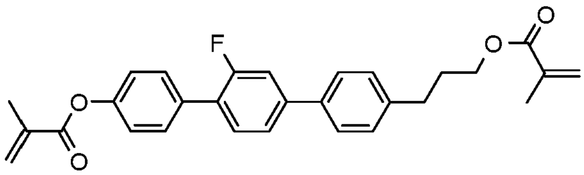
RM-64

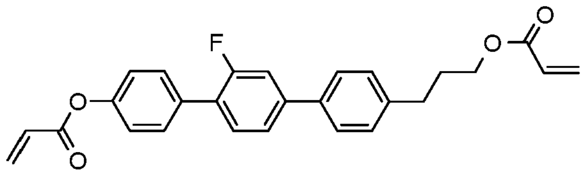
RM-65

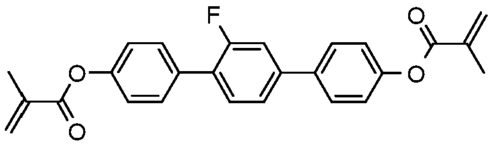
RM-66

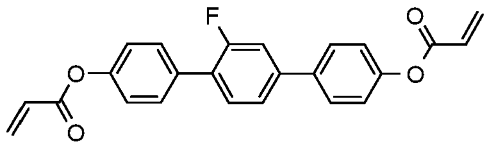
RM-67

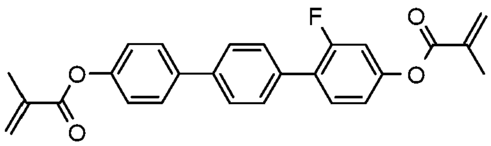
RM-68

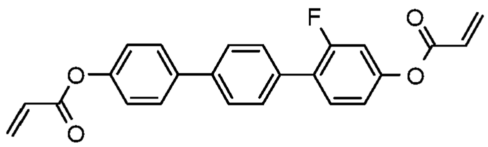
RM-69

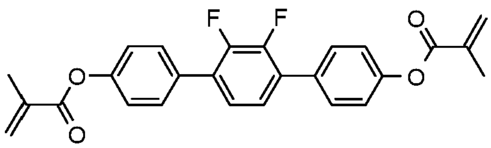
RM-70

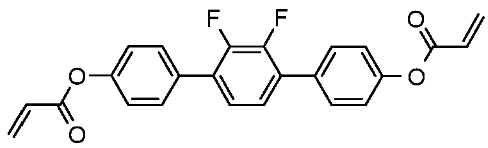
RM-71

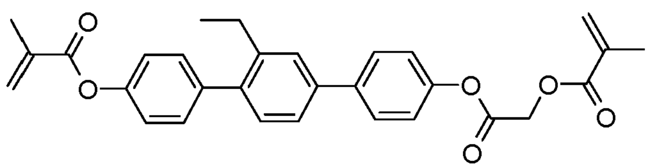
RM-72

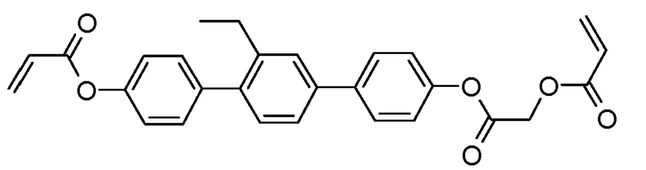
RM-73

(continued)

Table F shows illustrative reactive mesogenic compounds (RM) which can be used in the LC media in accordance with the present invention.

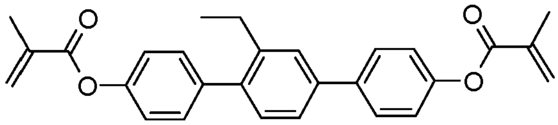
RM-74

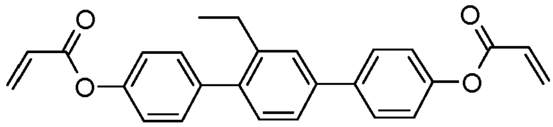
RM-75

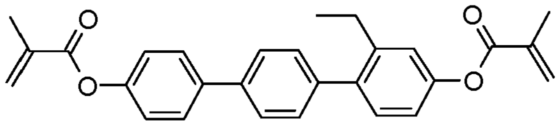
RM-76

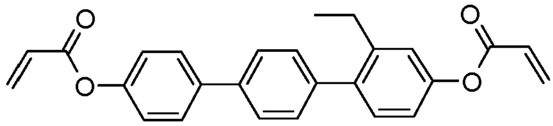
RM-77

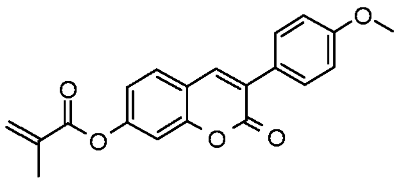
RM-78

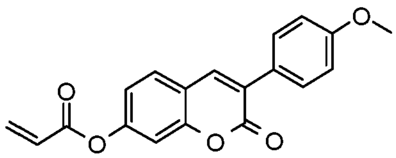
RM-79

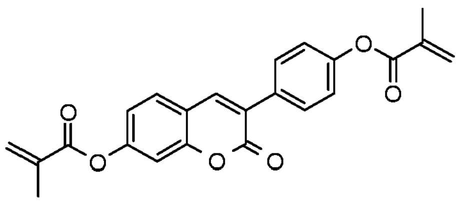
RM-80

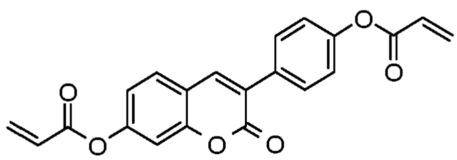
RM-81

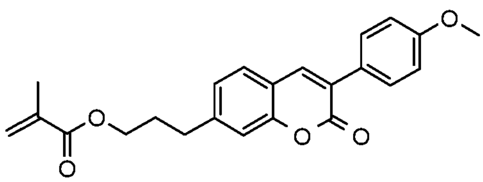
RM-82

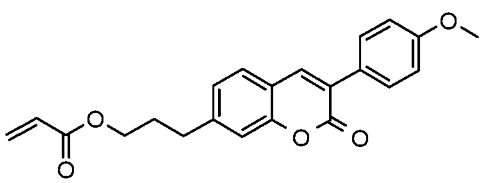
RM-83

(continued)

Table F shows illustrative reactive mesogenic compounds (RM) which can be used in the LC media in accordance with the present invention.

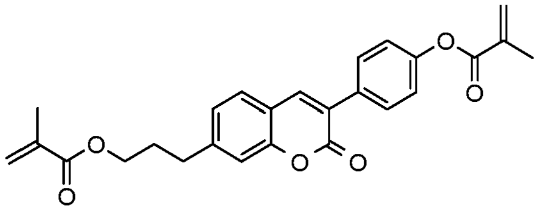

RM-84

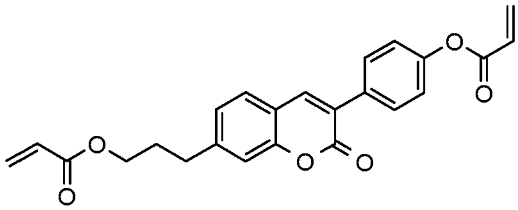

RM-85

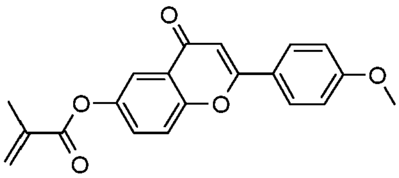

RM-86

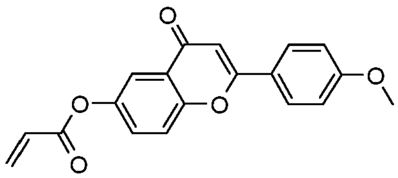

RM-87

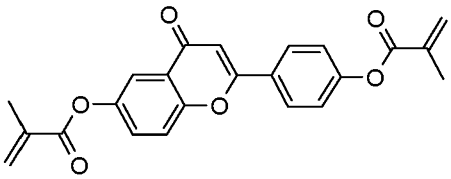

RM-88

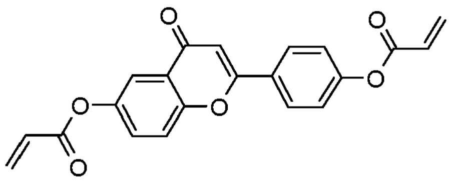

RM-89

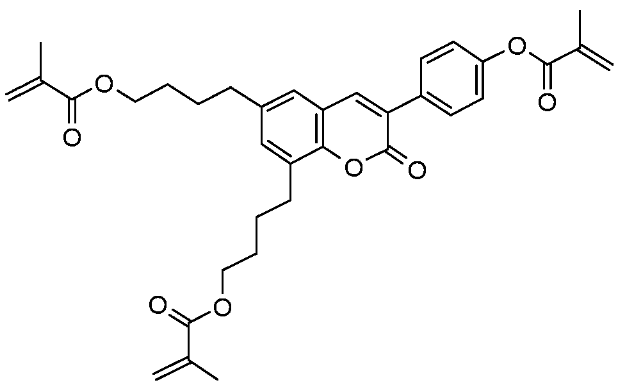

RM-90

(continued)

Table F shows illustrative reactive mesogenic compounds (RM) which can be used in the LC media in accordance with the present invention.

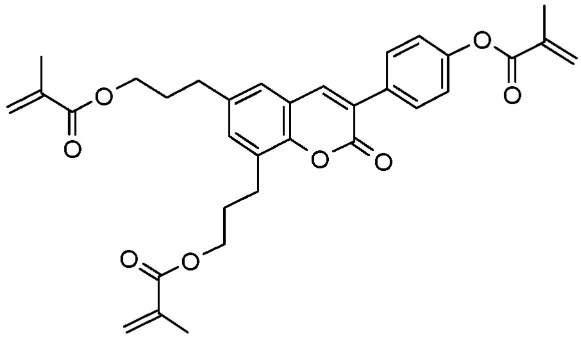

RM-91

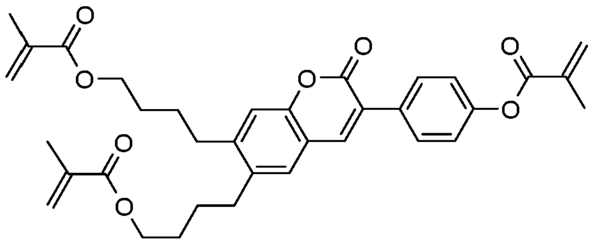

RM-92

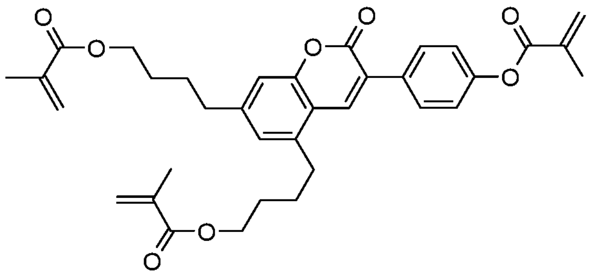

RM-93

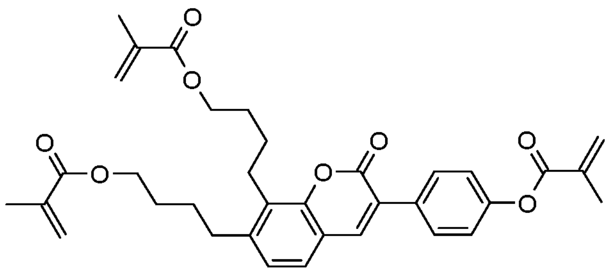

RM-94

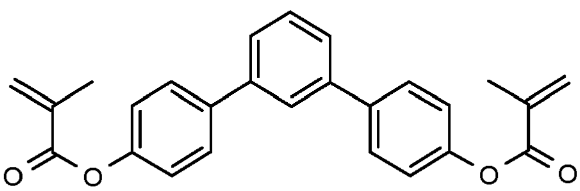

RM-95

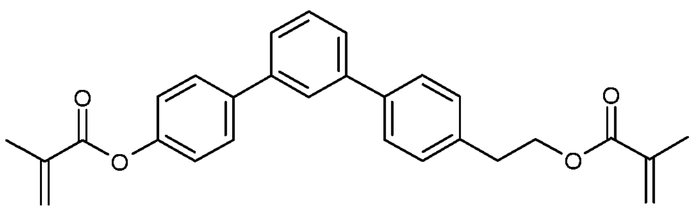

RM-96

(continued)

Table F shows illustrative reactive mesogenic compounds (RM) which can be used in the LC media in accordance with the present invention.

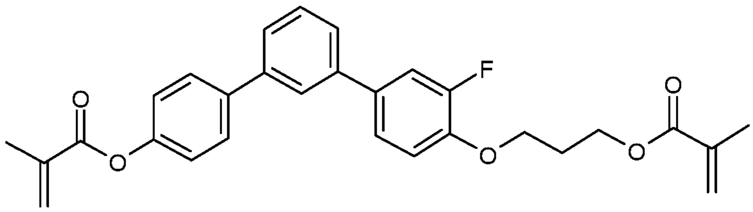

RM-97

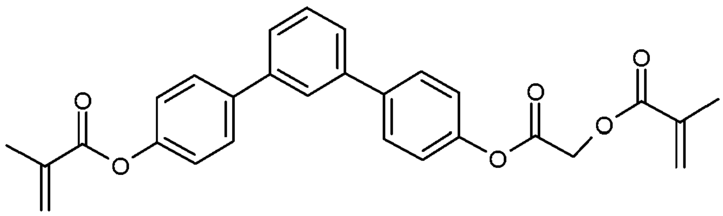

RM-98

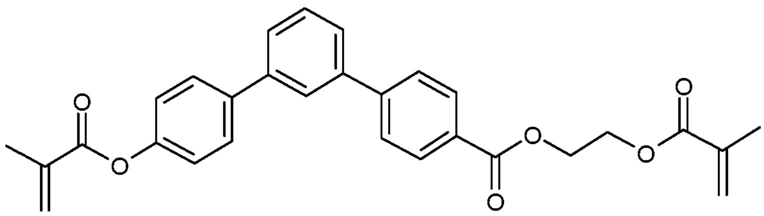

RM-99

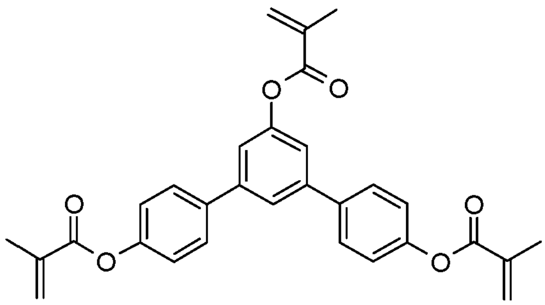

RM-100

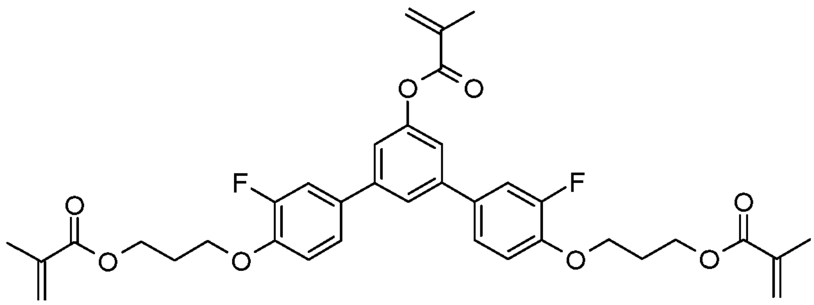

RM-101

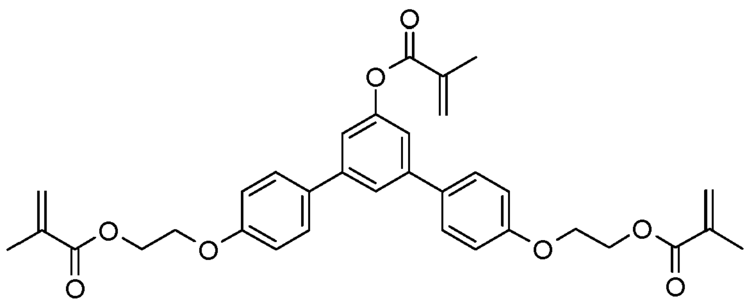

RM-102

(continued)

Table F shows illustrative reactive mesogenic compounds (RM) which can be used in the LC media in accordance with the present invention.

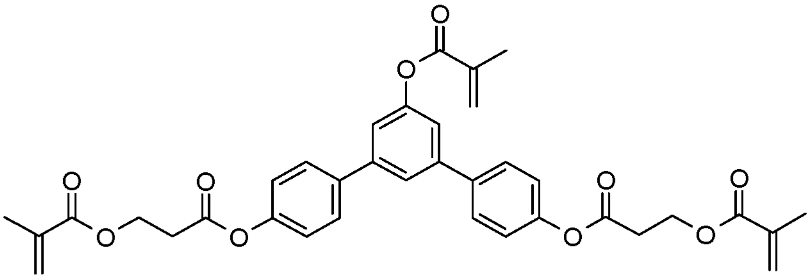

RM-103

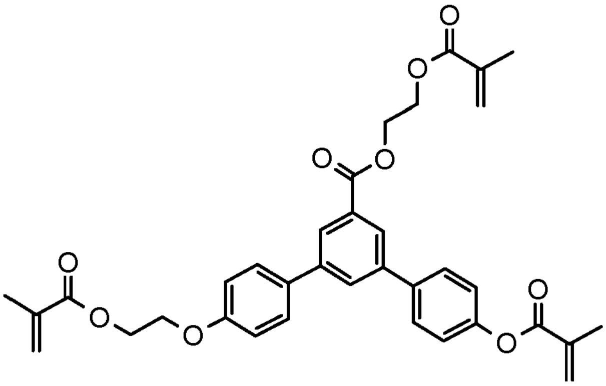

RM-104

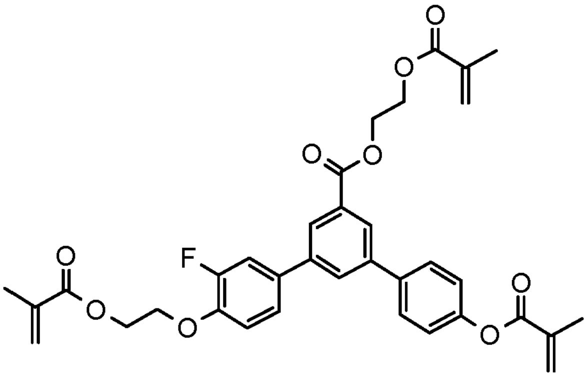

RM-105

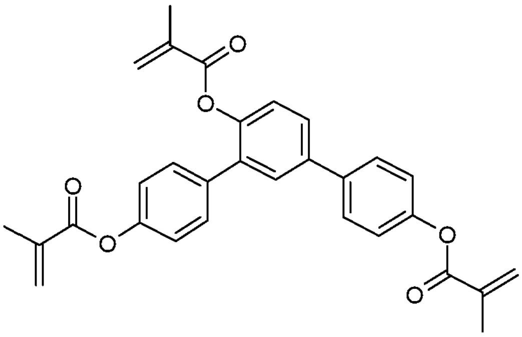

RM-106

(continued)

Table F shows illustrative reactive mesogenic compounds (RM) which can be used in the LC media in accordance with the present invention.

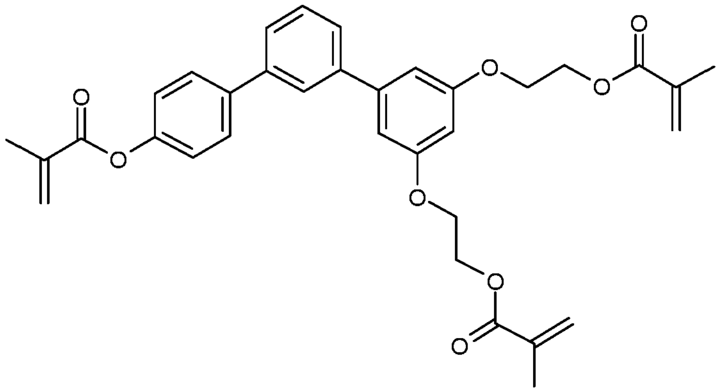

RM-107

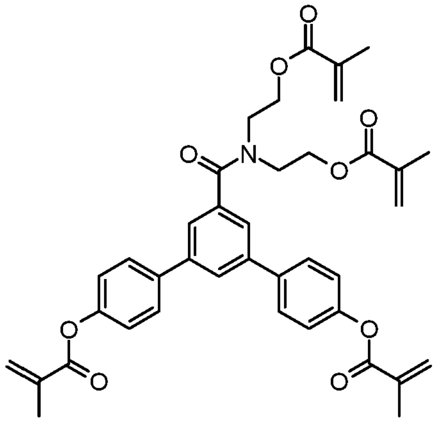

RM-108

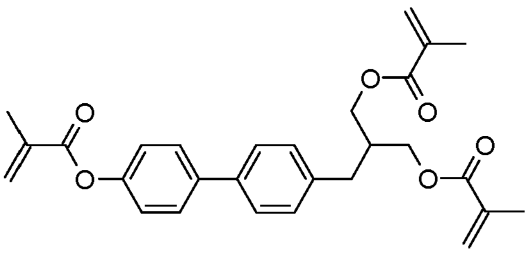

RM-109

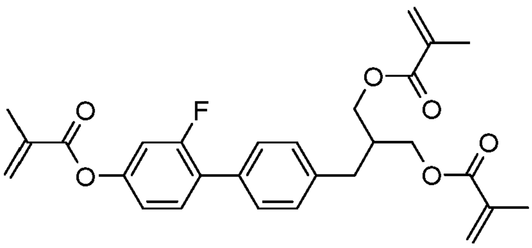

RM-110

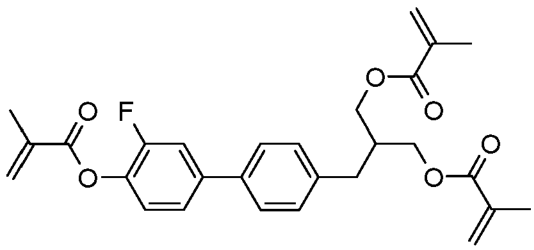

RM-111

(continued)

Table F shows illustrative reactive mesogenic compounds (RM) which can be used in the LC media in accordance with the present invention.

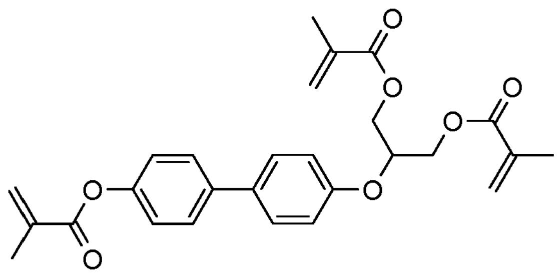

RM-112

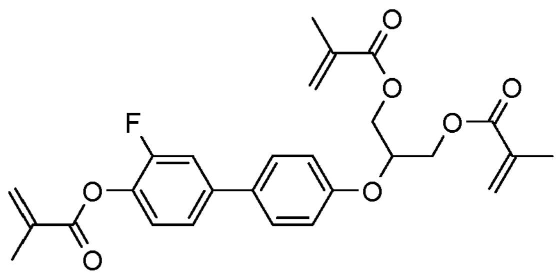

RM-113

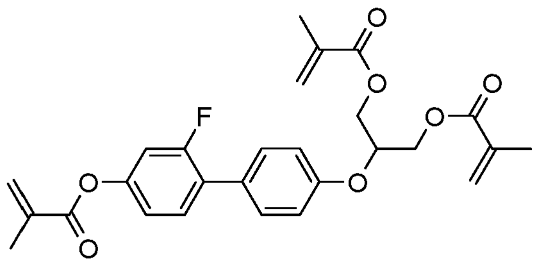

RM-114

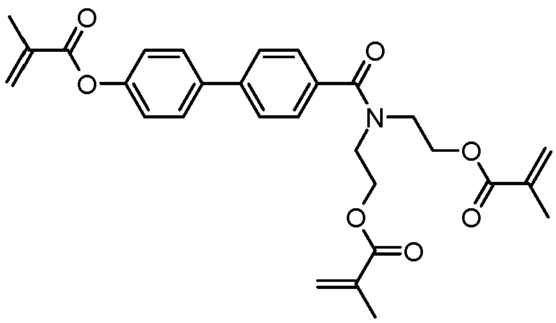

RM-115

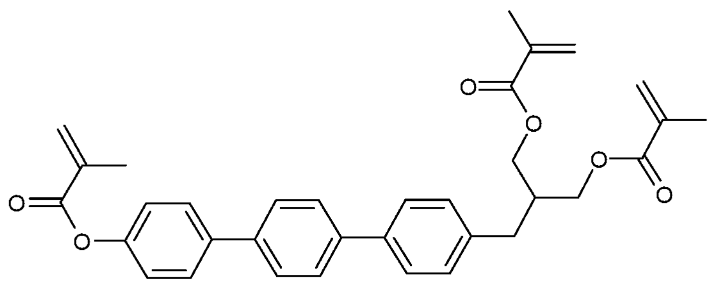

RM-116

(continued)

Table F shows illustrative reactive mesogenic compounds (RM) which can be used in the LC media in accordance with the present invention.

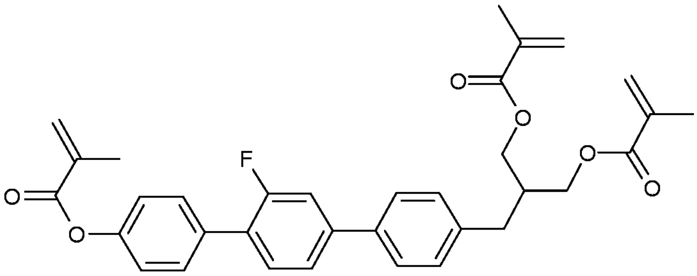

RM-117

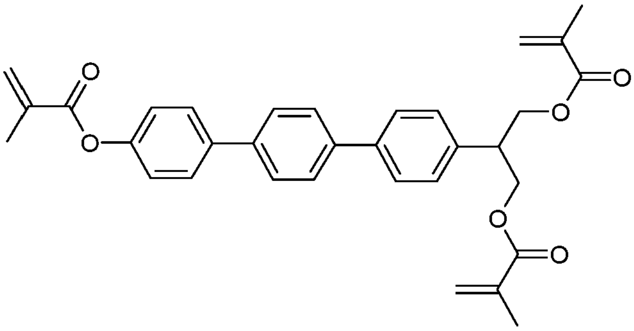

RM-118

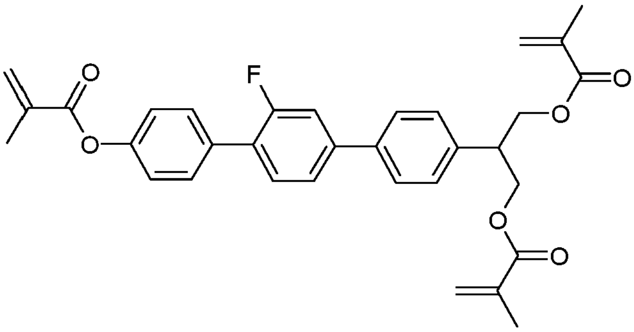

RM-119

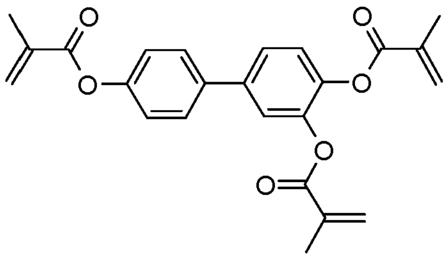

RM-120

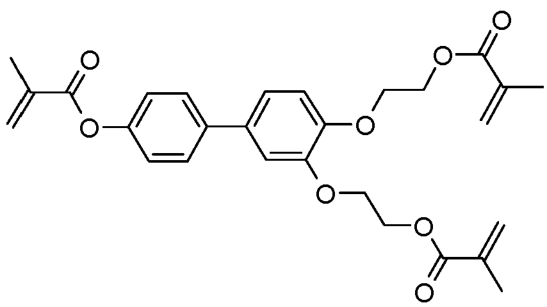

RM-121

(continued)

Table F shows illustrative reactive mesogenic compounds (RM) which can be used in the LC media in accordance with the present invention.

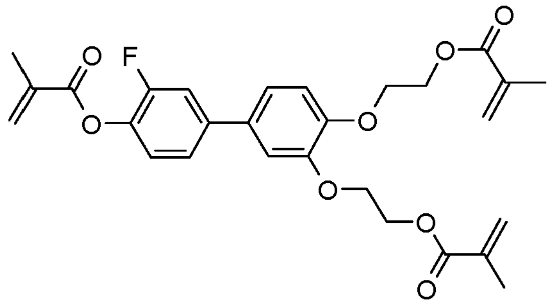

RM-122

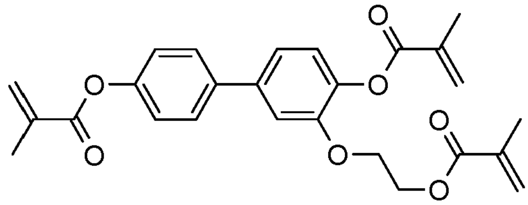

RM-123

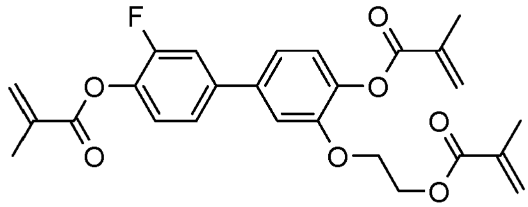

RM-124

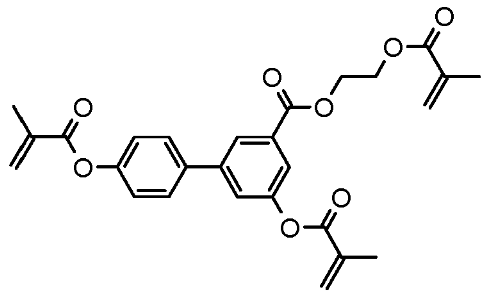

RM-125

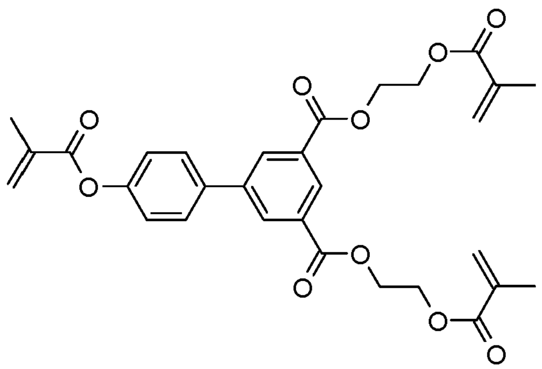

RM-126

(continued)

Table F shows illustrative reactive mesogenic compounds (RM) which can be used in the LC media in accordance with the present invention.

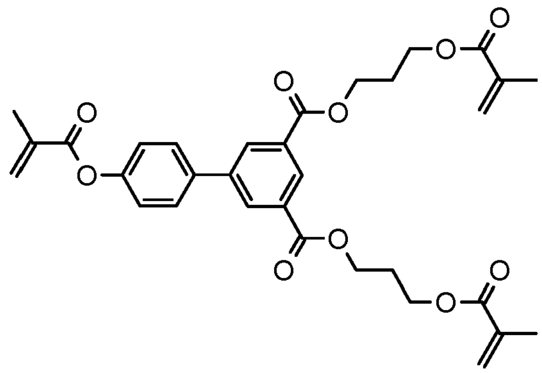

RM-127

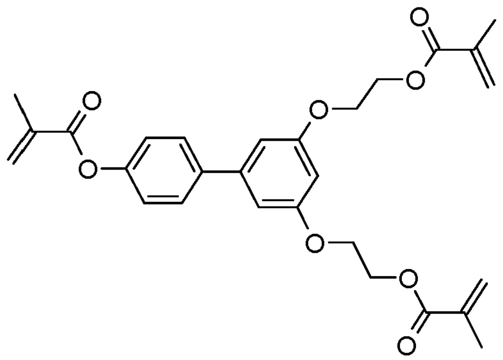

RM-128

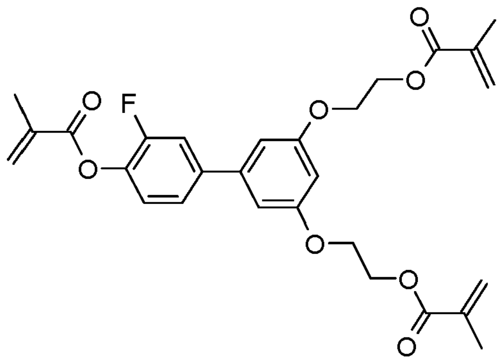

RM-129

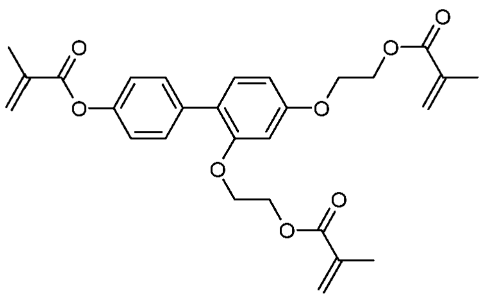

RM-130

(continued)

Table F shows illustrative reactive mesogenic compounds (RM) which can be used in the LC media in accordance with the present invention.

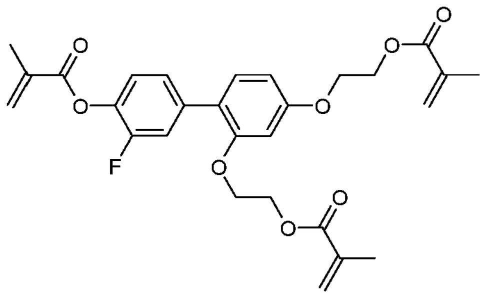

RM-131

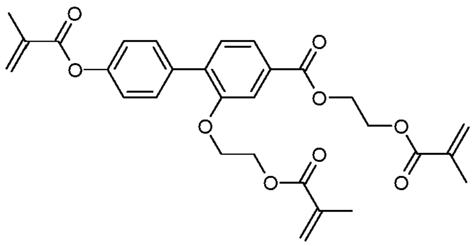

RM-132

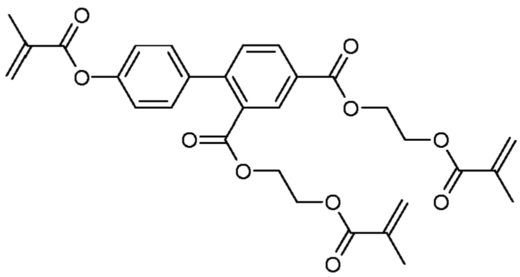

RM-133

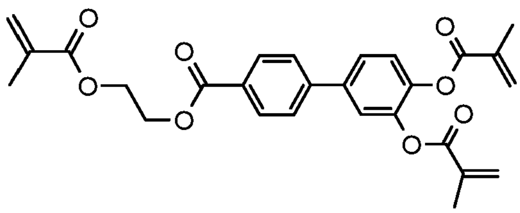

RM-134

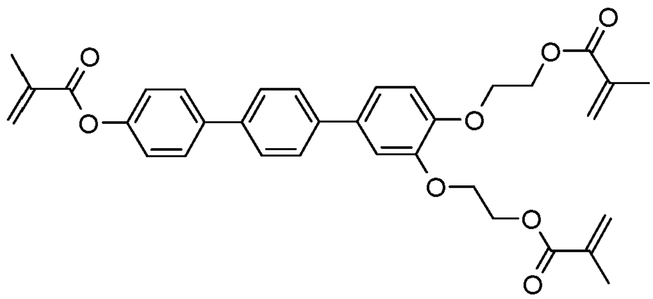

RM-135

(continued)

Table F shows illustrative reactive mesogenic compounds (RM) which can be used in the LC media in accordance with the present invention.

RM-136

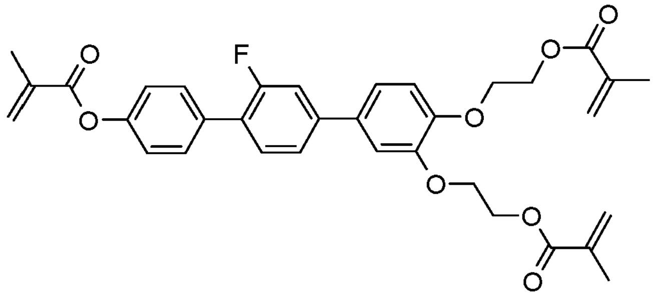

RM-137

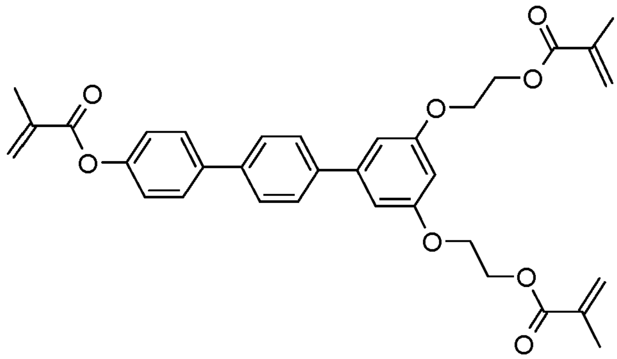

RM-138

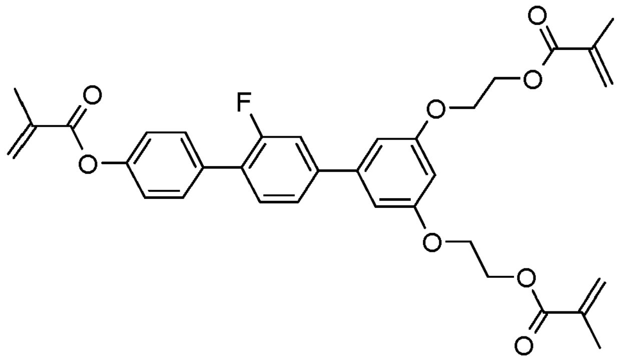

RM-139

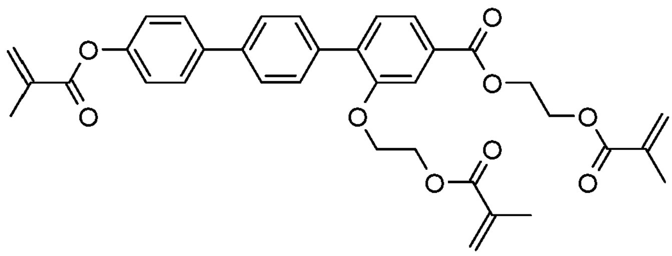

RM-140

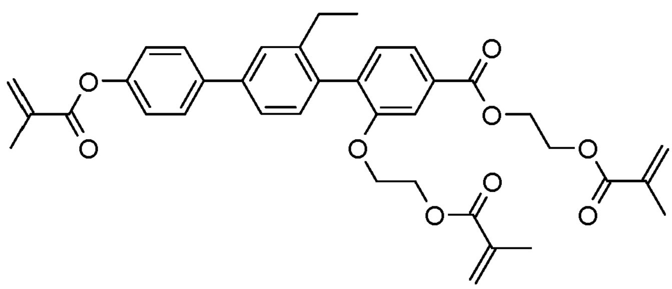

(continued)

Table F shows illustrative reactive mesogenic compounds (RM) which can be used in the LC media in accordance with the present invention.

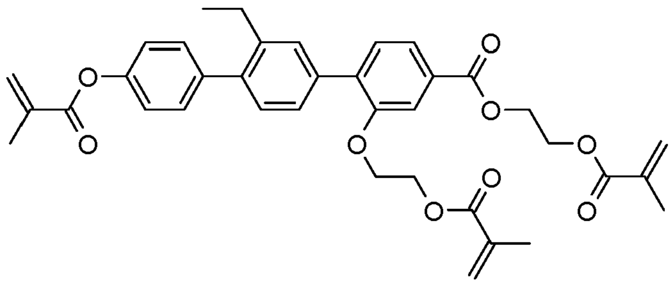

RM-141

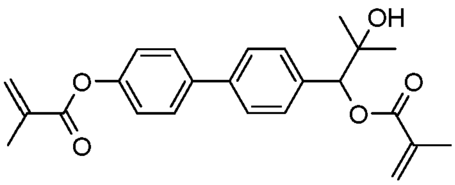

RM-142

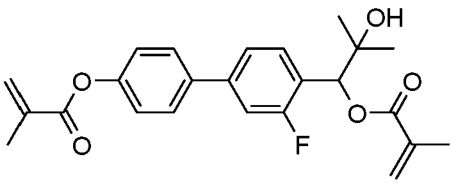

RM-143

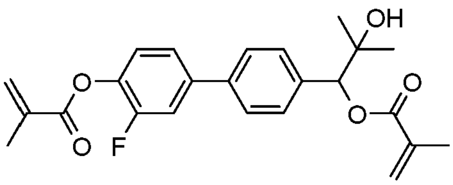

RM-144

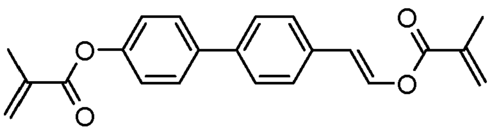

RM-145

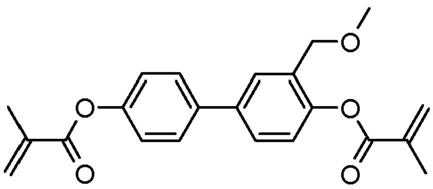

RM-146

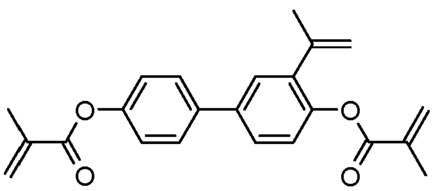

RM-147

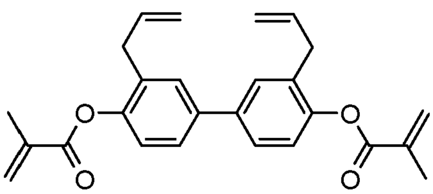

RM-148

(continued)

Table F shows illustrative reactive mesogenic compounds (RM) which can be used in the LC media in accordance with the present invention.

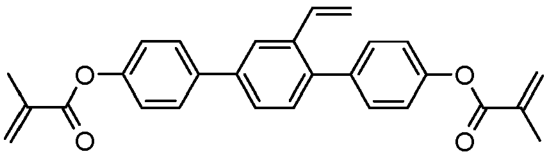

RM-149

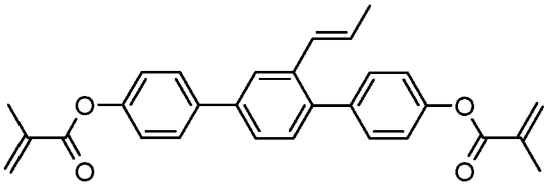

RM-150

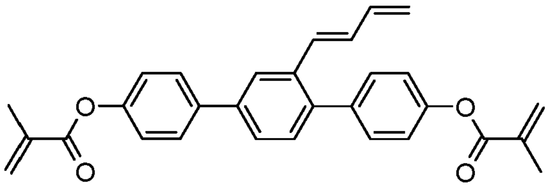

RM-151

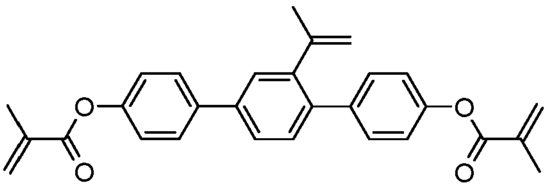

RM-152

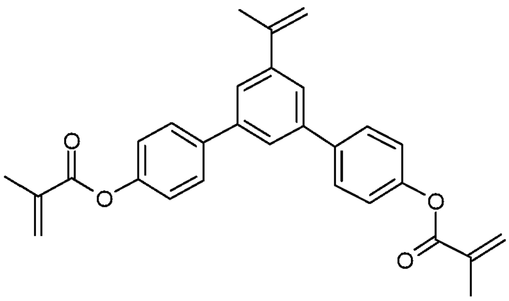

RM-153

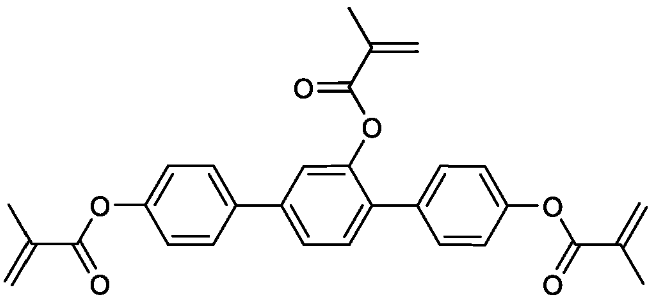

RM-154

(continued)

Table F shows illustrative reactive mesogenic compounds (RM) which can be used in the LC media in accordance with the present invention.

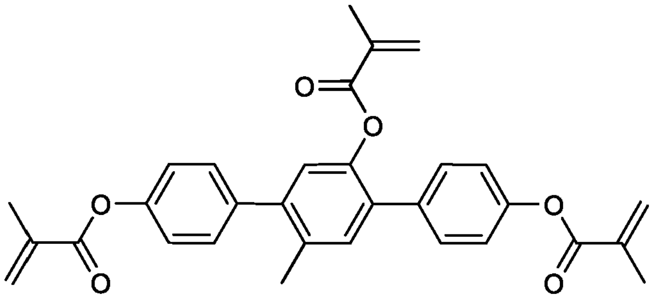

RM-155

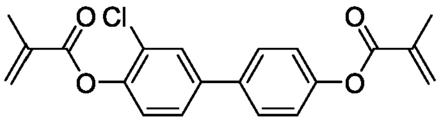

RM-156

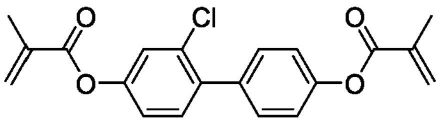

RM-157

In a preferred embodiment, the mixtures according to the invention comprise one or more polymerisable compounds, preferably selected from the polymerisable compounds of the formulae RM-1 to RM-155. Of these, compounds RM-1, RM-4, RM-8, RM-17, RM-19, RM-35, RM-37, RM-39, RM-40, RM-41, RM-48, RM-52, RM-54, RM-57, RM-64, RM-74, RM-76, RM-88, RM-102, RM-103, RM-109, RM-117, RM-120, RM-121, RM-122 and RM-145 to RM-153 are particularly preferred.

In another preferred embodiment, the mixtures according to the invention comprise one or more polymerisable compounds selected from the formulae RM-145 to RM-152, very preferably from the formulae RM-147 to RM-152.

**Table G**

Table G shows self-alignment additives for vertical alignment which can be used in LC media for SA-VA and SA-FFS displays according to the present invention together with the polymerizable compounds of formula P:

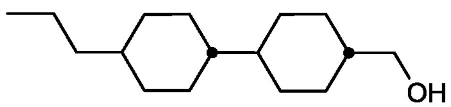

SA-1

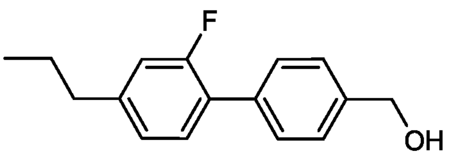

SA-2

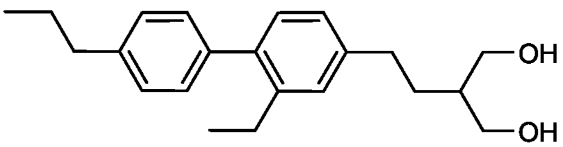

SA-3

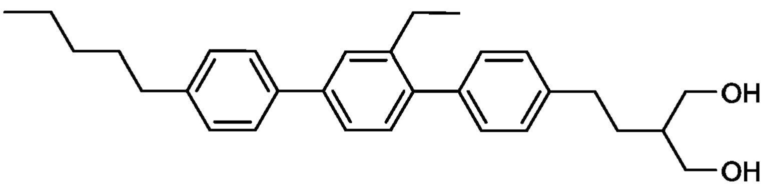

SA-4

(continued)

Table G shows self-alignment additives for vertical alignment which can be used in LC media for SA-VA and SA-FFS displays according to the present invention together with the polymerizable compounds of formula P:

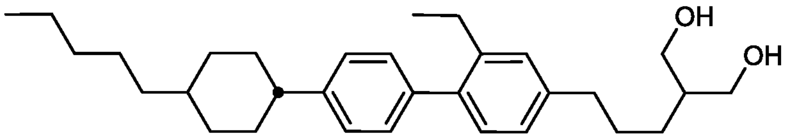

SA-5

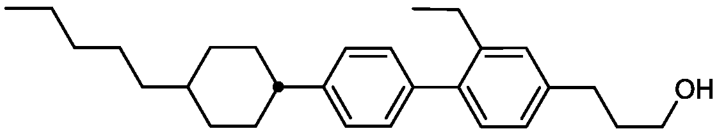

SA-6

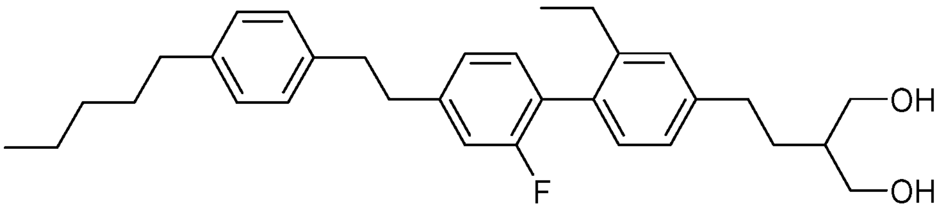

SA-7

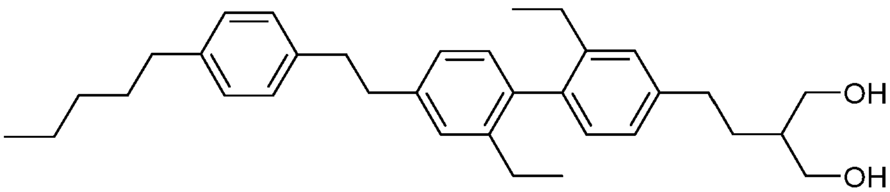

SA-8

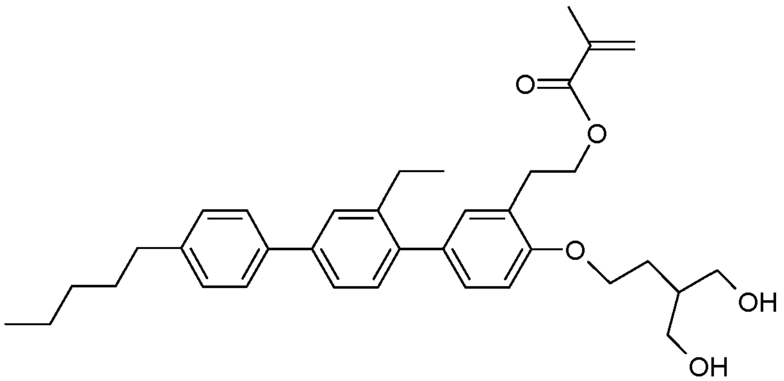

SA-9

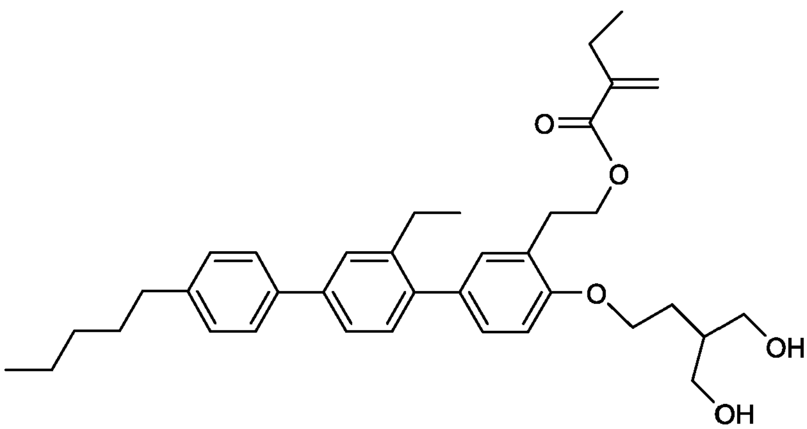

SA-10

(continued)

Table G shows self-alignment additives for vertical alignment which can be used in LC media for SA-VA and SA-FFS displays according to the present invention together with the polymerizable compounds of formula P:

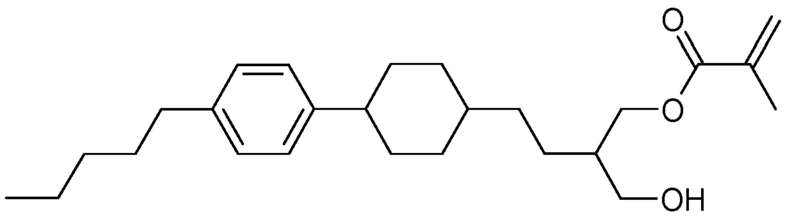

SA-11

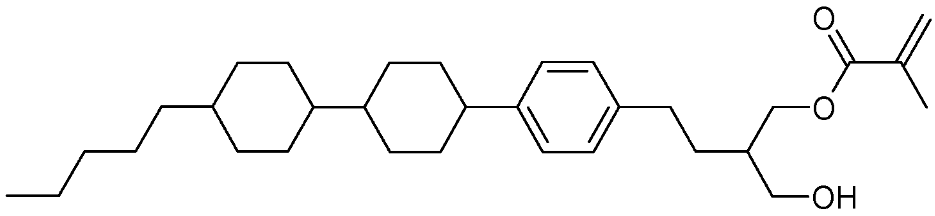

SA-12

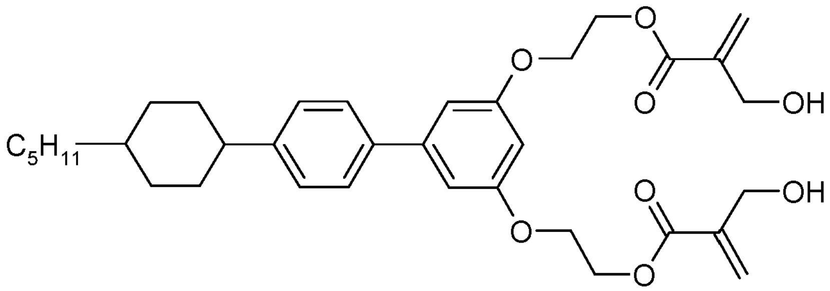

SA-13

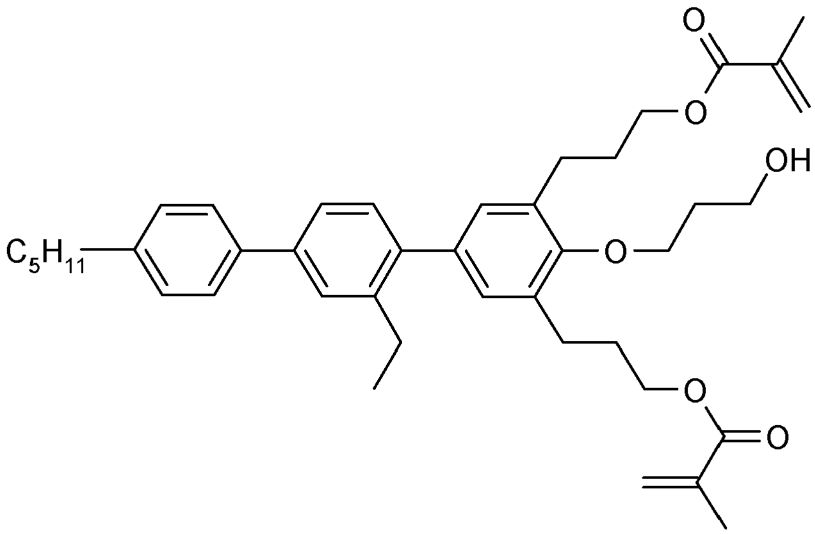

SA-14

(continued)

Table G shows self-alignment additives for vertical alignment which can be used in LC media for SA-VA and SA-FFS displays according to the present invention together with the polymerizable compounds of formula P:

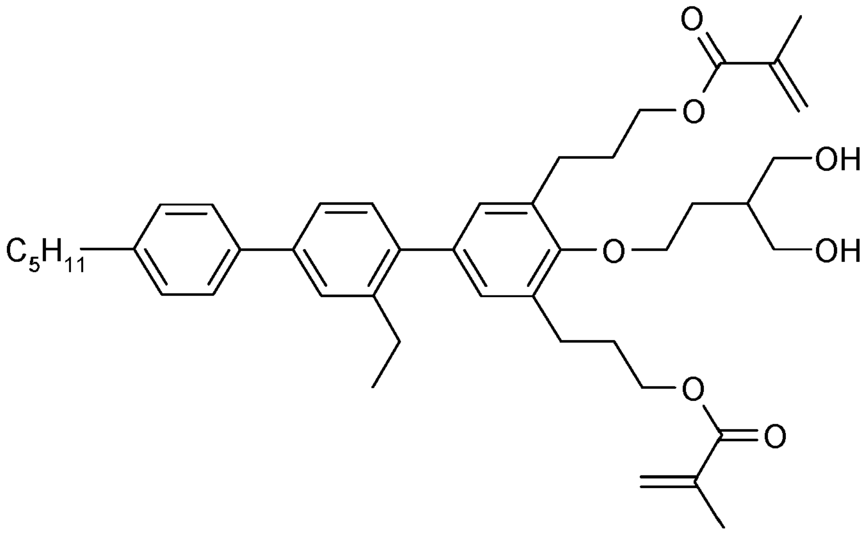

SA-15

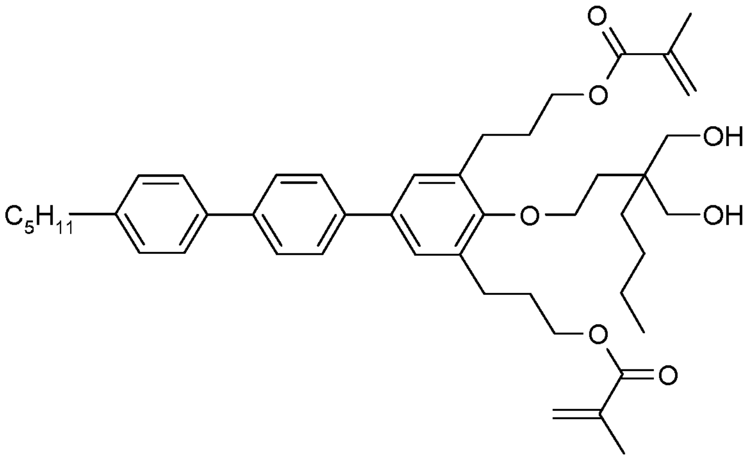

SA-16

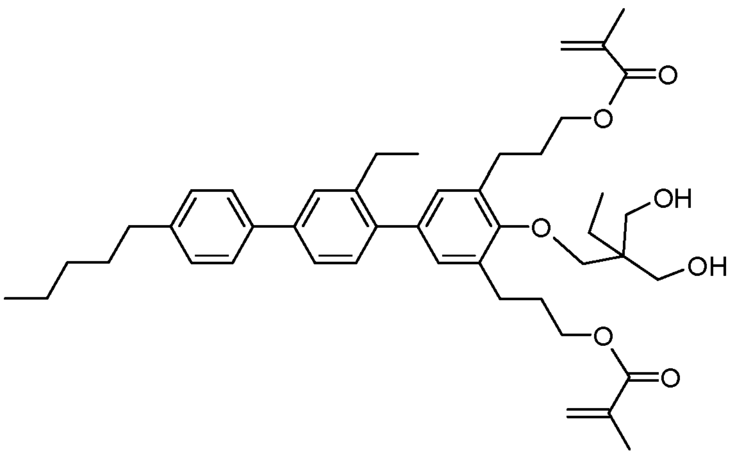

SA-17

(continued)

Table G shows self-alignment additives for vertical alignment which can be used in LC media for SA-VA and SA-FFS displays according to the present invention together with the polymerizable compounds of formula P:

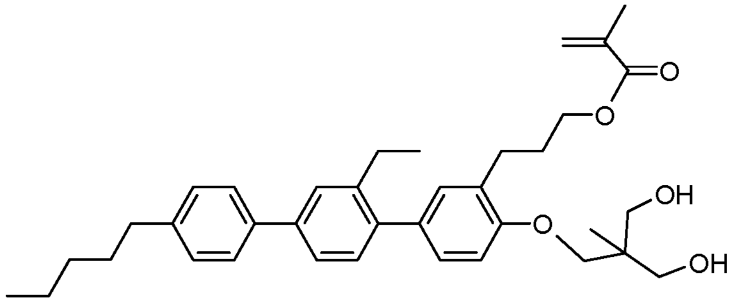

SA-18

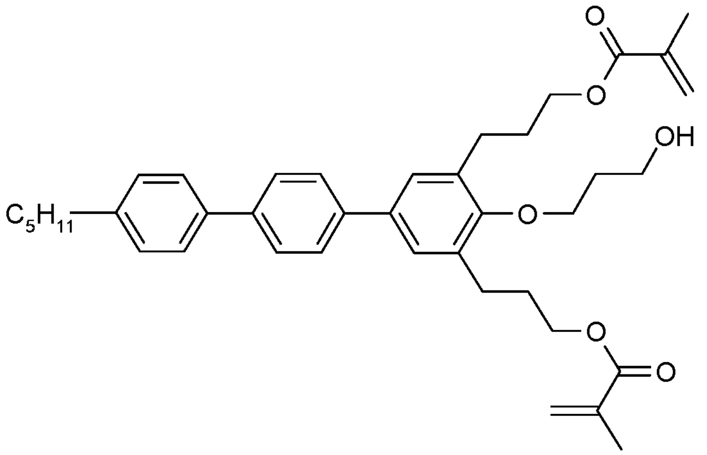

SA-19

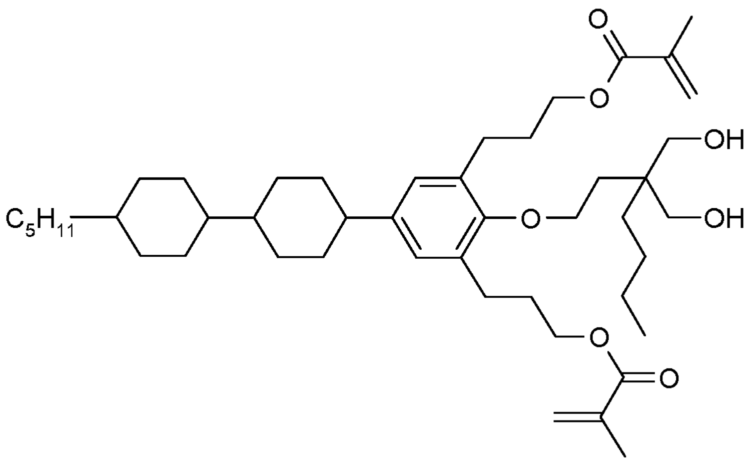

SA-20

(continued)

Table G shows self-alignment additives for vertical alignment which can be used in LC media for SA-VA and SA-FFS displays according to the present invention together with the polymerizable compounds of formula P:

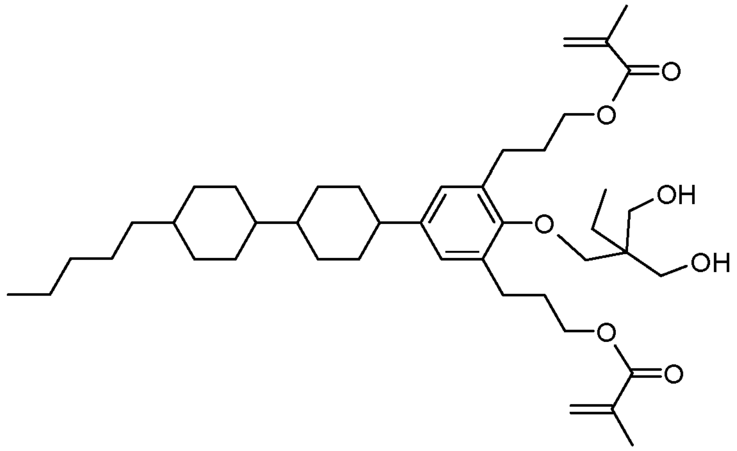

SA-21

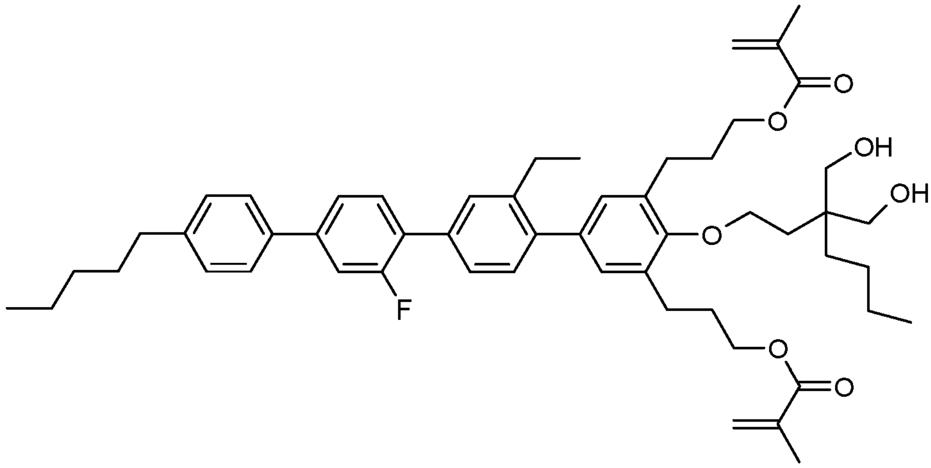

SA-22

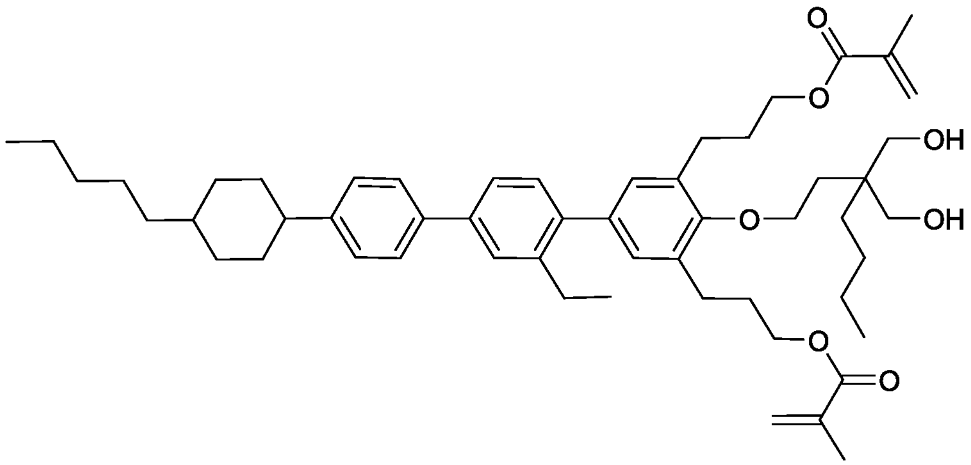

SA-23

(continued)

Table G shows self-alignment additives for vertical alignment which can be used in LC media for SA-VA and SA-FFS displays according to the present invention together with the polymerizable compounds of formula P:

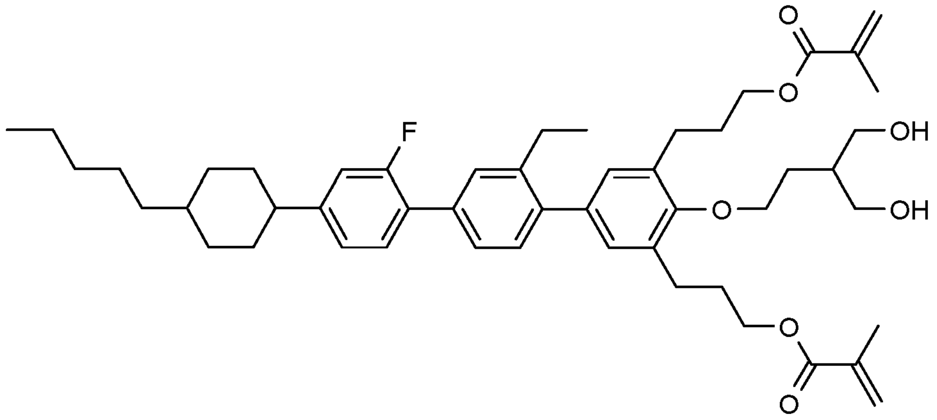

SA-24

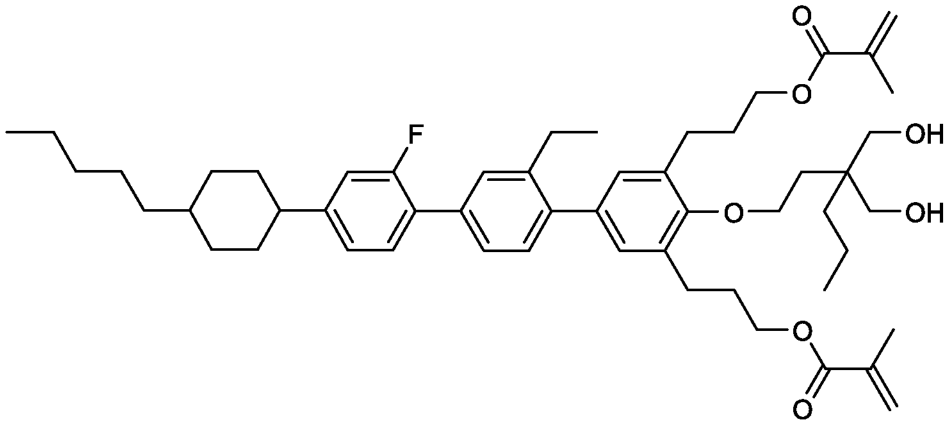

SA-25

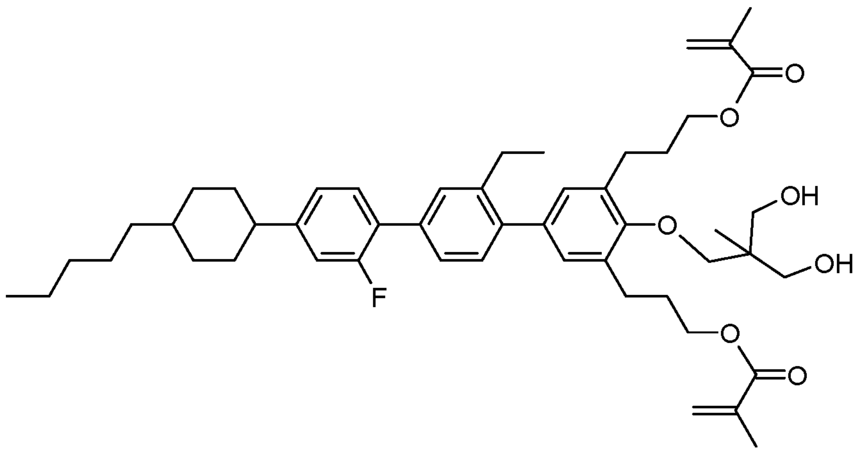

SA-26

(continued)

Table G shows self-alignment additives for vertical alignment which can be used in LC media for SA-VA and SA-FFS displays according to the present invention together with the polymerizable compounds of formula P:

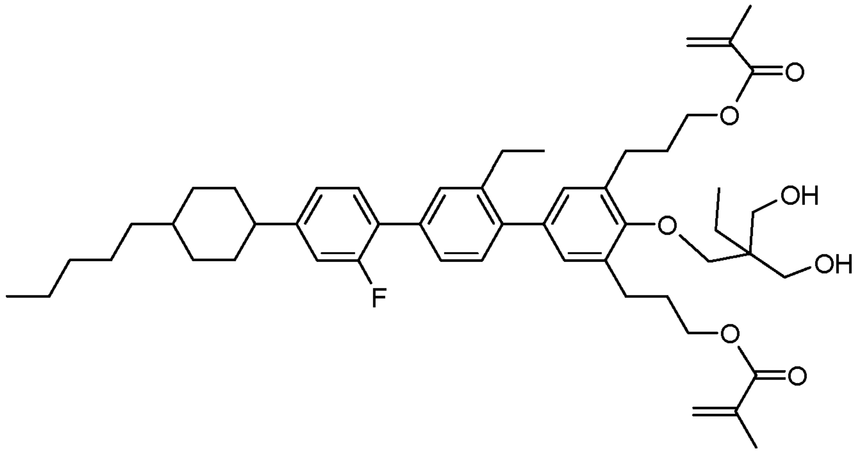

SA-27

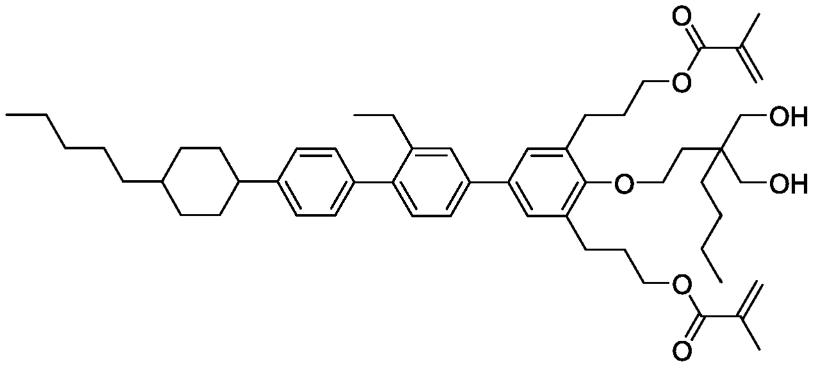

SA-28

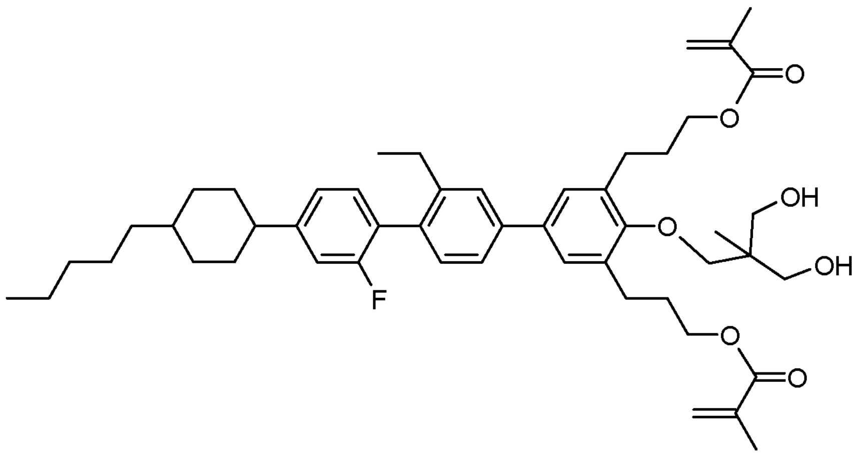

SA-29

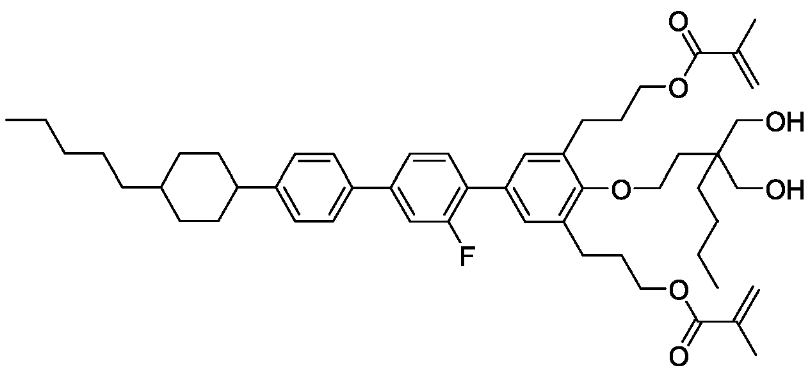

SA-30

(continued)

Table G shows self-alignment additives for vertical alignment which can be used in LC media for SA-VA and SA-FFS displays according to the present invention together with the polymerizable compounds of formula P:

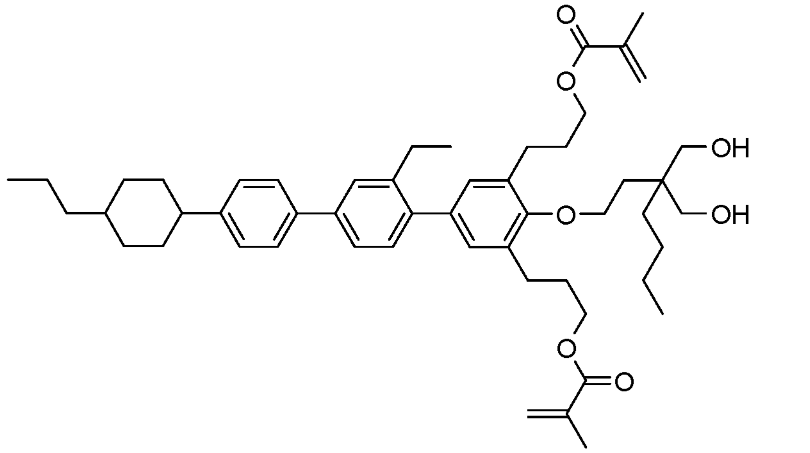

SA-31

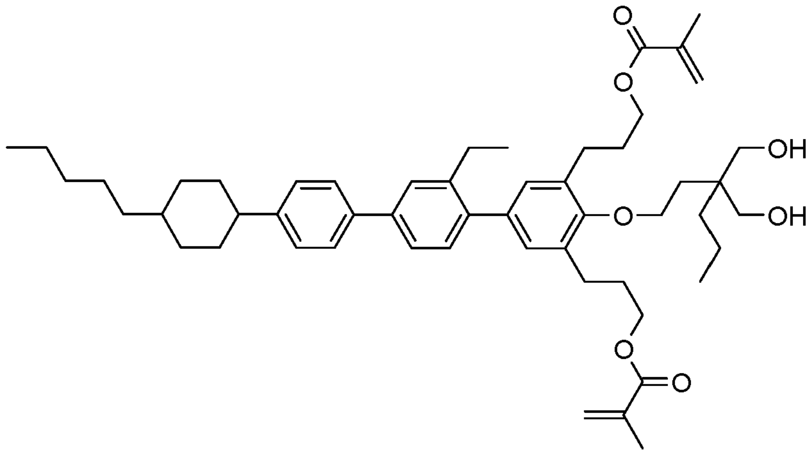

SA-32

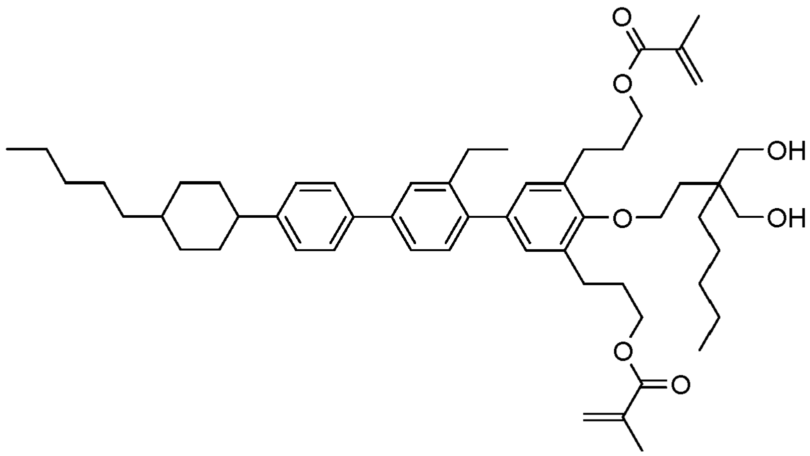

SA-33

(continued)

Table G shows self-alignment additives for vertical alignment which can be used in LC media for SA-VA and SA-FFS displays according to the present invention together with the polymerizable compounds of formula P:

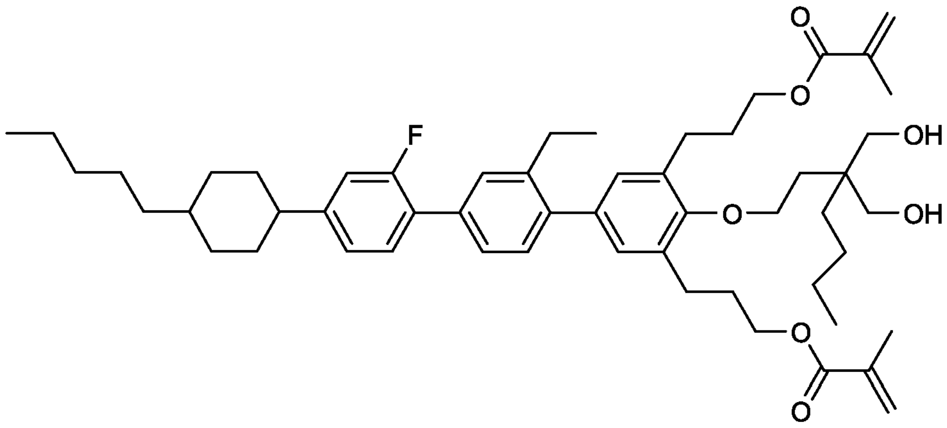

SA-34

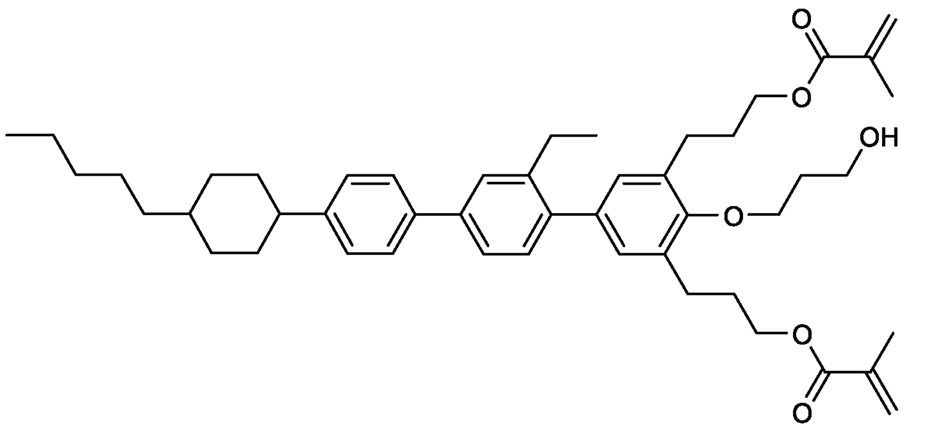

SA-35

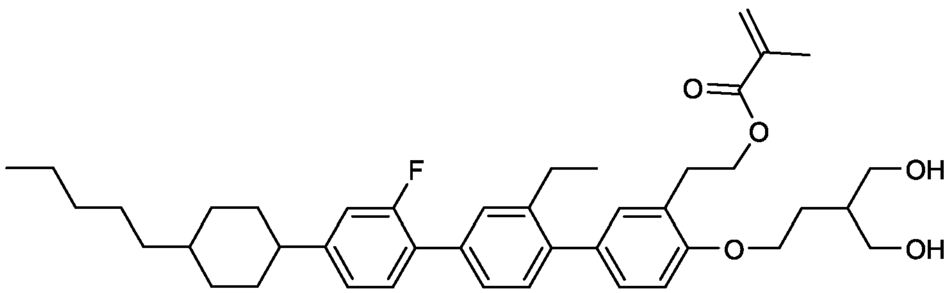

SA-36

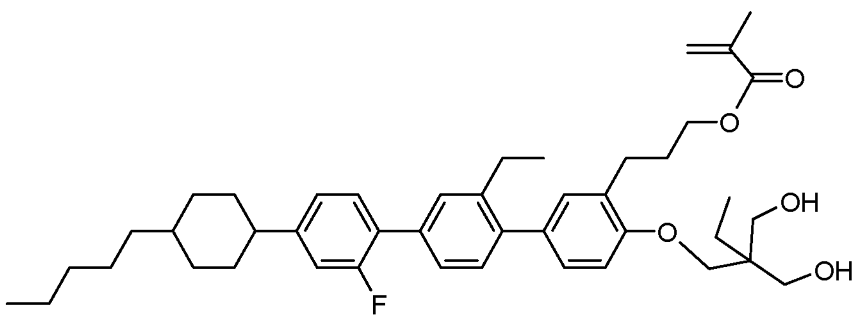

SA-37

(continued)

Table G shows self-alignment additives for vertical alignment which can be used in LC media for SA-VA and SA-FFS displays according to the present invention together with the polymerizable compounds of formula P:

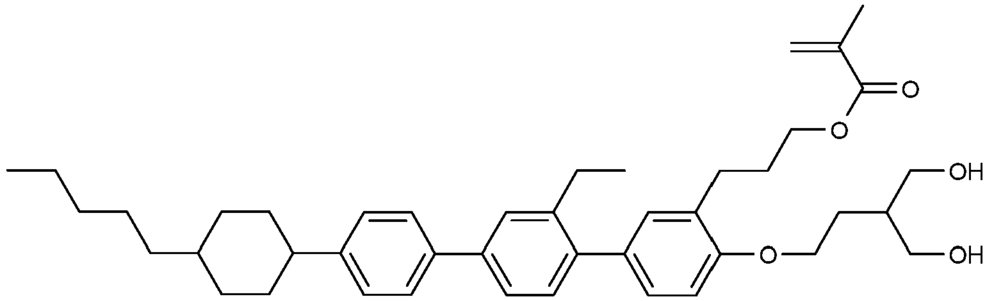

SA-38

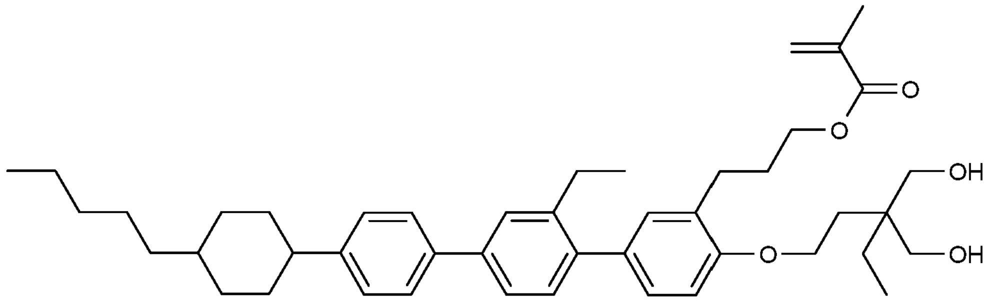

SA-39

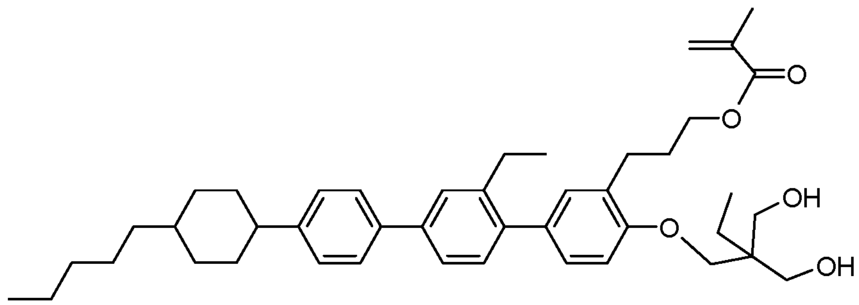

SA-40

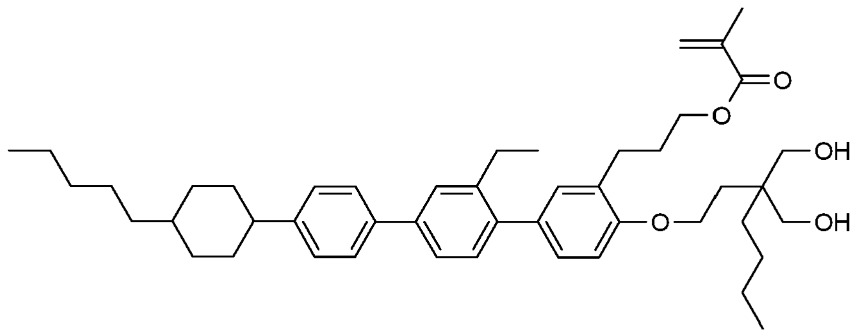

SA-41

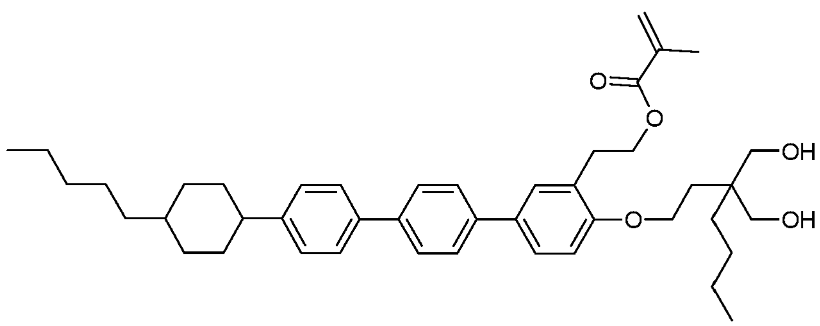

SA-42

(continued)

Table G shows self-alignment additives for vertical alignment which can be used in LC media for SA-VA and SA-FFS displays according to the present invention together with the polymerizable compounds of formula P:

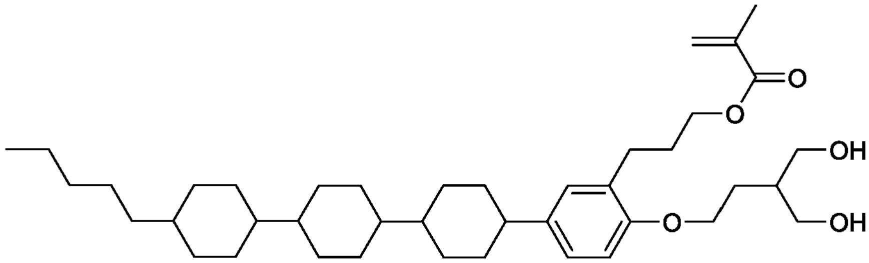

SA-43

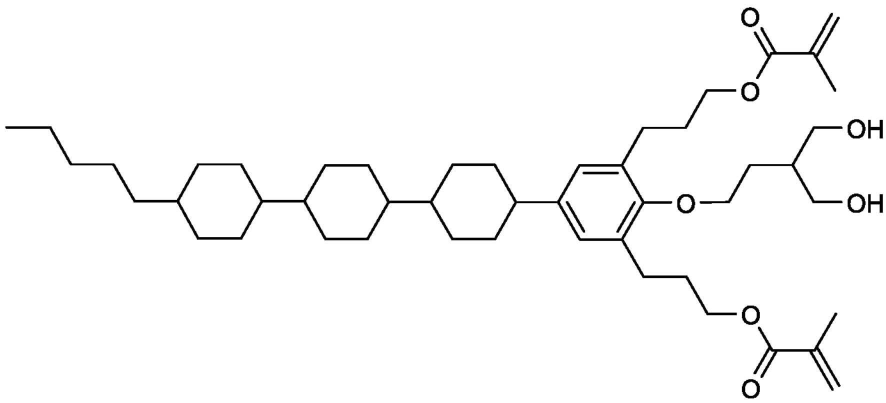

SA-44

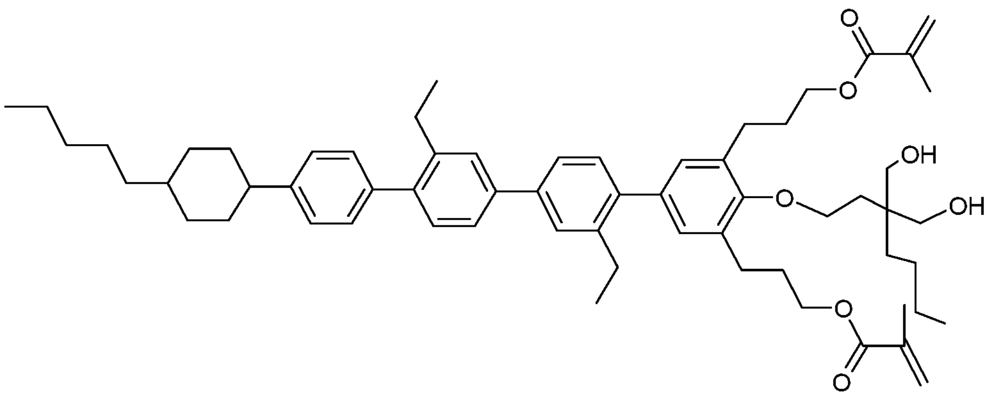

SA-45

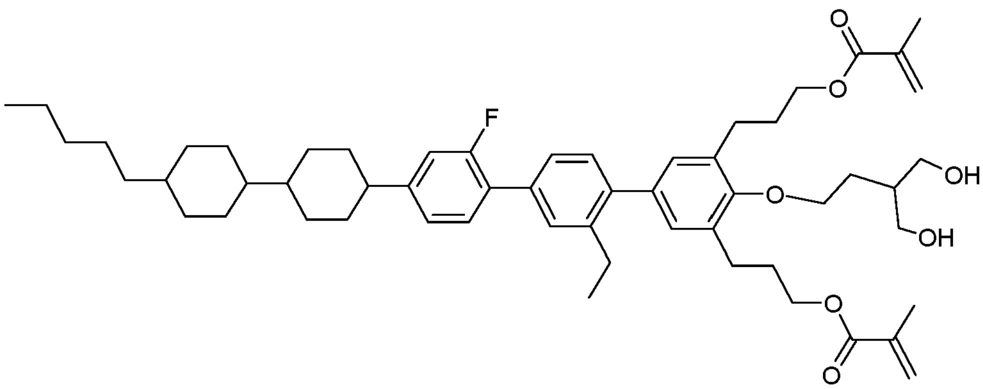

SA-46

(continued)

Table G shows self-alignment additives for vertical alignment which can be used in LC media for SA-VA and SA-FFS displays according to the present invention together with the polymerizable compounds of formula P:

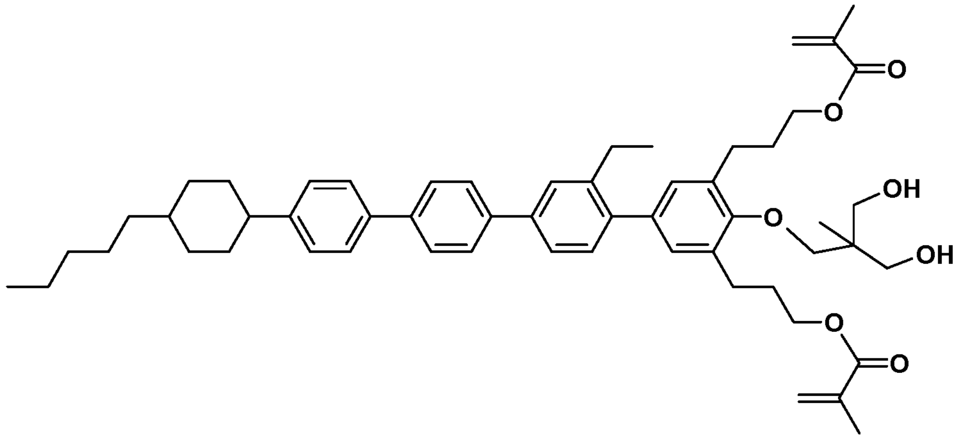

SA-47

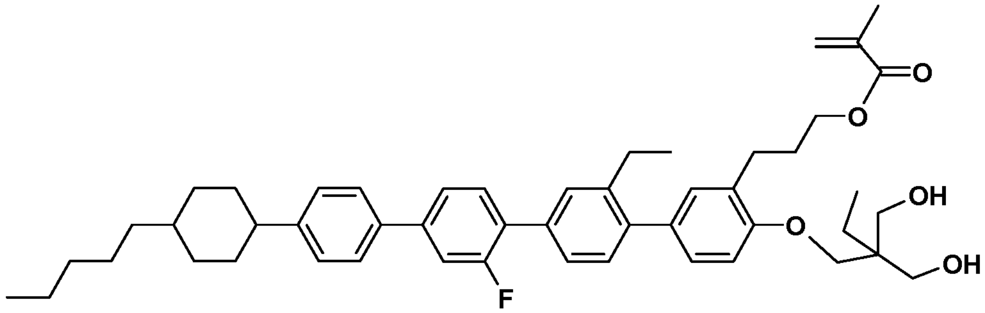

SA-48

In a preferred embodiment, the LC media, SA-VA and SA-FFS displays according to the present invention comprise one or more SA additives selected from formulae SA-1 to SA-48, preferably from formulae SA-14 to SA-48, very preferably from formulae SA-20 to SA-34 and SA-44, in combination with one or more RMs of formula P.

Working examples:

The following examples are intended to explain the invention without limiting it. In the examples, m.p. denotes the melting point and $T_{(N,I)}$ denotes the clearing point of a liquid-crystalline substance in degrees Celsius; Furthermore: C denotes crystalline solid state, S denotes smectic phase (the index denotes the phase type), N denotes nematic state, Ch denotes cholesteric phase, I denotes isotropic phase, $T_g$ denotes glass-transition temperature. The number between two symbols indicates the conversion temperature in degrees Celsius.

The host mixture used for determination of the optical anisotropy $\Delta n$ of single compounds is the commercial mixture ZLI-4792 (Merck KGaA). The dielectric anisotropy $\Delta\varepsilon$ is determined using commercial mixture ZLI-2857. The physical data of the compound to be investigated are obtained from the change in the dielectric constants of the host mixture after addition of the compound to be investigated and extrapolation to 100 % of the compound employed. In general, 10 % of the compound to be investigated are dissolved in the host mixture, depending on the solubility.

Unless indicated otherwise, parts or per cent data denote parts by weight or per cent by weight.

Above and below:

| | |
|---|---|
| $V_o$ | denotes threshold voltage, capacitive [V] at 20°C, |
| $n_e$ | denotes extraordinary refractive index at 20°C and 589 nm, |
| $n_o$ | denotes ordinary refractive index at 20°C and 589 nm, |
| $\Delta n$ | denotes optical anisotropy at 20°C and 589 nm, |
| $\varepsilon\perp$ | denotes dielectric permittivity perpendicular to the director at 20°C and 1 kHz, |
| $\varepsilon\|$ | denotes dielectric permittivity parallel to the director at 20°C and 1 kHz, |
| $\Delta\varepsilon$ | denotes dielectric anisotropy at 20°C and 1 kHz, |
| cl.p., T(N,I) | denotes clearing point [°C], |
| $\gamma_1$ | denotes rotational viscosity measured at 20°C [mPa·s], |

$K_1$ denotes elastic constant, "splay" deformation at 20°C [pN],
$K_2$ denotes elastic constant, "twist" deformation at 20°C [pN],
$K_3$ denotes elastic constant, "bend" deformation at 20°C [pN], and
LTS denotes low-temperature stability (nematic phase), determined in test cells or in the bulk, as specified.

Unless explicitly noted otherwise, all values indicated in the present application for temperatures, such as, for example, the melting point T(C,N), the transition from the smectic (S) to the nematic (N) phase T(S,N) and the clearing point T(N,I) or cl.p., are indicated in degrees Celsius (°C).

The term "threshold voltage" for the present invention relates to the capacitive threshold ($V_0$), also called the Freedericksz threshold, unless explicitly indicated otherwise. In the examples, as is generally usual, the optical threshold can also be indicated for 10 % relative contrast ($V_{10}$).

The display used for measurement of the capacitive threshold voltage consists of two plane-parallel glass outer plates at a separation of 20 μm, which each have on the insides an electrode layer and an unrubbed polyimide alignment layer on top, which cause a homeotropic edge alignment of the liquid-crystal molecules.

The display or test cell used for measurement of the tilt angle consists of two plane-parallel glass outer plates at a separation of 4 μm, which each have on the insides an electrode layer and a polyimide alignment layer on top, where the two polyimide layers are rubbed antiparallel to one another and cause a homeotropic edge alignment of the liquid-crystal molecules.

The polymerisable compounds are polymerised in the display or test cell by irradiation with UV light of defined intensity for a prespecified time, with a voltage simultaneously being applied to the display (usually 10 V to 30 V alternating current, 1 kHz). In the examples, unless indicated otherwise, a metal halide lamp and an intensity of 100 mW/cm$^2$ is used for polymerisation. The intensity is measured using a standard meter (Hoenle UV-meter high end with UV sensor).

The tilt angle is determined using the Mueller Matrix Polarimeter "AxoScan" from Axometrics. A low value (i.e. a large deviation from the 90° angle) corresponds to a large tilt here.

Unless stated otherwise, the term "tilt angle" means the angle between the LC director and the substrate, and "LC director" means in a layer of LC molecules with uniform orientation the preferred orientation direction of the optical main axis of the LC molecules, which corresponds, in case of calamitic, uniaxially positive birefringent LC molecules, to their molecular long axis.

Unless indicated otherwise, the VHR is determined at 20°C ($VHR_{20}$) and after 5 minutes in an oven at 100°C ($VHR_{100}$) in a commercially available instrument Model LCM-1 (O0004) from TOYO Corporation, Japan. The voltage used has a frequency of in a range from 1 Hz to 60 Hz, unless indicated more precisely.

The accuracy of the VHR measurement values depends on the respective value of the VHR. The accuracy decreases with decreasing values. The deviations generally observed in the case of values in the various magnitude ranges are compiled in their order of magnitude in the following table.

| VHR range | | Deviation (relative) |
|---|---|---|
| VHR values | | $\Delta_G$VHR/VHR /% |
| from | to | Approx. |
| 99.6 % | 100 % | +/- 0.1 |
| 99.0 % | 99.6 % | +/- 0.2 |
| 98 % | 99 % | +/- 0.3 |
| 95 % | 98 % | +/- 0.5 |
| 90 % | 95 % | +/- 1 |
| 80 % | 90 % | +/- 2 |
| 60 % | 80 % | +/- 4 |
| 40 % | 60 % | +/- 8 |
| 20 % | 40 % | +/- 10 |
| 10 % | 20 % | +/- 20 |

The stability to UV irradiation is investigated in a "Suntest CPS+", a commercial instrument from Heraeus, Germany, using a Xenon lamp NXE1500B. The sealed test cells are irradiated for 2.0 h, unless explicitly indicated,

without additional heating. The irradiation power in the wavelength range from 300 nm to 800 nm is 765 W / $m^2$ V. A UV "cut-off" filter having an edge wavelength of 310 nm is used in order to simulate the so-called window glass mode. In each series of experiments, at least four test cells are investigated for each condition, and the respective results are indicated as averages of the corresponding individual measurements.

The decrease in the voltage holding ratio (ΔVHR) usually caused by the exposure, for example by UV irradiation or by LCD backlighting, is determined in accordance with the following equation (1):

$$\Delta VHR(t) = VHR(t) - VHR(t = 0) \quad (1) .$$

In order to investigate the low-temperature stability, also known as "LTS", i.e. the stability of the LC mixture in the bulk against spontaneous crystallisation of individual components at low temperatures or the occurrence of smectic phases, as the case may be, several sealed bottles, each containing about 1 g of the material, are stored at one or more given temperatures, typically of -10°C, -20°C, -30°C and/or -40°C and it is inspected at regular intervals visually, whether a phase transition is observed or not. As soon as the first one of the samples at a given temperature shows a change time is noted. The time until the last inspection, at which no change has been observed, is noted as the respective LTS.

The ion density from which the resistivity is calculated is measured using the commercially available LC Material Characteristics Measurement System Model 6254 from Toyo Corporation, Japan, using VHR test cells with AL16301 Polyimide (JSR Corp., Japan) having a 3.2μm cell gap. The measurement is performed after 5 min of storage in an oven at 60 °C or 100 °C.

The so-called "HTP" denotes the helical twisting power of an optically active or chiral substance in an LC medium (in μm). Unless indicated otherwise, the HTP is measured in the commercially available nematic LC host mixture MLD-6260 (Merck KGaA) at a temperature of 20°C.

The Clearing point is measured using the Mettler Thermosystem FP900. The optical anisotropy (Δn) is measured using an Abbe-Refraktometer H005 (Natrium-spectral lamp Na10 at 589nm, 20 °C). The dielectric anisotropy (Δε) is measured using an LCR-Meter E4980A/Agilent (G005) at 20°C (ε-parallel-cells with JALS 2096-R1). The turn on voltage ($V_0$) is measured using an LCR-Meter E4980A/Agilent (G005) at 20°C (ε-parallel-cells with JALS 2096-R1). The rotational viscosity ($\gamma_1$) is measured using a TOYO LCM-2 (0002) at 20°C (gamma 1 negative cells with JALS-2096-R 1 ). The elastic constant ($K_1$, splay) is measured using an LCR-Meter E4980A/Agilent (G005) at 20°C (ε parallel-cells with JALS 2096-R1). $K_3$: The elastic constant ($K_3$, bend) is measured using an LCR-Meter E4980A/Agilent (G005) at 20°C (ε-parallel-cells with JALS 2096-R1).

Unless explicitly noted otherwise, all concentrations in the present application are indicated in per cent by weight and relate to the corresponding mixture as a whole, comprising all solid or liquid-crystalline components, without solvents. All physical properties are determined in accordance with "Merck Liquid Crystals, Physical Properties of Liquid Crystals", Status November 1997, Merck KGaA, Germany, and apply for a temperature of 20°C, unless explicitly indicated otherwise.

The following mixture examples having negative dielectric anisotropy are suitable, in particular, for liquid-crystal displays which have at least one planar alignment layer, such as, for example, IPS and FFS displays, in particular UB-FFS ( = ultra-bright FFS), and for VA displays.

Mixture examples

Mixture M1

| | | | |
|---|---|---|---|
| CC-1-3 | 7.0 % | Clearing point /°C: | 71.0 |
| CC-3-4 | 6.0 % | Δn (589 nm, 20°C): | 0.1079 |
| CC-3-5 | 5.0 % | Δε (1 kHz, 20°C): | -3.2 |
| CPP-3-2 | 7.0 % | $K_1$ (pN, 20°C): | 12.8 |
| CP-3-O1 | 11.0 % | $K_3$ (pN, 20°C): | 14.0 |
| PP-1-4 | 8.0 % | $V_0$ (20°C)/ V: | 2.25 |
| CCY-3-O2 | 9.0 % | $\gamma_1$ (20°C)/ mPa·s: | 125 |
| CCY-3-O3 | 9.0 % | | |
| CPY-2-O2 | 10.0 % | | |
| CPY-3-O3 | 10.0 % | | |

(continued)

| | |
|---|---|
| CY-3-O2 | 10.0 % |
| CY-3-O4 | 8.0 % |
| Σ | 100.0 % |

Mixture M2

| | | | |
|---|---|---|---|
| CC-1-3 | 9.0 % | Clearing point /°C: | 69.5 |
| CC-3-4 | 6.0% | Δn (589 nm, 20°C): | 0.1041 |
| CC-3-5 | 6.0 % | $\Delta_\varepsilon$ (1 kHz, 20°C): | -3.2 |
| CPP-3-2 | 5.0 % | $K_1$ (pN, 20°C): | 12.6 |
| CP-3-O1 | 10.0 % | $K_3$ (pN, 20°C): | 13.8 |
| PP-1-4 | 8.0 % | $V_0$ (20°C)/ V: | 2.23 |
| CCY-3-O2 | 9.0 % | $\gamma_1$ (20°C)/ mPa·s: | 118 |
| CCY-3-O3 | 9.0 % | | |
| CPY-2-O2 | 10.0 % | | |
| CPY-3-O3 | 10.0 % | | |
| CY-3-O2 | 10.0 % | | |
| CY-3-O4 | 8.0 % | | |
| Σ | 100.0 % | | |

Mixture M3

| | | | |
|---|---|---|---|
| CC-1-3 | 9.0 % | Clearing point /°C: | 69.5 |
| CC-3-4 | 6.0 % | Δn (589 nm, 20°C): | 0.1018 |
| CC-3-5 | 6.0 % | Δε (1 kHz, 20°C): | -3.2 |
| CPP-3-2 | 5.0 % | $K_1$ (pN, 20°C): | 12.5 |
| CP-3-O1 | 13.0 % | $K_3$ (pN, 20°C): | 14.0 |
| PP-1-4 | 5.0 % | $V_0$ (20°C)/ V: | 2.23 |
| CCY-3-O2 | 9.0 % | $\gamma_1$ (20°C)/ mPa·s: | 120 |
| CCY-3-O3 | 9.0 % | | |
| CPY-2-O2 | 10.0 % | | |
| CPY-3-O3 | 10.0 % | | |
| CY-3-O2 | 10.0 % | | |
| CY-3-O4 | 8.0 % | | |
| Σ | 100.0 % | | |

Mixture M4

| | | | |
|---|---|---|---|
| CC-1-3 | 9.0 % | Clearing point /°C: | 67.5 |
| CC-3-4 | 7.0 % | Δn (589 nm, 20°C): | 0.1042 |
| CC-3-5 | 5.0 % | Δε (1 kHz, 20°C): | -2.7 |
| CPP-3-2 | 8.0 % | $K_1$ (pN, 20°C): | 12.3 |
| CP-3-O1 | 13.0 % | $K_3$ (pN, 20°C): | 13.4 |

(continued)

| | | | |
|---|---|---|---|
| PP-1-4 | 8.0 % | $V_0$ (20°C)/ V: | 2.37 |
| CCY-3-O2 | 8.0 % | $\gamma_1$ (20°C)/ mPa·s: | 107 |
| CCY-3-O3 | 8.0 % | | |
| CPY-2-O2 | 9.0 % | | |
| CPY-3-O3 | 9.0 % | | |
| CY-3-O2 | 9.0 % | | |
| CY-3-O4 | 7.0 % | | |
| Σ | 100.0 % | | |

Mixture M5

| | | | |
|---|---|---|---|
| CC-1-3 | 8.0 % | Clearing point /°C: | 71.5 |
| CC-3-4 | 9.0 % | Δn (589 nm, 20°C): | 0.0995 |
| CC-3-5 | 8.0 % | Δε (1 kHz, 20°C): | -3.1 |
| CPP-3-2 | 5.0 % | $K_1$ (pN, 20°C): | 13.2 |
| CP-3-O1 | 10.0 % | $K_3$ (pN, 20°C): | 14.1 |
| PP-1-4 | 5.0 % | $V_0$ (20°C)/ V: | 2.27 |
| CCY-3-O2 | 9.0 % | $\gamma_1$ (20°C)/ mPa·s: | 118 |
| CCY-3-O3 | 9.0 % | | |
| CPY-2-O2 | 10.0 % | | |
| CPY-3-O3 | 9.0 % | | |
| CY-3-O2 | 11.0 % | | |
| CY-3-O4 | 7.0 % | | |
| Σ | 100.0 % | | |

Mixture M6

Mixture M6 contains the compound CCY-3-O2F:

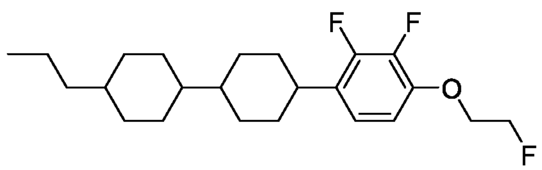

| | | | |
|---|---|---|---|
| CC-1-3 | 7.0 % | Clearing point /°C: | 68.0 |
| CC-3-4 | 6.0 % | Δn (589 nm, 20°C): | 0.1070 |
| CC-3-5 | 5.0 % | Δε (1 kHz, 20°C): | -3.0 |
| CPP-3-2 | 7.0 % | $V_0$ (20°C)/ V: | 2.29 |
| CP-3-O1 | 11.0 % | $\gamma_1$ (20°C)/ mPa·s: | 135 |
| PP-1-4 | | | 8.0 % |
| CCY-3-O2 | | | 9.0 % |
| CCY-3-O2F | | | 9.0 % |
| CPY-2-O2 | | | 10.0 % |
| CPY-3-O3 | | | 10.0 % |
| CY-3-O2 | | | 10.0 % |

(continued)

| | |
|---|---|
| CY-3-O4 | 8.0 % |
| Σ | 100.0 % |

Mixture M7

Mixture M7 contains the compound CY-3-O1(c3)

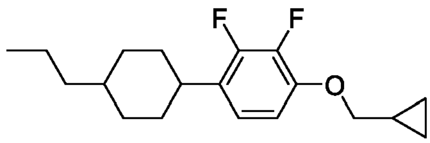

| | | | |
|---|---|---|---|
| CC-1-3 | 9.0 % | Clearing point /°C: | 66.5 |
| CC-3-4 | 6.0 % | Δn (589 nm, 20°C): | 0.1038 |
| CC-3-5 | 6.0 % | Δε (1 kHz, 20°C): | -3.1 |
| CPP-3-2 | 5.0 % | $\gamma_1$ (20°C)/ mPa·s: | 129 |
| CP-3-O1 | 10.0 % | | |
| PP-1-4 | 8.0 % | | |
| CCY-3-O2 | 9.0 % | | |
| CCY-3-O3 | 9.0 % | | |
| CPY-2-O2 | 10.0 % | | |
| CPY-3-O3 | 10.0 % | | |
| CY-3-O2 | 10.0 % | | |
| CY-3-O1(c3) | 8.0 % | | |
| Σ | 100.0 % | | |

Mixture M8

Mixture M8 conatins the compounds COY-(c5)-O2

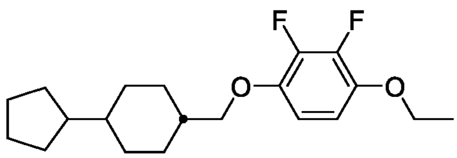

| | | | |
|---|---|---|---|
| CC-1-3 | 9.0 % | Clearing point /°C: | 66.0 |
| CC-3-4 | 6.0 % | Δn (589 nm, 20°C): | 0.1002 |
| CC-3-5 | 6.0 % | Δε (1 kHz, 20°C): | -3.3 |
| CPP-3-2 | 5.0 % | $\gamma_1$ (20°C)/ mPa·s: | 138 |
| CP-3-O1 | 13.0 % | | |
| PP-1-4 | 5.0 % | | |
| CCY-3-O2 | 9.0 % | | |
| CCY-3-O3 | 9.0 % | | |
| CPY-2-O2 | 10.0 % | | |
| CPY-3-O3 | 10.0 % | | |
| COY-(c5)-O2 | 10.0 % | | |
| CY-3-O4 | 8.0 % | | |

(continued)

| | |
|---|---|
| Σ | 100.0 % |

Mixture M9

Mixture M9 contains the compound CCY-(c3)2-O2

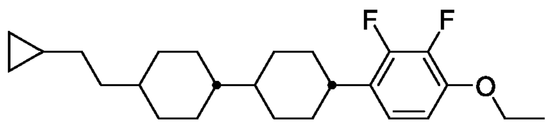

| | | | |
|---|---|---|---|
| CC-1-3 | 9.0 % | Clearing point /°C: | 64.5 |
| CC-3-4 | 7.0 % | Δn (589 nm, 20°C): | 0.1022 |
| CC-3-5 | 5.0 % | Δε (1 kHz, 20°C): | -2.5 |
| CPP-3-2 | 8.0 % | $\gamma_1$ (20°C)/ mPa·s: | 118 |
| CP-3-O1 | 13.0 % | | |
| PP-1-4 | 8.0 % | | |
| CCY-3-O2 | 8.0 % | | |
| CCY-3-O3 | 4.0 % | | |
| CCY-(c3)2-O2 | 4.0 % | | |
| CPY-2-O2 | 9.0 % | | |
| CPY-3-O3 | 9.0 % | | |
| CY-3-O2 | 9.0 % | | |
| CY-3-O4 | 7.0 % | | |
| Σ | 100.0 % | | |

Mixture M10

Mixture M10 contains the compound B(S)-2O-O1(c5)

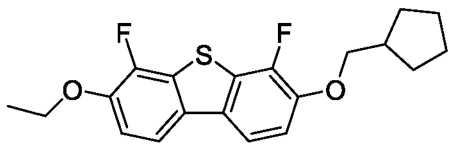

| | | | |
|---|---|---|---|
| CC-1-3 | 8.0 % | Clearing point /°C: | 68.5 |
| CC-3-4 | 9.0 % | Δn (589 nm, 20°C): | 0.0987 |
| CC-3-5 | 8.0 % | Δε (1 kHz, 20°C): | -3.2 |
| CPP-3-2 | 5.0 % | $\gamma_1$ (20°C)/ mPa·s: | 124 |
| CP-3-O1 | 10.0 % | | |
| PP-1-4 | 5.0 % | | |
| CCY-3-O2 | 8.0 % | | |
| CCY-3-O3 | 8.0 % | | |
| CPY-2-O2 | 9.0 % | | |
| CPY-3-O3 | 9.0 % | | |
| CY-3-O2 | 11.0 % | | |
| CY-3-O4 | 7.0 % | | |
| B(S)-2O-O1(c5) | 3.0 % | | |

(continued)

| | |
|---|---|
| Σ | 100.0 % |

Polymerisable Mixture Examples

Mixture Example P1

Mixture example P1 consists of 99.595% of Mixture M-1, 0.40% of the compound RM-1

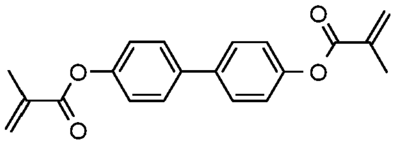

RM-1

and 0.005% of the compound ST-3a-1

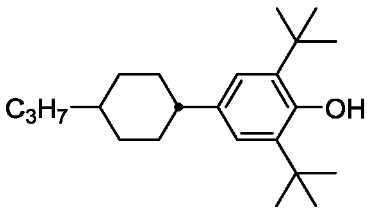

ST-3a-1

Mixture Example P2

Mixture example P2 consists of 99.595% of Mixture M-2, 0.40% of the compound RM-1 and 0.005% of the compound ST-3a-1.

Mixture Example P3

Mixture example P3 consists of 99.595% of Mixture M-3, 0.40% of the compound RM-1 and 0.005% of the compound ST-3a-1.

Mixture Example P4

Mixture example P4 consists of 99.595% of Mixture M-4, 0.40% of the compound RM-1 and 0.005% of the compound ST-3a-1.

Mixture Example P5

Mixture example P5 consists of 99.595% of Mixture M-5, 0.40% of the compound RM-1 and 0.005% of the compound ST-3a-1.

Mixture Example P6

Mixture example P6 consists of 99.595% of Mixture M-1, 0.40% of the compound RM-19 and 0.005% of the compound ST-3a-1.

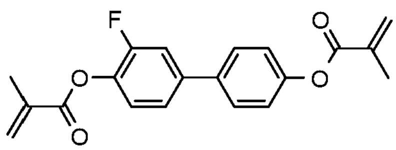

RM-19

Mixture Example P7

Mixture example P7 consists of 99.595% of Mixture M-2, 0.40% of the compound RM-19 and 0.005% of the compound ST-3b-1

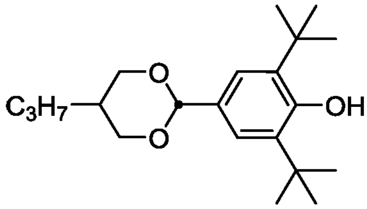

ST-3b-1

Mixture Example P8

Mixture example P8 consists of 99.595% of Mixture M-3, 0.40% of the compound RM-35

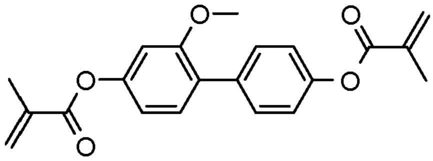

RM-35

and 0.005% of the compound ST-3a-1

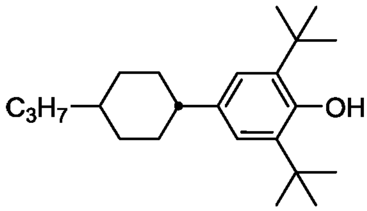

ST-3a-1

Mixture Example P9

Mixture example P9 consists of 99.595% of Mixture M-1, 0.40% of the compound RM-156

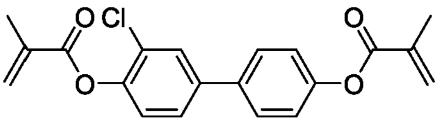

RM-156

and 0.005% of the compound ST-3a-1.

Mixture Example P10

Mixture example P10 consists of 99.595% of Mixture M-2, 0.40% of the compound RM-157

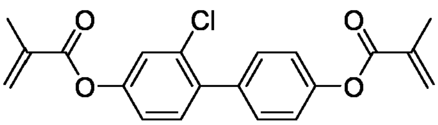

RM-157

and 0.005% of the compound ST-3b-1

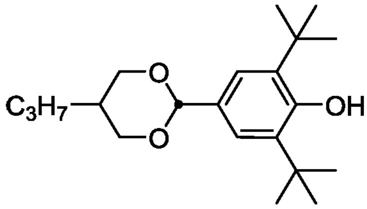

ST-3b-1

## Claims

1. A liquid crystal medium comprising a) one or more compounds of the formula I,

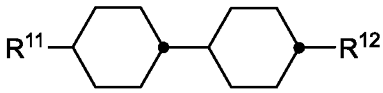

I

in which

$R^{11}$ denotes a straight chain or branched or cyclic alkyl radical having 1 to 12 C atoms, or a straight chain or branched or cyclic alkenyl radical having up to 12 C atoms, wherein one or more H atoms are optionally replaced by fluorine,
$R^{12}$ denotes a straight chain or branched or cyclic alkyl radical having 1 to 12 C atoms or a straight chain or branched or cyclic alkoxy radical having 1 to 11 C atoms, or a straight chain or branched or cyclic alkenyl radical having up to 12 C atoms;

and

b) one or more compounds selected from the group of compounds of the formulae IIA, IIB, IIC and IID,

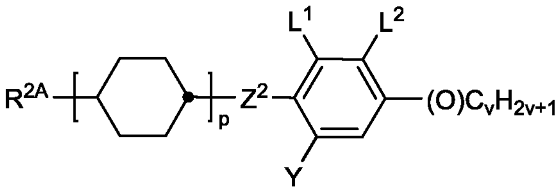

IIA

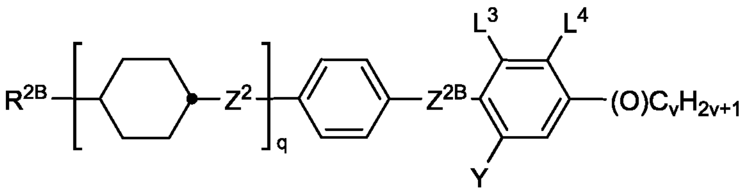

IIB

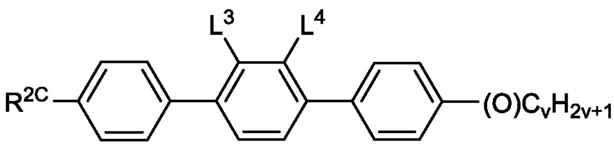

IIC

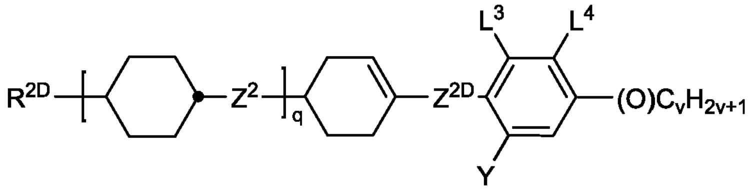

IID

in which

$R^{2A}$, $R^{2B}$, $R^{2C}$ and $R^{2D}$ each, independently of one another, denote H, an alkyl or alkenyl radical having up to 15 C atoms which is unsubstituted, monosubstituted by CN or $CF_3$ or at least monosubstituted by halogen, where, in addition, one or more $CH_2$ groups in these radicals may be replaced by -O-, -S-,

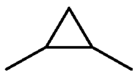

,

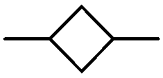

,

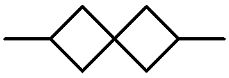

,

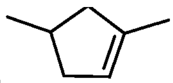

,

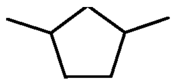

,

-C≡C-, $-CF_2O-$, $-OCF_2-$, -OC-O- or -O-CO- in such a way that O atoms are not linked directly to one another,
$L^1$ to $L^4$ each, independently of one another, denote F, Cl, $CF_3$ or $CHF_2$,
Y denotes H, F, Cl, $CF_3$, $CHF_2$ or $CH_3$,
$Z^2$, $Z^{2B}$ and $Z^{2D}$ each, independently of one another, denote a single bond, $-CH_2CH_2-$, -CH=CH-, $-CF_2O-$, $-OCF_2-$, -CHzO-, $-OCH_2-$, -COO-, -OCO-, $-C_2F_4-$, -CF=CF- or $-CH=CHCH_2O-$,
p denotes 0, 1 or 2,
q denotes 0 or 1, and
v denotes 1, 2, 3, 4, 5, or 6,

and

c) one or more compounds of the formula IVa, and one or more compounds of the formula IVb

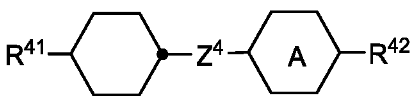

IVa

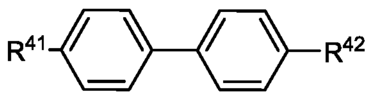

IVb

in which

$R^{41}$ and $R^{42}$ each, independently of one another, denote a straight-chain alkyl, alkoxy, alkenyl, alkoxyalkyl or alkoxy radical having up to 12 C atoms,

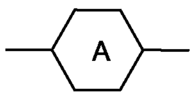

denotes

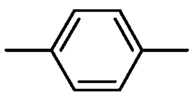

,

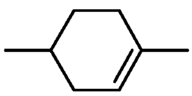

,

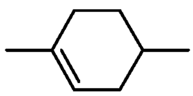

,

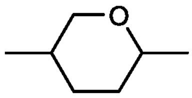 or 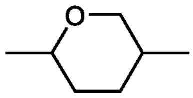,

and

$Z^4$ denotes a single bond, $-CH_2CH_2-$, -CH=CH-, $-CF_2O-$, $-OCF_2-$, $-CH_2O-$, $-OCH_2-$, -COO-, -OCO-, $-C_2F_4-$, $-C_4H_8-$, or -CF=CF-,

and

d) one or more compounds of formula V

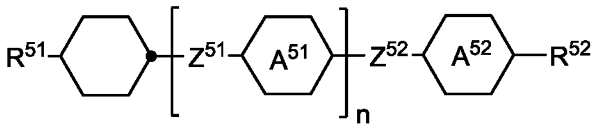

V

in which

$R^{51}$ and $R^{52}$, identically or differently, denote alkyl having 1 to 7 C atoms, alkoxy having 1 to 7 C atoms, or alkoxyalkyl, alkenyl or alkenyloxy having 2 to 7 C atoms,

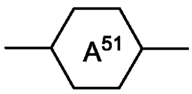, 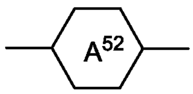,

identically or differently, denote

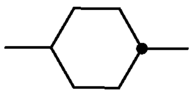, 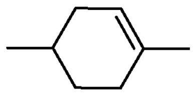, 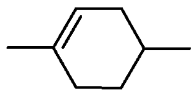,

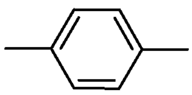, 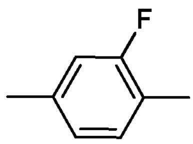 or 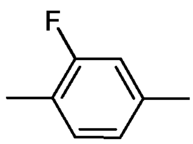

$Z^{51}$, $Z^{52}$ each, independently of one another, denote $-CH_2-CH_2-$, $-CH_2-O-$, -CH=CH-, -C=C-, -COO- or a single bond, and n is 1 or 2,

**characterised in that** the medium comprises the compound of the formula I-1-1

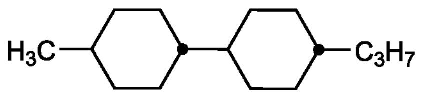

I-1-1

in a concentration in the range of from 6 % to 9 %, and the compound of the formula I-1-5

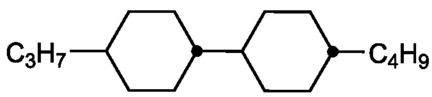

I-1-5

in a concentration in the range of from 6 % to 9 %, and the compound of the formula I-1-6

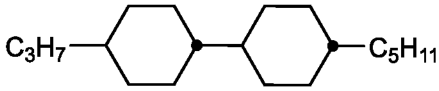

I-1-6

in a concentration in the range of from 5 % to 8 %, and the compound of the formula IVa-2-1

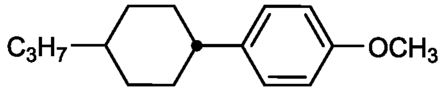

IVa-2-1

in a concentration in the range of from 10 % to 13 %, and the compound of the formula IVb-1-1

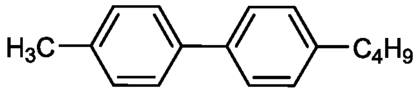

IVb-1-1

in a concentration in the range of from 5 % to 8 %, and the compound of the formula V-16-1

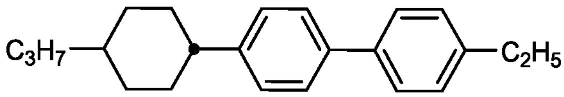

V-16-1

in a concentration in the range of from 5 % to 8 %, and the compound of the formula IIA-2-2

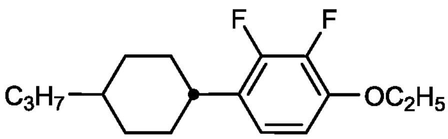

IIA-2-2

in a concentration in the range of from 8 to 11 %, and the compound of the formula IIA-2-5

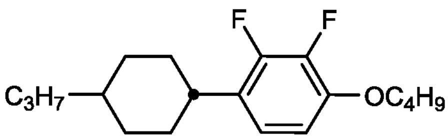

IIA-2-5

in a concentration in the range of from 6 to 9 %,and the compound of the formula IIA-10-2

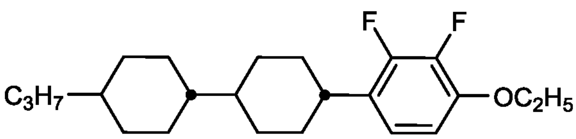

IIA-10-2

in a concentration in the range of from 6 % to 9 %, and the compound of the formula IIA-10-4

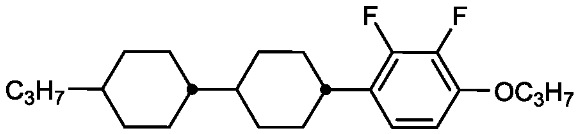

IIA-10-4

in a concentration in the range of from 6 to 9 %, and the compound of the formula IIB-10-1

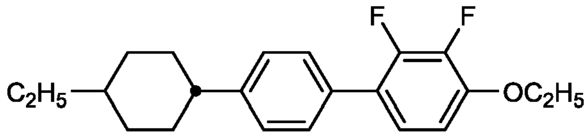

IIB-10-1

in a concentration in the range of from 7 to 10 %, and the compound of the formula IIB-10-4

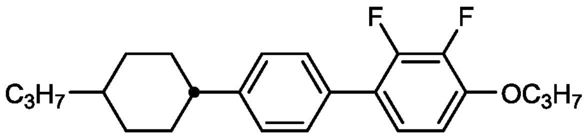

IIB-10-4

in a concentration in the range of from 7 to 10 %.

2. The liquid crystal medium according to claim 1, wherein the medium comprises 80% to 100% by weight of compounds of the formulae I-1-1, I-1-5, I-1-6, V-16-1, IVa-2-1, IVb-1-1, IIA-2-2, IIA-2-5, IIA-10-2, IIA-10-4, IIB-10-1 and IIB-10-4.

3. The liquid crystal medium according to claim 1 or 2, wherein the medium comprises a chiral dopant.

4. The liquid crystal medium according to one or more of claims 1 to 3, wherein the medium comprises one or more polymerisable compounds of formula P

$$P\text{-}Sp\text{-}A^1\text{-}(Z^1\text{-}A^2)_z\text{-}R \qquad P$$

in which

P denotes a polymerisable group,
Sp denotes a spacer group or a single bond,
$A^1$, $A^2$ identically or differently, denote an aromatic, heteroaromatic, alicyclic or heterocyclic group, preferably having 4 to 25 ring atoms, which may also contain fused rings, and which is unsubstituted, or mono- or polysubstituted by L,
L denotes F, Cl, -CN, P-Sp- or straight chain, branched or cyclic alkyl having 1 to 25 C atoms, wherein one or more non-adjacent $CH_2$-groups are optionally replaced by -O-, -S-, -CO-, -CO-O-, -O-CO- or -O-CO-O- in such a manner that O- and/or S-atoms are not directly connected with each other, and wherein one or more H atoms are each optionally replaced by P-Sp-, F or Cl,
$Z^1$ denotes -O-, -S-, -CO-, -CO-O-, -O-CO-, -O-CO-O-, $-OCH_2-$, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -CH=CF-, -CF=CH-, -C≡C-, -CH=CH-CO-O-, -O-CO-CH=CH-, $-CH_2-CH_2-CO-O-$, -O-CO-CHz-CHz-, $-CR^0R^{00}-$, or a single bond,
$R^0$, $R^{00}$ identically or differently, denote H or alkyl having 1 to 12 C atoms,
R denotes H, L, or P-Sp-,
z is 0, 1, 2 or 3,
n1 is 1, 2, 3 or 4.

5. The liquid crystal medium according to claim 4, wherein the polymerisable compounds of formula P are polymerised.

6. A liquid crystal display comprising a medium according to one or more of claims 1 to 5.

**7.** The liquid crystal display according to claim 6, wherein the display is a PSA display.

**8.** The liquid crystal display according to claim 7, wherein the display is a PS-VA, PS-IPS, PS-FFS, PS-UB-FFS, polymer stabilised SA-VA or polymer stabilised SA-FFS display.

**9.** The liquid crystal display according to claim 6, wherein the display is a VA, IPS, U-IPS, FFS, UB-FFS, SA-FFS or SA-VA display.

**10.** Use of the liquid crystal medium according to one or more of claims 1 to 5 in electro-optical displays.

**11.** The liquid crystal display according to one or more of claims 6 to 9, wherein the display has a bezel with a thickness of 10 mm or less.

**12.** A method for manufacturing a liquid crystal display having a bezel with a thickness of 10mm or less, constituted by a first and a second substrate, comprising at least the steps of:

i) dropping a liquid crystal medium according to one or more of claims 1 to 4 inside a bank of a sealing material for liquid crystals, which is formed on the first substrate;
ii) bonding the second substrate to the first substrate; and
iii) curing the sealing material.

**Patentansprüche**

**1.** Flüssigkristallmedium enthaltend a) eine oder mehrere Verbindungen der Formel I,

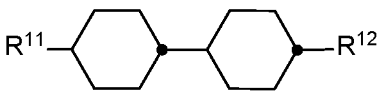

I

worin

$R^{11}$ einen geradkettigen oder verzweigten oder cyclischen Alkylrest mit 1 bis 12 C-Atomen oder einen geradkettigen oder verzweigten oder cyclischen Alkenylrest mit bis zu 12 C-Atomen bedeutet, bei denen gegebenenfalls ein oder mehrere H-Atome durch Fluor ersetzt sind,
$R^{12}$ einen geradkettigen oder verzweigten oder cyclischen Alkylrest mit 1 bis 12 C-Atomen oder einen geradkettigen oder verzweigten oder cyclischen Alkoxyrest mit 1 bis 11 C-Atomen oder einen geradkettigen oder verzweigten oder cyclischen Alkenylrest mit bis zu 12 C-Atomen bedeutet;

und

B) eine oder mehrere Verbindungen, die ausgewählt sind aus der Gruppe der Verbindungen der Formeln IIA, IIB, IIC und IID,

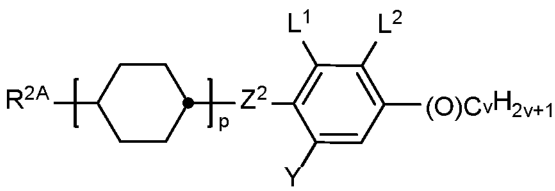

IIA

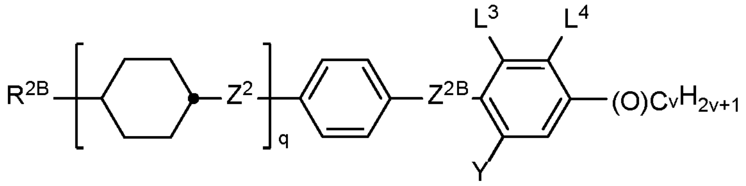

IIB

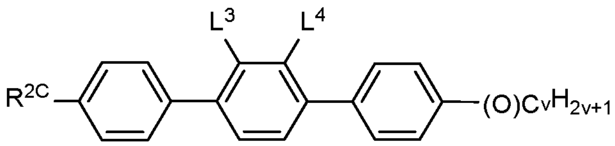

IIC

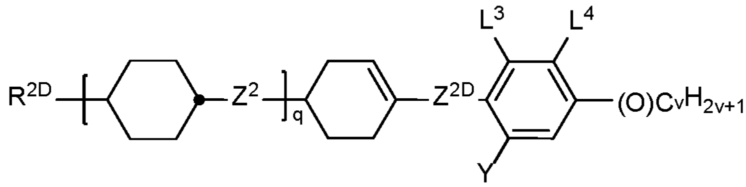

IID

worin

$R^{2A}$, $R^{2B}$,$R^{2C}$ und $R^{2D}$ jeweils unabhängig voneinander H, einen Alkyl- oder Alkenylrest mit bis zu 15 C-Atomen bedeuten, der unsubstituiert, einfach durch CN oder $CF_3$ substituiert oder mindestens einfach durch Halogen substituiert ist, wobei in diesen Resten zusätzlich eine oder mehrere $CH_2$-Gruppen so durch -O-, -S-,

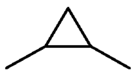 , 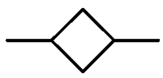 , 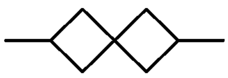 , 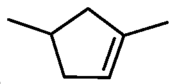 ,

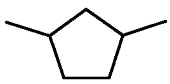 ,

-C≡C-, $-CF_2O-$, $-OCF_2-$, -OC-O- oder -O-CO- ersetzt sein können, dass O-Atome nicht direkt miteinander verknüpft sind,

$L^1$ bis $L^4$ jeweils unabhängig voneinander F, Cl, $CF_3$ oder $CHF_2$ bedeuten,

Y H, F, Cl, $CF_3$, $CHF_2$ oder $CH_3$ bedeutet,

$Z^2$, $Z^{2B}$ und $Z^{2D}$ jeweils unabhängig voneinander eine Einfachbindung, $-CH_2CH_2-$, -CH=CH-, $-CF_2O-$, $-OCF_2-$, $-CH_2O-$, $-OCH_2-$, -COO-, -OCO-, $-C_2F_4-$, -CF=CF- oder $-CH=CHCH_2O-$ bedeuten,

p 0, 1 oder 2 bedeutet,

q 0 oder 1 bedeutet, und

v 1, 2, 3, 4, 5 oder 6 bedeutet,

und

c) eine oder mehrere Verbindungen der Formel IVa und eine oder mehrere Verbindungen der Formel IVb

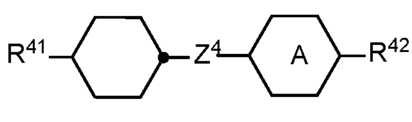

IVa

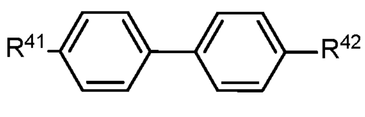

IVb

worin

$R^{41}$ und $R^{42}$ jeweils unabhängig voneinander einen geradkettigen Alkyl-, Alkoxy-, Alkenyl-, Alkoxyalkyl- oder Alkoxyrest mit bis zu 12 C-Atomen bedeuten und

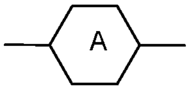
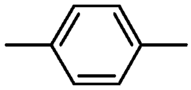
,
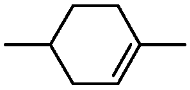
,
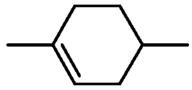
,
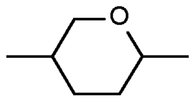

oder

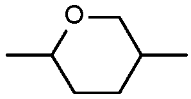

bedeutet,

$Z^4$ eine Einfachbindung, $-CH_2CH_2-$, -CH=CH-, $-CF_2O-$, $-OCF_2-$, $-CH_2O-$, $-OCH_2-$, -COO-, -OCO-, $-C_2F_4-$, $-C_4H_8-$ oder CF=CF bedeutet,

und

d) eine oder mehrere Verbindungen der Formel V

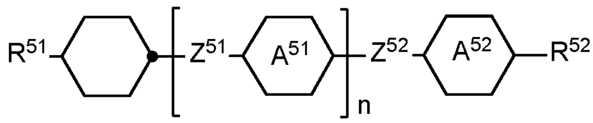
V

worin

$R^{51}$, $R^{52}$ gleich oder verschieden Alkyl mit 1 bis 7 C-Atomen, Alkoxy mit 1 bis 7 C-Atomen oder Alkoxyalkyl, Alkenyl oder Alkenyloxy mit 2 bis 7 C-Atomen bedeuten,

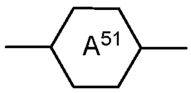
,
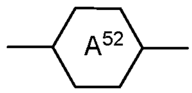

gleich oder verschieden

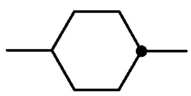
,
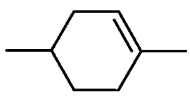
,
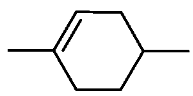
,

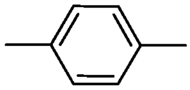
,
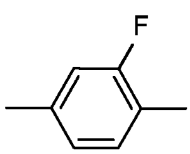
oder
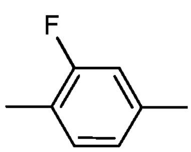

bedeuten,

$Z^{51}$, $Z^{52}$ jeweils unabhängig voneinander $-CH_2-CH_2-$, $-CH_2-O-$, -CH=CH-, -C≡C-, -COO- oder eine Einfachbindung bedeuten, und n 1 oder 2 ist,

**dadurch gekennzeichnet, dass** das Medium die Verbindung der Formel I-1-1

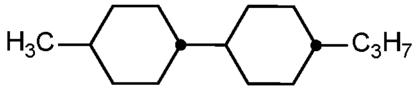

I-1-1

in einer Konzentration im Bereich von 6% bis 9%, und die Verbindung der Formel I-1-5

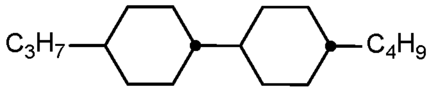

I-1-5

in einer Konzentration im Bereich von 6% bis 9%, und die Verbindung der Formel I-1-6

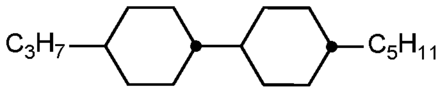

I-1-6

in einer Konzentration im Bereich von 5% bis 8%, und die Verbindung der Formel IVa-2-1

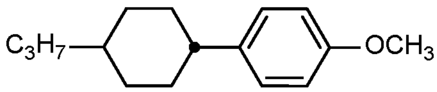

IVa-2-1

in einer Konzentration im Bereich von 10% bis 13%, und die Verbindung der Formel IVb-1-1

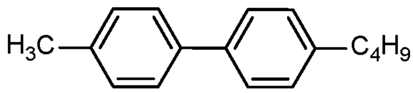

IVb-1-1

in einer Konzentration im Bereich von 5% bis 8%, und die Verbindung der Formel V-16-1

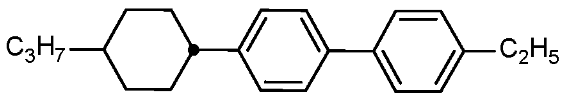

V-16-1

in einer Konzentration im Bereich von 5% bis 8%, und die Verbindung der Formel IIA-2-2

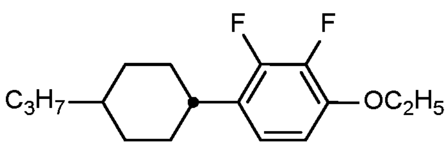

IIA-2-2

in einer Konzentration im Bereich von 8 bis 11%, und die Verbindung der Formel IIA-2-5

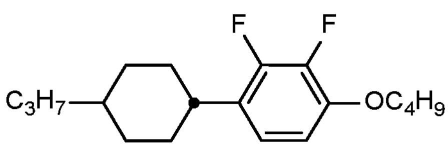

IIA-2-5

in einer Konzentration im Bereich von 6 bis 9%, und
die Verbindung der Formel IIA-10-2

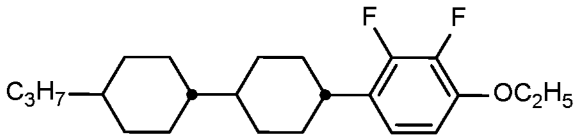

IIA-10-2

in einer Konzentration im Bereich von 6% bis 9%, und
die Verbindung der Formel IIA-10-4

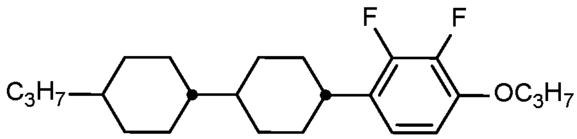

IIA-10-4

in einer Konzentration im Bereich von 6 bis 9%, und
die Verbindung der Formel IIB-10-1

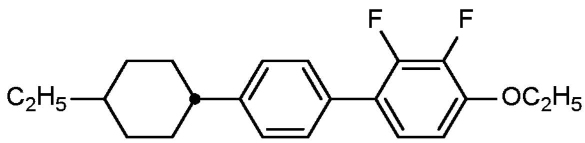

IIB-10-1

in einer Konzentration im Bereich von 7 bis 10%, und
die Verbindung der Formel IIB-10-4

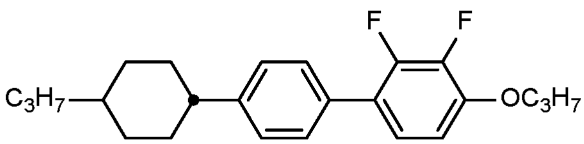

IIB-10-4

in einer Konzentration im Bereich von 7 bis 10%
enthält.

**2.** Flüssigkristallmedium nach Anspruch 1, bei dem das Medium 80 bis 100 Gew.-% an Verbindungen der Formeln I-1-1, I-1-5, I-1-6, V-16-1, IVa-2-1, IVb-1-1, IIA-2-2, IIA-2-5, IIA-10-2, IIA-10-4, IIB-10-1 und IIB-10-4 enthält.

**3.** Flüssigkristallmedium nach Anspruch 1 oder 2, bei dem das Medium einen chiralen Dotierstoff enthält.

**4.** Flüssigkristallmedium nach einem oder mehreren der Ansprüche 1 bis 3, bei dem das Medium eine oder mehrere polymerisierbare Verbindungen der Formel P

$$P\text{-}Sp\text{-}A^1\text{-}(Z^1\text{-}A^2)_z\text{-}R \qquad P$$

enthält, worin

P eine polymerisierbare Gruppe bedeutet,
Sp eine Spacergruppe oder eine Einfachbindung bedeutet,
$A^1$, $A^2$ gleich oder verschieden eine aromatische, heteroaromatische, alicyclische oder heterocyclische Gruppe, vorzugsweise mit 4 bis 25 Ringatomen, bedeuten, die auch anellierte Ringe enthalten kann und die unsubstituiert oder ein- oder mehrfach durch L substituiert ist,
L F, Cl, -CN, P-Sp- oder geradkettiges, verzweigtes oder cyclisches Alkyl mit 1 bis 25 C-Atomen bedeutet, bei dem eine oder mehrere nicht benachbarte $CH_2$-Gruppen gegebenenfalls so durch -O-, -S-, -CO-, -CO-O-, -O-CO- oder -O-CO-O- ersetzt sind, dass O- und/oder S-Atome nicht direkt miteinander verbunden sind, und bei dem gegebenenfalls ein oder mehrere H-Atome jeweils durch P-Sp-, F oder Cl ersetzt sind,
$Z^1$ -O-, -S-, -CO-, -CO-O-, -O-CO-, -O-CO-O-, $-OCH_2-$, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -CH=CF-, -CF=CH-, -C≡C-, -CH=CH-CO-O-, -O-CO-CH=CH-, $-CH_2-CH_2-CO-O-$, $-O-CO-CH_2-CH_2-$, $-CR^0R^{00}-$ oder eine Einfachbindung bedeutet,
$R^0$, $R^{00}$ gleich oder verschieden H oder Alkyl mit 1 bis 12 C-Atomen bedeuten,
R H, L oder P-Sp- bedeutet,
z 0, 1, 2 oder 3 ist,
n1 1, 2, 3 oder 4 ist.

**5.** Flüssigkristallmedium nach Anspruch 4, bei dem die polymerisierbaren Verbindungen der Formel P polymerisiert werden.

**6.** Flüssigkristallanzeige enthaltend ein Medium nach einem oder mehreren der Ansprüche 1 bis 5.

**7.** Flüssigkristallanzeige nach Anspruch 6, bei der es sich um eine PSA-Anzeige handelt.

**8.** Flüssigkristallanzeige nach Anspruch 7, bei es sich um eine PS-VA-, PS-IPS-, PS-FFS-, PS-UB-FFS-, polymerstabilisierte SA-VA- oder polymerstabilisierte SA-FFS-Anzeige handelt.

**9.** Flüssigkristallanzeige nach Anspruch 6, bei der es sich um eine VA-, IPS-, U-IPS-, FFS-, UB-FFS-, SA-FFS- oder SA-VA-Anzeige handelt.

**10.** Verwendung des Flüssigkristallmediums nach einem oder mehreren der Ansprüche 1 bis 5 in elektrooptischen Anzeigen.

**11.** Flüssigkristallanzeige nach einem oder mehreren der Ansprüche 6 bis 9, bei der die Anzeige eine Umrandung mit einer Dicke von 10 mm oder weniger aufweist.

**12.** Verfahren zur Herstellung einer Flüssigkristallanzeige mit einer Umrandung mit einer Dicke von 10 mm oder weniger, gebildet durch ein erstes und ein zweites Substrat, umfassend mindestens die Schritte:

i) Tropfen eines Flüssigkristallmediums nach einem oder mehreren der Ansprüche 1 bis 4 innerhalb eines Damms aus einem Dichtungsmaterial für Flüssigkristalle, der auf dem ersten Substrat gebildet wird;
ii) Verbinden des zweiten Substrats mit dem ersten Substrat; und
iii) Härten des Dichtungsmaterials.

## Revendications

**1.** Milieu cristallin liquide comprenant a) un ou plusieurs composés de formule I,

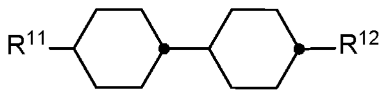

I

dans laquelle

$R^{11}$ désigne un radical alkyle à chaîne linéaire ou ramifiée ou cyclique ayant de 1 à 12 atomes de C, ou un radical alcényle à chaîne linéaire ou ramifiée ou cyclique ayant jusqu'à 12 atomes de C, où un ou plusieurs atomes de H sont éventuellement remplacés par fluor,
$R^{12}$ désigne un radical alkyle à chaîne linéaire ou ramifiée ou cyclique ayant de 1 à 12 atomes de C ou un radical alcoxy à chaîne linéaire ou ramifiée ou cyclique ayant de 1 à 11 atomes de C, ou un radical alcényle à chaîne linéaire ou ramifiée ou cyclique ayant jusqu'à 12 atomes de C ;

et

b) un ou plusieurs composés choisis dans le groupe constitué par les composés de formules IIA, IIB, IIC et IID,

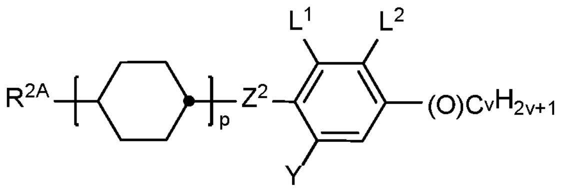

IIA

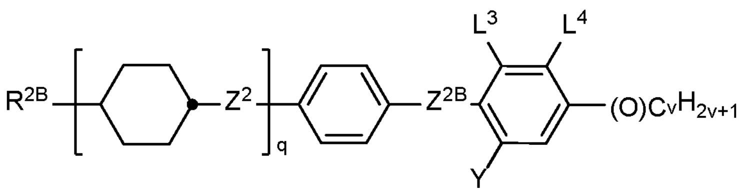

IIB

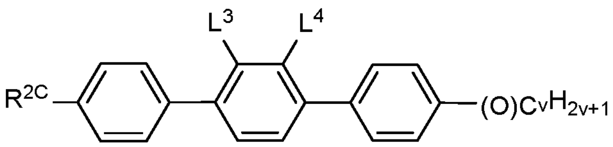

IIC

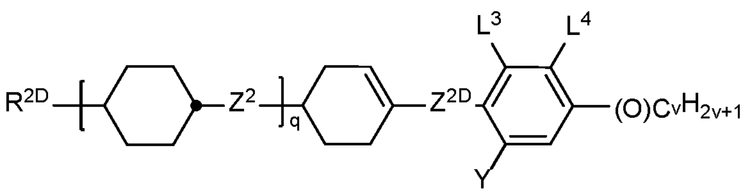

IID

dans lesquelles

$R^{2A}$, $R^{2B}$, $R^{2C}$ et $R^{2D}$ chacun, indépendamment les uns des autres, désignent H, un radical alkyle ou alcényle ayant jusqu'à 15 atomes de C qui est non substitué, monosubstitué par CN ou $CF_3$ ou au moins monosubstitué par halogène, où, de plus, un ou plusieurs groupements $CH_2$ dans ces radicaux peuvent être remplacés par -O-, -S-,

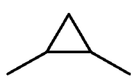 , 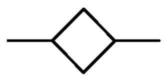 , 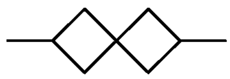 ,

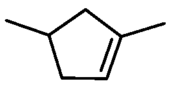 , 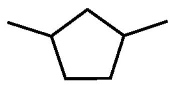 ,

-C≡C-, $-CF_2O-$, $-OCF_2-$, -OC-O- ou -O-CO- de telle sorte que les atomes de O ne soient pas liés directement les uns aux autres,
$L^1$ à $L^4$ chacun, indépendamment les uns des autres, désignent F, Cl, $CF_3$ ou $CHF_2$,
Y désigne H, F, Cl, $CF_3$, $CHF_2$ ou $CH_3$,
$Z^2$, $Z^{2B}$ et $Z^{2D}$ chacun, indépendamment les uns des autres, désignent une liaison simple, $-CH_2CH_2-$, -CH=CH-, $-CF_2O-$, $-OCF_2-$, $-CH_2O-$, $-OCH_2-$, -COO-, -OCO-, $-C_2F_4-$, -CF=CF- ou $-CH=CHCH_2O-$,
p désigne 0, 1 ou 2,
q désigne 0 ou 1, et
v désigne 1, 2, 3, 4, 5, ou 6,

et
c) un ou plusieurs composés de formule IVa, et un ou plusieurs composés de formule IVb

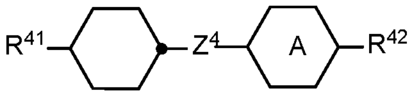 IVa

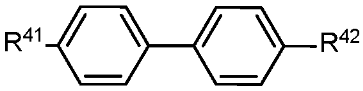 IVb

dans lesquelles

$R^{41}$ et $R^{42}$ chacun, indépendamment l'un de l'autre, désignent un radical alkyle, alcoxy, alcényle, alcoxyalkyle ou alcoxy à chaîne linéaire ayant jusqu'à 12 atomes de C,

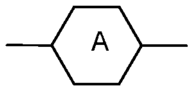

désigne

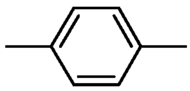 , 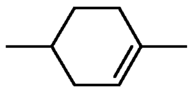 , 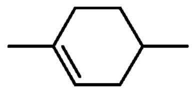 ,

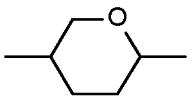 ou 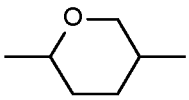 ,

et
$Z^4$ désigne une liaison simple, $-CH_2CH_2-$, -CH=CH-, $-CF_2O-$, $-OCF_2-$, $-CH_2O-$, $-OCH_2-$, -COO-, -OCO-, $-C_2F_4-$, $-C_4H_8-$, ou -CF=CF-,

et
d) un ou plusieurs composés de formule V

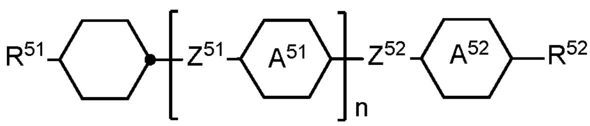 V

dans laquelle

$R^{51}$ et $R^{52}$, de manière identique ou différente, désignent alkyle ayant de 1 à 7 atomes de C, alcoxy ayant de 1 à 7 atomes de C, ou alcoxyalkyle, alcényle ou alcényloxy ayant de 2 à 7 atomes de C,

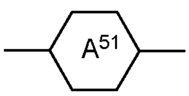 , 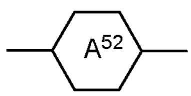 ,

de manière identique ou différente, désignent

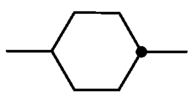 , 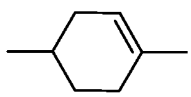 , 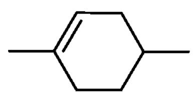 ,

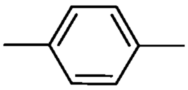 , 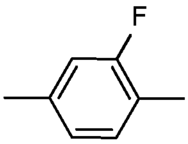 ou 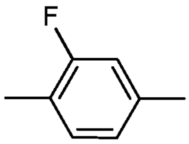

$Z^{51}$, $Z^{52}$ chacun, indépendamment l'un de l'autre, désignent $-CH_2-CH_2-$, $-CH_2-O-$, -CH=CH-, -C=C-, -COO- ou une liaison simple, et

n vaut 1 ou 2,

**caractérisé en ce que** le milieu comprend le composé de formule I-1-1

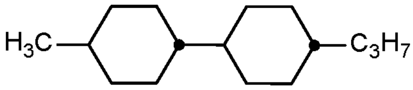

I-1-1

selon une concentration dans la plage allant de 6% à 9%, et le composé de formule I-1-5

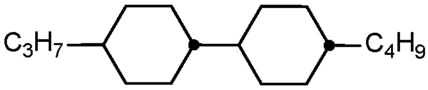

I-1-5

selon une concentration dans la plage allant de 6% à 9%, et le composé de formule I-1-6

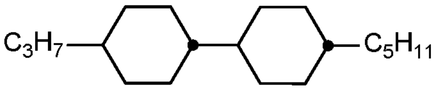

I-1-6

selon une concentration dans la plage allant de 5% à 8%, et le composé de formule IVa-2-1

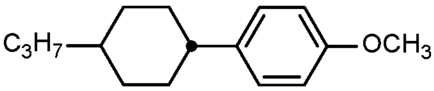

IVa-2-1

selon une concentration dans la plage allant de 10% à 13%, et le composé de formule IVb-1-1

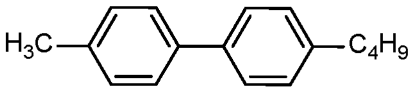

IVb-1-1

selon une concentration dans la plage allant de 5% à 8%, et le composé de formule V-16-1

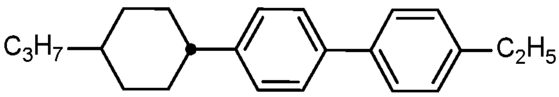

V-16-1

selon une concentration dans la plage allant de 5% à 8%, et le composé de formule IIA-2-2

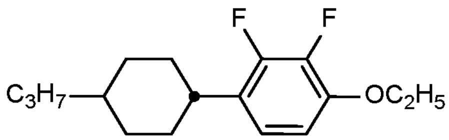

IIA-2-2

selon une concentration dans la plage allant de 8 à 11%, et le composé de formule IIA-2-5

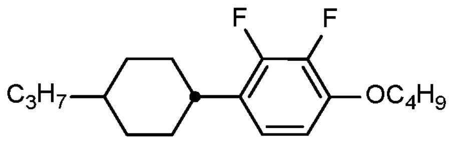

IIA-2-5

selon une concentration dans la plage allant de 6 à 9%, et le composé de formule IIA-10-2

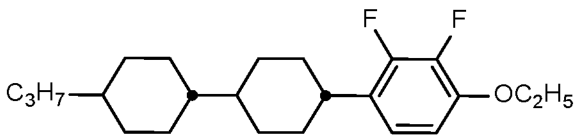

IIA-10-2

selon une concentration dans la plage allant de 6% à 9%, et le composé de formule IIA-10-4

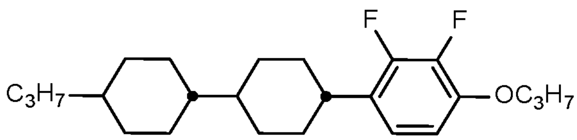

IIA-10-4

selon une concentration dans la plage allant de 6 à 9%, et le composé de formule IIB-10-1

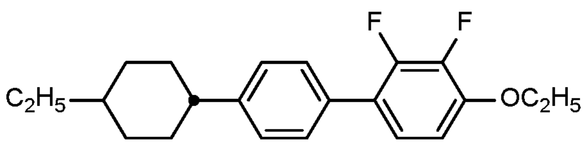

IIB-10-1

selon une concentration dans la plage allant de 7 à 10%, et le composé de formule IIB-10-4

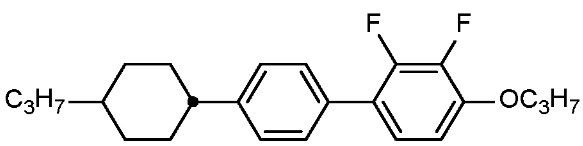

IIB-10-4

selon une concentration dans la plage allant de 7 à 10%.

**2.** Milieu cristallin liquide selon la revendication 1, le milieu comprenant de 80% à 100% en poids de composés de formules I-1-1, I-1-5, I-1-6, V-16-1, IVa-2-1, IVb-1-1, IIA-2-2, IIA-2-5, IIA-10-2, IIA-10-4, IIB-10-1 et IIB-10-4.

**3.** Milieu cristallin liquide selon la revendication 1 ou 2, le milieu comprenant un dopant chiral.

4. Milieu cristallin liquide selon l'une ou plusieurs parmi les revendications 1 à 3, le milieu comprenant un ou plusieurs composés polymérisables de formule P

$$P\text{-}Sp\text{-}A^1\text{-}(Z^1\text{-}A^2)_z\text{-}R \qquad P$$

dans laquelle

P désigne un groupement polymérisable,
Sp désigne un groupement espaceur ou une liaison simple,
$A^1$, $A^2$ de manière identique ou différente, désignent un groupement aromatique, hétéroaromatique, alicyclique ou hétérocyclique, ayant préférablement de 4 à 25 atomes de cycle, pouvant également contenir des cycles condensés, et qui est non substitué, ou mono- ou polysubstitué par L,
L désigne F, Cl, -CN, P-Sp- ou alkyle à chaîne linéaire, ramifiée ou cyclique ayant de 1 à 25 atomes de C, où un ou plusieurs groupements $CH_2$ non adjacents sont éventuellement remplacés par -O-, -S-, -CO-, -CO-O-, -O-CO- ou -O-CO-O- de telle sorte que les atomes de O et/ou S ne soient pas liés directement les uns aux autres, et où un ou plusieurs atomes de H sont chacun éventuellement remplacés par P-Sp-, F ou Cl,
$Z^1$ désigne -O-, -S-, -CO-, -CO-O-, -O-CO-, -O-CO-O-, $-OCH_2-$, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -CH=CF-, -CF=CH-, -C≡C-, -CH=CH-CO-O-, -O-CO-CH=CH-, $-CH_2-CH_2-CO-O-$, $-O-CO-CH_2-CH_2-$, $-CR^0R^{00}-$, ou une liaison simple,
$R^0$, $R^{00}$ de manière identique ou différente, désignent H ou alkyle ayant de 1 à 12 atomes de C,
R désigne H, L, ou P-Sp-,
z vaut 0, 1, 2 ou 3,
n1 vaut 1, 2, 3 ou 4.

5. Milieu cristallin liquide selon la revendication 4, dans lequel les composés polymérisables de formule P sont polymérisés.

6. Affichage à cristaux liquides comprenant un milieu selon l'une ou plusieurs parmi les revendications 1 à 5.

7. Affichage à cristaux liquides selon la revendication 6, l'affichage étant un affichage PSA.

8. Affichage à cristaux liquides selon la revendication 7, l'affichage étant un affichage PS-VA, PS-IPS, PS-FFS, PS-UB-FFS, un affichage SA-VA à stabilisation polymère ou un affichage SA-FFS à stabilisation polymère.

9. Affichage à cristaux liquides selon la revendication 6, l'affichage étant un affichage VA, IPS, U-IPS, FFS, UB-FFS, SA-FFS ou SA-VA.

10. Utilisation du milieu cristallin liquide selon l'une ou plusieurs parmi les revendications 1 à 5, dans des affichages électro-optiques.

11. Affichage à cristaux liquides selon l'une ou plusieurs parmi les revendications 6 à 9, l'affichage ayant un cadre présentant une épaisseur de 10 mm ou moins.

12. Méthode de fabrication d'un affichage à cristaux liquides ayant un cadre présentant une épaisseur de 10 mm ou moins, constitué par un premier et un deuxième substrat, comprenant au moins les étapes consistant à :

i) faire tomber un milieu cristallin liquide selon l'une ou plusieurs parmi les revendications 1 à 4 à l'intérieur d'une bordure d'un matériau de scellement pour cristaux liquides, qui est formé sur le premier substrat ;
ii) lier le deuxième substrat au premier substrat ; et
iii) durcir le matériau de scellement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1170626 A2
- US 6861107 B
- US 7169449 B
- US 20040191428 A1
- US 20060066793 A1
- US 20060103804 A1
- US 6177972 B
- US 20130182202 A1
- US 20140138581 A1
- US 20150166890 A1
- US 20150252265 A1
- JP S63179323 B
- JP H10239694 B
- US 2007096056 A1
- EP 1780587 A1
- US 20030147034 A1
- EP 2381304 A1
- US 20090147206 A
- EP 2837964 A1
- CN 110922986 A
- DE 3425503
- DE 3534777
- DE 3534778
- DE 3534779
- DE 3534780
- DE 4342280
- EP 01038941 A
- DE 19541820
- WO 9800428 A
- GB 2328207 A
- WO 0294805 A
- WO 0234739 A
- WO 0206265 A
- WO 0206196 A
- WO 0206195 A
- EP 1559735 A1
- EP 2586827 A1
- US 6781665 B


### Non-patent literature cited in the description


- **S.H. JUNG et al.** *Jpn. J. Appl. Phys.,* 2004, vol. 43 (3), 1028
- **S.H. LEE et al.** *Appl. Phys. Lett.,* 1998, vol. 73 (20), 2882-2883
- **S.H. LEE et al.** *Liquid Crystals,* 2012, vol. 39 (9), 1141-1148
- **T.-J- CHEN et al.** *Jpn. J. Appl. Phys.,* 2006, vol. 45, 2702-2704
- **S. H. KIM ; L.-C- CHIEN.** *Jpn. J. Appl. Phys.,* 2004, vol. 43, 7642-7647
- *Appl. Phys. Lett.,* 1999, vol. 75 (21), 3264
- *Optics Express,* 2004, vol. 12 (7), 1221
- *Pure Appl. Chem.,* 2001, vol. 73 (5), 888
- **C. TSCHIERSKE ; G. PELZL ; S. DIELE.** *Angew. Chem.,* 2004, vol. 116, 6340-6368
- Merck Liquid Crystals, Physical Properties of Liquid Crystals. Merck KGaA, November 1997